(19) Europäisches Patentamt
European Patent Office
Office européen des brevets

(11) EP 3 692 081 B1

(12) FASCICULE DE BREVET EUROPEEN

(45) Date de publication et mention de la délivrance du brevet:
**04.12.2024 Bulletin 2024/49**

(21) Numéro de dépôt: **17838183.6**

(22) Date de dépôt: **02.10.2017**

(51) Classification Internationale des Brevets (IPC):
***C08F 126/06*** (2006.01) ***C08F 226/06*** (2006.01)
***C08F 292/00*** (2006.01) ***C22B 60/02*** (2006.01)

(52) Classification Coopérative des Brevets (CPC):
(C-Sets disponibles)
**C08F 226/06; C08F 126/06; C08F 292/00;**
**C22B 60/0265;** C08F 2438/01 (Cont.)

(86) Numéro de dépôt international:
**PCT/FR2017/052706**

(87) Numéro de publication internationale:
**WO 2019/068962 (11.04.2019 Gazette 2019/15)**

# (54) NOUVEAUX POLYMÈRES GREFFES, LEURS PROCÉDÉS DE PRÉPARATION, ET LEURS UTILISATIONS NOTAMMENT POUR LE CAPTAGE DE MÉTAUX

NEUARTIGE PFROPFPOLYMERE, VERFAHREN ZUR HERSTELLUNG DAVON UND VERWENDUNGEN DAVON, INSBESONDERE ZUR METALLERFASSUNG

NOVEL GRAFT POLYMERS, METHODS FOR PREPARING SAME, AND USES THEREOF PARTICULARLY FOR METAL CAPTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**12.08.2020 Bulletin 2020/33**

(73) Titulaire: **Université Paris-Saclay**
**91190 Saint-Aubin (FR)**

(72) Inventeurs:
- **ROGER, Philippe, Gérard**
  **91470 Limours (FR)**
- **MAAZ, Mohamad**
  **Beyrouth (LB)**
- **NSOULI, Bilal**
  **Beyrouth (LB)**
- **ELZEIN, Tamara**
  **Beyrouth (LB)**
- **BARROCA, Nadine**
  **91405 Orsay Cedex (FR)**
- **LEPOITTEVIN, Bénédicte**
  **91405 Orsay Cedex (FR)**

(74) Mandataire: **Grosset-Fournier, Chantal Catherine et al**
**Grosset-Fournier & Demachy**
**54, rue Saint-Lazare**
**75009 Paris (FR)**

(56) Documents cités:
**WO-A1-2017/085312 US-A- 4 199 470**

- **QING-FENG LI ET AL: "Highly luminescent hydrogels synthesized by covalent grafting of lanthanide complexes onto PNIPAM via one-pot free radical polymerization", JOURNAL OF MATERIALS CHEMISTRY C: MATERIALS FOR OPTICAL AND ELECTRONIC DEVICES, vol. 4, no. 15, 1 January 2016 (2016-01-01), UK, pages 3195 - 3201, XP055481024, ISSN: 2050-7526, DOI: 10.1039/C6TC00336B**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition ne'est réputée formée qu'après le paiement de la taxe d'opposition. (Art. 99(1) Convention sur le brevet européen).

(52) Classification Coopérative des Brevets (CPC):
(Cont.)

C-Sets
**C08F 292/00, C08F 226/06**

## Description

La présente invention, telle que définie par les revendications en annexe, concerne de nouveaux polymères greffés, leurs procédés de préparations et leurs utilisations notamment pour le captage de métaux.

L'uranium, sous sa forme actuelle (minière) est une ressource non renouvelable dont les ressources connues à l'heure actuelle représentent environ un siècle de consommation. Pour permettre de repousser la pénurie en uranium, deux possibilités peuvent être exploitées :

- puiser dans les océans l'uranium dissous,
- recycler le combustible usagé pour diminuer la perte de matière fissible via les déchets ultimes.

Les océans, avec une réserve estimée de 4 500 millions de tonnes (soit près de 1000 fois les réserves terrestres) représentent une source intéressante de combustible nucléaire avec plus d'un millénaire de consommation. Depuis quelques années, les recherches se sont intensifiées pour découvrir des moyens simples de récupération de l'uranium dans l'eau de mer présent à hauteur de 3.3 ppb.

De nouveaux matériaux, en général des polymères, ont été développés pour le captage de l'uranium marin. Après avoir été plongés dans l'eau de mer, ces polymères forment un complexe uranium-polymère, et permettent l'extraction de l'uranium de l'eau de mer. Le retraitement de ces polymères hors de l'eau permet de décomplexer l'uranium et de le récupérer. Mais la présence de poisons pour les polymères, réduit l'efficacité de cette méthode. Le vanadium présent dans l'eau de mer rentre en compétition avec l'uranium et se complexe sur les polymères actuels à la place de l'uranium, ce qui limite la capacité de récupération de ces polymères.

Le recyclage des combustibles usagés issus des centrales nucléaires est déjà intégré dans le cycle de vie de l'uranium. Actuellement, le retraitement de l'uranium repose sur des procédés d'extraction liquide-liquide en présence de composés complexant comme les procédés DIAMEX ou PUREX. Ces techniques utilisent des composés toxiques et ont un coût très élevé. Le brevet US 4,199,470 A enseigne qu'un matériau comprenant un sel d'acide minéral d'une résine échangeuse d'anions ayant des noyaux pyridines sur la chaine principale ou secondaire peut capturer de l'uranium dans une solution. L'art antérieur enseigne également que des hydrogels insolubles dans l'eau possédant 3 unités acide 4-vinylpyridine-2,6-dicarboxylique, N-isopropylacrylamide et N, N'-methylènebis(2-propenamide)) peuvent former des complexes avec des lanthanides (J. Mater. Chem. C, 2016,4, 3195-3201). Également, la demande internationale WO 2017/085312 A1 enseigne que des polymères supportés, en particulier formés par un copolymère de divinylbenzène/styrène, comprenant des molécules, en particulier du 1-(N,N-diéthylhexylcarbamoyl)méthylphosphonate de dibutyle, peuvent récupérer sélectivement l'uranium dans des solutions riches en phosphates.

L'un des aspects de l'invention concerne de nouveaux polymères greffés sur un support et dont les polymères peuvent être à la fois solvatés et non solvatés en fonction des conditions du milieu dans lequel ils se trouvent et peuvent facilement passer d'un état à l'autre.

Un autre aspect de l'invention concerne de nouveaux polymères greffés sur un support qui sont susceptibles de pouvoir se complexer avec des métaux, en particulier avec des métaux sous forme de trace dans le milieu dans lesquels ils se trouvent.

Un autre aspect de l'invention concerne des procédés de captage de métaux et notamment de l'uranium, en particulier dans l'eau de mer.

Un autre aspect de l'invention concerne un procédé de captage sélectif de l'uranium dans l'eau de mer, avec de forts rendements.

Un autre aspect de l'invention concerne un procédé de retraitement du combustible nucléaire usé pour la récupération des matériaux fissibles non réagis.

Un autre aspect de l'invention concerne l'utilisation des nouveaux polymères greffés sur un support et complexés avec des métaux comme catalyseurs en catalyse hétérogène.

Un autre aspect de l'invention concerne l'utilisation des nouveaux polymères greffés sur un support pour le marquage des cellules dans le domaine biomédical, ou les marquages des produits de luxe dans le domaine de la lutte contre la contrefaçon.

La présente description concerne une composition comprenant ou constituée d'un polymère greffé sur un support notamment de façon covalente, ledit polymère ayant un degré de polymérisation n, compris de 1 à 10000, et contenant n unités monomères, lesdites unités monomères étant :

- des unités monomères dérivées de la 4-vinylpyridine, dans lequel les carbones en positions 2 et 6 peuvent être substitués par l'un des substituants du groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5

cycles dont l'hétéroatome est soit de l'azote, soit de l'oxygène, soit du soufre, soit du phosphore, amide de 1 à 20 carbones, thiol de 1 à 20 carbones, phosphine de 1 à 20 carbones, lesdits substituants pouvant être cyclisés entre eux et pouvant contenir des atomes de soufre ou de phosphore,
- et optionellement des unités monomères dérivées d'un co-monomère, sous réserve que les deux substituants ne peuvent pas être tous les deux l'hydrogène,

et sous réserve que lesdites unités monomères dérivées de la 4-vinylpyridine représentent au moins 20% du degré de polymérisation n,

ledit polymère étant éventuellement complexé avec un métal,
ledit polymère étant linéaire ou réticulé.
ledit polymère étant lié à un support de façon irréversible.

L'invention concerne une composition comprenant ou constituée d'un monomère ou d'un polymère greffé sur un support notamment de façon covalente, ledit monomère ou polymère, ayant un degré de polymérisation n, compris de 1 à 10000, et contenant n unités monomères, lesdites unités monomères étant :

- des unités monomères dérivées de la 4-vinylpyridine, dans lequel les carbones en positions 2 et 6 peuvent être substitués par l'un des substituants du groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
- et optionnellement des unités monomères dérivées d'un co-monomère,

sous réserve que les deux substituants ne peuvent pas être tous les deux l'hydrogène,

et sous réserve que lesdites unités monomères dérivées de la 4-vinylpyridine représentent au moins 20% du degré de polymérisation n,

ledit monomère ou polymère étant éventuellement complexé avec un métal,

ledit monomère ou polymère étant linéaire ou réticulé,

ledit monomère ou polymère étant lié à un support de façon irréversible.

Les polymères utilisés dans la présente invention, présentent l'avantage d'avoir des propriétés de solvatation différentes en fonction des groupements substituants sur les unités monomères dérivées de la 4-vinylpyridine et de l'organisation des unités monomères constitutives du polymère. Par exemple, quand les groupements substituants en positions 2 et 6 de toutes les unités monomères sont des groupements acides carboxyliques, la solvatation du polymère, hors support, ainsi obtenue varie en fonction du pH de la solution. En milieu neutre ou basique, le polymère est solvaté en milieu aqueux. En milieu aqueux très acide, le polymère ne peut plus être solvaté. Cette propriété permet de faire varier facilement la solvatation du polymère obtenu et ainsi de changer le comportement du polymère pour le captage de métaux.
Les polymères, selon la présente invention, présentent l'avantage d'être greffés sur un support, ce qui permet d'immobiliser facilement ces polymères. Ainsi, la récupération de ces polymères en solution ou leur maintien dans le réacteur est facilité par rapport à des polymères libres, en particulier dans le cas de la catalyse hétérogène.
Les polymères selon la présente invention comprennent plus de 20% d'unités monomères dérivées de la 4-vinylpyridine, en particulier de plus de 30%, en particulier plus de 40%, en particulier plus de 50%, en particulier plus de 60%, en particulier plus de 70%, en particulier plus de 80%, en particulier plus de 90% et en particulier 100%.
Les polymères selon la présente invention sont adaptables et peuvent être optimisés en fonction des difficultés rencontrées. Par exemple, dans le cas où les groupements substituants en positions 2 et 6 sont très encombrants, un co-monomère espaceur peut être ajouté à des taux importants (>50%) pour limiter l'encombrement stérique autour des unités monomères dérivées de la 4-vinylpyridine.
Les polymères selon la présente invention peuvent comporter :

a) soit un seul type d'unités monomères dérivées de la 4-vinylpyridine, sans unité monomère dérivée d'un co-monomère, le polymère est alors un homopolymère,

b) soit un seul type d'unités monomères dérivées de la 4-vinylpyridine, et un seul type d'unités monomères dérivées d'un co-monomère, le polymère est alors un copolymère,

c) soit un seul type d'unités monomères dérivées de la 4-vinylpyridine, et plusieurs types d'unités monomères dérivées d'un co-monomère différents, le polymère est alors un copolymère,

d) soit plusieurs types d'unités monomères dérivées de la 4-vinylpyridine différents, sans unité monomère dérivée d'un co-monomère,

e) soit plusieurs types d'unités monomères dérivées de la 4-vinylpyridine différents, et un seul type d'unités monomères dérivées d'un co-monomère, le polymère est alors un copolymère,

f) soit plusieurs types d'unités monomères dérivées de la 4-vinylpyridine différents, et plusieurs types d'unités monomères dérivées d'un co-monomère différents. Le polymère est alors un copolymère.

Les polymères, selon la présente invention, sont complexés ou non avec un métal, par exemple un complexe

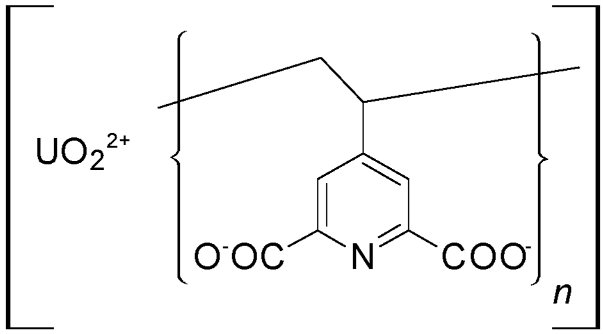

,

chaque unité monomère pouvant être ou pas complexée avec un métal indépendamment les unes des autres.

Au sens de la présente invention on entend par « polymère » un enchaînement d'unités monomères. Le nombre d'unités monomères formant un polymère, au sens de la présente invention, peut être égal à 1. Ainsi, un monomère greffé sur un support fait partie de l'invention. Dans ce qui suit, le terme polymère n'inclut pas le support.

Au sens de la présente invention, on entend par « support », un matériau sur lequel le polymère est lié, soit directement, soit indirectement, et qui permet d'immobiliser ledit polymère. Ledit support est soit directement utilisable pour la synthèse du polymère, soit susceptible d'être transformé pour pouvoir soit greffer un polymère de l'invention, soit être utilisable pour la synthèse du polymère. Le support est stable et insoluble dans les conditions de stockage et dans les conditions d'utilisation du polymère.

Au sens de la présente invention, on entend par « polymère greffé sur un support », l'ensemble formé par le polymère, le support sur lequel est lié ledit polymère et l'éventuel lien entre ledit polymère et ledit support si le lien est indirect.

Au sens de la présente invention, on entend par « homopolymère », un polymère dans lequel toutes les unités monomères constitutives du polymère ont la même formule, c'est-à-dire que toutes les unités monomères sont des unités monomères dérivées de la 4-vinylpyridine et toutes les unités monomères dérivées de la 4-vinylpyridine possèdent les mêmes groupements substituants respectivement en position 2, et en position 6. Les métaux éventuellement complexés sur les unités monomères peuvent varier au sein d'un même homopolymère. Les formes conjuguées d'un même couple acide/base sont considérées comme étant identiques pour la notion d'homopolymère. Par exemple un polymère possédant sur une première unité monomère un groupement COOH et sur une seconde unité monomère un groupement $COO^-$ restera considéré comme un homopolymère.

Au sens de la présente invention, on entend par « copolymère », un polymère dans lequel au moins une unité monomère est dérivée d'un co-monomère et au moins une unité monomère est dérivée de la 4-vinylpyridine.

Au sens de la présente invention, on entend par « dérivé de la 4-vinylpyridine », un composé de formule

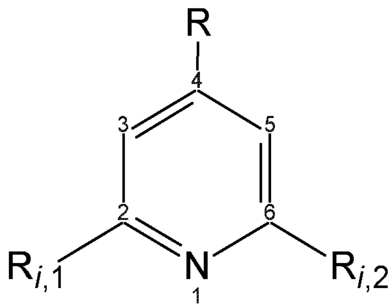

dans laquelle $R_{i,1}$ et $R_{i,2}$ peuvent être substitués par l'un des substituants du groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore.

Au sens de la présente invention, on entend par « monomère dérivé de la 4-vinylpyridine » un composé de formule

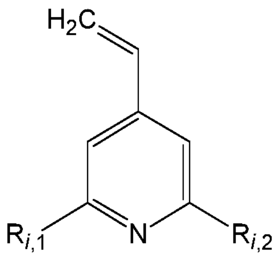

dans laquelle les définitions de $R_{i,1}$ et $R_{i,2}$ sont telles qu'indiquées ci-dessus.

Au sens de la présente invention, on entend par « co-monomère » un composé de formule

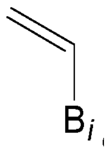

dans lequel $B_i$ est différent d'un dérivé de la 4-vinylpyridine.

Au sens de la présente invention, on entend par « unité monomère dérivée de la 4-vinylpyridine », la brique fondamentale de formule

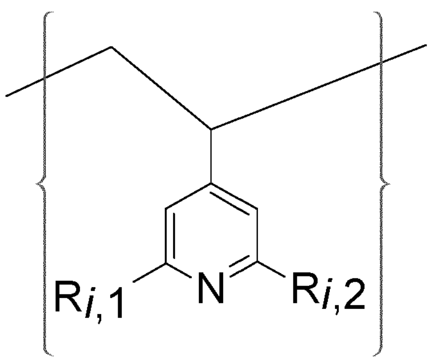

qui constitue le polymère et dont les définitions de $R_{i,1}$ et $R_{i,2}$ sont telles qu'indiquées ci-dessus.

Au sens de la présente invention, on entend par « unité monomère dérivée d'un co-monomère », la brique

fondamentale de formule

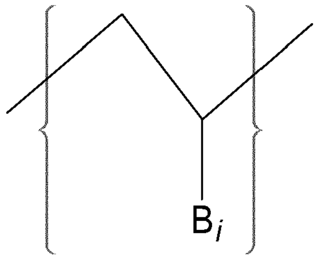

qui constitue le polymère et dans laquelle $B_i$ est différent d'un dérivé de la 4-vinylpyridine.

Au sens de la présente invention, on entend par « lié à un support de façon irréversible », le fait que le polymère ne puisse pas être détaché du support dans les conditions d'utilisation.

Au sens de la présente invention, on entend par « polymère linéaire » un polymère dans lequel l'ensemble des unités monomères s'enchaîne dans une seule direction formant une chaine sans ramification ni réticulation.

Au sens de la présente invention, on entend par « polymère réticulé » un polymère dans lequel au moins deux polymères linéaires sont liés entre eux par au moins un pont de réticulation, ledit pont de réticulation étant formé par une unité monomère dérivée d'un-co-monomère appartenant à l'un au moins des deux polymères linéaires et ladite unité monomère dérivée d'un-co-monomère étant liée par liaison covalente à la chaine carbonée de l'autre polymère linéaire.

Au sens de la présente invention, on entend par « chaine carbonée », la suite de carbone linéaire formée lors de la polymérisation par les doubles liaisons carbone-carbone des monomères qui constituent le polymère.

Au sens de la présente invention, on entend par « radical alkyl de 1 à 20 carbones », une chaine carbonée acyclique, saturée, linéaire ou ramifiée, comprenant de 1 à 20 atomes de carbone. Des exemples de radicaux alkyl de 1 à 20 carbones incluent les groupes méthyle, éthyle, propyle, butyle... Au sein du radical alkyl, un ou plusieurs hydrogènes peuvent être substitués par un groupement choisi parmi : halogène, hydroxyle, alkoxyle, amino, nitro, cyano, trilfluoro, acide carboxylique, ester carboxylique, phosphine, thiols...

Au sens de la présente invention, on entend par « radical alcène de 2 à 20 carbones », une chaine carbonée acyclique, linéaire ou ramifiée, comprenant de 2 à 20 atomes de carbone et comprenant au moins une double liaison carbone-carbone. Des exemples de radicaux alcène de 2 à 20 carbones incluent les groupes éthényle, propényle, butényle... Au sein du radical alcène, un ou plusieurs hydrogènes peuvent être substitués par un groupement choisi parmi : halogène, hydroxyle, alkoxyle, amino, nitro, cyano, trilfluoro, acide carboxylique, ester carboxylique, phosphine, thiols...

Au sens de la présente invention, on entend par « radical aryle de 2 à 20 carbones », une chaine carbonée comprenant au moins un cycle saturé ou partiellement saturé et, comprenant de 2 à 20 atomes de carbone, sans hétéroatomes dans les cycles. Des exemples de radicaux aryle de 2 à 20 carbones incluent les groupes phényl, benzyl, ... Au sein du radical aryle, un ou plusieurs hydrogènes peuvent être substitués par un groupement choisi parmi : halogène, hydroxyle, alkoxyle, amino, nitro, cyano, trilfluoro, acide carboxylique, ester carboxylique, phosphine, thiols...

Au sens de la présente invention, on entend par « hétérocycle de 1 à 5 cycle », une chaine carbonée comprenant de 1 à 5 cycles saturés ou partiellement saturés, possédant au moins un cycle qui contient un atome différent du carbone pour former le cycle et comprenant de 2 à 20 atomes de carbone. Des exemples d'hétérocycle comprenant 2 à 20 carbones incluent les groupes pyrrolidinyle, pipéridinyle ... Au sein de l'hétérocycle, un ou plusieurs hydrogènes peuvent être substitués par un groupement choisi parmi : halogène, hydroxyle, alkoxyle, amino, nitro, cyano, trilfluoro, acide carboxylique, ester carboxylique, phosphine, thiol...

Au sens de la présente invention on entend par « thiols de 1 à 20 carbones », une chaine carbonée comprenant de 1 à 20 carbones de formule $SR_2$.

Au sens de la présente invention on entend par « phosphine de 1 à 20 carbones », une chaine carbonée comprenant de 1 à 20 carbones de formule $PR_3$.

Selon un mode de réalisation particulier, la composition de l'invention, telle que définie ci-dessus, comprend ou est constituée d'un polymère greffé sur un support notamment de façon covalente, ayant un degré de polymérisation n, compris de 1 à 10000, et contenant n unités monomères, lesdites unités monomères étant :

- des unités monomères dérivées de la 4-vinylpyridine, dans lequel les carbones en positions 2 et 6 peuvent être substitués par l'un des substituants du groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5

cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,

- et optionnellement des unités monomères dérivées d'un co-monomère, sous réserve que lorsque l'un des substituants choisis représente soit l'hydrogène, soit un radical alkyl de 1 à 4 carbones, soit un radical aryle de 1 à 4 carbones, soit un radical alcène de 1 à 4 carbones, l'autre substituant est différent de l'hydrogène, du radical alkyl de 1 à 4 carbones, du radical aryle de 1 à 4 carbones, et du radical alcène de 1 à 4 carbones,

et sous réserve que lesdites unités monomères dérivées de la 4-vinylpyridine représentent au moins 20% du degré de polymérisation n,

ledit polymère étant éventuellement complexé avec un métal,
ledit polymère étant linéaire ou réticulé,
ledit polymère étant lié à un support de façon irréversible.

Selon un mode de réalisation particulier, la composition de l'invention telle que définie ci-dessus, comprend ou est constituée d'un polymère greffé sur un support et possédant un ou plusieurs types d'unités monomères dérivées de la 4-vinylpyridine différents et un ou plusieurs types d'unités monomères dérivées d'un co-monomère, ledit polymère étant complexé ou non avec un ou plusieurs métaux différents.

Les formules suivantes représentent des modes préférés de l'invention tels que définis dans les revendications.

La composition selon l'invention comprend ou est constituée d'un monomère ou d'un polymère greffé sur un support, de Formule I,

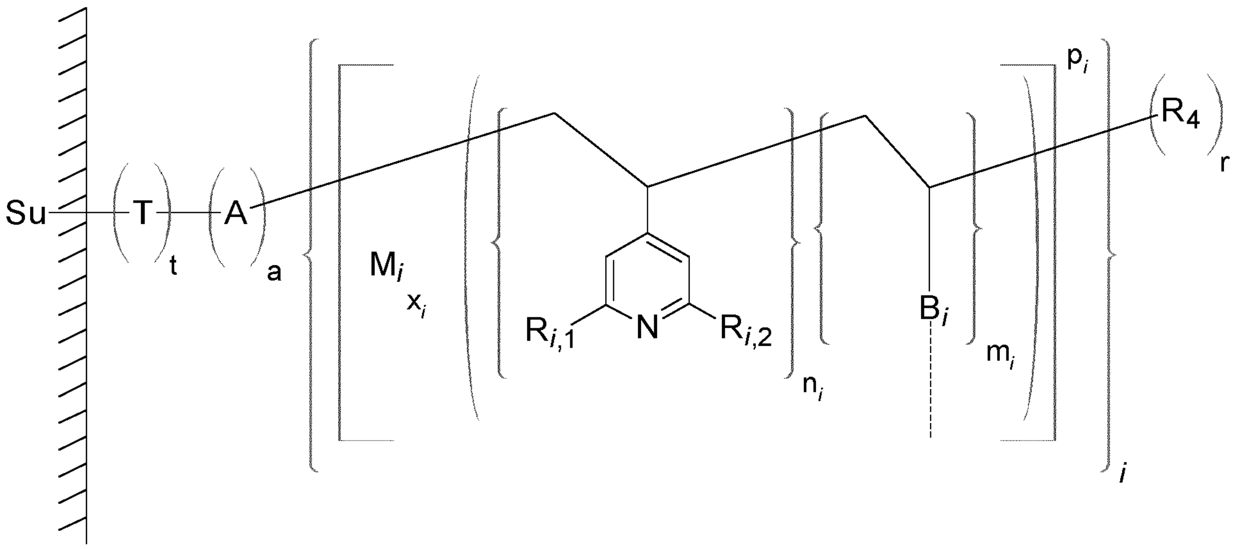

*Formule I*

dans laquelle :

- Su est le support sur lequel est greffé le monomère ou le polymère,
- A est un composé issu d'un amorceur de polymérisation,
- T est un composé faisant le lien entre le support et l'éventuel composé issu d'un amorceur de polymérisation ou entre le support et la première unité monomère,
- $R_4$ est un composé permettant la propagation de la polymérisation, issu ou non dudit amorceur de polymérisation, ou permettant la terminaison de la polymérisation, ou un agent de transfert,
- t, a et r sont identiques ou différents et valent 0 ou 1,
- *i* est un nombre entier strictement positif, indiciel, variant de 1 à n, lui-même compris de 1 à 10000,

et pour chaque i :

◦ $R_{i,1}$ et $R_{i,2}$ sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool

de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore, sous réserve que lorsque $R_{i,1}$ représente l'hydrogène, alors $R_{i,2}$ est différent de l'hydrogène, et inversement,

o $B_i$ est une unité monomère dérivée d'un co-monomère, formant ou non un pont de réticulation,

o $M_i$ est un cation métallique,

◦ $n_i$ et $m_i$ sont des nombres entiers égaux à 0 ou 1,

◦

$$n_i + m_i = 1,$$

o $x_i$ est un nombre compris de 0 à 6,

o $p_i$ est la charge électrique du complexe métallique comprise de - 6 à + 6, ledit polymère étant linéaire quand il n'existe aucun $B_i$ formant de pont de réticulation,

ledit polymère étant réticulé quand il existe au moins un $B_i$ formant un pont de réticulation entre deux polymères linéaires.

Dans ce mode de réalisation, le monomère ou le polymère greffé sur un support de Formule I peut être à titre d'exemple :

- un copolymère comprenant au moins un type d'unités monomères dérivées de la 4-vinylpyridine et au moins un type d'unités monomères dérivées d'un co-monomère,
- un polymère comprenant au moins deux types d'unités monomères dérivées de la 4-vinylpyridine différents et sans unité monomère dérivée d'un co-monomère,
- un homopolymère comprenant un seul type d'unités monomères dérivées de la 4-vinylpyridine ledit polymère pouvant être complexé ou non avec des métaux.

Dans ce mode de réalisation, le polymère greffé sur un support de Formule I peut prendre toutes les formes d'organisation de copolymères, en particulier un copolymère aléatoire, un copolymère à blocs, un copolymère périodique, ou un copolymère statistique. Ces polymères peuvent être eux même linéaires ou réticulés et complexés ou non avec des métaux.

Dans ce mode de réalisation, chaque unité monomère qui forme le polymère greffé sur un support de Formule I peut être chargée électriquement, positivement ou négativement selon l'unité monomère et la présence ou non d'un métal complexé lui-même chargé.

Dans ce mode de réalisation, le support est lié au monomère ou au polymère de façon covalente :

- soit de façon directe,
- soit par l'intermédiaire d'un unique composé T faisant le lien entre le support et le polymère,
- soit par l'intermédiaire d'un unique composé A issu d'un amorceur de polymérisation et faisant le lien entre le support et le polymère,
- soit par l'intermédiaire d'un composé T lié à un composé A issu d'un amorceur de polymérisation et servant de lien entre le support et le polymère,

et l'extrémité du polymère est :

- soit le dernier carbone de la chaine polymérique, ce qui implique r=0 dans la Formule I,
- soit un composé permettant la propagation de la polymérisation comme par exemple un atome de chlore Cl,
- soit un composé permettant la terminaison de la polymérisation,
- soit un agent de transfert comme par exemple le benzodithioate de benzyle.

Dans ce mode de réalisation, le composé T peut être :

- un composé issu du support, et/ou
- un composé chimique qui modifie la surface du support pour créer des sites de liaisons en surface.

Dans ce mode de réalisation, par exemple, quand le support est de la silice SiOz, la surface dudit support est prétraitée par un mélange de $H_2SO_4/H_2O_2$, ce qui permet la formation de site SiOH à la surface du support. Dans ce

cas, le composé T (ici SiOH) est un composé issu du support.

Dans ce mode de réalisation, par exemple, quand le support est du Polytéréphtalate d'éthylène (PET), la surface dudit support est prétraitée avec de la polyéthylèneimine. Ce composé scinde des liaisons de surface du support et se lie au support, ce qui crée de nombreux sites de liaisons $NH_2$ et NH en surface du support prétraité. Dans ce cas, le composé T est constitué d'un composé chimique qui modifie la surface et d'un composé issu du support.

Au sens de la présente invention, on entend par « site de liaison », des sites situés sur la surface du support et sur lesquels des composés peuvent venir se lier, en particulier des amorceurs de polymérisation ou des unités monomères ou un polymère de la présente invention.

Au sens de la présente invention on entend par « amorceur de polymérisation », un composé qui permet d'initier une polymérisation. Les monomères, qui constituent le polymère final, viennent réagir sur ce composé après son amorçage.

Au sens de la présente invention, on entend par « composé permettant la propagation de la polymérisation », un composé capable de réagir avec un monomère pour augmenter d'une unité le degré de polymérisation du polymère en formation.

Au sens de la présente invention, on entend par « composé permettant la terminaison de la polymérisation », un composé incapable de réagir avec un monomère pour poursuivre la polymérisation et incapable d'être amorcé à nouveau.

Au sens de la présente invention, on entend par « agent de transfert », un composé incapable de réagir seul avec un monomère pour poursuivre la polymérisation, mais qui peut être activé par un composé radicalaire du milieu réactionnel et devenir un composé permettant la propagation de la polymérisation. Comme « agent de transfert » RAFT on peut citer par exemple un composé de formule R-S-C(=S)-Z tel que le benzodithioate de benzyle.

Selon un mode de réalisation particulier, la composition de l'invention telle que définie ci-dessus, comprend ou est constituée d'un polymère greffé sur un support et possédant un ou plusieurs types d'unités monomères dérivées de la 4-vinylpyridine différents et un ou plusieurs types d'unités monomères dérivées d'un co-monomère, ledit polymère étant complexé ou non avec un ou plusieurs métaux différents, étant linéaire et étant non réticulé.

La composition selon l'invention comprend ou est constituée d'un monomère ou d'un polymère greffé sur un support, de Formule II,

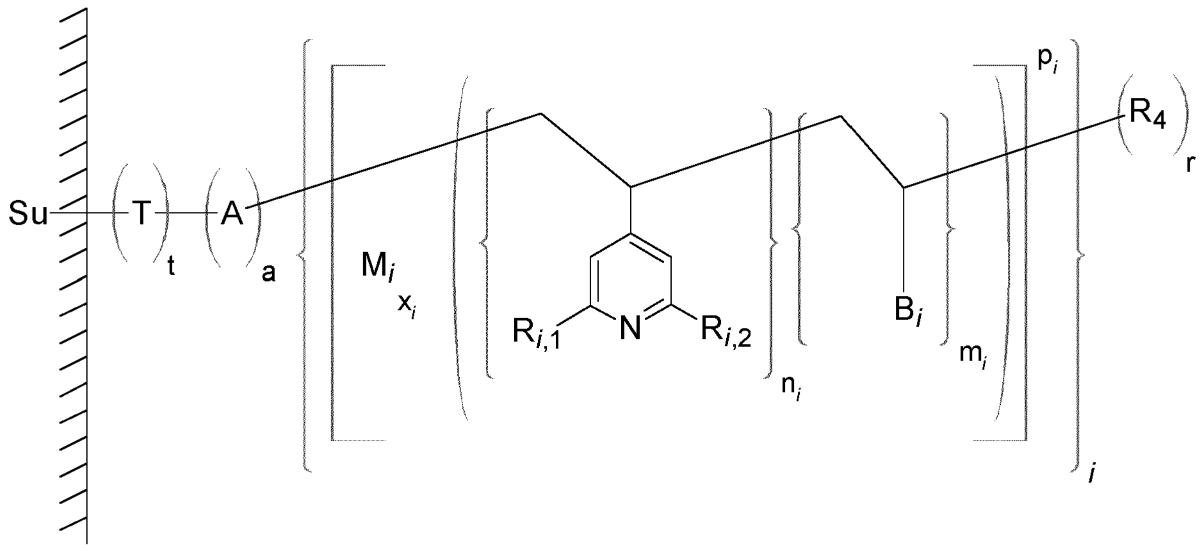

*Formule II*

dans laquelle

- les définitions de Su, $R_{i,1}$, $R_{i,2}$, T, A, $n_i$, $m_i$, $R_4$, M;, t, a, r, x;, $p_i$ et i sont telles que décrites dans la Formule I,
- $B_i$ est une unité monomère dérivée d'un co-monomère, ne formant pas de pont de réticulation.

Dans ce mode de réalisation, l'absence de réticulation permet d'augmenter la solvatation des polymères.

Selon un mode de réalisation particulier, la composition de l'invention telle que définie ci-dessus, comprend ou est constituée d'un polymère greffé sur un support et possédant un ou plusieurs types d'unités monomères dérivées de la 4-vinylpyridine différents et ne possédant pas d'unités monomères dérivées d'un co-monomère, ledit polymère étant complexé ou non avec un ou plusieurs métaux différents, étant linéaire et étant non réticulé.

La composition selon l'invention comprend ou est constituée d'un monomère ou d'un polymère greffé sur un support, de Formule III,

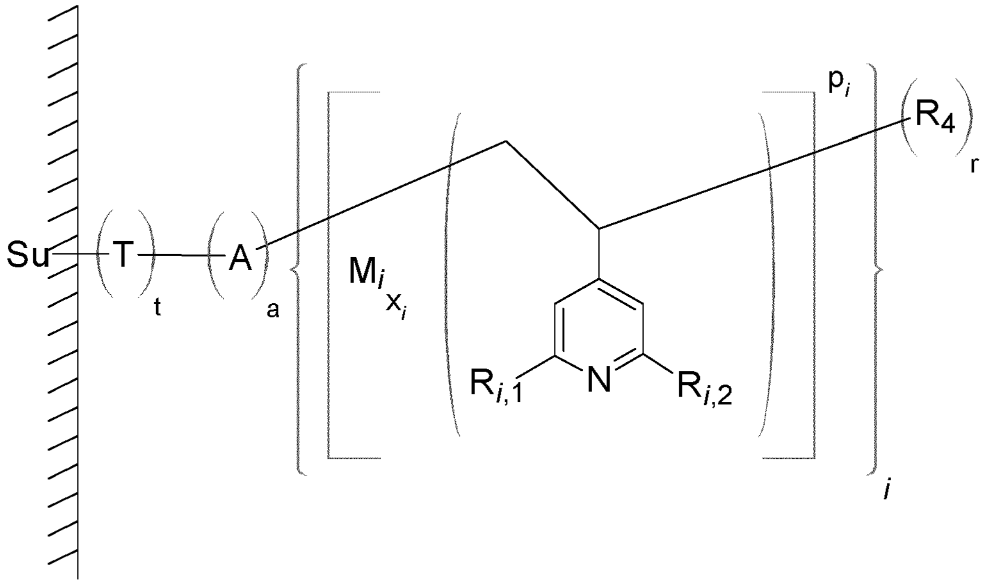

*Formule III*

dans laquelle :

- les définitions de Su, $R_{i,1}$, $R_{i,2}$, T, A, $R_4$, M;, t, a, r, x;, $p_i$ et i sont telles que décrites dans la Formule I.

Dans ce mode de réalisation, l'absence de co-monomère permet d'augmenter la capacité de captage des métaux par le polymère greffé sur un support. Si 100% des unités monomères sont des unités monomères dérivées de la 4-vinylpyridine, dont les deux groupements substituants en positions 2 et 6 sont des groupements acides carboxyliques, la capacité de complexation avec le métal est doublée, comparée à la capacité de complexation d'un polymère contenant 50% d'unités monomères dérivées de co-monomères.

Dans ce mode de réalisation, la possibilité d'avoir plusieurs unités monomères dérivées de la 4-vinylpyridine différentes permet de complexer des métaux différents selon les unités monomères ou de complexer différemment le même métal selon les unités monomères. Ces différences permettent d'obtenir des sites catalytiques différents sur un même polymère et ainsi de réaliser des réactions catalytiques nécessitant plusieurs sites catalytiques différents avec un seul catalyseur.

Selon un mode de réalisation particulier, la composition de l'invention telle que définie ci-dessus, comprend ou est constituée d'un polymère greffé sur un support et un seul type d'unités monomères dérivées de la 4-vinylpyridine et ne possédant pas d'unités monomères dérivées d'un co-monomère, ledit polymère étant complexé ou non avec un ou plusieurs métaux différents, étant linéaire et étant non réticulé.

La composition selon l'invention comprend ou est constituée d'un monomère ou d'un homopolymère greffé sur un support, de Formule IV,

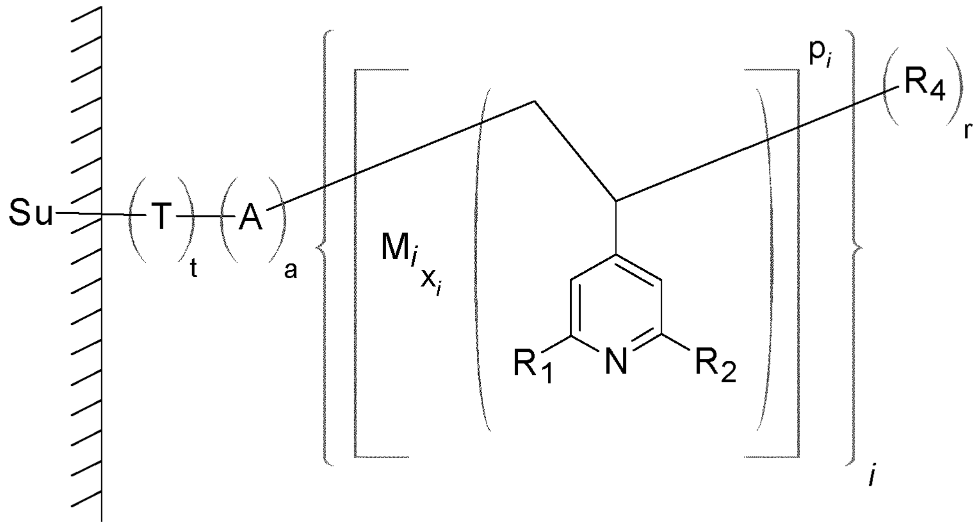

*Formule IV*

dans laquelle :

- les définitions de Su, T, A, $R_4$, $M_i$, t, a, r, x;, $p_i$ et i sont telles que décrites dans la Formule I,
- $R_1$ et $R_2$ sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,

sous réserve que lorsque Ri représente l'hydrogène, alors $R_2$ est différent de l'hydrogène, et inversement.

Dans ce mode de réalisation, le polymère greffé sur un support de Formule IV est un homopolymère.

Dans ce mode de réalisation, le polymère greffé sur un support peut être optimisé pour une seule action. Par exemple, le polymère comportant uniquement des unités monomères dérivées de la 4-vinylpyridine, dont les deux groupements substituants en positions 2 et 6 sont des groupements acides carboxyliques, présente une activité optimale pour la captage des ions uranyles en solution aqueuse.

Selon un mode de réalisation particulier, la composition de l'invention telle que définie ci-dessus, comprend ou est constituée d'un polymère greffé sur un support et un seul type d'unités monomères dérivées de la 4-vinylpyridine, dont les deux groupements substituants en positions 2 et 6 sont des groupements acides carboxyliques, et ne possédant pas d'unités monomères dérivées d'un co-monomère, ledit polymère étant complexé ou non avec un seul métal, étant linéaire et étant non réticulé.

La composition selon l'invention comprend ou est constituée d'un homopolymère greffé sur un support, de Formule V,

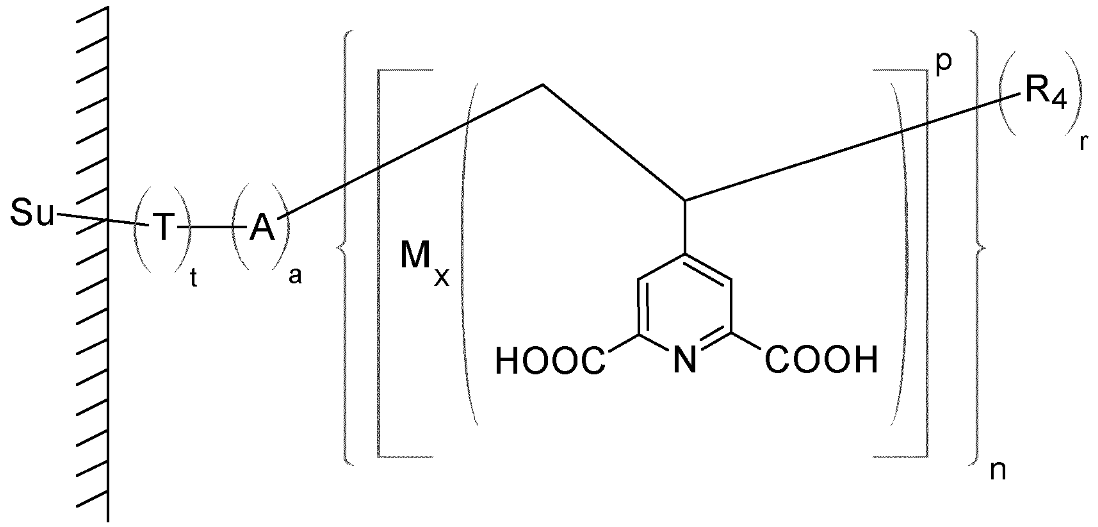

*Formule V*

dans laquelle :

- les définitions de Su, T, A, $R_4$, t, a, et r sont telles que décrites dans la Formule I,
- M est un cation métallique,
- x est un nombre compris de 0 à 6,
- p est la charge électrique du complexe métallique comprise de - 6 à + 6.

Dans ce mode de réalisation, le polymère greffé sur un support de la Formule V est un homopolymère avec un seul type d'unités monomères dérivées de la 4-vinylpyridine, dont les deux groupements substituants en positions 2 et 6 sont des groupements acides carboxyliques.
Dans ce mode de réalisation, les unités monomères constitutives du polymère greffé sur un support de Formule V sont soit toutes complexées avec le même métal, soit toutes non complexées.
Dans ce mode de réalisation, les unités monomères constitutives du polymère greffé sur un support de Formule Vont toutes la même charge électrique.
Dans ce mode de réalisation, les polymères constitutifs de la Formule V présentent l'avantage de pouvoir se solvater facilement en milieu aqueux, avec une solvabilité dépendante des conditions de pH du milieu et avec une capacité à se complexer avec les métaux éventuellement présents dans la solution.
Selon un mode de réalisation particulier, la composition de l'invention telle que définie ci-dessus, comprend ou est constituée d'un polymère greffé sur un support et un seul type d'unités monomères dérivées de la 4-vinylpyridine, dont les deux groupements substituants en positions 2 et 6 sont des groupements acides carboxyliques, et ne possédant pas d'unités monomères dérivées d'un co-monomère, ledit polymère étant non complexé, étant linéaire et étant non réticulé.
La composition selon l'invention comprend ou est constituée d'un homopolymère greffé sur un support, de Formule VI,

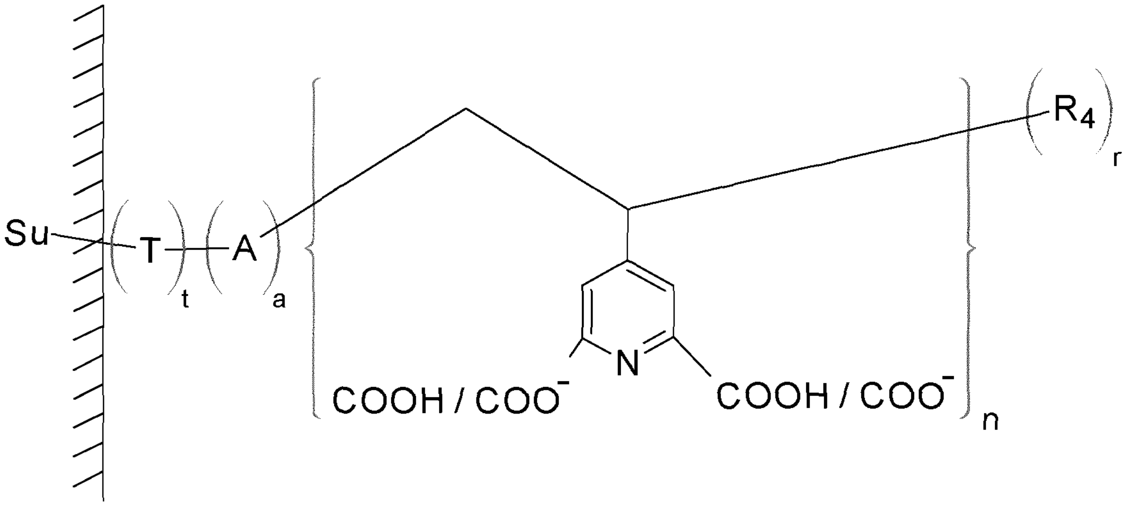

*Formule VI*

dans laquelle :

- les définitions de Su, T, A, $R_4$, t, a, et r sont telles que décrites dans la Formule I,

en particulier les polymères, greffés sur un support, de Formule VII, Formule VIII, Formule IX, Formule X, Formule XI,

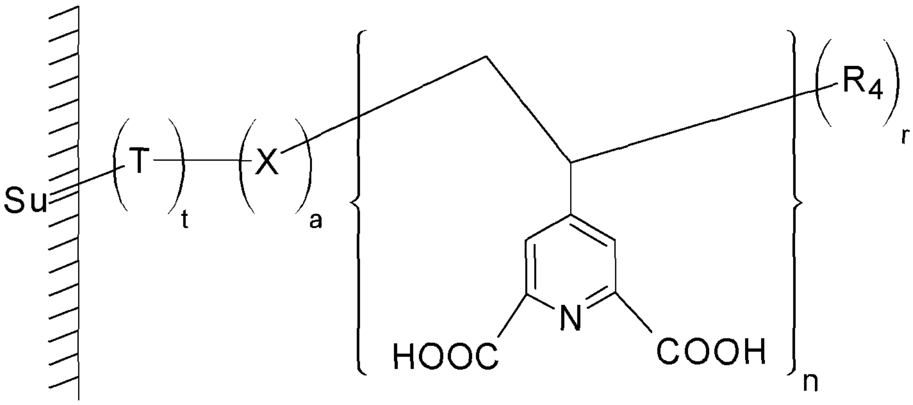

*Formule VII*

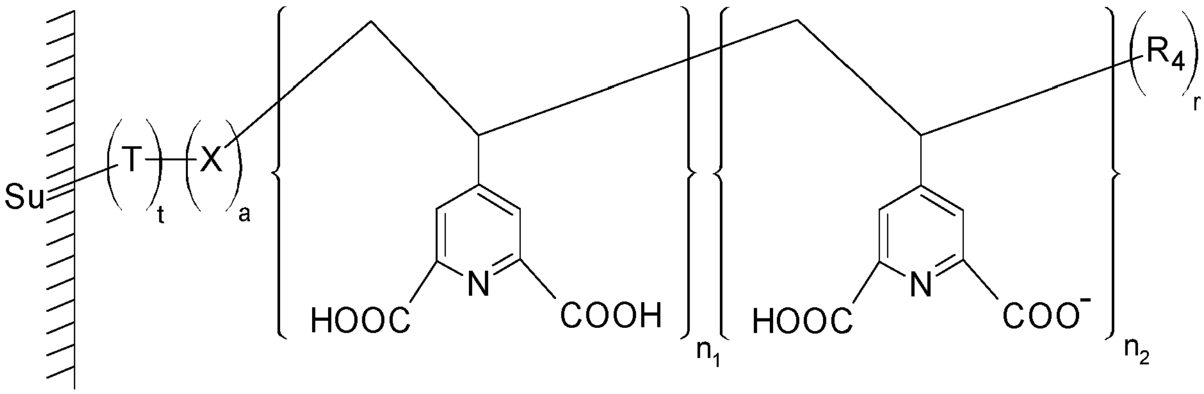

*Formule VIII*

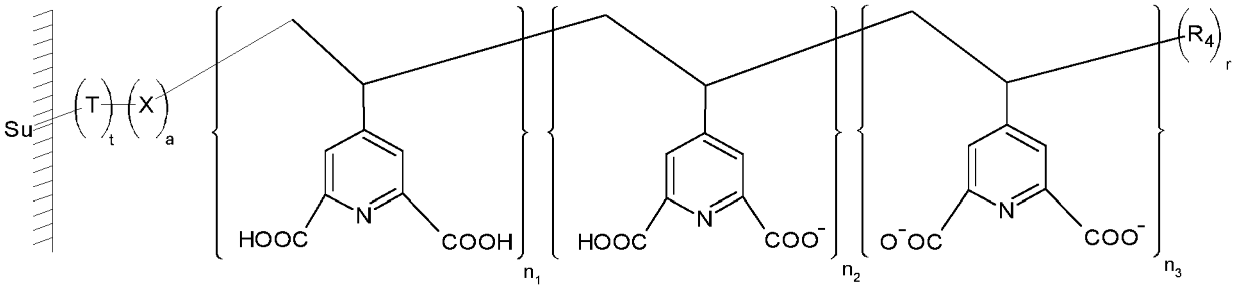

*Formule IX*

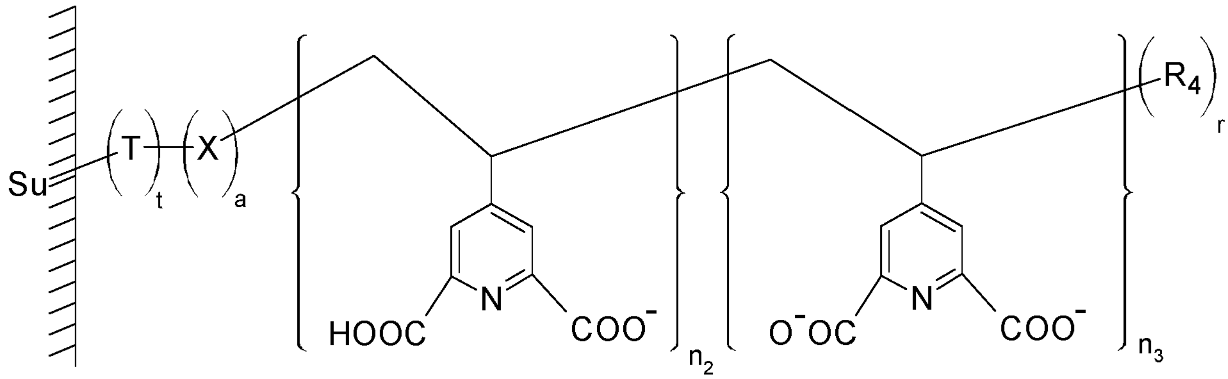

*Formule X*

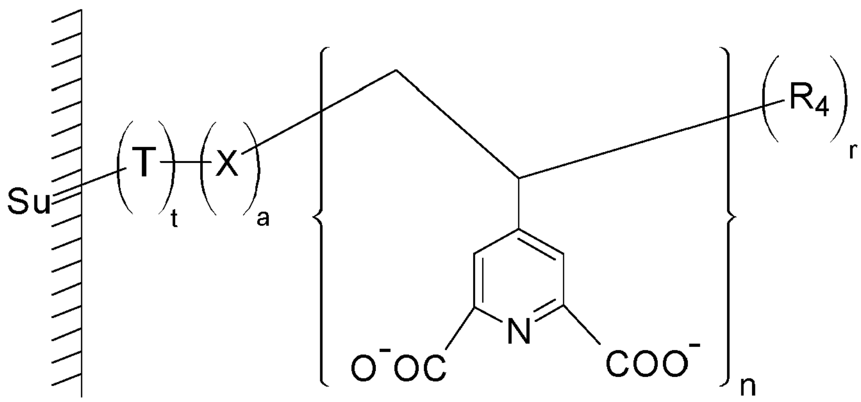

*Formule XI*

dans lesquelles :

- les définitions de $R_4$, A, T, a, t et r sont telles que décrites dans la Formule I,
- $n_1$, $n_2$ et $n_3$ sont des nombres entiers non nuls,
- dans la Formule VIII, $n_1$ + nz = n,
- dans la Formule IX, $n_1 + n_2 + n_3 = n$,
- dans la Formule X, $n_2 + n_3 = n$.

Dans ce mode de réalisation, le polymère greffé sur un support de Formule VI est un homopolymère comprenant un seul type d'unités monomères dérivées de la 4-vinylpyridine, dont les deux groupements substituants en positions 2 et 6 sont des groupements acides carboxyliques, non complexé avec un métal.

Dans ce mode de réalisation, le polymère greffé sur un support de Formule VI varie en fonction du pH de la solution dans laquelle le polymère se trouve. Le polymère greffé sur un support de Formule VI a ainsi l'une des formules suivantes :

- en milieu très acide, le polymère greffé sur un support de Formule VII,
- en augmentant un peu le pH, le polymère greffé sur un support de Formule VIII,
- en continuant d'augmenter le pH, le polymère greffé sur un support de Formule IX,
- en poursuivant l'augmentation du pH, le polymère greffé sur un support de Formule X,
- en milieu neutre et basique, le polymère greffé sur un support de Formule XI.

Dans ce mode de réalisation, le rapport $n_1/n_2$ du polymère greffé sur un support de Formule VIII ; les rapports $n_1/n_2$ et $n_1/n_3$ du polymère greffé sur un support de Formule IX et le rapport $n_2/n_3$ du polymère greffé sur un support de Formule X dépendent du pH de la solution. La variation des rapports entre $n_1$, $n_2$ et $n_3$ pour les polymères de Formule VIII, Formule IX et Formule X, a une incidence sur la charge globale du polymère, la capacité du polymère à se solvater, ainsi que sur la capacité du polymère à complexer des métaux.

Selon un mode de réalisation particulier, la composition de l'invention telle que définie ci-dessus, comprend ou est constituée d'un polymère greffé sur un support et un seul type d'unités monomères dérivées de la 4-vinylpyridine, dont les deux groupements substituants en positions 2 et 6 sont des groupements esters méthyliques, et ne possédant pas d'unités monomères dérivées d'un co-monomère, ledit polymère étant non complexé, étant linéaire et étant non réticulé.

La composition selon l'invention comprend ou est constituée d'un monomère ou d'un homopolymère greffé sur un support, de Formule XII,

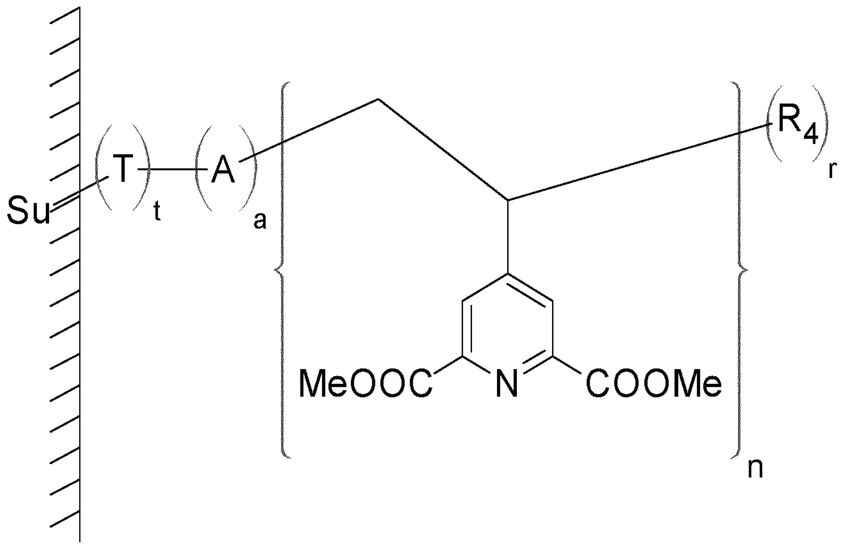

*Formule XII*

dans laquelle :

- les définitions de Su, T, A, $R_4$, t, a, et r sont telles que décrites dans la Formule I.

Dans ce mode de réalisation, le polymère greffé sur un support de Formule XII est un homopolymère avec un seul type d'unités monomères dérivées de la 4-vinylpyridine, dont les deux groupements substituants en positions 2 et 6 sont des groupements esters méthyliques.

Dans ce mode de réalisation, aucune unité monomère constitutive du polymère greffé sur un support de Formule XII n'est complexée avec un métal.

Dans ce mode de réalisation, le polymère ainsi obtenu, est solvaté en solution organique comme le DMSO et l'acétonitrile. Cette propriété permet une polymérisation facilitée du monomère dérivé de la 4-vinylpyridine, dont les deux groupements substituants en positions 2 et 6 sont des groupements esters méthyliques.

Selon un mode de réalisation particulier, la composition de l'invention telle que définie ci-dessus, comprend ou est constituée d'un polymère greffé sur un support et un seul type d'unités monomères dérivées de la 4-vinylpyridine,

dont les deux groupements substituants en positions 2 et 6 sont des groupements acides carboxyliques, et ne possédant pas d'unités monomères dérivées d'un co-monomère, ledit polymère étant complexé avec de l'uranium, étant linéaire et étant non réticulé.

La composition selon l'invention comprend ou est constituée d'un homopolymère, complexé avec de l'uranium, et greffé sur un support, de Formule XIII,

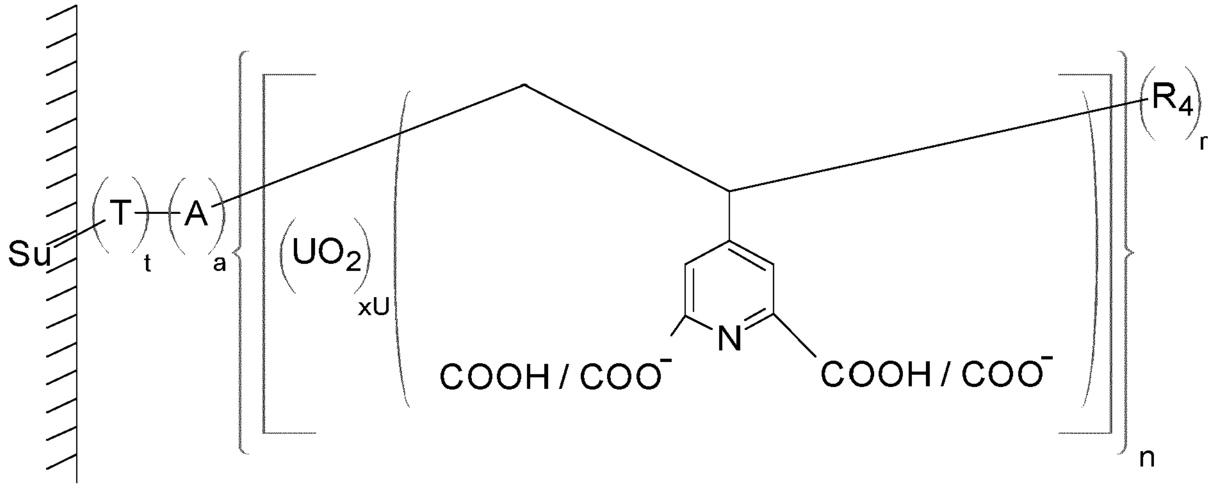

*Formule XIII*

dans laquelle :

- les définitions de Su, T, A, $R_4$, t, a, et r sont telles que décrites dans la Formule I,
- xU est un nombre rationnel compris de 0 à 6,

en particulier les polymères, greffés sur un support de Formule VII, Formule XIV, Formule XV, Formule XVI, Formule XVII,

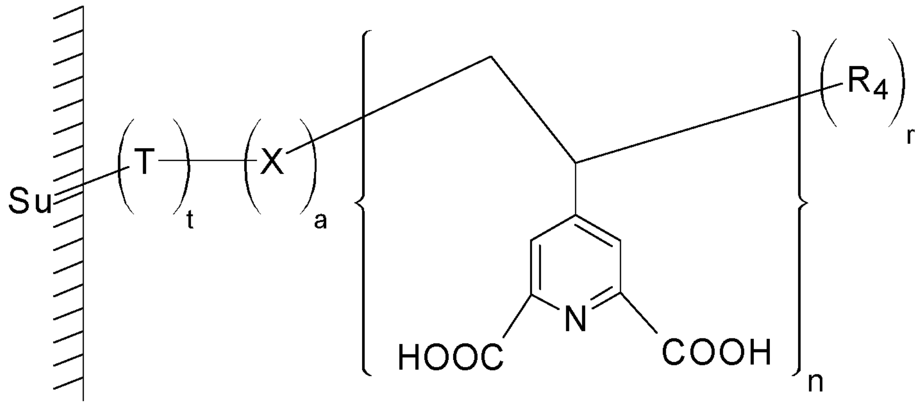

*Formule VII*

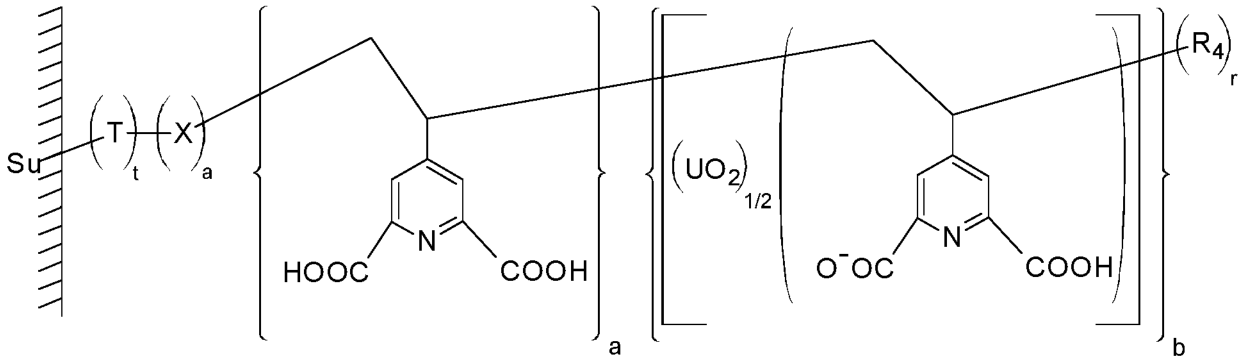

*Formule XIV*

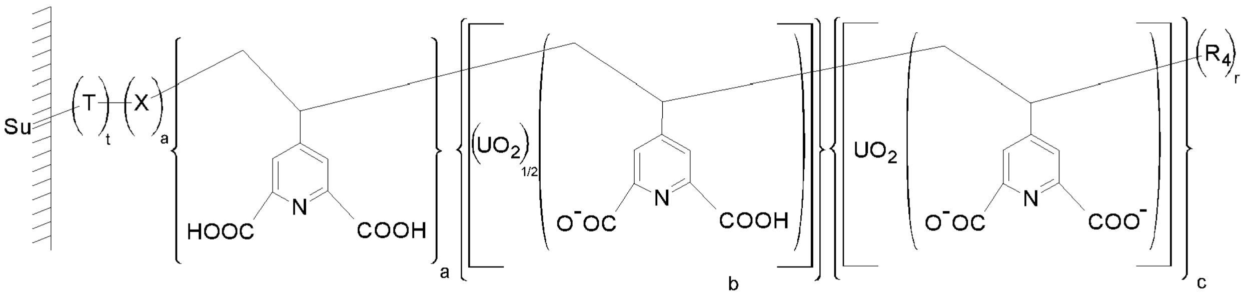

*Formule XV*

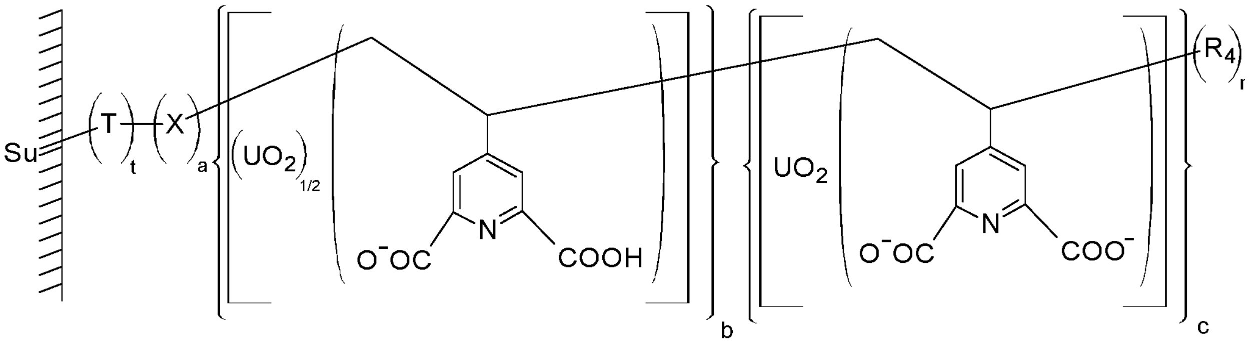

*Formule XVI*

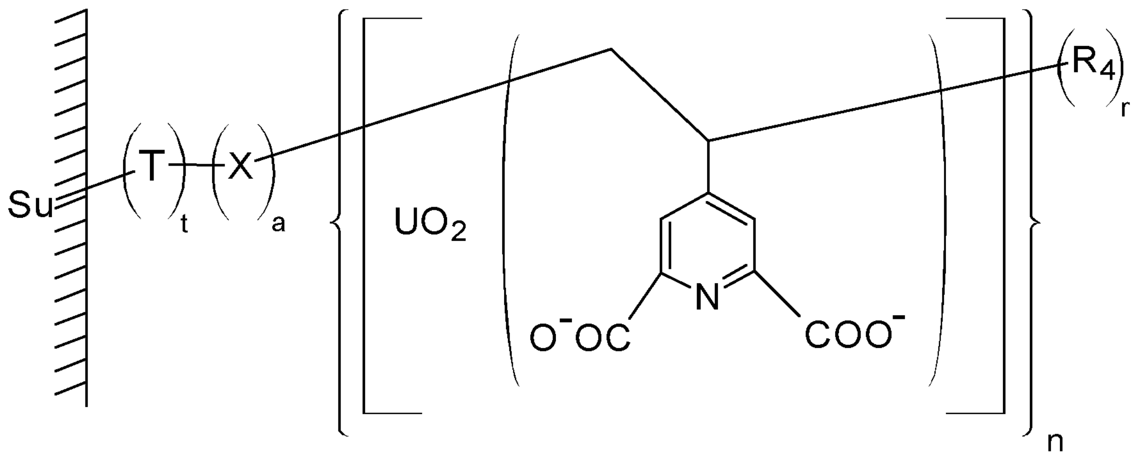

*Formule XVII*

dans lesquelles :

- les définitions de Su, T, A, $R_4$, t, a, et r sont telles que décrites dans la Formule I,
- $n_1$, $n_2$ et $n_3$ sont des nombres entiers non nuls,
- dans la Formule XIV, $n_1 + n_2 = n$,
- dans la Formule XV, $n_1 + n_2 + n_3 = n$,
- dans la Formule XVI, $n_2 + n_3 = n$.

Dans ce mode de réalisation, le polymère greffé sur un support de Formule XIII est un homopolymère greffé sur un support, comprenant un seul type d'unités monomères dérivées de la 4-vinylpyridine, dont les deux groupements substituants en positions 2 et 6 sont des groupements acides carboxyliques, et dans lequel chaque unité monomère forme ou non un complexe avec un cation d'uranyle.

Dans ce mode de réalisation, le polymère greffé sur un support de Formule XIII varie en fonction du pH de la solution dans laquelle le polymère se trouve. Le polymère greffé sur un support de Formule XIII a ainsi l'une des formules suivantes :

- en milieu très acide, le polymère greffé sur un support de Formule VII,
- en augmentant un peu le pH, le polymère greffé sur un support de Formule XIV,
- en continuant d'augmenter le pH, le polymère greffé sur un support de Formule XV,
- en poursuivant l'augmentation du pH, le polymère greffé sur un support de Formule XVI,
- en milieu neutre et basique, le polymère greffé sur un support de Formule XVII.

Dans ce mode de réalisation, le rapport $n_1/n_2$ du polymère greffé sur un support de Formule XIV ; les rapports $n_1/n_2$ et $n_1/n_3$ du polymère greffé sur un support de Formule XV et le rapport $n_2/n_3$ du polymère greffé sur un support de Formule XVI dépendent du pH de la solution.

La variation des rapports entre $n_1$, $n_2$ et $n_3$ pour les polymères, greffés sur un support, de Formule XIV, Formule XV et Formule XVI, a une incidence sur la charge globale du polymère, la capacité du polymère à se solvater, ainsi que la capacité du polymère à complexer des métaux.

Dans ce mode de réalisation, par exemple, dans une solution à pH neutre contenant des ions uranyles, le polymère constitutif de la Formule V se solvate et devient le polymère constitutif de la Formule XI. Ce polymère se complexe avec les ions uranyles et devient le polymère constitutif de la Formule XVII qui précipite. Le polymère constitutif de la Formule XVII est alors placé dans une solution aqueuse avec un pH très acide. Le polymère réagit et libère les ions uranyles tandis que le polymère devient le polymère constitutif de la Formule VII. Le polymère constitutif de la Formule VII ne peut plus être solvaté et précipite.

Selon un mode de réalisation particulier, la composition de l'invention, telle que définie ci-dessus, comprend ou est constituée d'un polymère greffé sur un support, ledit polymère ayant au moins une unité monomère dérivée d'un co-monomère, en particulier des unités monomères issue du styrène, de l'acide acrylique ou de l'acrylate de tertiobutyle.

Dans ce mode de réalisation, le polymère contient au minimum une unité monomère dérivée d'un co-monomère et en particulier, le co-monomère est soit du styrène, soit de l'acide acrylique, soit de l'acrylate de tertiobutyle.

Dans ce mode de réalisation, les co-monomères peuvent agir :

- comme espaceur en diminuant l'encombrement stérique autour des unités monomères dérivées de la 4-vinylpyridine ce qui peut permettre un accès plus facile des métaux aux sites de complexation, ou
- comme agent de modification des propriétés du polymère, en particulier la résistance aux rayonnements ou la résistance thermique.

Selon un mode de réalisation particulier, la composition de l'invention, telle que définie ci-dessus, comprend ou est constituée d'un copolymère greffé sur un support, dans laquelle le taux d'unités monomères dérivées d'un co-monomère varie d'une valeur supérieure stricte à 0% à une valeur inférieure à 80%.

Dans ce mode de réalisation, le polymère contient au minimum une unité monomère dérivée d'un co-monomère, mais le taux d'unités monomères dérivées d'un co-monomère peut prendre toutes les valeurs d'une valeur supérieure stricte à 0 jusqu'à 80%, en particulier d'une valeur supérieure stricte à 0 à 10% , d'une valeur supérieure stricte à 0 à 20%, d'une valeur supérieure stricte à 0 à 30%, d'une valeur supérieure stricte à 0 à 40%, d'une valeur supérieure stricte à 0 à 50%, d'une valeur supérieure stricte à 0 à 60%, d'une valeur supérieure stricte à 0 à 70% ou d'une valeur supérieure stricte à 0 à 80%.

Selon un mode de réalisation particulier, la composition de l'invention telle que définie ci-dessus, comprend ou est constituée d'un polymère greffé sur un support, possédant un seul type d'unités monomères dérivées de la 4-vinylpyridine et un seul type d'unités monomères dérivées d'un co-monomère, ledit polymère étant non complexé par

un métal, étant linéaire, étant non réticulé, et étant polymérisé par blocs.

La composition selon l'invention comprend ou est constituée d'un copolymère à deux blocs, greffé sur un support, ledit polymère étant de Formule XVIII,

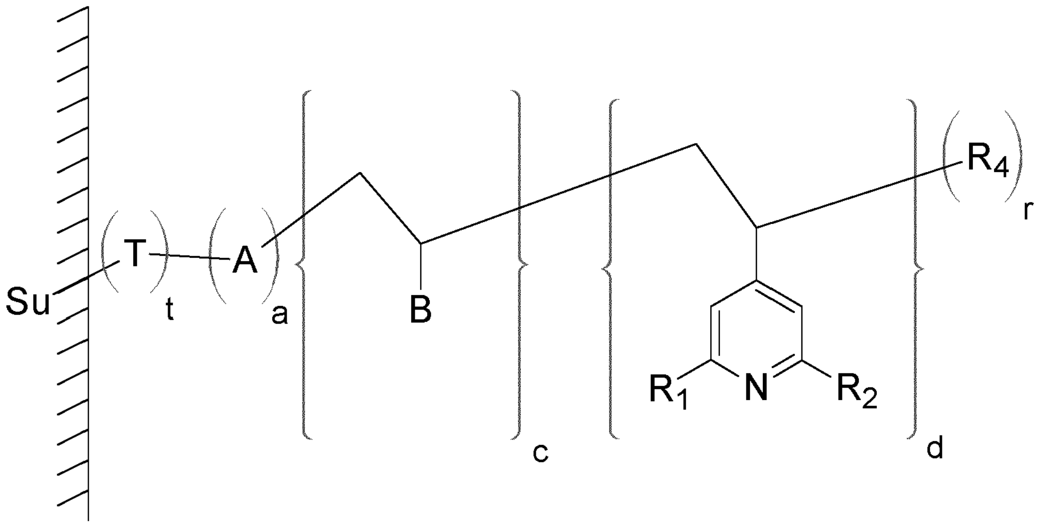

*Formule XVIII*

dans laquelle :

- les définitions de Su, T, A, Ri, $R_2$, $R_4$, t, a, et r sont telles que décrites dans la Formule IV,
- B est une unité monomère dérivée d'un co-monomère,
- d est le degré de polymérisation du bloc constitué des unités monomères dérivées de la 4-vinylpyridine et d est un nombre entier,
- c est le degré de polymérisation du bloc constitué des unités monomères dérivées du co-monomère et c est un nombre entier,
- $$d + c = n.$$

Au sens de la présente invention on entend par « copolymère à bloc », un polymère dans lequel au moins une unité monomère est dérivée d'un co-monomère et dans lequel les unités monomères de formule identique sont liées entre elle.

Dans ce mode de réalisation, le polymère est polymérisé sous forme de blocs, avec un premier bloc contenant toutes les unités monomères dérivées d'un co-monomère, et un second bloc contenant toutes les unités monomères dérivées de la 4-vinylpyridine.

Dans ce mode de réalisation, le polymère présente les caractéristiques et les propriétés de chaque bloc. Si le support n'est pas stable dans l'eau mais que le polymère greffé doit être utilisé en milieu aqueux, un bloc hydrophobe près du support permet de protéger le support de l'action de l'eau tandis que le bloc extérieur peut être actif dans le milieu aqueux.

Selon un mode de réalisation particulier, la composition de l'invention telle que définie ci-dessus, comprend ou est constituée d'un polymère greffé sur un support, possédant :

- soit un seul type d'unités monomères dérivées de la 4-vinylpyridine , dont les deux groupements substituants en positions 2 et 6 sont des groupements esters méthyliques, et un seul type d'unités monomères dérivées d'un co-monomère, le styrène, ledit polymère étant non complexé par un métal, étant linéaire, étant non réticulé, et étant polymérisé par bloc,
- soit un seul type d'unités monomères dérivées de la 4-vinylpyridine , dont les deux groupements substituants en positions 2 et 6 sont des groupements acides carboxyliques, et un seul type d'unités monomères dérivées d'un co-monomère, le styrène, ledit polymère étant non complexé par un métal, étant linéaire, étant non réticulé, et étant polymérisé par bloc.

La composition selon l'invention comprend ou est constituée d'un copolymère à deux blocs, greffé sur un

support, ledit polymère étant de Formule XIX ou de Formule XIX b,

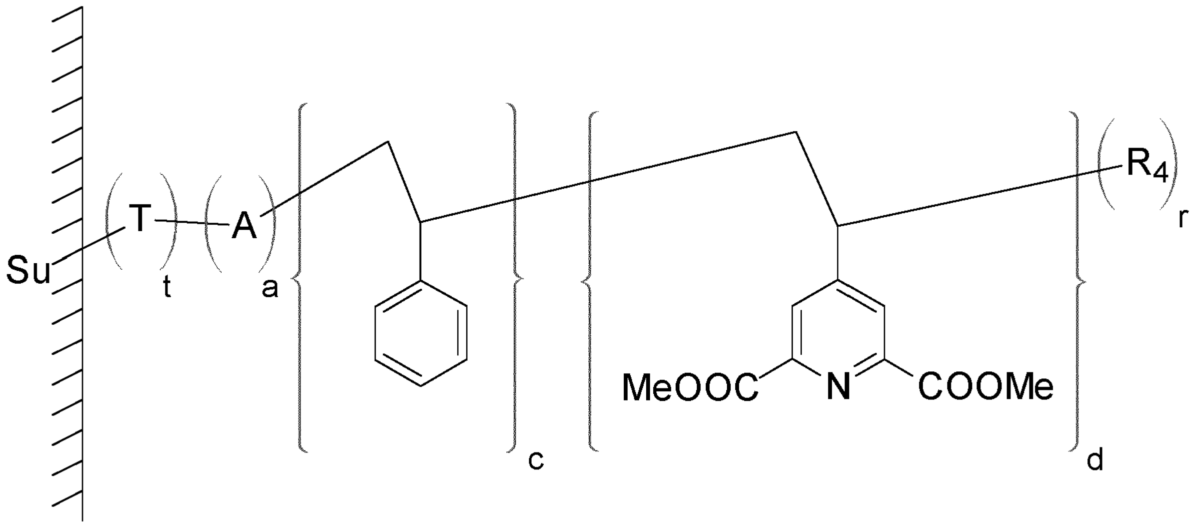

*Formule XIX*

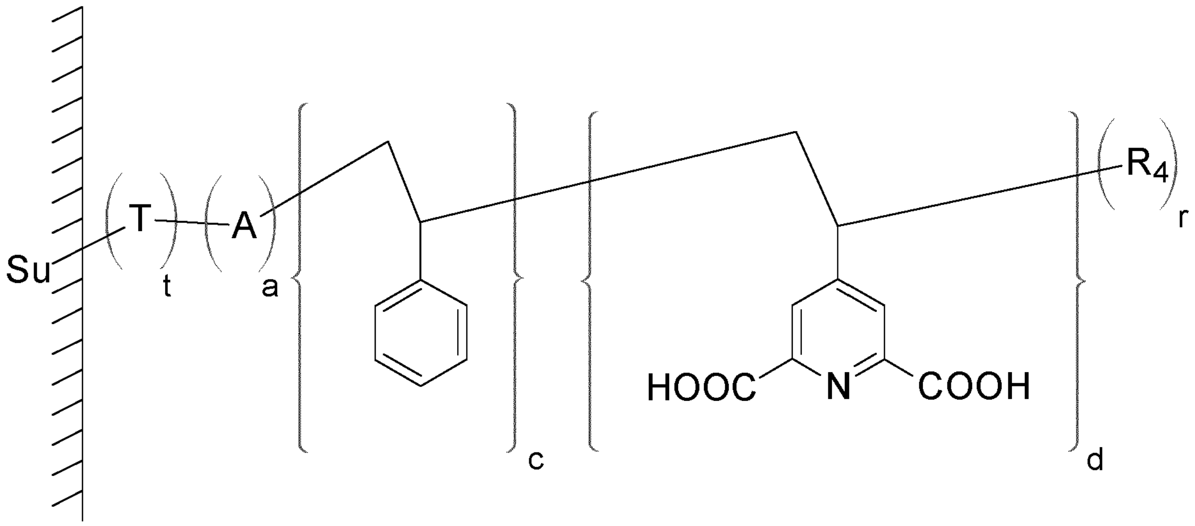

*Formule XIX b*

dans laquelle :

- les définitions de Su, T, A, $R_4$, t, a, et r sont telles que décrites dans la Formule I,
- les définitions de c et d sont telles que décrites dans la Formule XVIII.

Dans ce mode de réalisation, le polymère est polymérisé sous forme de blocs, avec un premier bloc contenant uniquement des unités monomères dérivées du styrène, et un second bloc contenant toutes les unités monomères dérivées de la 4-vinylpyridine.

Dans ce mode de réalisation, le polymère greffé sur un support de Formule XIX b, n'est pas solvaté en milieu aqueux. Le bloc constitué d'unités monomères dérivées du styrène est hydrophobe. Le bloc constitué d'unités monomères dérivées de la 4-vinylpyridine, dont les deux groupements substituants en positions 2 et 6 sont des groupements acides carboxyliques, est hydrophile. Ainsi, si le support n'est pas stable dans l'eau, le bloc polystyrène va limiter le contact entre le support et l'eau, tandis que le bloc d'unités monomères dérivées de la 4-vinylpyridine peut être actif dans le milieu aqueux.

Selon un mode de réalisation particulier, la composition de l'invention, telle que définie ci-dessus, comprend ou est constituée d'un copolymère greffé sur un support, et possédant un ou plusieurs types d'unités monomères dérivées

de la 4-vinylpyridine différents et un ou plusieurs types d'unités monomères dérivées d'un co-monomère, ledit polymère étant complexé ou non avec un ou plusieurs métaux différents, étant non linéaire et étant réticulé avec au moins un autre polymère.

La composition, selon l'invention, comprend ou est constituée d'un copolymère réticulé, greffé sur un support, ledit polymère étant de Formule XX,

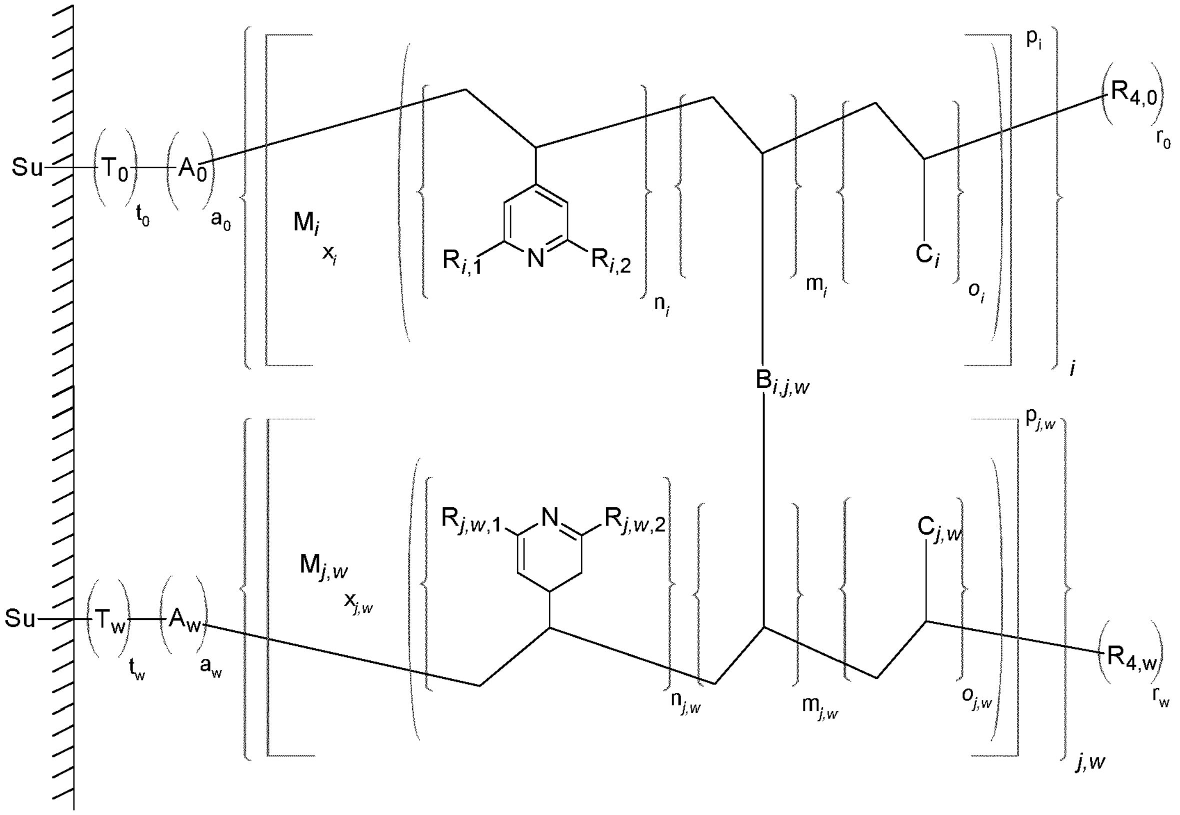

*Formule XX*

dans laquelle :

- Su est le support sur lequel sont fixés les polymères,
- w est un nombre entier strictement positif, indiciel, variant de 1 au nombre de polymères réticulés avec le polymère d'indice 0, lui-même compris de 1 à 1000,
- $A_0$ et les $A_w$ sont des composés issus d'amorceurs de polymérisation,
- To et les $T_w$ sont des composés faisant le lien entre le support et les éventuels composés issus d'amorceurs de polymérisation ou entre le support et la première unité monomère respective,
- $R_{4,0}$ et les $R_{4,w}$ sont des composés permettant la propagation de la polymérisation, issus ou non dudit amorceur de polymérisation, ou permettant la terminaison de la polymérisation, ou un agent de transfert,
- $t_0$, $a_0$, $r_0$, les $t_w$, les $a_w$ et les $r_w$ sont identiques ou différents et valent 0 ou 1,
- *i et j,w* sont des nombres entiers strictement positif, indiciels, variant respectivement de 1 à $n_i$, et de 1 à $n_{j,w}$, $n_i$ et $n_{j,w}$ étant compris de 1 à 9999,
- $n_i+n_{j,w}= n$ , *n* étant compris de 3 à 10000,

et pour chaque *i* et chaque *j,w* :

◦ $R_{i,1}$, $R_{i,2}$, $R_{j,w,1}$ et $R_{j,w,2}$ sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,

sous réserve que lorsque $R_{i,1}$ représente l'hydrogène, alors $R_{i,2}$ est différent de l'hydrogène, et inversement,

sous réserve que lorsque $R_{j,w,1}$ représente l'hydrogène, alors $R_{j,w,2}$ est différent de l'hydrogène, et inversement,

◦ $B_{i,j,w}$ est une unité monomère dérivée d'un co-monomère, formant un pont de réticulation entre le polymère 0 en position i et le polymère d'indice w en position j,
o les $C_i$ et les $C_{j,w}$ sont des unités monomères dérivées d'un co-monomère ne formant pas un pont de réticulation,
◦ ni, $m_i$, o;, les $n_{j,w}$, les $m_{j,w}$, et les $o_{j,w}$ sont des nombres entiers égaux à 0 ou 1,
◦

$$n_i + m_i + o_i = 1,$$

◦

$$n_{j,w} + m_{j,w} + o_{j,w} = 1,$$

◦ la somme des $o_{j,w}$ est non nulle, et la somme des $o_i$ est non nulle.

Dans ce mode de réalisation, le polymère greffé sur un support de Formule XX est un copolymère réticulé greffé sur un support dans lequel les ponts de réticulations se forment uniquement sur des unités monomères dérivées d'un co-monomère.

Dans ce mode de réalisation, le polymère greffé sur un support de Formule XX peut contenir des unités monomères dérivées d'un co-monomère ne formant pas de pont de réticulation.

Dans ce mode de réalisation, le polymère peut former un hydrogel. Cet hydrogel en surface du support peut améliorer la stabilité mécanique de l'ensemble polymère plus support.

Selon un mode de réalisation particulier, la composition de l'invention, telle que définie ci-dessus, comprend ou est constituée d'un copolymère greffé sur un support, et possédant un ou plusieurs types d'unités monomères dérivées de la 4-vinylpyridine différents et un ou plusieurs types d'unités monomères dérivées d'un co-monomère, ledit polymère étant complexé ou non avec un ou plusieurs métaux différents, étant non linéaire et étant réticulé avec au moins un autre polymère.

La composition, selon l'invention, comprend ou est constituée d'un copolymère réticulé, greffé sur un support, ledit polymère étant de Formule XX,

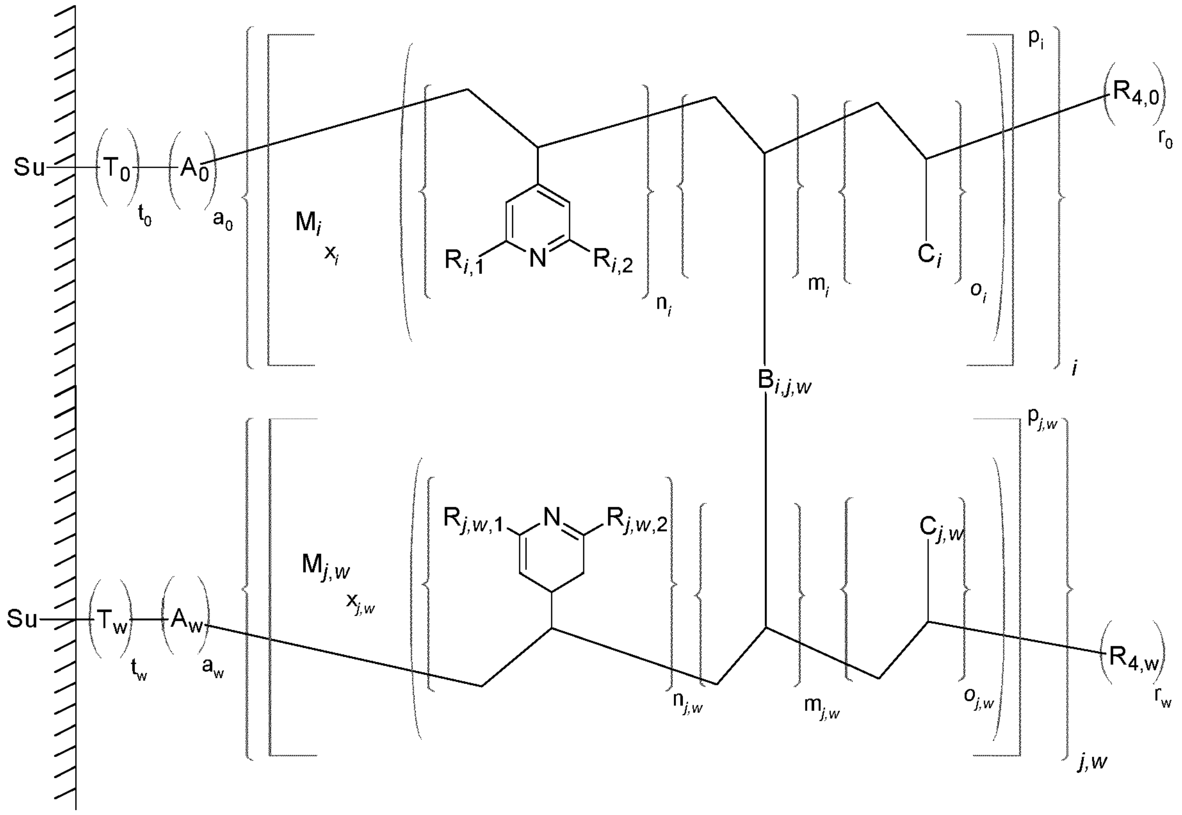

*Formule XX*

dans laquelle :

- Su est le support sur lequel sont fixés les polymères,
- w est un nombre entier strictement positif, indiciel, variant de 1 au nombre de polymères réticulés avec le polymère d'indice 0, lui-même compris de 1 à 1000,
- $A_0$ et les $A_w$ sont des composés issus d'amorceurs de polymérisation,
- To et les $T_w$ sont des composés faisant le lien entre le support et les éventuels composés issus d'amorceurs de polymérisation ou entre le support et la première unité monomère respective,
- $R_{4,0}$ et les $R_{4,w}$ sont des composés permettant la propagation de la polymérisation, issus ou non dudit amorceur de polymérisation, ou permettant la terminaison de la polymérisation, ou un agent de transfert,
- $t_0$, $a_0$, $r_0$, les $t_w$, les $a_w$ et les $r_w$ sont identiques ou différents et valent 0 ou 1,
- *i et j,w* sont des nombres entiers strictement positif, indiciels, variant respectivement de 1 à $n_i$, et de 1 à $n_{j,w}$, $n_i$ et $n_{j,w}$ étant compris de 1 à 9999,
- $n_i+n_{j,w} = n$ , *n* étant compris de 3 à 10000,

et pour chaque *i* et chaque *j,w* :

◦ $R_{i,1}$, $R_{i,2}$, $R_{j,w,1}$ et $R_{j,w,2}$ sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,

sous réserve que lorsque $R_{i,1}$ (respectivement $R_{i,2}$) représente soit l'hydrogène, soit un radical alkyl de 1 à 4 carbones, soit un radical aryle de 1 à 4 carbones, soit un radical alcène de 1 à 4 carbones, alors $R_{i,2}$ (respectivement $R_{i,1}$) est différent de l'hydrogène, du radical alkyl de 1 à 4 carbones, du radical aryle de 1 à 4 carbones, et du radical alcène de 1 à 4 carbones,

sous réserve que lorsque $R_{j,w,1}$ (respectivement $R_{j,w,2}$) représente soit l'hydrogène, soit un radical alkyl de 1 à 4 carbones, soit un radical aryle de 1 à 4 carbones, soit un radical alcène de 1 à 4 carbones, alors $R_{j,w,2}$ (respectivement $R_{j,w,1}$) est différent de l'hydrogène, du radical alkyl de 1 à 4 carbones, du radical aryle de 1 à 4 carbones, et du radical alcène de 1 à 4 carbones,

◦ $B_{i,j,w}$ est une unité monomère dérivée d'un co-monomère, formant un pont de réticulation entre le polymère 0 en position i et le polymère d'indice w en position $j$,
o les $C_i$ et les $C_{j,w}$ sont des unités monomères dérivées d'un co-monomère ne formant pas un pont de réticulation,
◦ ni, $m_i$, $o_i$, les $n_{j,w}$, les $m_{j,w}$, et les $o_{j,w}$ sont des nombres entiers égaux à 0 ou 1,
◦

$$n_i + m_i + o_i = 1,$$

◦

$$n_{j,w} + m_{j,w} + o_{j,w} = 1,$$

◦ la somme des $o_{j,w}$ est non nulle, et la somme des $o_i$ est non nulle.

Selon un mode de réalisation particulier, la composition de l'invention, telle que définie ci-dessus, comprend ou est constituée d'un copolymère greffé sur un support, et possédant un seul type d'unités monomères dérivées de la 4-vinylpyridine, dont les deux groupements substituants en positions 2 et 6 sont des groupements acides carboxyliques, et un seul type d'unités monomères dérivées d'un co-monomère, le 1,4-divinylbenzène, ledit polymère étant non complexé par un métal, étant non linéaire et étant réticulé avec au moins un autre polymère.
La composition, selon l'invention, comprend ou est constituée d'un copolymère réticulé greffé sur un support, ledit copolymère étant de Formule XXI,

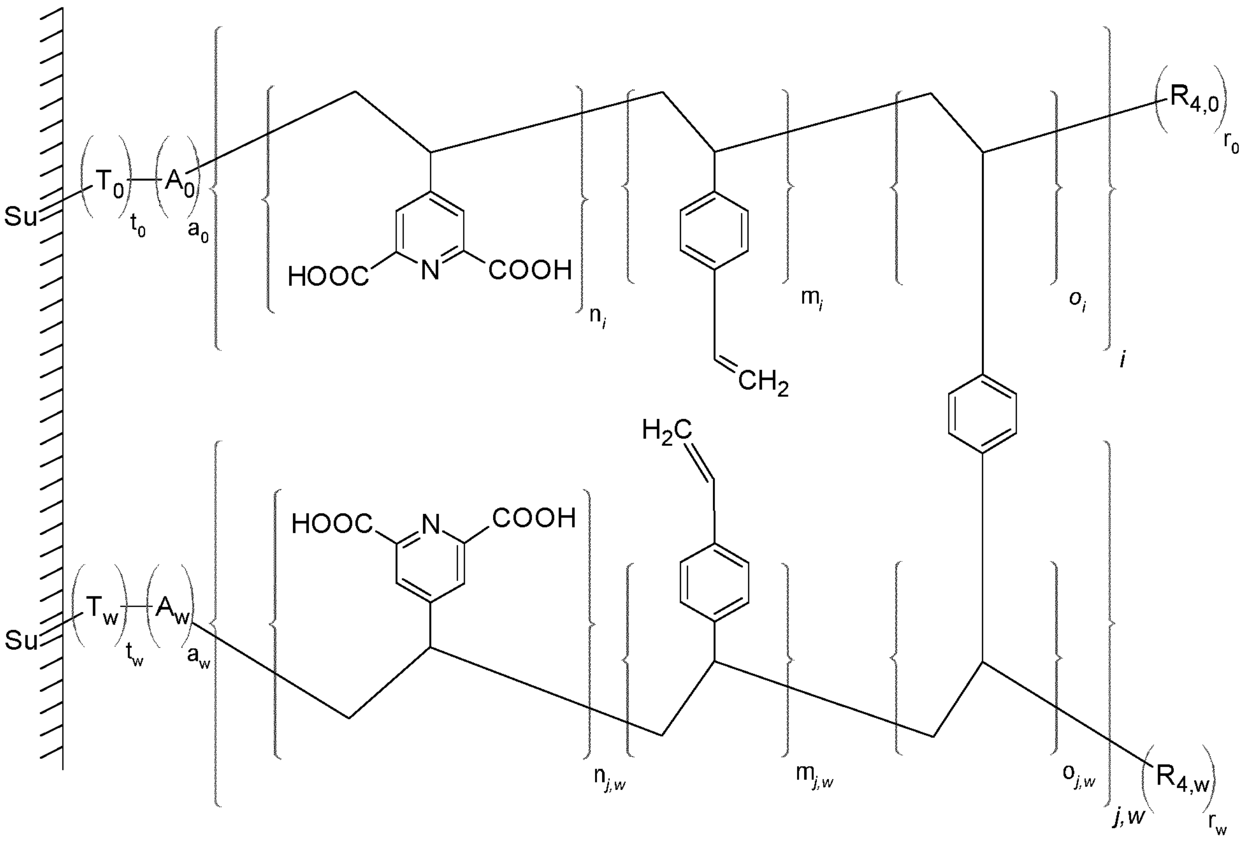

*Formule XXI*

dans laquelle :

- les définitions de Su, w, $T_0$, $T_w$, $A_0$, $A_w$, $R_{4,0}$, $R_{4,w}$, $t_0$, $a_0$, i, j,w, m, $m_i$, $o_i$, $n_{j,w}$, $m_{j,w}$, $o_{j,w}$, $r_0$ et $r_w$ sont telles que définie dans la Formule XX.

Dans ce mode de réalisation, le polymère greffé sur un support de Formule XXI est un copolymère réticulé comprenant un seul type d'unités monomères dérivées de la 4-vinylpyridine, dont les deux groupements substituants en positions 2 et 6 sont des groupements acides carboxyliques, et comprenant un seul type d'unités monomères dérivées d'un co-monomère, le 1,4-divinylbenzène.

Dans ce mode de réalisation, les unités monomères dérivées du 1,4-divinylbenzène du polymère greffé sur un support de Formule XXI peuvent former ou non un pont de réticulation. Au moins un pont de réticulation est formé dans le polymère greffé sur un support de Formule XXI.

Selon un mode de réalisation particulier, la composition de l'invention, telle que définie ci-dessus, comprend ou est constituée d'un polymère greffé sur un support, dans lequel ledit polymère est complexé à un métal.

Dans ce mode de réalisation, le polymère est complexé à au moins un atome métallique, en particulier pour son utilisation comme agent chélatant ou comme catalyseur.

Selon un mode de réalisation particulier, la composition de l'invention, telle que définie ci-dessus, comprend ou est constituée d'un monomère ou d'un polymère greffé sur un support, dans lequel ledit monomère ou polymère est complexé à un métal choisi parmi les actinides, les lanthanides ou les métaux de transition.

Dans ce mode de réalisation, le polymère est complexé à une famille particulière de métaux.

Selon un mode de réalisation particulier, la composition de l'invention, telle que définie ci-dessus, comprend ou est constituée d'un polymère greffé sur un support, dans lequel ledit polymère est complexé à de l'uranium.

Dans ce mode de réalisation, le polymère greffé sur un support est complexé uniquement à de l'uranium. Ce polymère est utile pour la récupération de l'uranium dans l'eau de mer ou dans le combustible nucléaire usagé. Il permet aussi la préparation de catalyseur à base d'uranium pour catalyser des réactions comme la dégradation des composés organiques volatils en phase gazeuse ou l'oxydation du méthane en méthanol.

Selon un mode de réalisation particulier, la composition de l'invention, telle que définie ci-dessus, comprend ou est constituée d'un monomère ou d'un polymère greffé sur un support, ledit polymère est solvaté en solution aqueuse et en particulier dans l'eau de mer.

Dans ce mode de réalisation, le polymère, hors support, est solvaté dans des solutions aqueuses et plus particulièrement dans l'eau de mer. C'est en particulier le cas pour l'homopolymère avec une unité monomère dérivée de la 4-vinylpyridine, dont les deux groupements substituants en positions 2 et 6 sont des groupements acides carboxyliques. Les groupements acides carboxyliques facilitent la solvatation du polymère dans des conditions de pH neutre ou basique, comme c'est le cas dans l'eau de mer.

Selon un mode de réalisation particulier, la composition de l'invention, telle que définie ci-dessus, comprend ou est constituée d'un monomère ou d'un polymère greffé sur un support, ledit polymère étant complexé avec un métal, et étant solvaté ou non en solution aqueuse.

Dans ce mode de réalisation, le polymère est solvaté ou non selon les conditions dans lequel le polymère se trouve, quand le polymère est complexé avec un métal.

Selon un mode de réalisation particulier, la composition de l'invention, telle que définie ci-dessus, comprend ou est constituée d'un monomère ou d'un polymère greffé sur un support, ledit polymère étant solvaté en solution aqueuse non complexé par un métal et non solvaté en solution complexé avec un métal, en particulier avec l'uranium.

Dans ce mode de réalisation, le polymère est solvaté dans une solution aqueuse et le polymère précipite en même temps que le métal lorsque le polymère et le métal se complexent. C'est le cas en particulier du polymère greffé sur un support de Formule VI, qui est solvaté dans l'eau à pH neutre et qui une fois complexé à l'uranium donne la Formule XIII, et précipite à pH neutre.

Selon un mode de réalisation particulier, la composition de l'invention, telle que définie ci-dessus, comprend ou est constituée d'un monomère ou d'un polymère greffé sur un support, ledit polymère étant solvaté dans des solvants organiques, en particulier l'acétonitrile, et le diméthylsulfoxyde (DMSO).

Dans ce mode de réalisation, le polymère est solvaté dans une solution organique comme l'acétonitrile, c'est en particulier le cas pour l'homopolymère comprenant une unité monomère dérivée de la 4-vinylpyridine, dont les deux groupements substituants en positions 2 et 6 sont des groupements esters méthyliques.

Selon un mode de réalisation particulier, la composition de l'invention, telle que définie ci-dessus, comprend ou est constituée d'un polymère greffé sur un support, ledit support Su de la Formule I étant choisi parmi le copolymère de polychlorure de vinyle-co-chlorure de polyvinylidène (PVC-co-PVDC), le polychlorure de vinyle (PVC), le PET ou le SiOz.

Dans ce mode de réalisation, les polymères de la présente invention peuvent être greffés sur différents supports à base de polymères, comme le PVC ou à base inorganiques comme la silice.

Selon un mode de réalisation particulier, la composition de l'invention, telle que définie ci-dessus, comprend ou est constituée d'un monomère ou d'un polymère greffé sur un support, ledit composé T de la Formule I étant choisi parmi le SiOH ou le composé de Formule XXII.

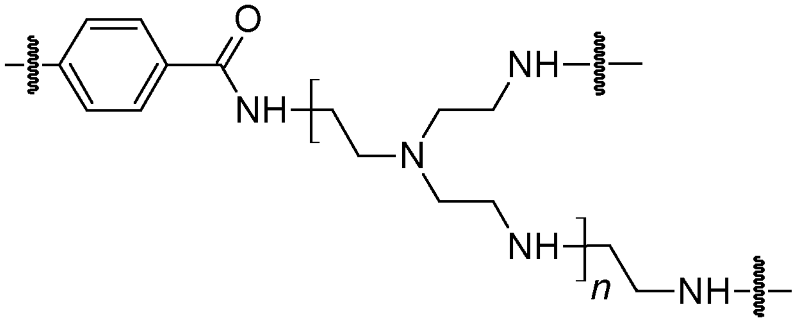

*Formule XXII*

Dans ce mode de réalisation, la liaison entre le polymère et le support contient ou est constitué d'un composé T issu du support ou d'un composé modifiant la surface du support, qui sert de lien entre le support et soit l'éventuel amorceur de polymérisation, soit le polymère.

Dans ce mode de réalisation, la liaison entre le support et le polymère est constituée soit du composé T uniquement, soit du composé T lié au composé A.

Selon un mode de réalisation particulier, la composition de l'invention, telle que définie ci-dessus, comprend ou est constituée d'un polymère greffé sur un support, dans lequel A de la Formule I est issu d'un amorceur de polymérisation choisi parmi le chlorure de 4-(chlorométhyl)benzoyle, le chlorure de benzyle, l'AIBN, le 2-bromo-2-méthylpropanoate de méthyle ou le composé de Formule XXIII.

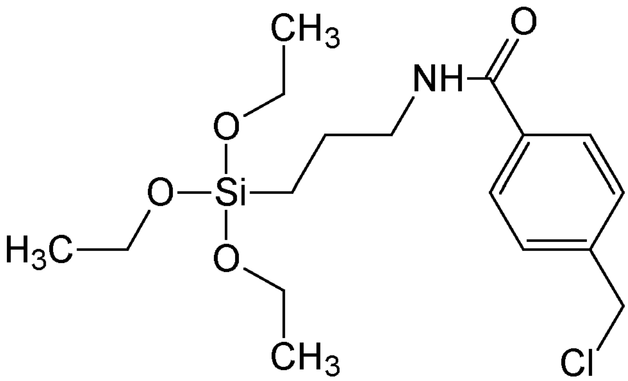

*Formule XXIII*

Dans ce mode de réalisation, un fragment d'amorceur de polymérisation lie le polymère avec soit un composé T, soit directement le support. La liste ci-dessus est non exhaustive et comprend l'ensemble des amorceurs de polymérisation utilisables dans les polymérisations radicalaires.

Selon un mode de réalisation particulier, la composition de l'invention, telle que définie ci-dessus, comprend ou est constituée d'un polymère greffé sur un support, ledit composé $R_4$ de la Formule I étant choisi parmi un atome de chlore, ou les composés de Formule XXIV.

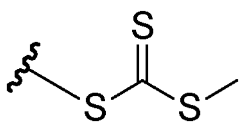
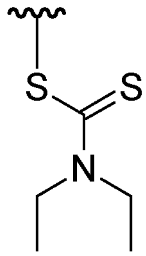
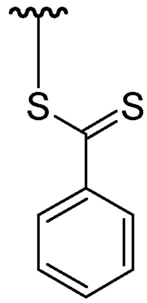

*Formule XXIV*

Dans ce mode de réalisation, l’extrémité du polymère n’est pas le dernier carbone de la chaine polymérique. La liste est non exhaustive et comprend l’ensemble des agents de transfert utilisables dans les polymérisations radicalaires dites contrôlées.

Selon un mode de réalisation particulier, la composition de l’invention, telle que définie ci-dessus, comprend ou est constituée d’un monomère ou d’un polymère greffé sur un support de Formule XXV, Formule XXVI, Formule XXVII, Formule XXVIII, Formule XXIX, ou Formule XXX.

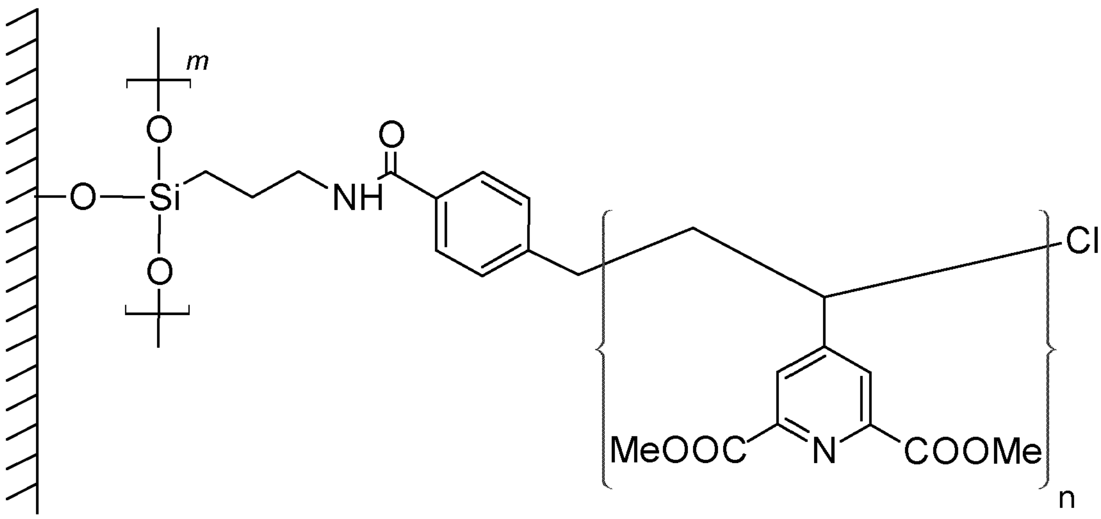

*Formule XXV*

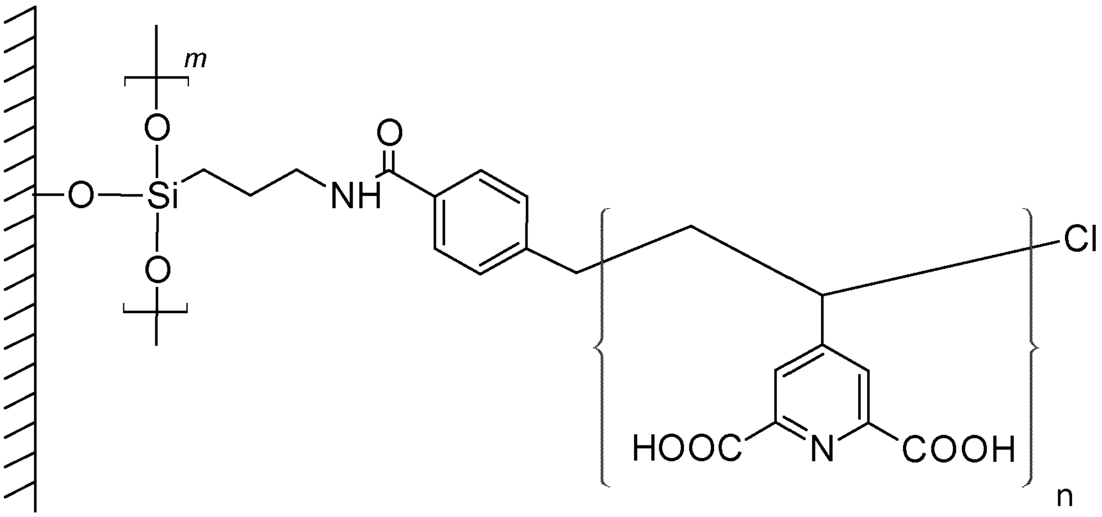

*Formule XXVI*

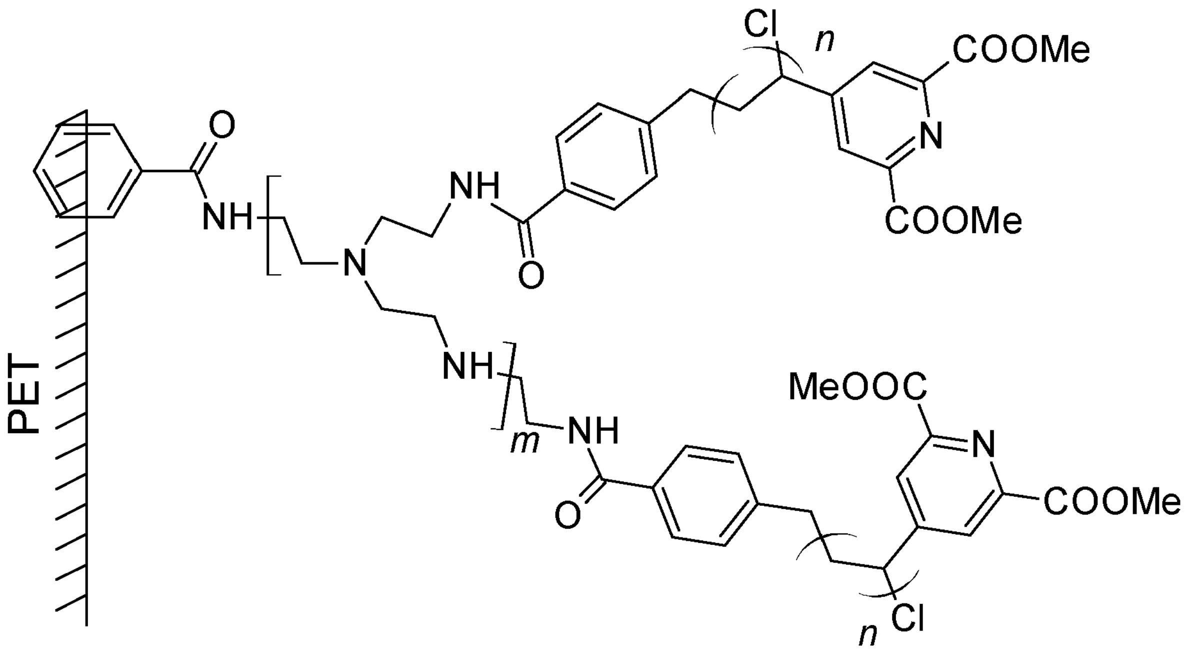

*Formule XXVII*

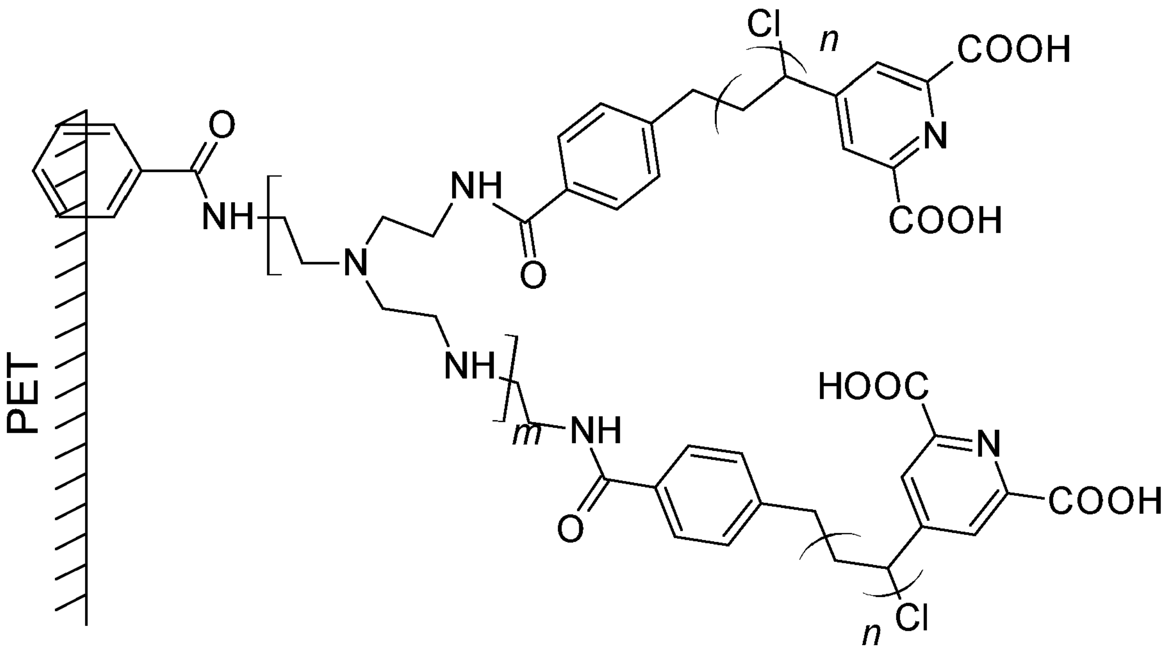

*Formule XXVIII*

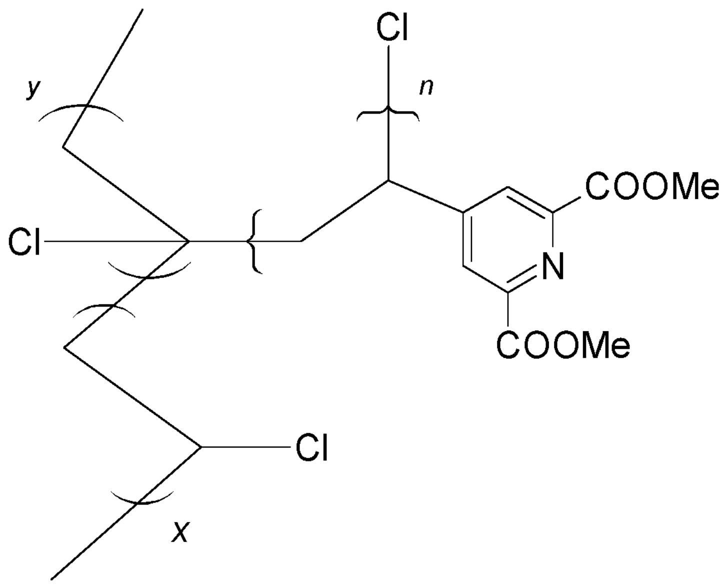

*Formule XXIX*

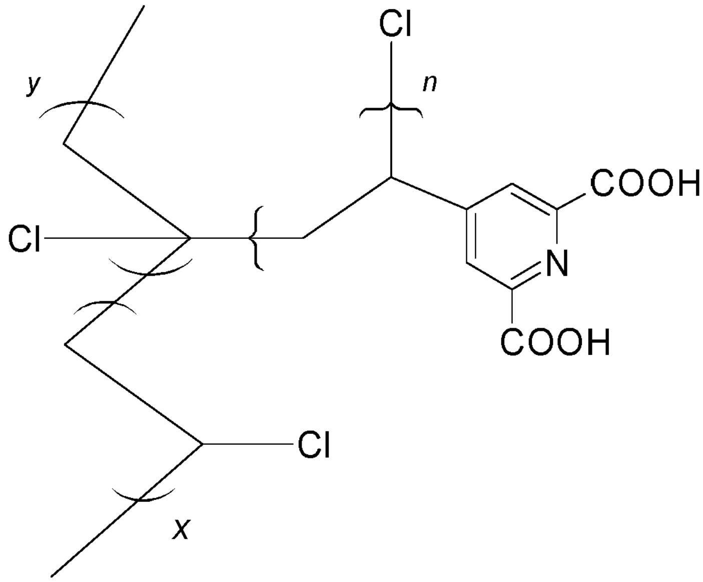

*Formule XXX*

Dans ce mode de réalisation, les polymères de Formule XXV à Formule XXXIX sont :

- des homopolymères constitués d'unités monomères dérivées de la 4-vinylpyridine et substituées par deux groupements acides carboxyliques pour les polymères greffés sur un support de Formule XXVI, Formule XXVIII et Formule XXX,
- des homopolymères constitués d'unités monomères dérivées de la 4-vinylpyridine et substituées par deux groupements esters méthyliques pour les polymères greffés sur un support de Formule XXV, Formule XXVII et Formule XXIX.

Les polymères greffés sur un support de Formule XXV et de Formule XXVI sont supportés sur un support en silice. Les polymères greffés sur un support de Formule XXVII et de Formule XXVIII sont supportés sur des fibres de PET. Les polymères greffés sur un support de Formule XXIX et de Formule XXX sont supportés sur des fibres de PVC-co-PDVC.

La présente invention concerne en outre un procédé de préparation d'un polymère greffé notamment de façon covalente sur un support, tel que défini ci-dessus, ledit procédé étant réalisé selon la technique « grafted to » ou « grafted from ».

Au sens de la présente invention, on entend par « grafted to », une technique de polymérisation dans laquelle le polymère à l'issu de l'étape de polymérisation n'est pas greffé au support mais est libre. L'étape de greffage au support est postérieure à la polymérisation.

Au sens de la présente invention, on entend par « grafted from », une technique de polymérisation dans laquelle l'amorçage est réalisé soit sur un composé lié de façon covalente au support, soit directement sur le support. Les monomères réagissent ensuite sur le support pour former la chaine polymérique. Le polymère greffé sur un support croît à partir dudit support selon cette technique.

La présente invention concerne en outre un procédé de préparation d'un monomère ou d'un polymère greffé notamment de façon covalente sur un support, tel que défini ci-dessus, comprenant les étapes de préparation suivantes :

a. une éventuelle étape de prétraitement du support par la mise en contact dudit support avec un réactif de prétraitement et/ou un prétraitement physique, pour obtenir un support éventuellement prétraité,

b. une éventuelle étape de pré-greffage sur le support éventuellement prétraité par la mise en contact dudit support éventuellement prétraité avec un amorceur de polymérisation, pour obtenir un support éventuellement prétraité et éventuellement pré-greffé,

c. une étape de polymérisation radicalaire commençant par l'amorçage du support éventuellement prétraité et éventuellement pré-greffé puis continuant par la mise en contact du support éventuellement prétraité et éventuellement pré-greffé avec :

◦ au moins un monomère dérivé de la 4-vinylpyridine dans lequel les carbones en positions 2 et 6 peuvent être substitués par l'un des substituants du groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
◦ et éventuellement d'au moins un co-monomère,

avec ou sans réticulation,
pour obtenir un monomère ou un polymère greffé sur le support,

d. une éventuelle étape de modification par la mise en contact du monomère ou du polymère greffé sur le support avec un réactif pour modifier l'un au moins des susdits substituants, pour obtenir un monomère ou un polymère greffé sur le support et éventuellement modifié,

e. une éventuelle étape de complexation par la mise en contact du monomère ou du polymère greffé sur le support et éventuellement modifié avec un cation métallique pour obtenir un monomère ou un polymère greffé sur le support, éventuellement modifié et éventuellement complexé.

Le procédé de synthèse d'un polymère greffé sur un support selon la présente invention est un procédé « grafted from ».

Le procédé de synthèse des polymères selon la présente invention présente l'avantage de pouvoir réaliser l'étape de polymérisation dans une solution dans laquelle les monomères qui forment les unités monomères ne sont pas solvatés. La présence de l'étape de modification permet de polymériser des monomères ayant des groupements en positions 2 et 6 différents des groupements finaux. Par exemple, le monomère dérivé de la 4-vinylpyridine, dont les deux groupements substituants en positions 2 et 6 sont des groupements acides carboxyliques n'est pas solvaté en solution organique. Il est donc très difficile de polymériser ce monomère en solution organique. Par contre le monomère dérivé de la 4-vinylpyridine, dont les deux groupements substituants en positions 2 et 6 sont des groupements esters méthyliques est solvaté en milieu organique. La polymérisation du monomère dérivé de la 4-vinylpyridine, dont les deux groupements substituants en positions 2 et 6 sont des groupements esters méthyliques, est alors possible et l'étape de modification suivante permet d'hydrolyser la fonction ester en une fonction acide Le polymère ainsi obtenu, avec les fonctions acides, est non solvaté en milieu organique.

Le procédé de synthèse des polymères selon la présente invention présente l'avantage de pouvoir facilement contrôler l'étape de polymérisation. La présence de l'étape de modification permet de protéger les deux groupements des monomères dérivés de la 4-vinylpyridine. En effet, si les groupements en positions 2 et 6 sont très réactifs (COOH, $NH_2$...), ces groupements sont susceptibles de réagir pendant l'étape de polymérisation. Cela peut conduire à la formation de ramifications non contrôlées et/ou à la perte de certain groupement. L'étape de modification post-polymérisation permet d'effectuer la polymérisation en utilisant des groupements protecteurs qui sont par la suite éliminés lors de l'étape de modification. Le recours à une polymérisation radicalaire contrôlable comme la polymérisation RAFT ou ATRP améliore le contrôle sur la polymérisation.

Le procédé de synthèse des polymères selon la présente invention peut comprendre une étape supplémentaire de préparation des monomères dérivés de la 4-vinylpyridine.

Au sens de la présente invention, on entend par « polymérisation radicalaire » la technique de polymérisation qui permet de polymériser des monomères et dont la propagation est assurée par la présence d'un radical. Les exemples de polymérisations radicalaires sont : la polymérisation radicalaire dite classique, la polymérisation par transfert de chaine réversible par addition-fragmentation (RAFT), la polymérisation par l'intermédiaire de nitroxyde (NMP), la polymérisation radicalaire par transfert d'atome (ATRP), la polymérisation radicalaire par transfert d'atome par activateur supplémentaire et agent réducteur (SARA ATRP).

Au sens de la présente invention, on entend par « amorçage du support éventuellement prétraité et éventuellement pré-greffé » l'étape permettant d'initier la polymérisation. Par exemple dans le cas de la polymérisation radicalaire, cette étape permet par des moyens physiques ou chimiques de créer un radical sur le support éventuellement prétraité et éventuellement pré-greffé sur lequel peut réagir une unité monomère.

Selon un mode de réalisation particulier, le procédé de préparation, tel que défini ci-dessus, d'un monomère ou d'un polymère greffé sur un support de l'invention de Formule I,

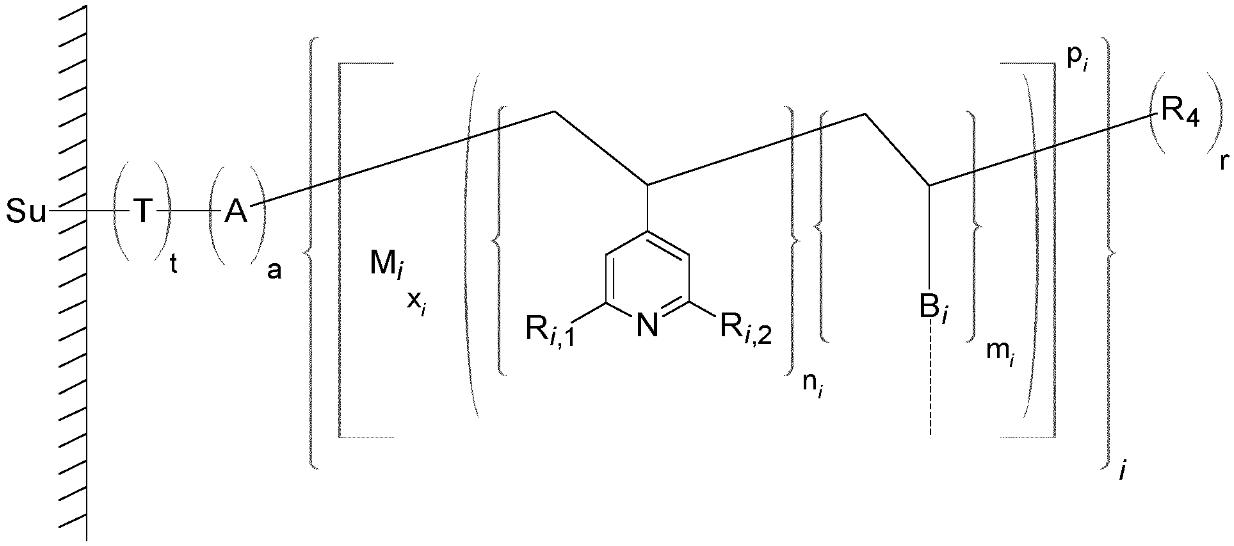

Formule I

dans laquelle :

- Su est le support sur lequel est fixé le monomère ou le polymère,
- A est un composé issu d'un amorceur de polymérisation,
- T est un composé faisant le lien entre le support et l'éventuel composé issu d'un amorceur de polymérisation ou entre le support et la première unité monomère,
- $R_4$ est un composé permettant la propagation de la polymérisation, issu ou non dudit amorceur de polymérisation, ou permettant la terminaison de la polymérisation, ou un agent de transfert,
- t, a et r sont identiques ou différents et valent 0 ou 1,
- i est un nombre entier strictement positif, indiciel, variant de 1 à n, lui-même compris de 1 à 10000,

et pour chaque i :

◦ $R_{i,1}$ et $R_{i,2}$ sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore, sous réserve que lorsque $R_{i,1}$ représente l'hydrogène, alors $R_{i,2}$ est différent de l'hydrogène, et inversement,

o $B_i$ est une unité monomère dérivée d'un co-monomère, formant ou non un pont de réticulation,
o $M_i$ est un cation métallique,
◦ $n_i$ et $m_i$ sont des nombres entiers égaux à 0 ou 1,
◦

$$n_i + m_i = 1,$$

◦ $x_i$ est un nombre compris de 0 à 6,
◦ $p_i$ est la charge électrique du complexe métallique comprise de - 6 à + 6,

ledit polymère étant linéaire quand il n'existe aucun $B_i$ formant de pont de réticulation,
ledit polymère étant réticulé quand il existe au moins un B, appartenant à deux polymères linéaires,
comporte :

a. une éventuelle étape de prétraitement du support par la mise en contact dudit support et d'un réactif de prétraitement et/ou par l'action d'un prétraitement physique sur ledit support, pour obtenir un support éventuellement prétraité de Formule XXXI,

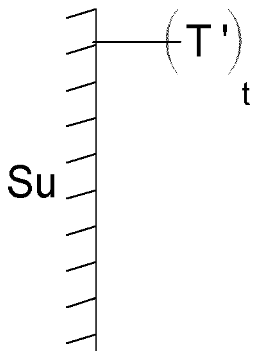

*Formule XXXI*

dans laquelle

- T' est un composé issu du prétraitement du support Su, contenant des fragments soit du support, soit du réactif de prétraitement, soit des deux,
- t est un nombre entier valant 0 ou 1,

b. une éventuelle étape de pré-greffage sur le support éventuellement prétraité de Formule XXXI par la mise en contact du support avec un amorceur de polymérisation, pour obtenir un support éventuellement prétraité et éventuellement pré-greffé de Formule XXXII,

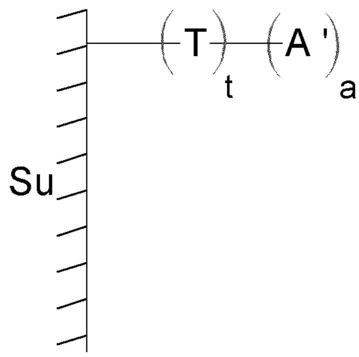

*Formule XXXII*

dans laquelle

- A' est un composé issu de l'étape de pré-greffage sur le support, contenant des fragments de l'amorceur de polymérisation,
- a est un nombre entier valant 0 ou 1,

c. une étape de polymérisation radicalaire commençant par l'amorçage du support éventuellement prétraité et éventuellement pré-greffé de Formule XXXII suivi de la mise en contact du support éventuellement prétraité et éventuellement pré-greffé avec le dérivé de la 4-vinylpyridine de Formule XXXIII,

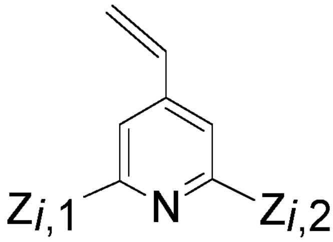

*Formule XXXIII*

dans laquelle :

- $Z_{i,1}$ et $Z_{i,2}$ sont des substituants choisis parmi le groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,

ladite étape de polymérisation étant effectué :

- avec éventuellement au moins un co-monomère,
- avec ou sans réticulation,

pour obtenir un monomère ou un polymère greffé sur un support de Formule XXXIV,

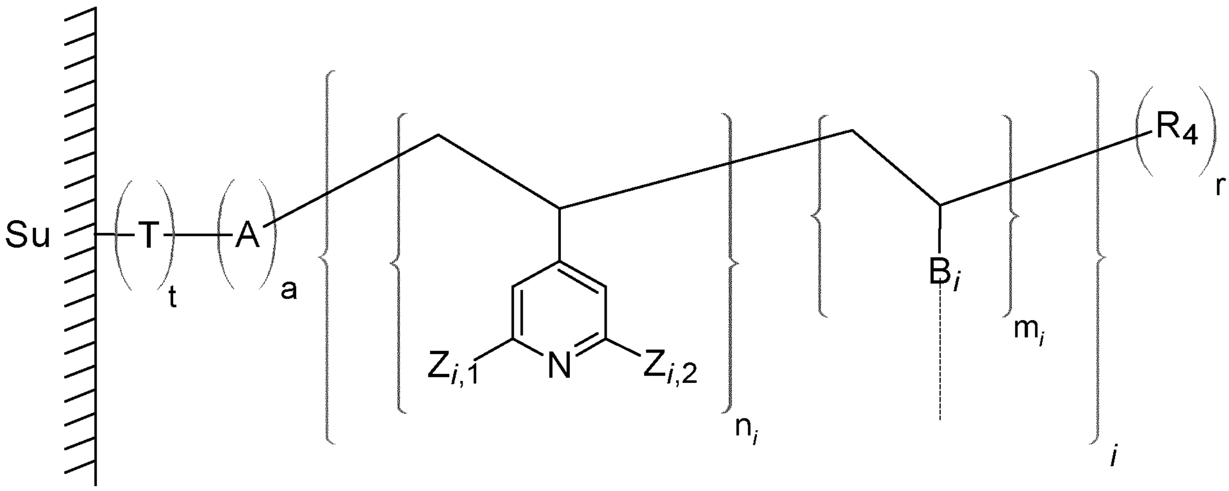

*Formule XXXIV*

d. une étape de modification, lorsque l'un au moins des $Z_{i,1}$ est différent de $R_{i,1}$ ou lorsque l'un au moins des $Z_{i,2}$ est différent de $R_{i,2}$, dudit monomère ou polymère de Formule XXXIV avec un réactif pour modifier l'un au moins des susdits substituants $Z_{i,1}$ et $Z_{i,2}$, ledit réactif contenant un anion hydroxyde, carbonate ou phosphate, pour obtenir le monomère ou polymère greffé sur un support de Formule XXXV,

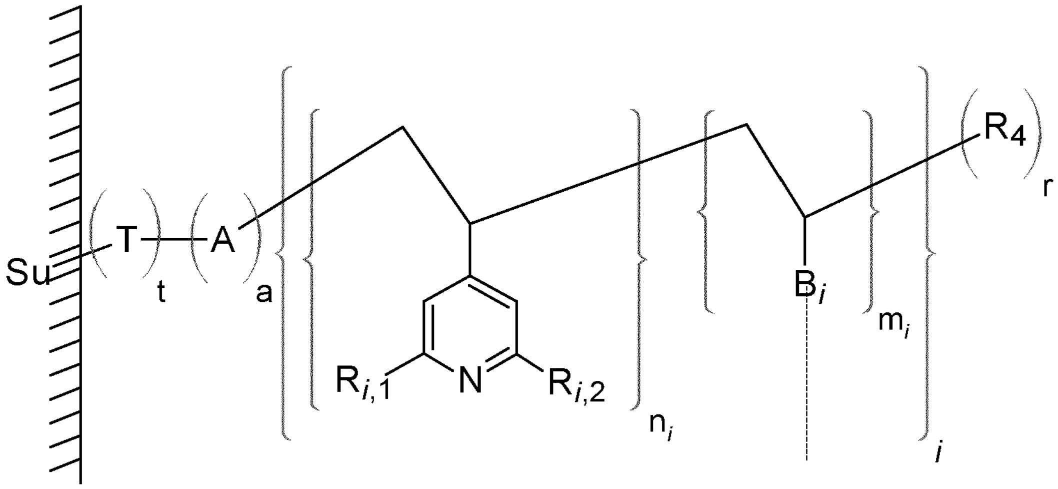

*Formule XXXV*

e. une éventuelle étape de complexation dudit monomère ou polymère greffé sur un support de Formule XXXV avec au moins un cation métallique pour obtenir le monomère ou polymère greffé sur un support de Formule I.

Dans ce mode de réalisation, le procédé de synthèse d'un polymère greffé sur un support de Formule I commence :

- soit par une étape de prétraitement du support si la surface du support ne possède pas de site de liaison,
- soit par une étape de pré-greffage du support si la surface du support possède des sites de liaisons, mais que ces dits sites de liaisons ne peuvent pas subir d'amorçage permettant d'initier une polymérisation radicalaire,
- soit par une étape de polymérisation radicalaire si la surface du support possède des sites de liaisons, et que ces dits sites de liaisons peuvent subir un amorçage permettant d'initier une polymérisation radicalaire.

Dans ce mode de réalisation, le procédé de synthèse du polymère greffé sur un support de Formule I est une polymérisation selon la technique « grafted from ».

Le procédé de synthèse d'un polymère greffé sur un support de Formule I se poursuit :

- soit par une étape de pré-greffage du support si le support a été prétraité et que ledit support prétraité ne peut pas subir d'amorçage pour initier une polymérisation radicalaire, ledit procédé se poursuivant dans ce cas par une étape de polymérisation radicalaire en utilisant le support prétraité et pré-greffé comme amorceur de polymérisation,
- soit par une étape de polymérisation radicalaire si le support a été prétraité et que ledit support prétraité peut subir un amorçage pour initier une polymérisation radicalaire, en utilisant le support prétraité comme amorceur de polymérisation,
- soit par une étape de polymérisation radicalaire si le support n'a pas été prétraité et que ledit support a été pré-greffé, en utilisant le support pré-greffé comme amorceur de polymérisation.

Après la polymérisation et l'obtention d'un polymère greffé sur un support de Formule XXXIV, si les groupements substituants des unités monomères dérivées de la 4-vinylpyridine sont différents dans la Formule I et la Formule XXXIV, une étape de modification est réalisée pour permettre aux groupements substituants de la Formule XXXIV différents de ceux de la Formule I de réagir et d'obtenir ainsi le polymère greffé sur un support de la Formule XXXV.

Si le polymère greffé sur un support de la Formule I est complexé à des métaux, une étape de complexation du polymère greffé sur un support de Formule XXXV est nécessaire pour obtenir le polymère greffé sur un support de Formule I.

Dans ce mode de réalisation, l'étape de polymérisation dudit procédé de synthèse permet de polymériser des co-monomères, ainsi que différents types de monomères dérivés de la 4-vinylpyridine. Au cours de ladite étape de polymérisation, des ponts de réticulations peuvent se former.

Selon un mode de réalisation particulier, le procédé de préparation, tel que défini ci-dessus, d'un polymère de l'invention greffé sur un support, de Formule II, dans laquelle les définitions de $R_{i,1}$ et $R_{i,2}$ sont telles que décrites dans la Formule II, comprend :

a. une étape de prétraitement du support par la mise en contact du support et d'un réactif de prétraitement et/ou par l'action d'un prétraitement physique sur ledit support, pour obtenir un support prétraité de Formule XXXI,

b. une éventuelle étape de pré-greffage du support prétraité de Formule XXXI par la mise en contact avec un amorceur de polymérisation, pour obtenir un support prétraité et éventuellement pré-greffé de Formule XXXII,

c. une étape de polymérisation radicalaire commençant par l'amorçage du support éventuellement prétraité et éventuellement pré-greffé de Formule XXXII suivi de la mise en contact du support éventuellement prétraité et éventuellement pré-greffé avec le dérivé de la 4-vinylpyridine de Formule XXXIII, et avec éventuellement au moins un co-monomère, avec ou sans réticulation, pour obtenir un polymère greffé sur un support de Formule XXXVI,

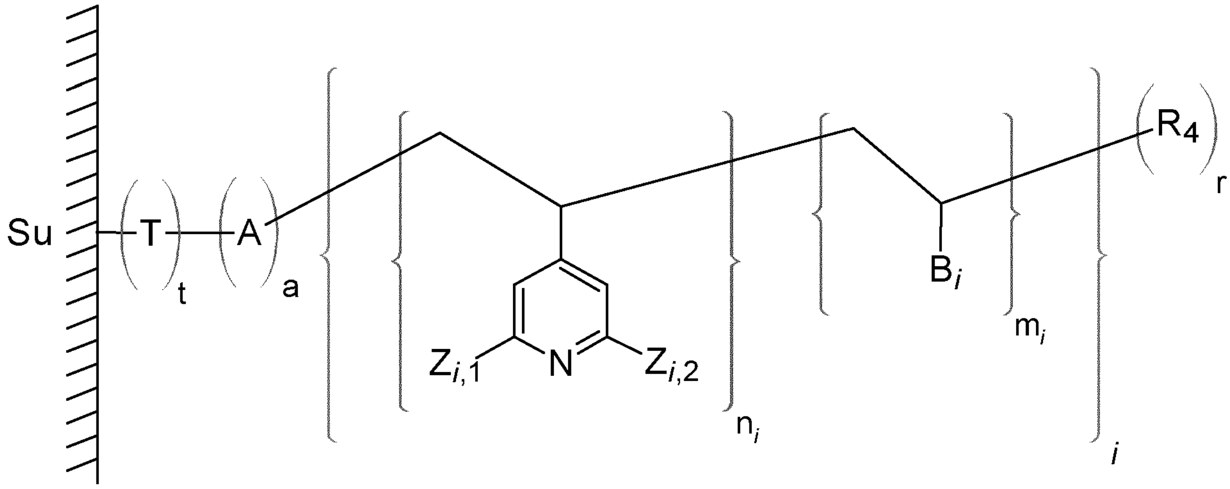

*Formule XXXVI*

dans laquelle :

- les définitions de A, $R_4$, $B_i$, $n_i$, $m_i$, r, a, et i sont telles que décrites dans la Formule II,
- les définitions de $Z_{i,1}$ et $Z_{i,2}$ sont telles que décrites dans la Formule XXXIII,

d. une étape de modification, lorsque l'un au moins des $Z_{i,1}$ est différent de $R_{i,1}$ ou lorsque l'un au moins des $Z_{i,2}$ est différent de $R_{i,2}$, dudit polymère greffé sur un support de Formule XXXVI avec un réactif pour modifier l'un au moins des $Z_{i,1}$ ou des $Z_{i,2}$, ledit réactif contenant un anion hydroxyde, carbonate ou phosphate, pour obtenir le polymère greffé sur un support de Formule XXXVII,

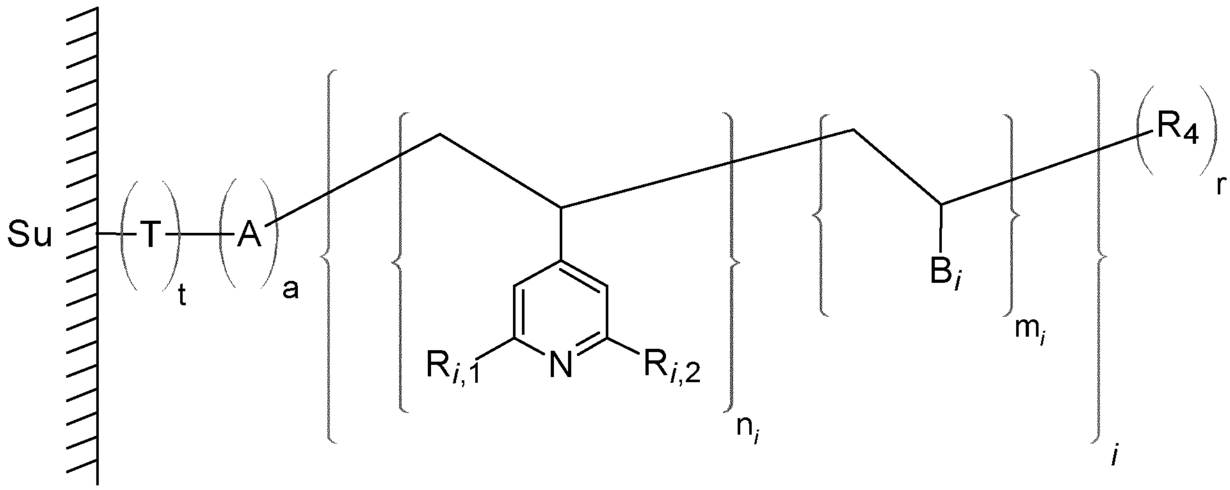

*Formule XXXVII*

e. une éventuelle étape de complexation dudit polymère greffé sur un support de Formule XXXVII avec au moins un cation métallique pour obtenir le polymère greffé sur un support de Formule II.

Dans ce mode de réalisation, le procédé de synthèse du polymère greffé sur un support de Formule II est une polymérisation selon la technique « grafted from ».

Dans ce mode de réalisation, le procédé de synthèse du polymère greffé sur un support de Formule II commence par la polymérisation radicalaire des monomères formant le polymère greffé sur un support de Formule XXXVI. Ces monomères sont constitués des monomères dérivées de la 4-vinylpyridine qui peuvent ne pas avoir les mêmes substituants que les unités monomères dérivées de la 4-vinylpyridine présentes dans la Formule II, ainsi qu'éventuellement de co-monomères. Le co-monomère est soit choisi pour ne pas former de pont de réticulation, soit absent.

Après la polymérisation et l'obtention d'un polymère greffé sur un support de Formule XXXVI, si les groupements substituants des unités monomères dérivées de la 4-vinylpyridine sont différents dans la Formule II et la Formule XXXVI, une étape de modification est réalisée pour permettre aux groupements substituants de la Formule XXXVI différents de ceux de la Formule II de réagir et d'obtenir ainsi le polymère greffé sur un support de Formule XXXVII.

Si le polymère greffé sur un support de la Formule II est complexé à des métaux, une étape de complexation du polymère greffé sur un support de Formule XXXVII est réalisée pour obtenir le polymère greffé sur un support de Formule II.

Selon un mode de réalisation particulier, le procédé de préparation, tel que défini ci-dessus, d'un polymère greffé sur un support de l'invention greffé sur un support, de Formule II avec t=1, dans laquelle les définitions de $R_{i,1}$ et $R_{i,2}$ sont telles que dans la Formule II, comprend :

a. une étape de prétraitement du support par la mise en contact du support et d'un réactif de prétraitement et/ou par l'action d'un prétraitement physique sur ledit support, pour obtenir un support prétraité de Formule XXXVIII,

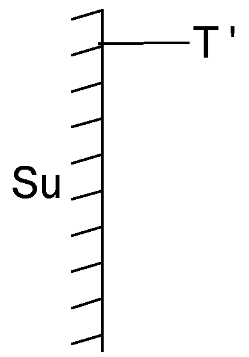

*Formule XXXVIII*

dans laquelle :

- les définitions de Su et T' sont telles que décrites dans la Formule XXXI,

b. une éventuelle étape de pré-greffage du support prétraité de Formule XXXVIII par la mise en contact avec un amorceur de polymérisation, pour obtenir un support prétraité et éventuellement pré-greffé de Formule XXXIX,

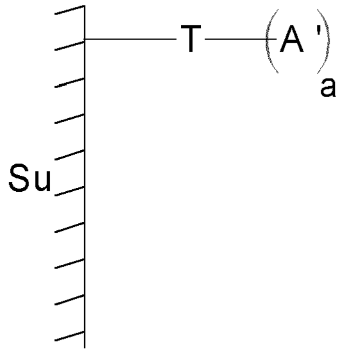

*Formule XXXIX*

dans laquelle :

- les définitions de T, A' et a sont telles que décrites dans la Formule XXXII,

c. une étape de polymérisation radicalaire commençant par l'amorçage du support prétraité et éventuellement pré-greffé de Formule XXXIX suivi de la mise en contact du support prétraité et éventuellement pré-greffé avec le dérivé de la 4-vinylpyridine de Formule XXXIII, et avec éventuellement au moins un co-monomère, avec ou sans réticulation, pour obtenir un polymère greffé sur un support de Formule XL,

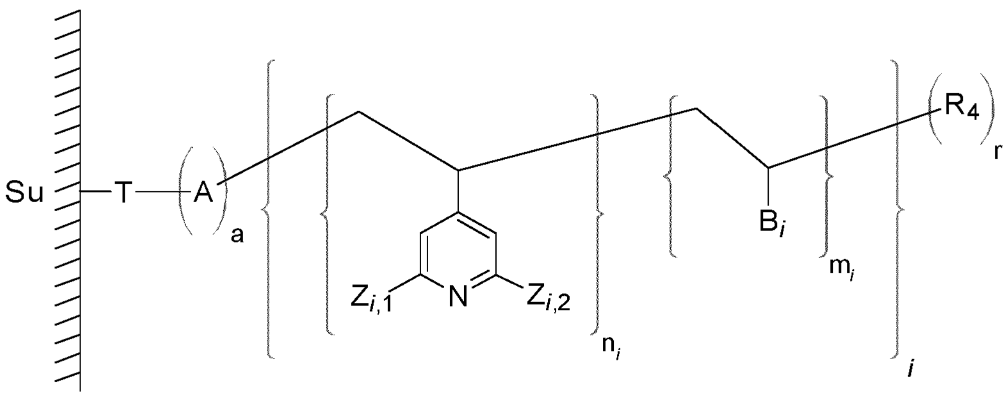

*Formule XL*

dans laquelle :

- les définitions de A, $R_4$, $B_i$, $n_i$, $m_i$, r, a, et i sont telles que décrites dans la Formule II,
- les définitions de $Z_{i,1}$ et $Z_{i,2}$ sont telles que décrites dans la Formule XXXIII,

d. une étape de modification, lorsque l'un au moins des $Z_{i,1}$ est différent de $R_{i,1}$ ou lorsque l'un au moins des $Z_{i,2}$ est différent de $R_{i,2}$, dudit polymère greffé sur un support de Formule XL avec un réactif pour modifier l'un au moins des $Z_{i,1}$ ou des $Z_{i,2}$, ledit réactif contenant un anion hydroxyde, carbonate ou phosphate, pour obtenir le polymère greffé sur un support de Formule XLI,

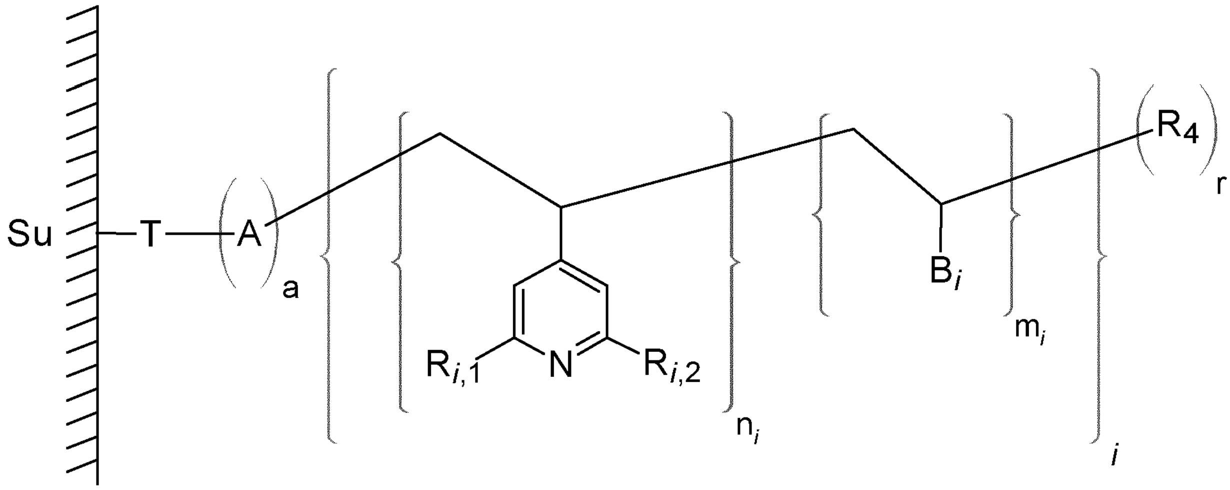

*Formule XLI*

e. une éventuelle étape de complexation dudit polymère greffé sur un support de Formule XLI avec au moins un cation métallique pour obtenir le polymère greffé sur un support de Formule II dans laquelle t=1.

Dans ce mode de réalisation, le procédé de synthèse du polymère greffé sur un support de Formule II dans laquelle t=1 est une polymérisation selon la technique « grafted from ».

Dans ce mode de réalisation, le procédé de synthèse du polymère greffé sur un support de Formule II dans laquelle t=1 commence par une étape de prétraitement du support pour obtenir un support prétraité.

Ledit procédé de synthèse du polymère greffé sur un support de Formule II dans laquelle t=1, se poursuit :

- soit par une étage de pré-greffage, si les sites de liaisons en surface de ce support prétraité ne sont pas aptes à subir un amorçage pour initier une polymérisation radicalaire, pour obtenir un support prétraité et pré-greffé, suivie par l'étape de polymérisation radicalaire en utilisant le support prétraité et pré-greffé comme amorceur,
- soit par l'étape de polymérisation si les sites de liaisons en surface de ce support prétraité sont aptes à subir un amorçage pour initier une polymérisation radicalaire, en utilisant le support prétraité comme amorceur de polymérisation.

Après la polymérisation et l'obtention d'un polymère greffé sur un support de Formule XL, si les groupements substituants des unités monomères dérivées de la 4-vinylpyridine sont différents dans la Formule II et la Formule XL, une étape de modification est réalisée pour permettre aux groupements substituants de la Formule XL différents de ceux de la Formule II, de réagir et d'obtenir ainsi le polymère greffé sur un support de Formule XLI.

Si le polymère greffé sur un support de la Formule II est complexé à des métaux, une étape de complexation du polymère greffé sur un support de Formule XLI est réalisée pour obtenir le polymère greffé sur un support de Formule II dans laquelle t=1.

Selon un mode de réalisation particulier, le procédé de préparation, tel que défini ci-dessus, d'un monomère ou d'un polymère de l'invention greffé sur un support, de Formule II avec t=1 et a=1, dans laquelle les définitions de $R_{i,1}$ et $R_{i,2}$ sont telles que décrites dans la Formule II,
ledit procédé comprend :

a. une étape de prétraitement du support par la mise en contact du support et d'un réactif de prétraitement et/ou par l'action d'un prétraitement physique sur ledit support, pour obtenir un support prétraité de Formule XXXVIII,

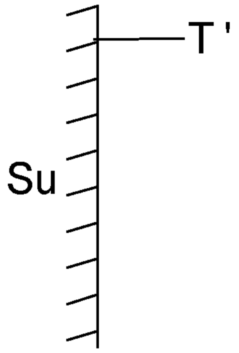

Formule XXXVIII

dans laquelle :

- les définitions de Su et T’ sont telles que décrites dans la Formule XXXI,

b. une étape de pré-greffage dudit support prétraité de Formule XXXVIII par la mise en contact avec un amorceur de polymérisation, pour obtenir un support prétraité et pré-greffé de Formule XLII,

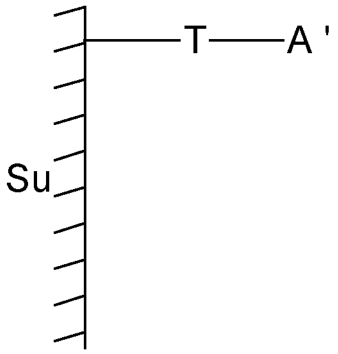

Formule XLII

dans laquelle :

- les définitions de T et A’ sont telles que décrites dans la Formule XXXII,

c. une étape de polymérisation radicalaire commençant par l’amorçage du support prétraité et pré-greffé de Formule XLII suivi de la mise en contact du support prétraité et pré-greffé avec le dérivé de la 4-vinylpyridine de Formule XXXIII et avec éventuellement au moins un co-monomère pour obtenir un monomère ou un polymère greffé sur un support de Formule XLIII,

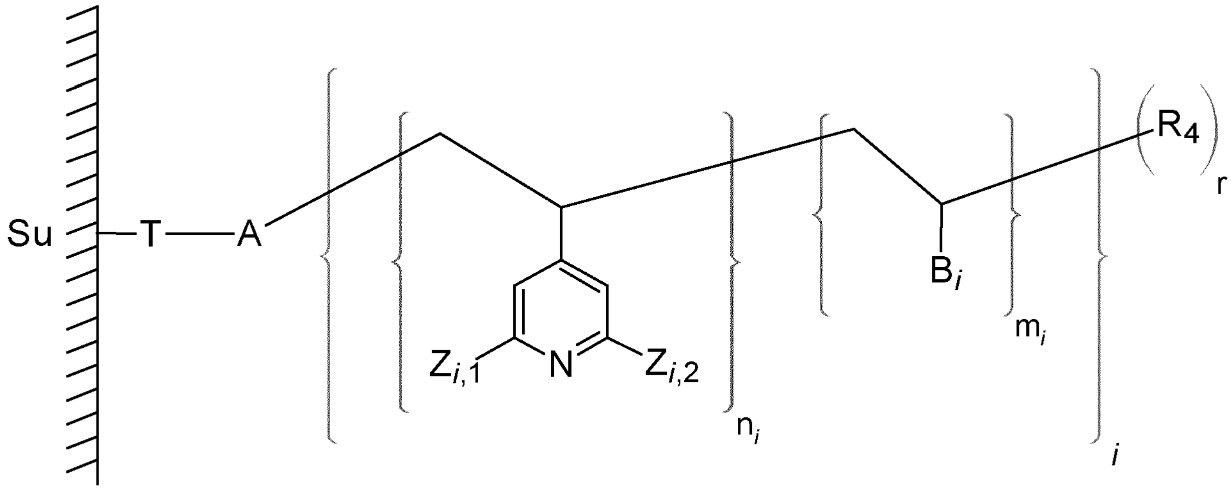

*Formule XLIII*

dans laquelle :

- les définitions de A, $R_4$, $B_i$, $n_i$, m,, r et i sont telles que décrites dans la Formule II,
- les définitions de $Z_{i,1}$ et $Z_{i,2}$ sont telles que dans la Formule XXXIII,

d. une étape de modification, lorsque l'un au moins des $Z_{i,1}$ est différent de $R_{i,1}$ ou lorsque l'un au moins des $Z_{i,2}$ est différent de $R_{i,2}$, dudit monomère ou polymère greffé sur un support de Formule XLIII avec un réactif pour modifier l'un au moins des $Z_{i,1}$ ou des $Z_{i,2}$, ledit réactif contenant un anion hydroxyde, carbonate ou phosphate, pour obtenir le monomère ou le polymère greffé sur un support de Formule XLIV,

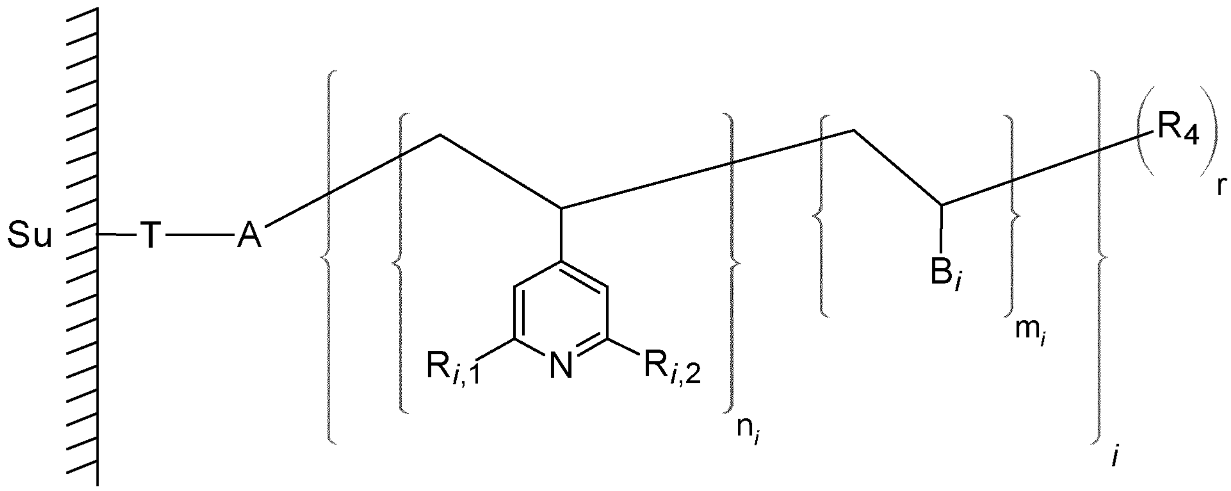

*Formule XLIV*

e. une éventuelle étape de complexation dudit monomère ou polymère greffé sur un support de Formule XLIV avec au moins un cation métallique pour obtenir le monomère ou polymère greffé sur un support de Formule II, dans laquelle t=1 et a=1.

Dans ce mode de réalisation, le procédé de synthèse du polymère greffé sur un support de Formule II, dans laquelle t=1et a=1 est une polymérisation selon la technique « grafted from ».

Dans ce mode de réalisation, le procédé de synthèse du polymère greffé sur un support de Formule II dans laquelle t=1 et a=1 comprend :

- une étape de prétraitement du support pour obtenir un support prétraité,
- une étape de pré-greffage pour obtenir un support prétraité et pré-greffé,
- une étape de polymérisation radicalaire en utilisant le support prétraité et pré-greffé comme amorceur.

Après la polymérisation et l'obtention d'un polymère greffé sur un support de Formule XLIII, si les groupements substituants des unités monomères dérivées de la 4-vinylpyridine sont différents dans la Formule II et la Formule XLIII, une étape de modification est réalisée pour permettre aux groupements substituants de la Formule XLIII différents de ceux de la Formule II de réagir et obtenir ainsi le polymère greffé sur un support de Formule XLIV.

Si le polymère greffé sur un support de la Formule II est complexé à des métaux, une étape de complexation du polymère greffé sur un support de Formule XLIV est réalisée pour obtenir le polymère greffé sur un support de Formule II dans laquelle t=1 et a=1.

Selon un mode de réalisation particulier, le procédé de préparation, tel que définie ci-dessus, d'un monomère ou d'un polymère de l'invention greffé sur un support, de Formule II avec t=0 et a=0, dans laquelle les définitions de $R_{i,1}$ et $R_{i,2}$ sont telles que décrites dans la Formule II,
ne comprend pas d' étape de prétraitement ni étape d'amorçage et comprend :

a. une étape de polymérisation radicalaire commençant par l'amorçage du support et suivi par la mise en contact du support, avec le dérivé de la 4-vinylpyridine de Formule XXXIII, et avec éventuellement au moins un co-monomère, avec ou sans réticulation, pour obtenir un monomère ou un polymère greffé sur un support de Formule XLV,

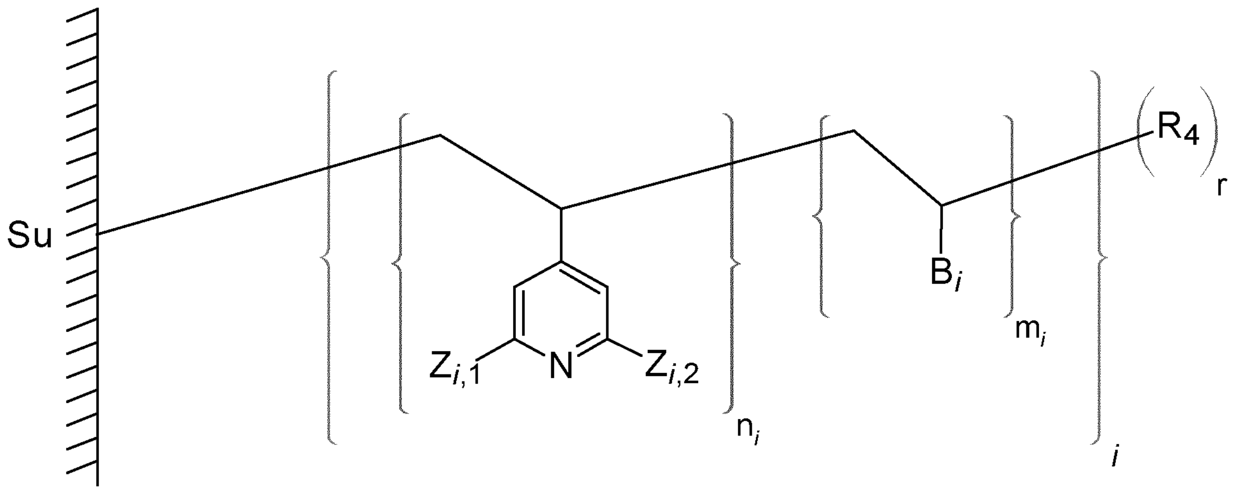

*Formule XLV*

dans laquelle :

- les définitions de Su, $R_4$, $B_i$, $n_i$, $m_i$, r et i sont telles que décrites dans la Formule II,
- les définitions de $Z_{i,1}$ et $Z_{i,2}$ sont telles quand dans la Formule XXXIII,

b. une étape de modification, lorsque l'un au moins des $Z_{i,1}$ est différent de $R_{i,1}$ ou lorsque l'un au moins des $Z_{i,2}$ est différent de $R_{i,2}$, dudit monomère ou polymère greffé sur un support de Formule XLV avec un réactif pour modifier l'un au moins des $Z_{i,1}$ ou des $Z_{i,2}$, ledit réactif contenant un anion hydroxyde, carbonate ou phosphate, pour obtenir le monomère ou polymère greffé sur un support de Formule XLVI,

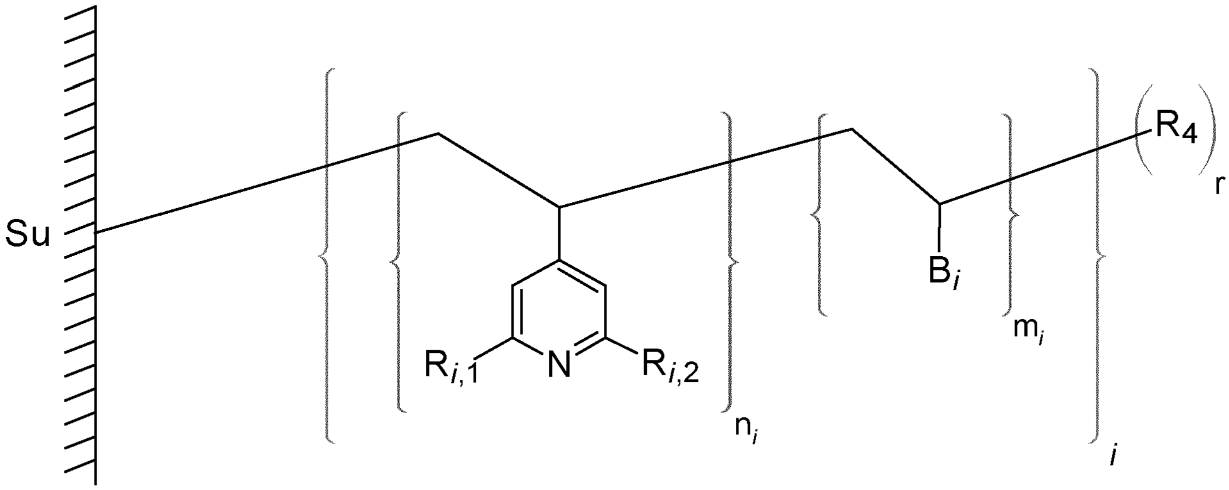

*Formule XLVI*

c. une éventuelle étape de complexation dudit monomère ou polymère greffé sur un support de Formule XLVI avec au moins un cation métallique pour obtenir le monomère ou polymère greffé sur un support de Formule II.

Dans ce mode de réalisation, le procédé de synthèse du polymère greffé sur un support de Formule II dans laquelle t=0 et a=0 est une polymérisation selon la technique « grafted from ».

Dans ce mode de réalisation, le procédé de synthèse du polymère greffé sur un support de Formule II dans laquelle t=0 et a=0 ne comprend ni étape de prétraitement ni d'étape de pré-greffage. La surface du support possède des sites de liaisons capables de subir un amorçage pour initier une polymérisation radicalaire. Le procédé comment par l'étape de polymérisation radicalaire en utilisant le support comme amorceur.

Après la polymérisation et l'obtention d'un polymère greffé sur un support de Formule XLV, si les groupements substituants des unités monomères dérivées de la 4-vinylpyridine sont différents dans la Formule II et la Formule XLV, une étape de modification est réalisée pour permettre aux groupements substituants de la Formule XLV différents de ceux de la Formule II de réagir et d'obtenir ainsi le polymère greffé sur un support de Formule XLVI.

Si le polymère greffé sur un support de la Formule II est complexé à des métaux, une étape de complexation du polymère greffé sur un support de Formule XLVI est réalisée pour obtenir le polymère greffé sur un support de Formule II dans laquelle t=0 et a=0.

Selon un mode de réalisation particulier, le procédé de préparation, tel que défini ci-dessus, d'un polymère de l'invention greffé sur un support, de Formule III avec t=1 et a=1, dans laquelle les définitions de $R_{i,1}$ et $R_{i,2}$ sont telles que décrites dans la Formule III, comprend :

a. une étape de prétraitement du support par la mise en contact du support et d'un réactif de prétraitement et/ou par l'action d'un prétraitement physique sur ledit support, pour obtenir un support prétraité de Formule XXXVIII,

b. une étape de pré-greffage du support prétraité de Formule XXXVIII par la mise en contact avec un amorceur de polymérisation, pour obtenir un support prétraité et pré-greffé de Formule XLII,

c. une étape de polymérisation radicalaire, commençant par l'amorçage du support prétraité et pré-greffé de Formule XLII puis continuant par la mise en contact du support prétraité et pré-greffé avec le dérivé de la 4-vinylpyridine de Formule XXXIII, pour obtenir un polymère greffé sur un support de Formule XLVII,

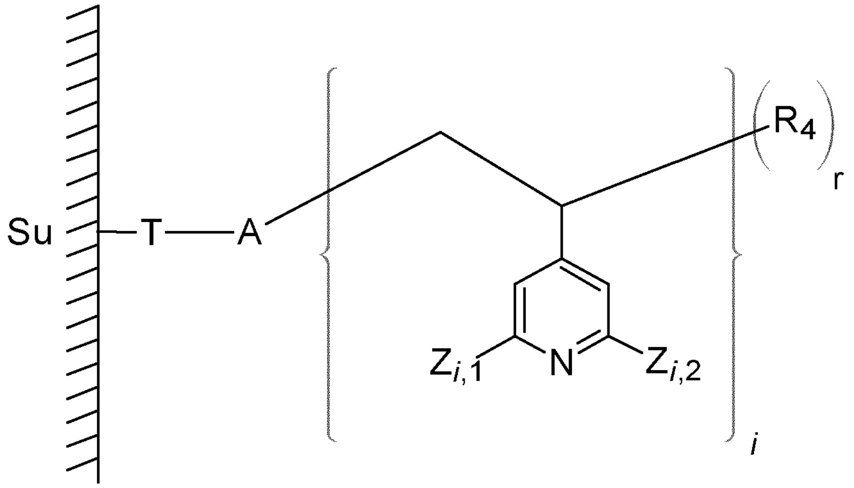

*Formule XLVII*

dans laquelle :

- les définitions de T, A, $R_4$, r et i sont telles que décrites dans la Formule III,
- les définitions de $Z_{i,1}$ et $Z_{i,2}$ sont telles que décrites dans la Formule XXXIII,

d. une étape de modification, lorsque l'un au moins des $Z_{i,1}$ est différent de $R_{i,1}$ ou lorsque l'un au moins des $Z_{i,2}$ est différent de $R_{i,2}$, dudit polymère greffé sur un support de Formule XLVII avec un réactif pour modifier l'un au moins des $Z_{i,1}$ ou des $Z_{i,2}$, ledit réactif contenant un anion hydroxyde, carbonate ou phosphate, pour obtenir le polymère greffé sur un support de Formule XLVIII,

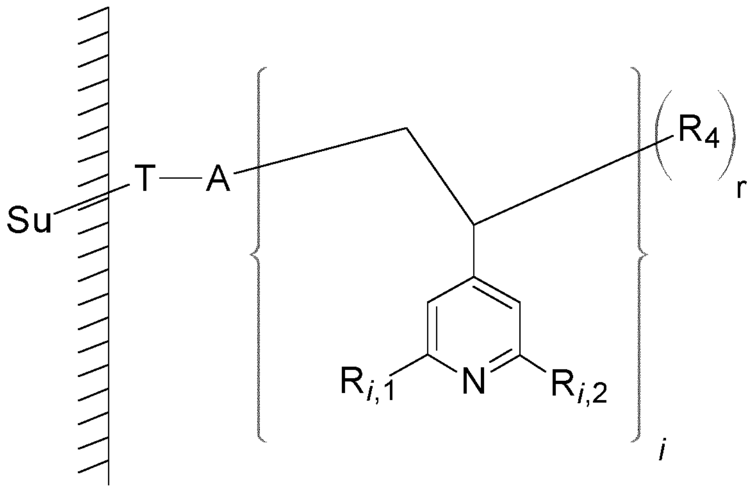

*Formule XLVIII*

e. une éventuelle étape de complexation dudit polymère greffé sur un support de Formule XLVIII avec au moins un cation métallique pour obtenir le polymère greffé sur un support de Formule III, dans laquelle t=1 et a=1.

Dans ce mode de réalisation, le procédé de synthèse du polymère greffé sur un support de Formule III, dans laquelle t=1 et a=1 est une polymérisation selon la technique « grafted from ».

Dans ce mode de réalisation, le procédé de synthèse du polymère greffé sur un support de Formule III, dans laquelle t=1 et a=1 comprend :

- une étape de prétraitement du support pour obtenir un support prétraité,
- une étape de pré-greffage pour obtenir un support prétraité et pré-greffé,

- une étape de polymérisation radicalaire en utilisant le support prétraité et pré-greffé comme amorceur.

Après la polymérisation et l'obtention d'un polymère greffé sur un support de Formule XLVII, si les groupements substituants des unités monomères dérivées de la 4-vinylpyridine sont différents dans la Formule III et dans la Formule XLVII, une étape de modification est réalisée pour permettre aux groupements substituants de la Formule XLVII différents de ceux de la Formule III de réagir et d'obtenir ainsi le polymère greffé sur un support de Formule XLVIII.

Si le polymère greffé sur un support de la Formule III est complexé à des métaux, une étape de complexation du polymère greffé sur un support de Formule XLVIII est réalisée pour obtenir le polymère greffé sur un support de Formule III, dans laquelle t=1 et a=1.

Selon un mode de réalisation particulier, le procédé de préparation, tel que défini ci-dessus, d'un monomère ou d'un polymère de l'invention greffé sur un support, de Formule IV avec t=1 et a=1, dans laquelle les définitions de $R_1$ et $R_2$ sont telles que décrites dans la Formule IV, comprend :

a. une étape de prétraitement du support par la mise en contact du support et d'un réactif de prétraitement et/ou par l'action d'un prétraitement physique sur ledit support, pour obtenir un support prétraité de Formule XXXVIII,

b. une étape de pré-greffage du support prétraité de Formule XXXVIII par la mise en contact avec un amorceur de polymérisation, pour obtenir un support prétraité et pré-greffé de Formule XLII,

c. une étape de polymérisation radicalaire, commençant par l'amorçage du support prétraité et pré-greffé de Formule XLII, suivi par la mise en contact du support prétraité et pré-greffé avec le dérivé de la 4-vinylpyridine de Formule XLIX,

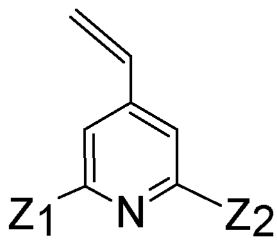

*Formule XLIX*

dans laquelle :

- $Z_1$ et $Z_2$ sont des substituants choisis parmi le groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,

pour obtenir un monomère ou un polymère greffé sur un support de Formule L,

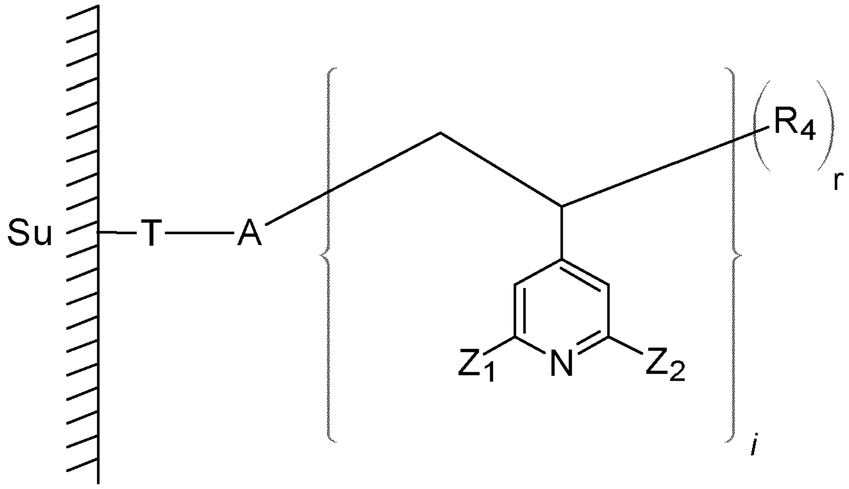

*Formule L*

dans laquelle :

- les définitions de T, A, $R_4$, r et i sont telles que décrites dans la Formule IV,

d. une étape de modification, lorsque $Z_1$ est différent de $R_1$ ou lorsque $Z_2$ est différent de $R_2$, dudit monomère ou dudit polymère greffé sur un support de Formule L avec un réactif pour modifier l'un au moins des susdits substituants $Z_1$ et $Z_2$, et contenant un anion hydroxyde, carbonate ou phosphate, pour obtenir le monomère ou le polymère greffé sur un support de Formule LI,

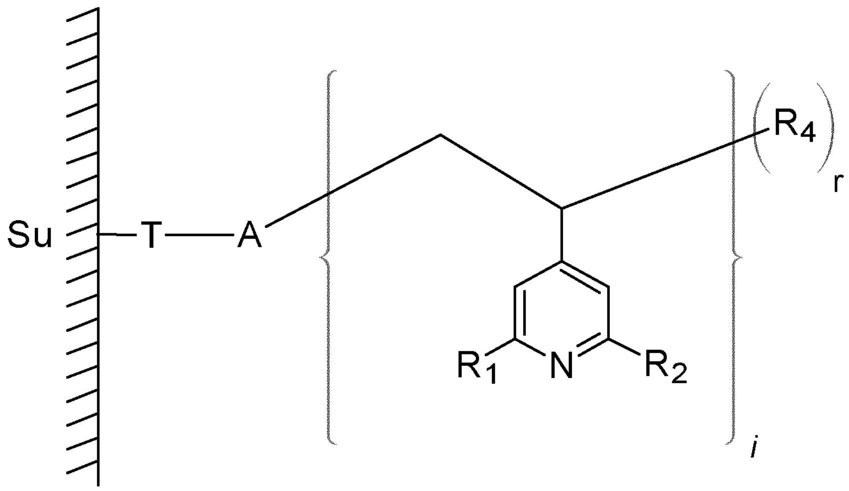

*Formule LI*

e. une éventuelle étape de complexation dudit monomère ou dudit polymère greffé sur un support de Formule LI avec au moins un cation métallique pour obtenir le monomère ou le polymère greffé sur un support de Formule IV dans lequel t=1 et a=1.

Dans ce mode de réalisation, le procédé de synthèse du polymère greffé sur un support de Formule IV, dans laquelle t=1 et a=1 est une polymérisation selon la technique « grafted from ».

Dans ce mode de réalisation, le procédé de synthèse du polymère greffé sur un support de Formule IV, dans laquelle t=1 et a=1 comprend :

- une étape de prétraitement du support pour obtenir un support prétraité,
- une étape de pré-greffage pour obtenir un support prétraité et pré-greffé,

- une étape de polymérisation radicalaire en utilisant le support prétraité et pré-greffé comme amorceur.

Après la polymérisation et l'obtention d'un polymère greffé sur un support de Formule L, si les groupements substituants des unités monomères dérivées de la 4-vinylpyridine sont différents dans la Formule IV et dans la Formule L, une étape de modification est réalisée pour permettre aux groupements substituants de la Formule L différents de ceux de la Formule IV de réagir et obtenir ainsi le polymère greffé sur un support de Formule LI

Si le polymère greffé sur un support de la Formule IV est complexé à des métaux, une étape de complexation du polymère greffé sur un support de Formule LI est réalisée pour obtenir le polymère greffé sur un support de Formule IV dans laquelle t=1 et a=1.

Selon un mode de réalisation particulier, le procédé de préparation, tel que défini ci-dessus, d'un polymère de l'invention greffé sur un support, de Formule XX, dans laquelle les définitions de $R_{j,w,1}$, $R_{j,w,2}$, $R_{i,1}$ et $R_{i,2}$ sont telles que décrites dans la Formule XX, comprend :

a. une étape de prétraitement du support par la mise en contact du support et de réactifs de prétraitement, pour obtenir un support prétraité de Formule LII,

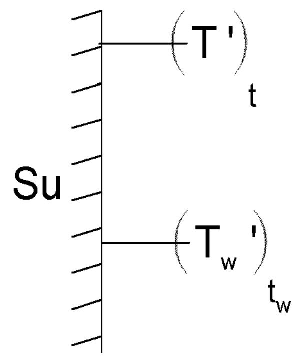

*Formule LII*

dans laquelle :

- T' et $T_w$' sont des composés issus du prétraitement du support Su, contenant soit des fragments du support, soit des fragments du réactifs de prétraitement, soit des fragments du support et des fragments du réactifs de prétraitement,
- t et $t_w$ sont des nombres entiers valant 0 ou 1,

b. une éventuelle étape de pré-greffage sur le support éventuellement prétraité de Formule LII par la mise en contact du support avec des amorceurs de polymérisation, pour obtenir un support éventuellement prétraité et éventuellement pré-greffé de Formule LIII,

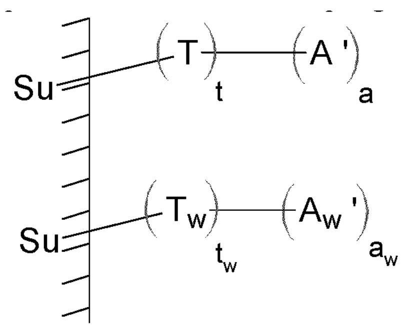

*Formule LIII*

dans laquelle :

- A' et $A_w$' sont des composés issus de l'étape de pré-greffage sur le support, contenant des fragments d'amorceurs

de polymérisation,

- a et $a_w$ sont des nombres entiers valant 0 ou 1,

c. une étape de polymérisation radicalaire, commençant par l'amorçage du support prétraité et pré-greffé de Formule LIII, ledit amorçage est suivi par la mise en contact du support prétraité et pré-greffé avec le dérivé de la 4-vinylpyridine de Formule XXXIII et de Formule LIV,

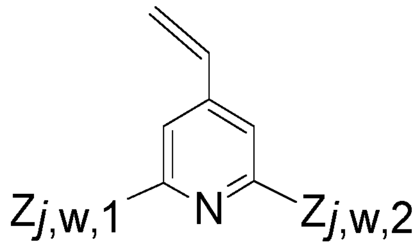

*Formule LIV*

dans laquelle :

- $Z_{j,w,1}$ et $Z_{j,w,2}$ sont des substituants choisis parmi le groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,

  ladite étape de polymérisation étant effectué :

  - avec éventuellement au moins un co-monomère,
  - avec ou sans réticulation,

  pour obtenir un polymère greffé sur un support de Formule LV,

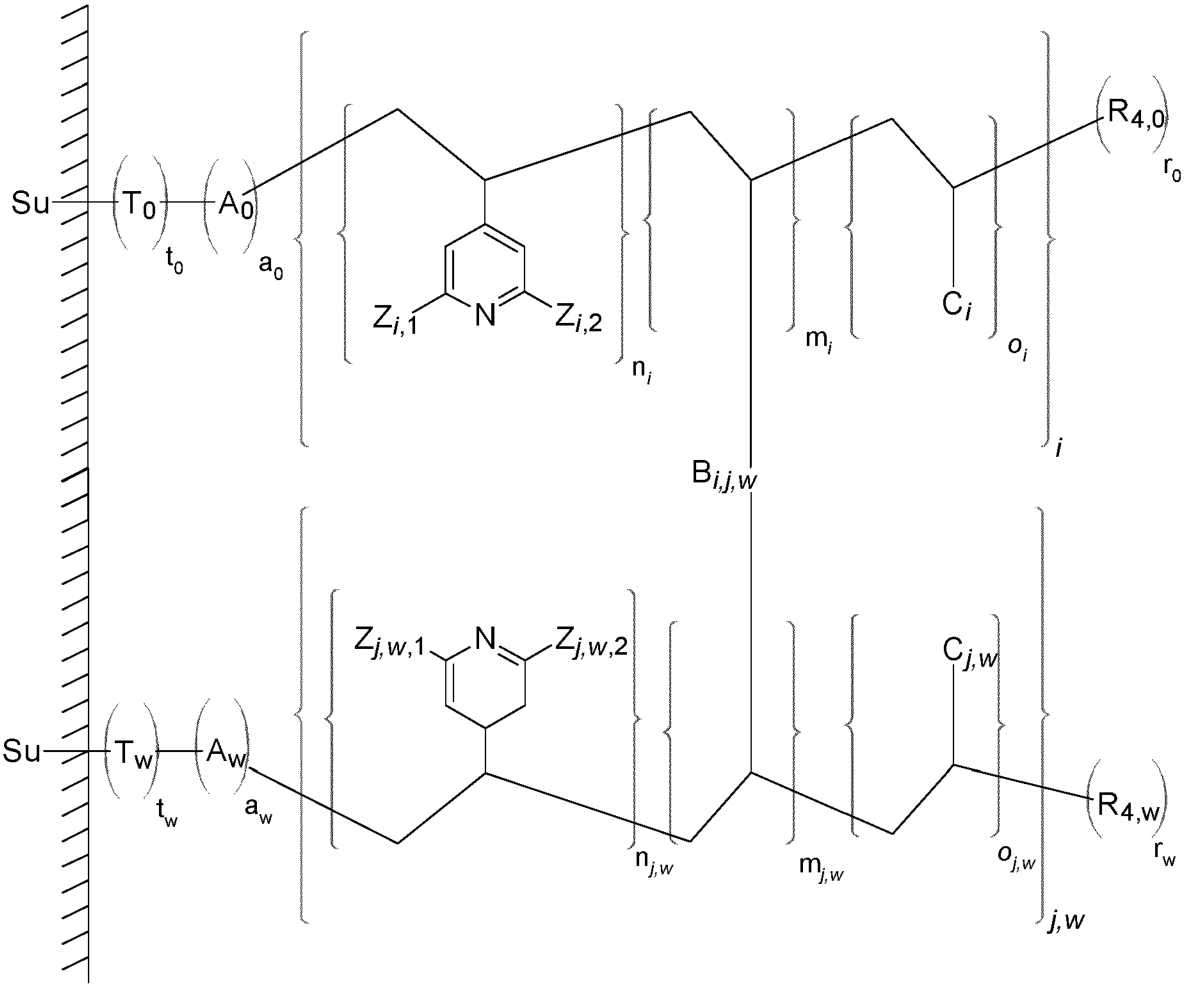

*Formule LV*

dans laquelle :

- les définitions de $Z_{i,1}$, $Z_{i,2}$, Su, w, $T_0$, $T_w$, $A_0$, $A_w$, $B_{i,j,w}$, $C_i$, $C_{j,w}$, $R_{4,0}$, $R_{4,w}$, $t_0$, $t_w$, $a_0$, $a_w$, $n_i$, $m_i$, $o_i$, $n_{j,w}$, $m_{j,w}$, $o_{j,w}$ $r_0$ et $r_w$ sont telles que décrites dans la Formule XX,

d. une étape de modification, lorsque l'un au moins des $Z_{i,1}$ est différent de $R_{i,1}$ ou lorsque l'un au moins des $Z_{i,2}$ est différent de $R_{i,2}$ ou lorsque l'un au moins des $Z_{j,w,1}$ est différent de $R_{j,w,1}$ ou lorsque l'un au moins des $Z_{j,w,2}$ est différent de $R_{j,w,2}$, dudit polymère greffé sur un support de Formule LV avec un réactif pour modifier l'un au moins des $Z_{i,1}$ ou des $Z_{i,2}$, ledit réactif contenant un anion hydroxyde, carbonate ou phosphate, pour obtenir le polymère greffé sur un support de Formule LVI,

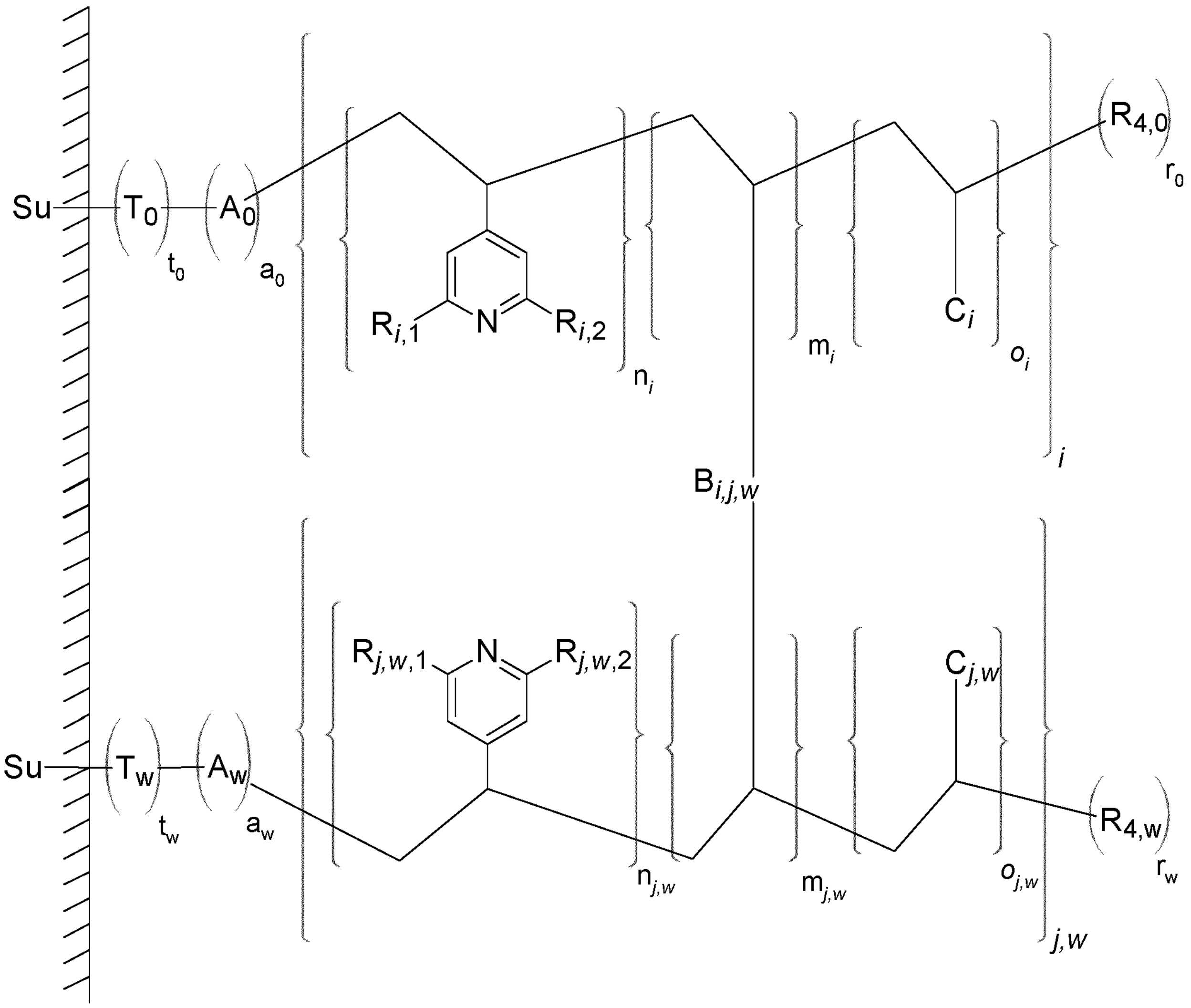

Formule LVI

e. une éventuelle étape de complexation dudit polymère greffé sur un support de Formule LVI avec au moins un cation métallique pour obtenir le polymère greffé sur un support de Formule XX.

Dans ce mode de réalisation, le procédé de synthèse du polymère greffé sur un support de Formule XX est une polymérisation selon la technique « grafted from ».

Dans ce mode de réalisation, le procédé de synthèse d'un polymère greffé sur un support de Formule XX commence :

- soit par une étape de prétraitement du support si la surface du support ne possède pas de site de liaison,
- soit par une étape de pré-greffage du support si la surface du support possède des sites de liaisons, mais que ces dits sites de liaisons ne peuvent pas subir d'amorçage pour initier une polymérisation radicalaire,
- soit par une étape de polymérisation radicalaire si la surface du support possède des sites de liaisons, et que ces dits sites de liaisons peuvent subir un amorçage pour initier une polymérisation radicalaire.

Le procédé de synthèse d'un polymère greffé sur un support de Formule XX se poursuit :

- soit par une étape de pré-greffage du support, si le support a été prétraité et que ledit support prétraité ne peut pas subir d'amorçage pour initier une polymérisation radicalaire, ledit procédé se poursuivant dans ce cas par une étape de polymérisation radicalaire en utilisant le support prétraité et pré-greffé comme amorceur de polymérisation,
- soit par une étape de polymérisation radicalaire, si le support a été prétraité et que ledit support prétraité peut subir un amorçage pour initier une polymérisation radicalaire, en utilisant le support prétraité comme amorceur de polymérisation,

- soit par une étape de polymérisation radicalaire si le support n'a pas été prétraité et que ledit support a été pré-greffé, en utilisant le support pré-greffé comme amorceur de polymérisation.

L'étape de polymérisation fait polymériser simultanément l'ensemble des polymères réticulés par la mise en contact du support, des co-monomères susceptible de former des ponts de réticulation, des co-monomères non susceptible de former des ponts de réticulation, ainsi que des monomères dérivés de la 4-vinylpyridine.
Après la polymérisation et l'obtention d'un polymère greffé sur un support de Formule LV, si les groupements substituants des unités monomères dérivées de la 4-vinylpyridine sont différents dans la Formule XX et la Formule LV, une étape de modification est réalisée pour permettre aux groupements substituants de la Formule LV différents de ceux de la Formule XX de réagir et d'obtenir ainsi le polymère greffé sur un support de Formule LVI.
Si le polymère greffé sur un support de la Formule XX est complexé à des métaux, une étape de complexation du polymère greffé sur un support de Formule LVI est nécessaire pour obtenir le polymère greffé sur un support de Formule XX.
La présente invention concerne en outre un procédé de préparation d'un polymère greffé notamment de façon covalente sur un support, tel que défini ci-dessus, comprenant les étapes de préparation suivantes :

a. une éventuelle étape de prétraitement du support par la mise en contact dudit support avec un réactif de prétraitement et/ou par l'action d'un prétraitement physique sur ledit support, pour obtenir un support éventuellement prétraité,

b. une étape de polymérisation radicalaire par la mise en contact :

o d'un amorceur de polymérisation amorcé,
◦ d'au moins un monomère dérivé de la 4-vinylpyridine dans lequel les carbones en positions 2 et 6 peuvent être substitués par l'un des substituants du groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
o et éventuellement d'au moins un co-monomère,

pour obtenir un polymère libre,

c. une étape de greffage sur le support éventuellement prétraité par la mise en contact dudit support éventuellement prétraité avec le polymère libre, pour obtenir un polymère greffé sur le support,

d. une éventuelle étape de modification par la mise en contact du polymère greffé sur le support avec un réactif pour modifier l'un au moins des susdits substituants $Z_{i,1}$ et $Z_{i,2}$, pour obtenir un polymère greffé sur le support et éventuellement modifié,

e. une éventuelle étape de complexation par la mise en contact du polymère greffé sur le support et éventuellement modifié avec un cation métallique pour obtenir un polymère greffé sur le support, éventuellement modifié et éventuellement complexé.

Les étapes de ce procédé pouvant être dans un ordre quelconque, sous réserve que :

- l'étape a soit avant l'étape c,
- l'étape b soit avant l'étape c,
- l'étape b soit avant l'étape d,
- l'étape d soit avant l'étape e,

en particulier les ordres suivants : abcde ; abdce ; abdec ; bacde ; badce ; badec ; bdace ; bdaec ; bdeac.
Le procédé de synthèse d'un polymère greffé sur un support selon la présente invention peut être un procédé « grafted to ».
Le procédé de synthèse des polymères selon la présente invention présente l'avantage d'être flexible. Les étapes du procédé peuvent se dérouler dans différents ordres. Les contraintes à respecter sont :

- l'éventuelle étape de prétraitement se déroule avant l'étape de greffage,
- l'étape de polymérisation se déroule avant l'étape de greffage,
- l'étape de polymérisation se déroule avant l'étape de modification,
- l'étape de modification se déroule avant l'étape de complexation.

Les ordres d'étapes admissibles sont :

- prétraitement, polymérisation, greffage, modification, complexation,
- prétraitement, polymérisation, modification, greffage, complexation,
- prétraitement, polymérisation, modification, complexation, greffage,
- polymérisation, prétraitement, greffage, modification, complexation,
- polymérisation, prétraitement, modification, greffage, complexation,
- polymérisation, prétraitement, modification, complexation, greffage,
- polymérisation, modification, prétraitement, greffage, complexation,
- polymérisation, modification, prétraitement, complexation, greffage,
- polymérisation, modification, complexation, prétraitement, greffage.

Le procédé de synthèse des polymères selon la présente invention peut comprendre une étape supplémentaire de préparation des monomères dérivés de la 4-vinylpyridine.

Au sens de la présente invention, on entend par « amorceur de polymérisation amorcé », un amorceur de polymérisation qui a subi la phase d'amorçage et qui est capable de se lier à un monomère pour former la première unité monomère.

Selon un mode de réalisation particulier, le procédé de préparation, tel que défini ci-dessus, d'un polymère de l'invention greffé sur un support, de Formule II, dans laquelle les définitions de $R_1$ et $R_2$ sont telles que décrites dans la Formule II, comprend :

a. une étape de polymérisation radicalaire par la mise en contact d'un amorceur de polymérisation amorcé avec du dérivé de la 4-vinylpyridine de Formule XXXIII,

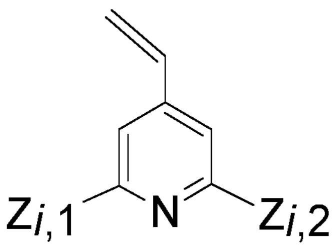

*Formule XXXIII*

dans laquelle :

- $Z_{i,1}$ et $Z_{i,2}$ sont des substituants choisis parmi le groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,

avec éventuellement au moins un co-monomère,

pour obtenir un polymère libre de Formule LVII,

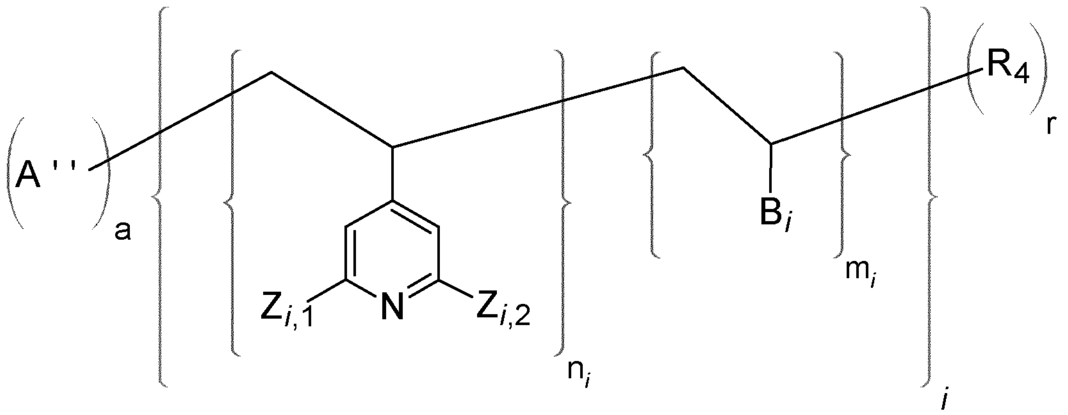

*Formule LVII*

dans laquelle :

- les définitions de $R_4$, $B_i$, $n_i$, $m_i$, r, a, et *i* sont telles que décrites dans la Formule II,
- A" est un composé issu de l'amorceur de polymérisation,

b. une éventuelle étape de prétraitement du support par la mise en contact dudit support et d'un réactif de prétraitement et/ou par l'action d'un prétraitement physique sur ledit support, pour obtenir un support éventuellement prétraité de Formule XXXI,

c. une étape de greffage sur le support éventuellement prétraité de Formule XXXI par la mise en contact du support éventuellement prétraité avec le polymère libre de de Formule LVII, pour obtenir un polymère greffé sur le support Formule XXXIV,

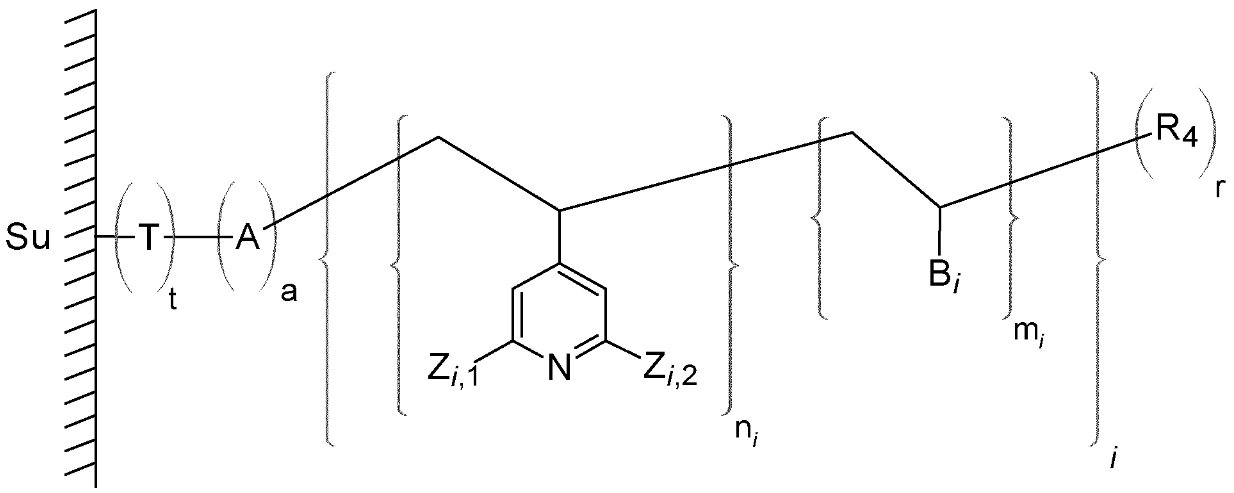

*Formule XXXIV*

dans laquelle :

- A est un composé issu de l'amorceur de polymérisation,

d. une étape de modification, lorsque l'un au moins des $Z_{i,1}$ est différent de $R_{i,1}$ ou lorsque l'un au moins des $Z_{i,2}$ est différent de $R_{i,2}$, dudit polymère Formule XXXIV avec un réactif pour modifier l'un au moins des susdits substituants $Z_{i,1}$ et $Z_{i,2}$, ledit réactif contenant un anion hydroxyde, carbonate ou phosphate, pour obtenir le polymère greffé sur un support de Formule XXXV,

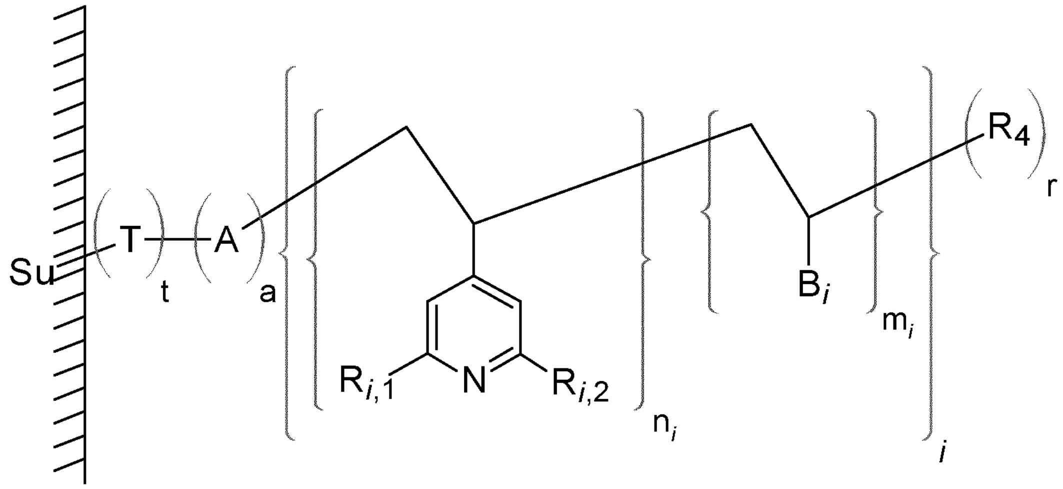

Formule XXXV

e. une éventuelle étape de complexation dudit polymère greffé sur un support de Formule XXXV avec au moins un cation métallique pour obtenir le polymère greffé sur un support de Formule II.

Dans ce mode de réalisation, le procédé de synthèse d'un polymère greffé sur un support de Formule II comprend les étapes suivantes : polymérisation, modification, complexation, prétraitement, greffage.

Dans ce mode de réalisation, le procédé de synthèse du polymère greffé sur un support de Formule II est une polymérisation selon la technique « grafted to ».

Selon un mode de réalisation particulier, le procédé de préparation, tel que défini ci-dessus, d'un polymère de l'invention greffé sur un support, de Formule II, dans laquelle les définitions de $R_{i,1}$ et $R_{i,2}$ sont telles que décrites dans la Formule II, comprend :

a. une étape de polymérisation radicalaire par la mise en contact d'un amorceur de polymérisation amorcé avec du dérivé de la 4-vinylpyridine de Formule XXXIII,

avec éventuellement au moins un co-monomère,

pour obtenir un polymère libre de Formule LVII,

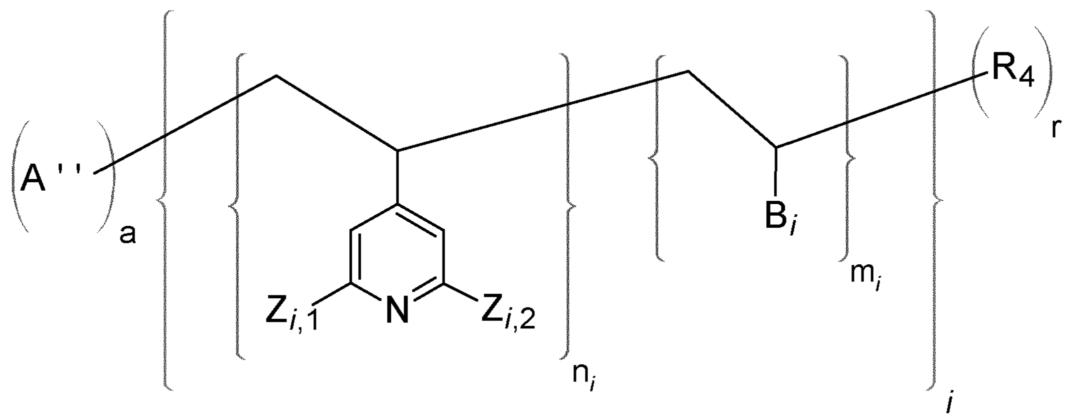

Formule LVII

dans laquelle :

- les définitions de $R_4$, $B_i$, $n_i$, $m_i$, r, a, et *i* sont telles que décrites dans la Formule II,
- les définitions de $Z_{i,1}$, $Z_{i,2}$ sont telles que dans la Formule XXXIII,

- la définition de A" est telle que dans la Formule LVII,

b. une étape de modification, lorsque l'un au moins des $Z_{i,1}$ est différent de $R_{i,1}$ ou lorsque l'un au moins des $Z_{i,2}$ est différent de $R_{i,2}$, dudit Formule LVII avec un réactif pour modifier l'un au moins des susdits substituants $Z_{i,1}$ et $Z_{i,2}$, ledit réactif contenant un anion hydroxyde, carbonate ou phosphate, pour obtenir le polymère libre de Formule LVIII,

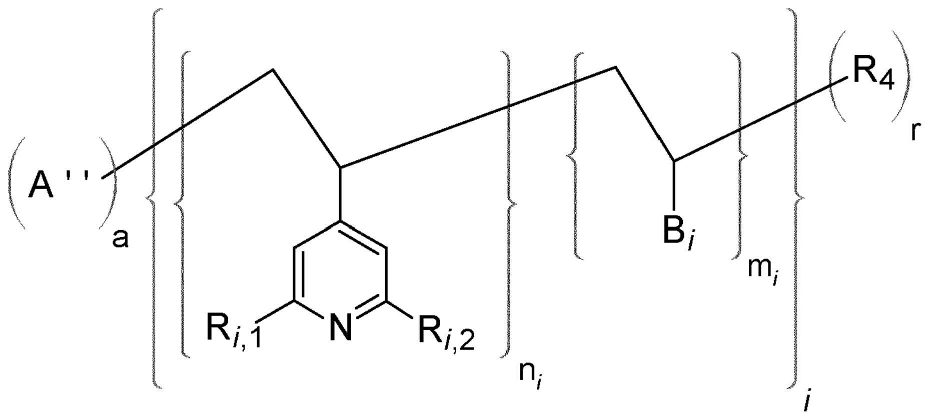

*Formule LVIII*

c. une éventuelle étape de complexation dudit polymère libre de Formule LVIII avec au moins un cation métallique pour obtenir le polymère libre de Formule LIX,

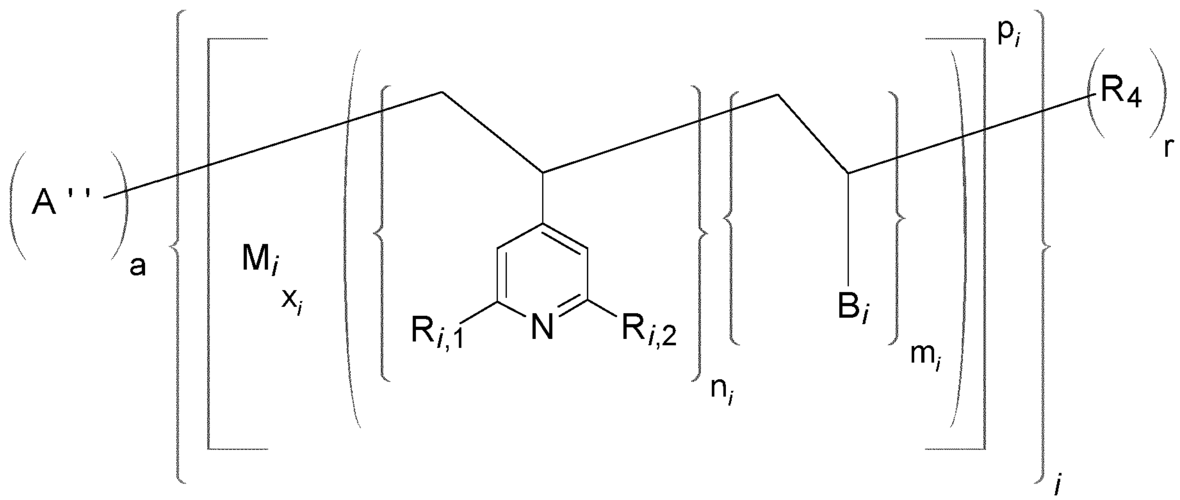

*Formule LIX*

dans laquelle :

- les définitions de $M_i$, $x_i$, et $p_i$, sont telles que décrites dans la Formule II,

d. une éventuelle étape de prétraitement du support par la mise en contact dudit support et d'un réactif de prétraitement et/ou par l'action d'un prétraitement physique sur ledit support, pour obtenir un support éventuellement prétraité de Formule XXXI,

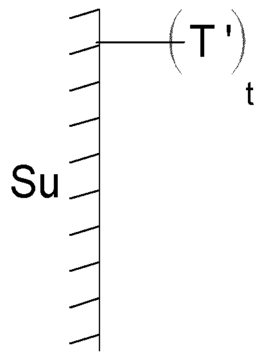

Formule XXXI

dans laquelle :

- T' est un composé issu du prétraitement du support Su, contenant soit des fragments du support, soit des fragments du réactif de prétraitement, soit des fragments du support et du réactif de prétraitement,
- t est un nombre entier valant 0 ou 1,

e. une étape de greffage sur le support éventuellement prétraité de Formule XXXI par la mise en contact du support avec le polymère libre de Formule LIX, pour obtenir un polymère greffé sur le support de Formule II.

Dans ce mode de réalisation, le procédé de synthèse d'un polymère greffé sur un support de Formule II est sous la forme polymérisation, modification, complexation, prétraitement, greffage.

Dans ce mode de réalisation, le procédé de synthèse du polymère greffé sur un support de Formule II est une polymérisation selon la technique « grafted to ».

Selon un mode de réalisation particulier, ladite étape de polymérisation du procédé de préparation, tel que défini ci-dessus, d'un monomère ou d'un polymère greffé sur un support de l'invention, met en contact un dérivé de la 4-vinylpyridine de Formule XLIX,

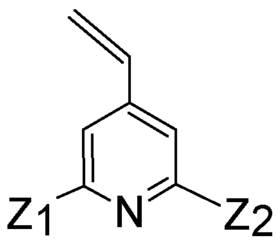

Formule XLIX

dans laquelle :

- $Z_1$ et $Z_2$ sont des substituants choisis parmi le groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,

avec un monomère ou un polymère greffé sur un support de Formule LX,

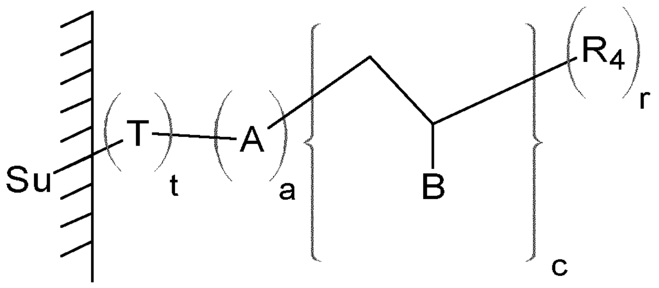

Formule LX

dans laquelle :

- les définitions de Su, A, T, B, $R_4$, r, a, t et *c* sont telles que décrites dans la Formule XVIII,

pour obtenir un polymère greffé sur un support de Formule LXI,

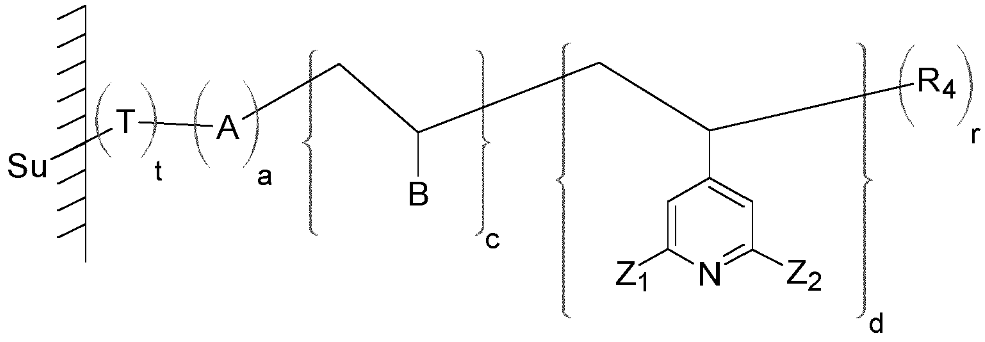

Formule LXI

dans laquelle :

- la définition de d est telle que décrite dans la Formule XVIII.

Dans ce mode de réalisation, l'étape de polymérisation du procédé de synthèse du polymère greffé sur un support de Formule XVIII est une polymérisation en bloc commençant par l'amorçage d'un polymère greffé sur un support de Formule LX. Cet amorçage permet d'initier l'étape de polymérisation radicalaire des monomères dérivés de la 4-vinylpyridine. Cette polymérisation permet de former un bloc à la suite du premier bloc préexistant sur l'amorceur de polymérisation utilisé.

Dans ce mode de réalisation, l'étape de polymérisation du procédé de synthèse du polymère greffé sur un support de Formule XVIII, est une technique « grafted from ».

Selon un mode de réalisation particulier, ledit procédé de préparation, tel que défini ci-dessus, d'un polymère de l'invention,
comporte :

a. une étape de prétraitement du support par la mise en contact dudit support et d'un réactif de prétraitement et/ou par l'action d'un prétraitement physique sur ledit support, pour obtenir un support prétraité de Formule XXXI,

b. une étape de pré-greffage dudit support prétraité de Formule XXXI par la mise en contact avec un amorceur de polymérisation, pour obtenir un support prétraité et pré-greffé de Formule XXXII,

c. une étape de polymérisation radicalaire par mise en contact support prétraité et pré-greffé de Formule XXXII avec un co-monomère de Formule LXII pour obtenir ledit monomère ou polymère libre de Formule LX,

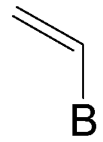

*Formule LXII*

dans laquelle la définition de B est telle que décrite dans la Formule XVIII,,

avant l'étape de polymérisation radicalaire par mise en contact d'un monomère dérivé de la 4-vinylpyridine de Formule XXXIII, avec un monomère ou polymère greffé sur un support de Formule LX.

Dans ce mode de réalisation, le procédé de synthèse du polymère greffé sur un support de Formule XVIII commence par la polymérisation des co-monomères qui permet la synthèse du polymère greffé sur un support de Formule LX Ce polymère greffé sur un support est ensuite utilisé comme amorceur de polymérisation.

Selon un mode de réalisation particulier, ladite étape de polymérisation du procédé de préparation, tel que défini ci-dessus, d'un polymère de l'invention greffé sur un support, met en contact d'un amorceur de polymérisation amorcé avec le dérivé de la 4-vinylpyridine de Formule XXXIII, pour obtenir un polymère libre de Formule LXIII

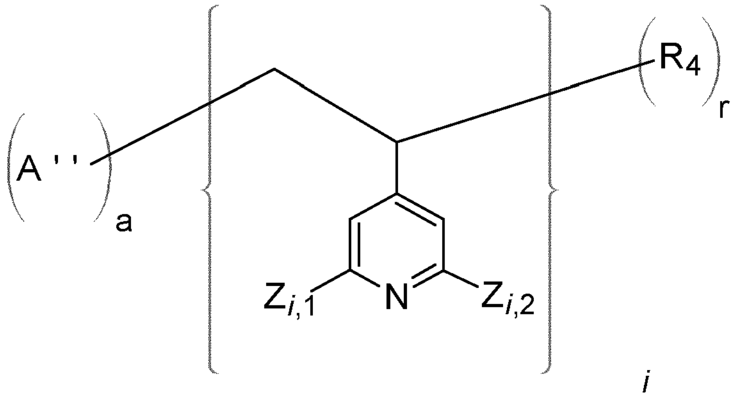

*Formule LXIII*

dans laquelle :

- les définitions de $R_4$, r, a, et *i* sont telles que décrites dans la Formule II,
- les définitions de $Z_{i,1}$ et $Z_{i,2}$, sont telles que décrites dans la Formule XXXIII,
- la définition de A" est telle que décrite dans la Formule LVII.

Dans ce mode de réalisation, l'étape de polymérisation du procédé de synthèse du polymère greffé sur un support de Formule III permet de polymériser uniquement des unités monomères dérivées de la 4-vinylpyridine, pour obtenir un polymère libre ne comportant que des unités monomères dérivées de la 4-vinylpyridine.

Dans ce mode de réalisation, l'étape de polymérisation du procédé de synthèse du polymère greffé sur un support de Formule III, ne peut être intégrée que dans une technique « grafted to ».

Selon un mode de réalisation particulier, ladite étape de polymérisation du procédé de préparation, tel que défini ci-dessus, d'un polymère de l'invention greffé sur un support, met en contact un amorceur de polymérisation amorcé avec le dérivé de la 4-vinylpyridine de Formule XLIX, pour obtenir un polymère libre de Formule LXIV,

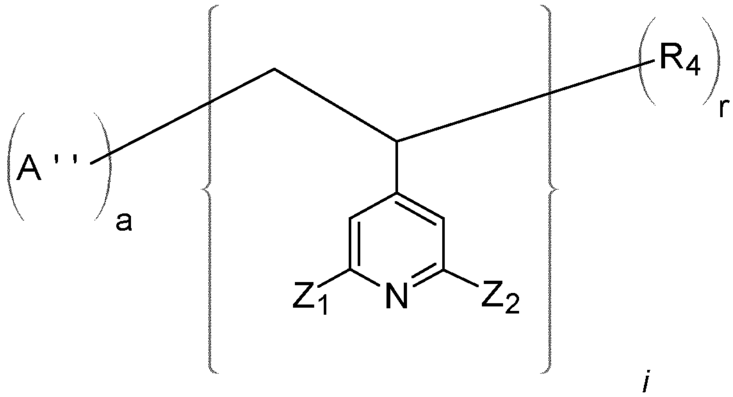

*Formule LXIV*

dans laquelle :

- les définitions de A", $Z_1$, $Z_2$, $R_4$, r, a, et *i* sont telles que décrites dans la Formule IV,

Dans ce mode de réalisation, l'étape de polymérisation du procédé de synthèse du polymère greffé sur un support de Formule IV permet de polymériser un seul type d'unités monomères dérivées de la 4-vinylpyridine, pour obtenir un homopolymère libre ne comportant que des unités monomères dérivées de la 4-vinylpyridine.
Dans ce mode de réalisation, l'étape de polymérisation du procédé de synthèse du polymère greffé sur un support de Formule IV, ne peut être intégrée que dans une technique « grafted to ».
Selon un mode de réalisation particulier, le procédé de préparation, tel que défini ci-dessus, d'un monomère ou d'un polymère de l'invention greffé sur un support, ledit polymère étant de Formule XXVIII et ledit support étant en PET comprend :

a. une étape de prétraitement d'un support en PET par mise en contact dudit support avec de la polyéthylèneimine pour obtenir un support prétraité de Formule LXV,

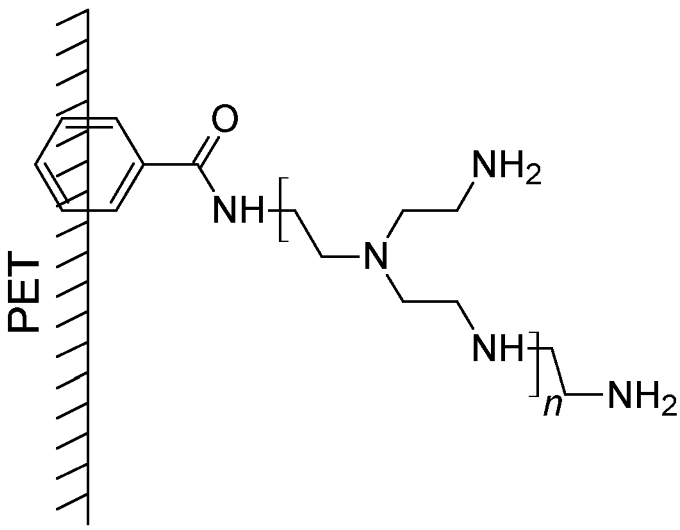

*Formule LXV*

dans laquelle T' représente un composé de Formule LXVI, T ' :

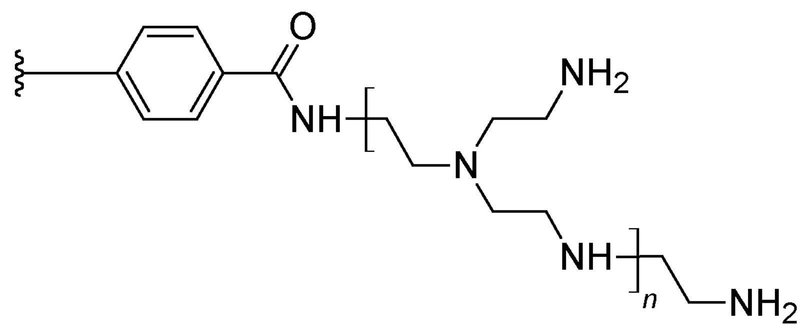

*Formule LXVI*

b. une étape de pré-greffage du support prétraité de Formule LXV par mise en contact dudit support avec du chlorure de 4-(chlorométhyl)benzoyle, pour obtenir un support prétraité et pré-greffé de Formule LXVII,

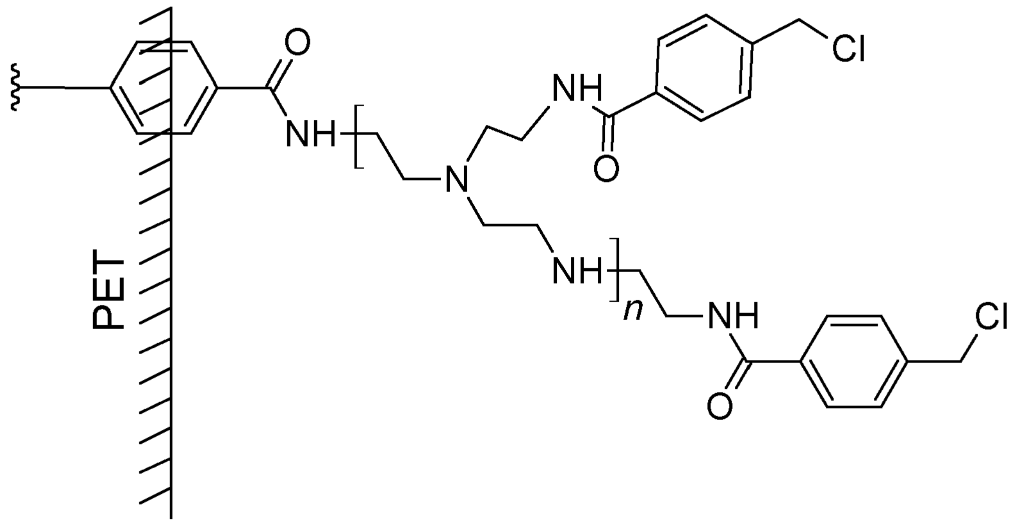

*Formule LXVII*

dans laquelle T représente un composé de Formule XXII et X' un composé de Formule LXVIII,
X' :

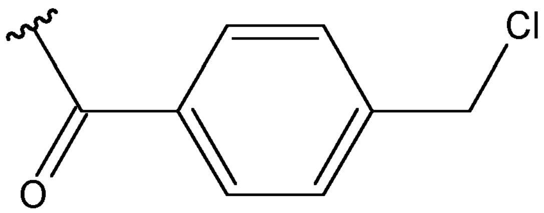

*Formule LXVIII*

c. une étape de polymérisation radicalaire sur le support prétraité et pré-greffé de Formule LXVII du dérivé de la 4-vinylpyridine de Formule LXIX,

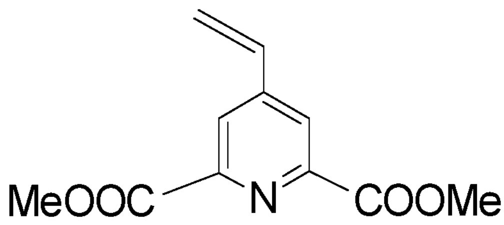

*Formule LXIX*

par mise en réaction dudit support avec ledit dérivé et avec du CuClz, du TPMA et du cuivre métallique, pour obtenir un monomère ou un polymère greffé sur un support de Formule XXVII dans laquelle X représente un composé de Formule LXX et $R_4$ représente un atome de chlore,
X :

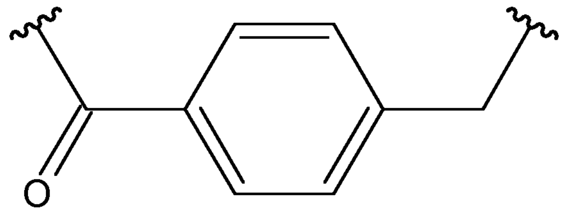

*Formule LXX*

d. une étape de modification du monomère ou du polymère greffé sur un support de Formule XXVII avec une base pour obtenir un monomère ou un polymère greffé sur un support de Formule XXVIII.

Dans ce mode de réalisation, le procédé de synthèse du polymère greffé sur un support de Formule XXVIII est une polymérisation selon la technique « grafted from ».

Dans ce mode de réalisation, le procédé de synthèse du polymère greffé sur un support de Formule XXVIII comprend :

- une étape de prétraitement du support pour obtenir un support prétraité Formule LXV,
- une étape de pré-greffage pour obtenir un support prétraité et pré-greffé de Formule LXVII,
- une étape de polymérisation radicalaire en utilisant le support prétraité et pré-greffé comme amorceur pour obtenir un polymère greffé sur un support de Formule XXVII,
- une étape de modification en utilisant le polymère greffé sur un support de Formule XXVII pour obtenir un polymère greffé sur un support de Formule XXVIII.

Dans ce mode de réalisation, le support sur lequel est greffé le polymère est en PET.

Selon un mode de réalisation particulier, le procédé de préparation, tel que défini ci-dessus, d'un monomère ou d'un polymère de l'invention greffé sur un support, ledit polymère étant de Formule XXXV et ledit support étant de la silice, comprend :

a. une étape de prétraitement d'un support en silice par mise en contact du support avec un acide pour obtenir un support prétraité de Formule LXXI,

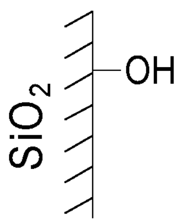

*Formule LXXI*

dans laquelle T' représente Si-OH,

b. une étape de pré-greffage du support prétraité de Formule LXXI par mise en contact dudit support avec du APTES-CMB de formule Formule XXIII,

pour obtenir un support prétraité et pré-greffé de Formule LXXII,

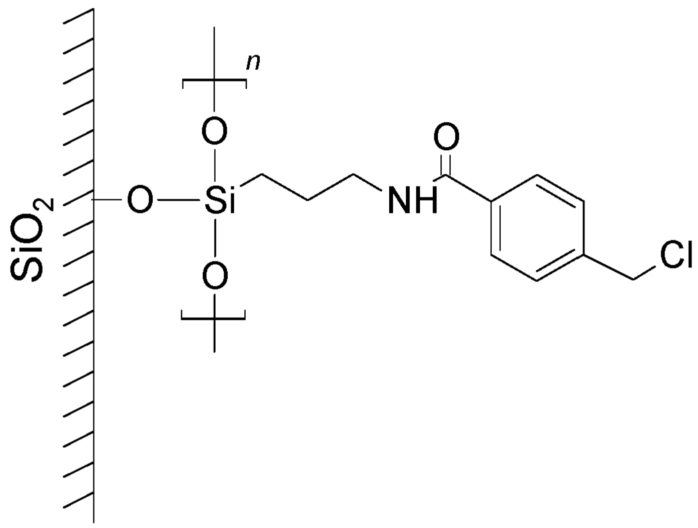

*Formule LXXII*

dans laquelle T représente -O- et X' représente le composé de Formule LXXIII,
X ' :

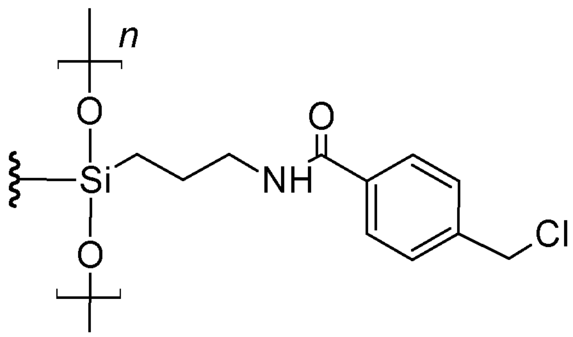

*Formule LXXIII*

c. une étape de polymérisation radicalaire du dérivé de la 4-vinylpyridine de Formule LXIX, sur le support prétraité et pré-greffé de Formule LXXII par mise en réaction dudit support avec ledit dérivé et avec du $CuCl_2$, du TPMA et du cuivre métallique, pour obtenir un monomère ou un polymère greffé sur un support de Formule XXV dans laquelle X représente le composé de Formule LXXIV et $R_4$ un atome de chlore,
X :

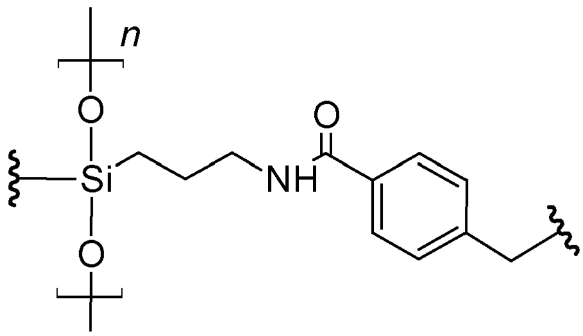

*Formule LXXIV*

d. une étape de modification du monomère ou du polymère greffé sur un support de Formule XXV avec une base pour obtenir un monomère ou un polymère greffé sur un support de Formule XXVI.

Dans ce mode de réalisation, le procédé de synthèse du polymère greffé sur un support de Formule XXVI est une polymérisation selon la technique « grafted from ».

Dans ce mode de réalisation, le procédé de synthèse du polymère greffé sur un support de Formule XXVI comprend :

- une étape de prétraitement du support pour obtenir un support prétraité de Formule LXXI,
- une étape de pré-greffage pour obtenir un support prétraité et pré-greffé de Formule LXVII,
- une étape de polymérisation radicalaire en utilisant le support prétraité et pré-greffé comme amorceur pour obtenir un polymère greffé sur un support de Formule XXV,
- une étape de modification en utilisant le polymère greffé sur un support de Formule XXV pour obtenir un polymère greffé sur un support de Formule XXVI.

Dans ce mode de réalisation, le support sur lequel est greffé le polymère est du SiOz.

Selon un mode de réalisation particulier, le procédé de préparation, tel que défini ci-dessus, d'un monomère ou d'un polymère de l'invention greffé sur un support, ledit polymère étant de Formule XXX et ledit support comprenant du PVC et du PVDC, comprend :

a. une étape de polymérisation du dérivé de la 4-vinylpyridine de Formule LXIX, sur ledit support, par mise en réaction dudit support avec ledit dérivé et avec du CuClz, du TPMA et du cuivre métallique, pour obtenir un monomère ou un polymère greffé sur un support de Formule XXIX, dans laquelle $R_4$ représente un atome de chlore,
b. une étape de modification du monomère ou du polymère de Formule XXIX avec une base pour obtenir un monomère ou un polymère greffé sur un support de Formule XXX.

Dans ce mode de réalisation, le procédé de synthèse du polymère greffé sur un support de Formule XXX est une polymérisation selon la technique « grafted from ».

Dans ce mode de réalisation, le procédé de synthèse du polymère greffé sur un support de Formule XXVI comprend :

- une étape de polymérisation radicalaire en utilisant directement le support comme amorceur pour obtenir un polymère greffé sur un support de Formule XXIX,
- une étape de modification en utilisant le polymère greffé sur un support de Formule XXV pour obtenir un polymère greffé sur un support de Formule XXX.

Dans ce mode de réalisation, le support sur lequel est greffé le polymère est du PVC-co-PDVC.

Selon un mode de réalisation particulier, ladite étape de polymérisation radicalaire du procédé de préparation, tel que défini ci-dessus, peut-être une polymérisation de type NMP, RAFT, ATRP ou une polymérisation radicalaire classique.

Selon un mode de réalisation particulier, le procédé de préparation d'un polymère de l'invention de Formule XXX, comprend :

a. une première étape de réaction par la mise en contact d'un composé de Formule LXXV

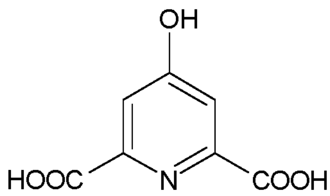

*Formule LXXV*

avec du $PhPOCl_2$ et du méthanol pour synthétiser le composé de Formule LXXVI,

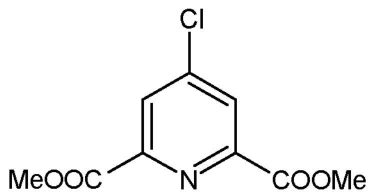

*Formule LXXVI*

b. une seconde étape de réaction par la mise en contact d'un composé de Formule LXXVI avec du NaI, du MeCN et du MeCOCl pour synthétiser le composé de Formule LXXVII,

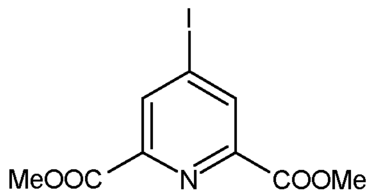

*Formule LXXVII*

c. une troisième étape de réaction par la mise en contact du composé de Formule LXXVII avec du $CH_2$=$CHBF_3K$, du $Cs_2CO_3$, du $PPh_3$, et du $Pd(OAc)_2$ pour synthétiser le composé de Formule LXXVIII,

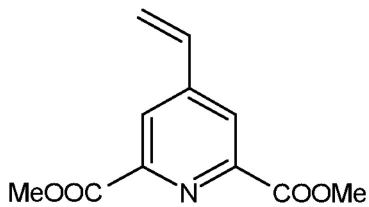

*Formule LXXVIII*

d. une quatrième étape de réaction par la mise en contact du composé de Formule LXXVIII avec un support en PVC-co-PDVC, du $CuCl_2$ et du cuivre métallique pour synthétiser le composé de Formule XXIX,

e. une cinquième étape de réaction par la mise en contact du composé de Formule XXIX avec de la soude pour obtenir le composé de Formule XXX.

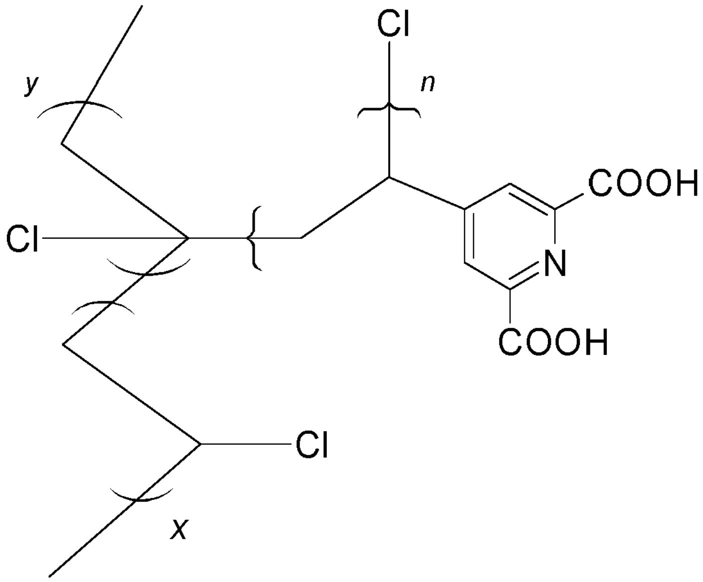

*Formule XXX*

La présente invention concerne en outre l'utilisation de la composition de la présente invention choisie dans le groupe comprenant le captage de métaux et leur restitution, la catalyse homogène ou hétérogène, le marquage de surfaces organiques et/ou inorganiques, le marquage par fluorescence des biomolécules.

Selon un mode de réalisation particulier, la composition de la présente invention est utilisable comme adsorbant de métaux dans l'eau de mer, en particulier l'adsorption des actinides et des lanthanides, plus particulièrement l'adsorption de l'uranium et encore plus particulièrement l'adsorption sélective de l'uranium par rapport au vanadium.

Selon un mode de réalisation particulier, la composition de la présente invention est utilisable comme traitement des effluents contaminés par des métaux, en particulier les effluents radioactifs et en particulier les déchets nucléaires issus des centrales nucléaires.

**Figures**

La **Figure 1** représente l'image de fibres de PVC-co-PDVC (PVC / PDVC = 7 / 3) avant greffage obtenue par microscopie électronique à balayage. Le diamètre moyen des fibres est de 12 $\mu$m.

La **Figure 2** représente l'image de fibres de PVC-co-PDVC (PVC / PDVC = 7 /3) après greffage de poly(2,6-diacide carboxylique-4-vinylpyridine) obtenue par microscopie électronique à balayage. Le diamètre moyen des fibres est de 23 $\mu$m.

La **Figure 3 A** représente une solution de nitrate d'uranyle à pH neutre avec du $UO_2(NO_3)_2$ seul. ($C_{urany1}$ = 1mM, $\lambda_{lumière}$ = 254 nm, T ambiante).

La **Figure 3 B** représente un test de captage de l'uranium sous forme de nitrate d'uranyle en solution à pH neutre avec du $UO_2(NO_3)_2$ et du poly(2,6-diacide carboxylique-4-vinylpyridine) greffé sur le support PVC-co-PDVC de la Figure 2. ($C_{urany1}$ = 1 mM, $m_{polymère}$ = 15 mg, $\lambda_{lumière}$ = 254 nm, T ambiante). Les fibres ont un degré de greffage de 40%. (Degré de greffage = 100 x gain de masse des fibres / masse de fibres avant greffage). Le captage des ions uranyles est totale, dans la limite de détection (>98%).

**Exemples**

**Exemple 1** : Synthèse du monomère 2,6-dicarboxylate de diméthyle-4-vinylpyridine

a. Synthèse du 2,6-diacide carboxylique-4-hydroxypyridine

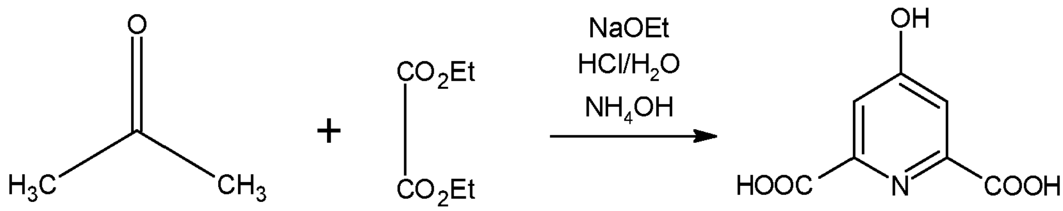


Cette réaction est connue dans l'art antérieur, en particulier dans la référence. RSC Adv., 2014, 4, 25486.

b. Synthèse du 2,6-dicarboxylate de diméthyle-4-cholorpyridine

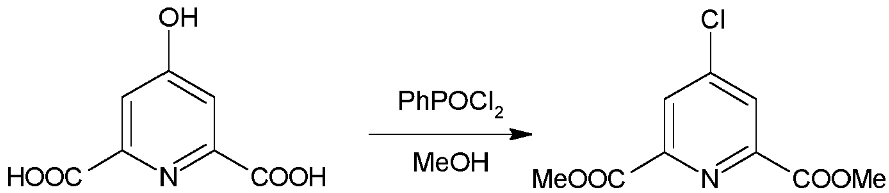


Cette réaction est connue dans l'art antérieur, en particulier dans la référence J. Chem. Soc., Dalton Trans., 2000, 2031-2043.

c. Synthèse du 2,6-dicarboxylate de diméthyle-4-iodopyridine

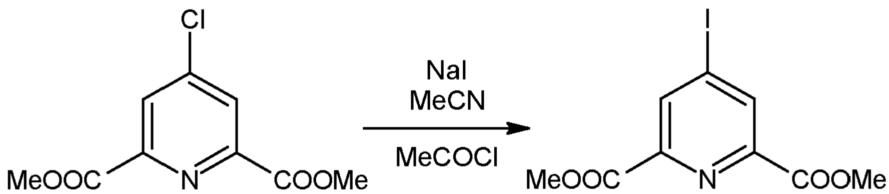


Cette réaction est connue dans l'art antérieur, en particulier dans la référence. Tetrahedron, 2008, 64, 399-411.

d. Synthèse du 2,6-dicarboxylate de diméthyle-4-vinylpyridine

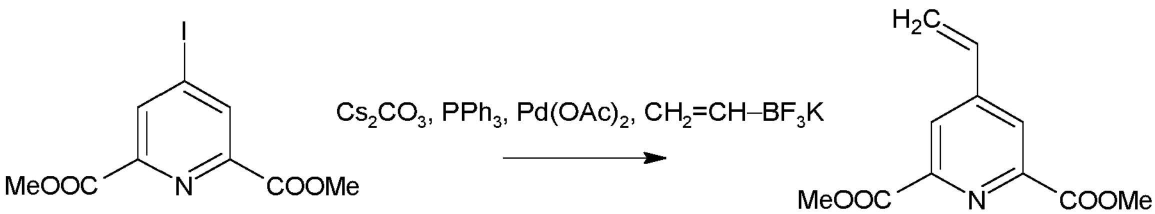

Du diméthyle de 4-iodopyridine-2,6-dicarboxylate (6.2 mmol) a été ajouté dans un ballon avec 1 mmol de triphénylphosphine, et 0.33 mmol de Palladium (II) acétate. Ces composés ont été dissous dans 20 mL d'une solution de THF / eau (Rapport 9/1). Du carbonate de césium (III) (19 mmol) et du vinyltrifluoroborate de potassium (7.5 mmol) ont été ajoutés au mélange. Le milieu a été chauffé à 85 °C pendant 8 h sous agitation, puis refroidi et enfin filtré. Le résidu blanc obtenu a été lavé à l'acétate d'éthyle puis concentré. Le concentrat obtenu a été purifié sur gel de silice. Une élution par un mélange d'éther de pétrole et d'acétate d'éthyle (Rapport 3/1) a permis d'obtenir le diméthyle de 4-vinylpyridine-2,6-dicarboxylate sous forme d'un gramme de solide blanc à 78% massique, recristallisé dans un mélange de dichlorométhane et d'éther de pétrole (Rapport 1/10).

**Exemple 2 :** Préparation des supports

a. Préparation du support poly(téréphtalate d'éthylène) (PET) pré-greffé

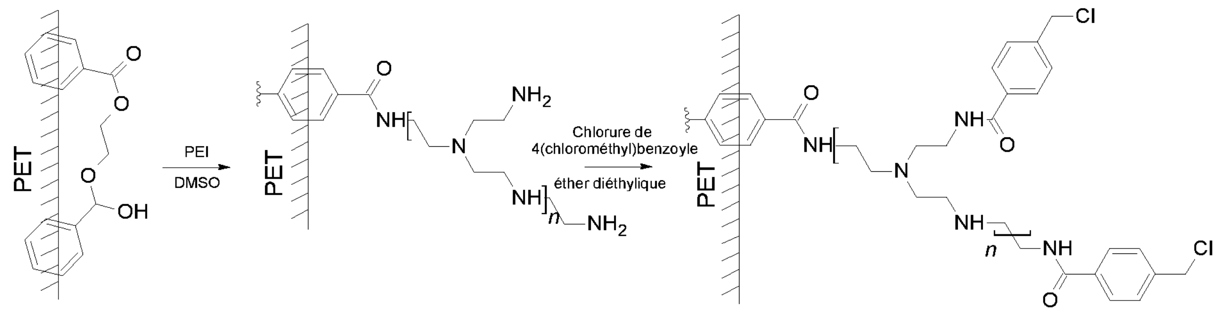


**Support PET** **Support PET prétraité** **Support PET pré-greffé**

Des fibres de PET ont été aminolysées dans une solution de Poly(éthylèneimine)) entre 5 et 10% molaire et de diméthylsulfoxyde à 50°C pendant 6 h. Les fibres ont été ensuite lavées à l'eau et séchées, ce qui a permis d'obtenir un support en PET prétraités. Le support prétraité a alors été ajouté dans une solution de chlorure de 4-(chlorométhyl)benzoyle à 1 M dans l'éther diéthylique en présence de triéthylamine pendant une nuit. Les fibres résultantes ont été lavées avec du dichlorométhane puis séchée, ce qui a permis d'obtenir un support en PET pré-greffé.

b. Préparation du support silice pré-greffé

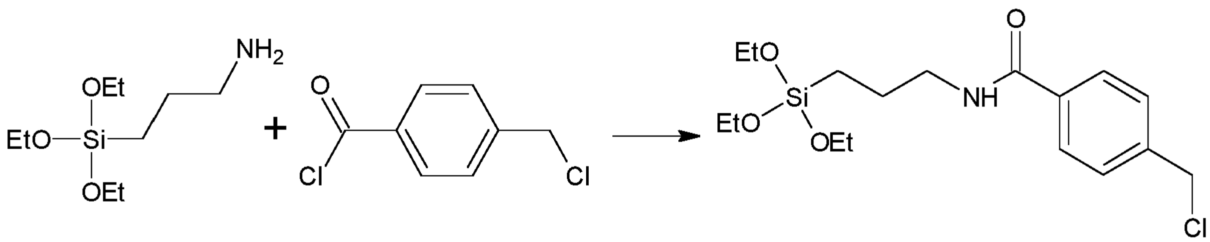

APTES APTES - CMB

Un amorceur (APTES-CMB) a été obtenu par réaction entre 6.2 mL de 3-Aminopropyltriethoxysilane et 5.5 g de chlorure de 4-(chlorométhyl)benzoyle sous atmosphère inerte, en présence de 4.5 mL de triéthylamine, le tout étant solubilisé dans 20 mL de dichlorométhane.

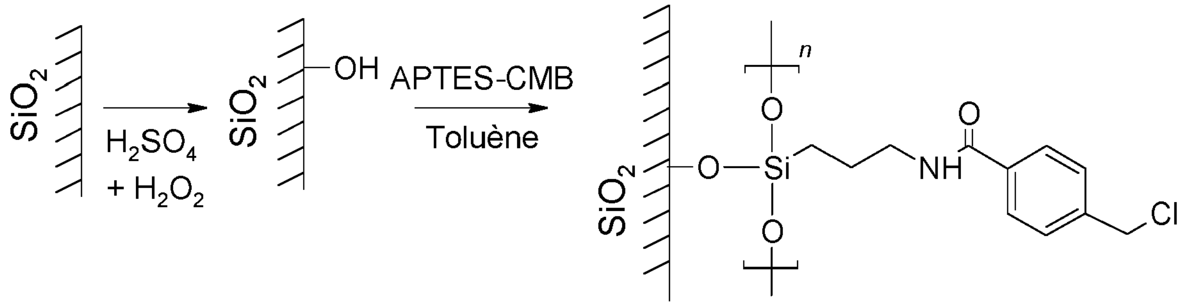


**Support Silice** **Support Silice prétraité** **Support Silice pré-greffé**

Une surface de silice a été traitée avec une solution de piranha (mélange d'acide sulfurique et de péroxyde d'hydrogène 7/3 en volume) ce qui a permis d'obtenir un support en silice prétraité. La silice prétraitée a été placée dans une solution contenant le APTES-CMB dans du toluène anhydre. Le mélange a été porté à 70°C pendant une heure puis il a été lavé avec du toluène puis de l'eau. Le résultant a été recuit à 100 °C pendant 15 minutes. Le solide obtenu est le support silice pré-greffé.

**Exemple 3 :** Synthèse du poly(2,6-dicarboxylate de diméthyle-4-vinylpyridine ) greffé sur le support PET en « grafted from »

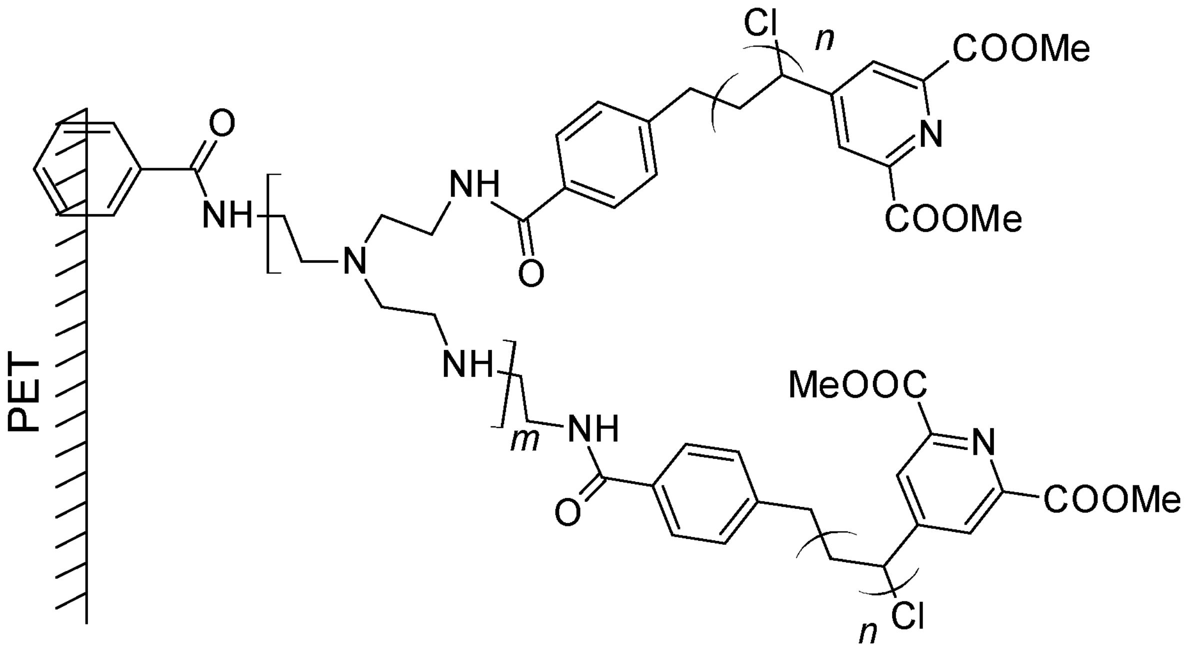

Du 2,6-dicarboxylate de diméthyle-4-vinylpyridine (1.5 mmol) a été solubilisé dans un volume de 3 mL d'un solvant organique (Acétonitrile). Du $CuCl_2$ (0.15 $\mu$mol) a été ajouté à la solution ainsi que 0.6 $\mu$mol de TPMA et 3 cm de fil de cuivre (diamètre 1 mm). Une plaque de 2 cm par 1 cm de support PET pré-greffé a été ajoutée à la solution. Le réacteur a été laissé à température ambiante pendant un temps proportionnel à l'épaisseur de la couche de polymère souhaitée (de quelques heures à quelques jours). La plaque a alors été lavée avec de l'acétonitrile puis séchée.

**Exemple 4 :** Préparation du poly(2,6-diacide carboxylique-4-vinylpyridine) greffé sur le support PET en « grafted from »

Le poly(2,6-dicarboxylate de diméthyle-4-vinylpyridine ) greffé sur la plaque de support PET, obtenu précédemment, a été inséré dans 3 mL de NaOH à 1 M. La plaque est lavée avec de l'acide chlorhydrique à 2M, puis avec de l'eau distillée. Le poly(2,6-diacide carboxylique-4-vinylpyridine) sur le support PET a alors été récupéré.

**Exemple 5 :** Préparation du poly(2,6-dicarboxylate de diméthyle-4-vinylpyridine ) greffé sur le support silice en « grafted from »

Du 2,6-dicarboxylate de diméthyle-4-vinylpyridine (1.5 mmol) a été solubilisé dans un volume de 3 mL d'un solvant organique (Acétonitrile). Du $CuCl_2$ (0.15 $\mu$mol ) a été ajouté à la solution ainsi que 0.6 $\mu$mol de TPMA et 3 cm de fil de cuivre (diamètre 1 mm). Une plaque de 2 cm par 1 cm de support silice pré-greffé a été ajoutée à la solution. Le réacteur a été laissé à température ambiante pendant un temps proportionnel à l'épaisseur de la couche de polymère souhaitée (de quelques heures à quelques jours). La plaque a alors été lavée avec de l'acétonitrile puis séchée.

**Exemple 6 :** Préparation du poly(2,6-diacide carboxylique-4-vinylpyridine) greffé sur le support silice en « grafted from »

Le poly(2,6-dicarboxylate de diméthyle-4-vinylpyridine ) greffé sur la plaque de support silice, obtenu précédemment, a été inséré dans 3 mL de NaOH à 1 M. La plaque est lavée avec de l'acide chlorhydrique à 2M, puis avec de l'eau distillée. Le poly(2,6-diacide carboxylique-4-vinylpyridine) sur le support silice a alors été récupéré.

**Exemple 7 :** Préparation du poly(2,6-dicarboxylate de diméthyle-4-vinylpyridine ) greffé sur le support PVC-co-PDVC en « grafted from »

Du 2,6-dicarboxylate de diméthyle-4-vinylpyridine (1.5 mmol) a été solubilisé dans un volume de 3 mL d'un solvant organique (Acétonitrile). Du $CuCl_2$ (0.15 $\mu$mol ) a été ajouté à la solution ainsi que 0.6 $\mu$mol de TPMA et 3 cm de fil de cuivre (diamètre 1 mm). Des fibres de PVC-co-PDVC (50 mg) ont été ajoutées à la solution. Le réacteur a été laissé à température ambiante pendant un temps proportionnel à l'épaisseur de la couche de polymère souhaitée (de quelques heures à quelques jours). Les fibres ont alors été lavées avec de l'acétonitrile puis séchées.

**Exemple 8 :** Préparation du poly(2,6-diacide carboxylique-4-vinylpyridine) greffé sur le support PVC-co-PDVC en « grafted from »

Le poly(2,6-dicarboxylate de diméthyle-4-vinylpyridine ) greffé sur les fibres de support PVC-co-PDVC, obtenu précédemment, a été inséré dans 3 mL de NaOH à 1 M. Les fibres sont lavées avec de l'acide chlorhydrique à 2M, puis avec de l'eau distillée. Le poly(2,6-diacide carboxylique-4-vinylpyridine) sur le support PVC-co-PDVC a alors été récupéré.

**Exemple 9 :** Préparation du poly(2,6-dicarboxylate de diméthyle-4-vinylpyridine) réticulé greffé sur le support PET

Du 2,6-dicarboxylate de diméthyle-4-vinylpyridine (1.5 mmol) est solubilisé dans un volume de 3 mL d'un solvant organique (Acétonitrile), ainsi que 15 $\mu$mol de 1,3-divinylbenzène. Du $CuCl_2$ (0.15 $\mu$mol ) est ajouté à la solution ainsi que 0.6 $\mu$mol de TPMA et 3 cm de fil de cuivre (diamètre 1 mm). Une plaque de 2 cm par 1 cm de support PET pré-greffé est ajoutée à la solution. Le réacteur est laissé à température ambiante pendant un temps proportionnel à l'épaisseur de la couche de polymère souhaitée (de quelques heures à quelques jours). La plaque est alors lavée avec de l'acétonitrile puis séchée.

**Exemple 10** : Préparation du poly(2,6-dicarboxylate de diméthyle-4-vinylpyridine) à blocs greffé sur le support PET.

Du styrène (1mL) est solubilisé dans 1 mL de solvant sulfolane. Du Chlorure de cuivre (II) (0.25 mg) est ajouté à la solution, ainsi que 5 mg de Tri-(2-picolyl)amine et 1 cm de fil de cuivre par millilitre de solution (D 1mm). Une plaque de PET pré-greffée est insérée. Le réacteur est fermé et chauffé à 60°C pendant 10 h sous agitation. La plaque de PET polymérisée avec le styrène est ensuite lavée avec du sulfolane puis de l'eau puis de l'acétone et séchée.

Du 2,6-dicarboxylate de diméthyle-4-vinylpyridine (1.5 mmol) est solubilisé dans un volume de 3 mL d'un solvant organique (Acétonitrile). Du $CuCl_2$ (0.15 $\mu$mol) est ajouté à la solution ainsi que 0.6 $\mu$mol de TPMA et 3 cm de fil de cuivre (diamètre 1 mm). La plaque de PET polymérisée avec le styrène est ajoutée à la solution. Le réacteur est laissé à température ambiante pendant un temps proportionnel à l'épaisseur de la couche de polymère souhaitée (de quelques heures à quelques jours). La plaque est alors lavée avec de l'acétonitrile puis séchée.

**Exemple 11** : Captage de l'uranium dans l'eau douce

Du poly(2,6-diacide carboxylique-4-vinylpyridine) greffé sur le support PET est mis dans une solution de nitrate d'uranyle $UO_2(NO_3)_2$ à 1 mM dans l'eau distillée à pH neutre. Après 5 minutes à température ambiante, le support modifié est retiré, lavé à l'eau et examiné sous lampe UV (254 nm) pour observation de la fluorescence

**Exemple 12 :** Captage de l'uranium dans l'eau de mer simulé

Du poly(2,6-diacide carboxylique-4-vinylpyridine) greffé sur le support PVC-co-PVDC (15 mg) à un degré de greffage de 40% est mis dans une solution de nitrate d'uranyle $UO_2(NO_3)_2$ à 1 mM dans l'eau de mer simulée (pH initial : 8, force ionique initiale : 0,44) et à une . Après 5 minutes à température ambiante, le support modifié est retiré, lavée à l'eau et examiné sous lampe UV (254 nm) pour observation de la fluorescence. Le captage de l'uranium est aussi vérifié par la disparition de l'uranium dans la solution vue par fluorescence.
Le captage de l'uranium est supérieur à 98% (limite de détection).
Le captage de l'uranium est aussi total dans le cas où le polymère greffé sur un support possède un degré de greffage de 175%, avec une masse introduite de 3 mg.
Le degré de greffage est le rapport entre la masse des fibres gagnée lors du greffage, rapportée à la masse des fibres non greffées.

## Revendications

1. Composition comprenant ou constituée d'un monomère ou d'un polymère greffé sur un support notamment de façon covalente, ledit monomère ou polymère, ayant un degré de polymérisation n, compris de 1 à 10000, et contenant n unités monomères, lesdites unités monomères étant :

   • des unités monomères dérivées de la 4-vinylpyridine, dans lequel les carbones en positions 2 et 6 peuvent être substitués par l'un des substituants du groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
   • et optionnellement des unités monomères dérivées d'un co-monomère,
   sous réserve que les deux substituants ne peuvent pas être tous les deux l'hydrogène,
   et sous réserve que lesdites unités monomères dérivées de la 4-vinylpyridine représentent au moins 20% du degré de polymérisation n,
   ledit monomère ou polymère étant éventuellement complexé avec un métal,
   ledit monomère ou polymère étant linéaire ou réticulé,
   ledit monomère ou polymère étant lié à un support de façon irréversible.

2. Composition selon la revendication 1, comprenant ou constituée d'un monomère ou d'un polymère greffé sur un support,

   - ledit monomère ou polymère greffé sur un support étant de Formule I,

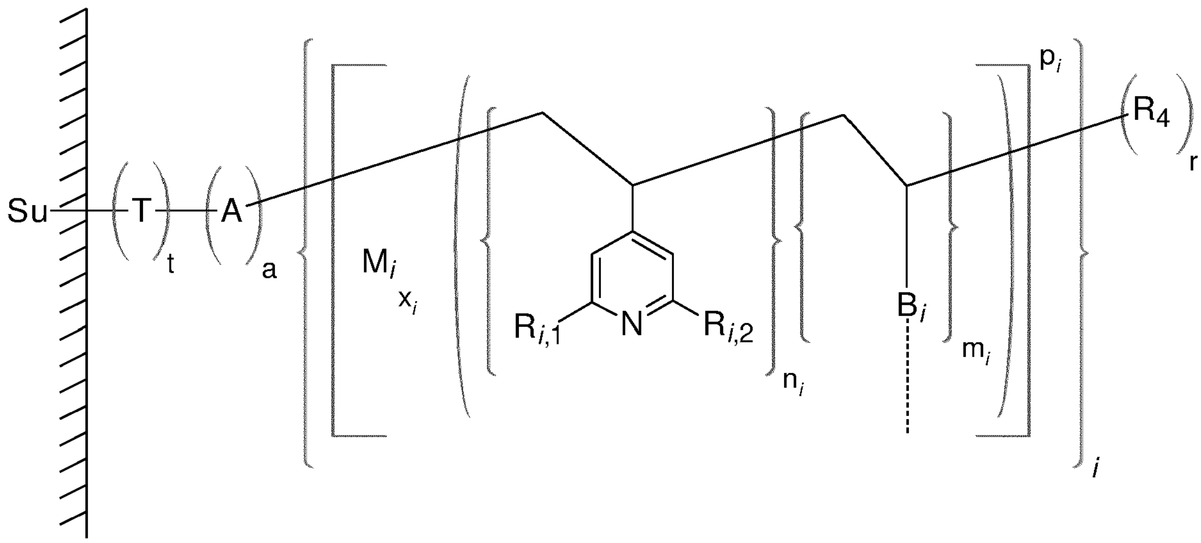

*Formule I*

dans laquelle :

- Su est le support sur lequel est greffé le monomère ou le polymère,
- A est un composé issu d'un amorceur de polymérisation,
- T est un composé faisant le lien entre le support et l'éventuel composé issu d'un amorceur de polymérisation ou entre le support et la première unité monomère,
- $R_4$ est un composé permettant la propagation de la polymérisation, issu ou non dudit amorceur de polymérisation, ou permettant la terminaison de la polymérisation, ou un agent de transfert,
- t, a et r sont identiques ou différents et valent 0 ou 1,
- *i* est un nombre entier strictement positif, indiciel, variant de 1 à n, lui-même compris de 1 à 10000, et pour chaque *i* :

    - $R_{i,1}$ et $R_{i,2}$ sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore, sous réserve que lorsque $R_{i,1}$ représente l'hydrogène, alors $R_{i,2}$ est différent de l'hydrogène, et inversement,
    - $B_i$ est une unité monomère dérivée d'un co-monomère, formant ou non un pont de réticulation,
    - $M_i$ est un cation métallique,
    - $n_i$ et $m_i$ sont des nombres entiers égaux à 0 ou 1,
    - $$n_i + m_i = 1,$$
    - $x_i$ est un nombre compris de 0 à 6,
    - $p_i$ est la charge électrique du complexe métallique comprise de - 6 à + 6.

ledit polymère étant linéaire quand il n'existe aucun $B_i$ formant de pont de réticulation,
ledit polymère étant réticulé quand il existe au moins un $B_i$ formant un pont de réticulation entre deux polymères linéaires.

- ou ledit monomère ou polymère greffé sur un support étant de Formule II,

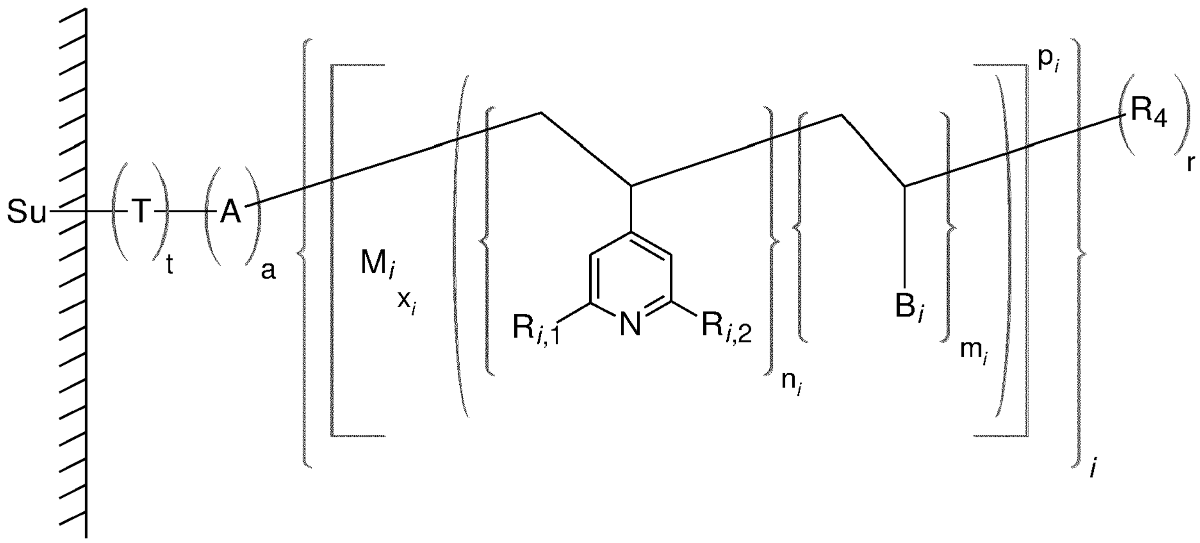

*Formule II*

dans laquelle :

- les définitions de Su, $R_{i,1}$, $R_{i,2}$, T, A, $n_i$, $m_i$, $R_4$, $M_i$, t, a, r, $x_i$, $p_i$ et *i* sont telles que décrites ci-dessus,
- $B_i$ est une unité monomère dérivée d'un co-monomère, ne formant pas de pont de réticulation.

- ou ledit monomère ou polymère greffé sur un support étant de Formule III,

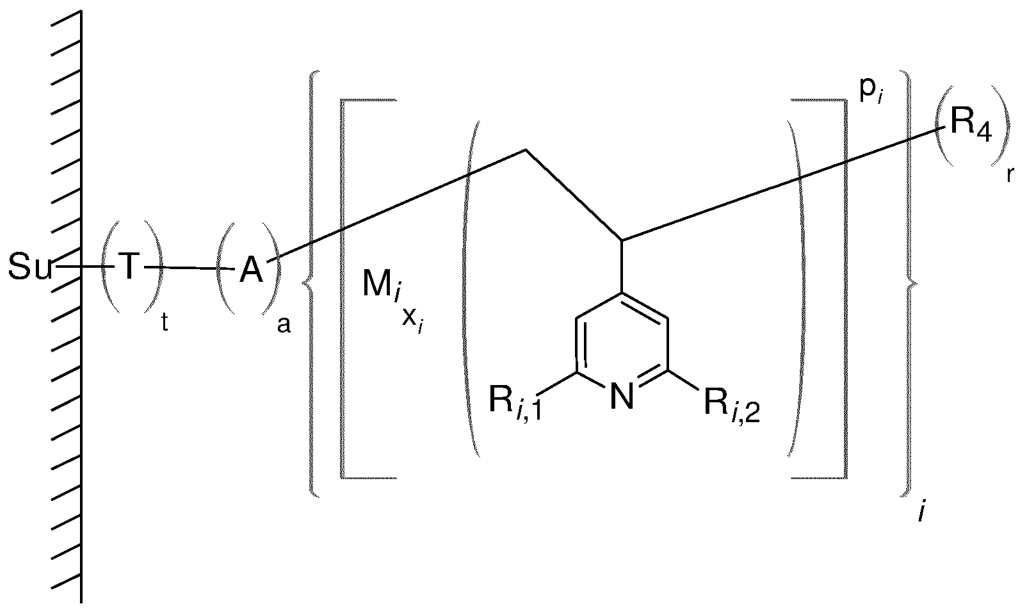

*Formule III*

dans laquelle :

- les définitions de Su, $R_{i,1}$, $R_{i,2}$, T, A, $R_4$, $M_i$, t, a, r, $x_i$, $p_i$ et *i* sont telles que décrites ci-dessus.

**3.** Composition selon les revendications 1 à 2, comprenant ou constituée

- d'un monomère ou d'un homopolymère greffé sur un support, ledit monomère ou polymère greffé sur un support étant de Formule IV ou de Formule XII,

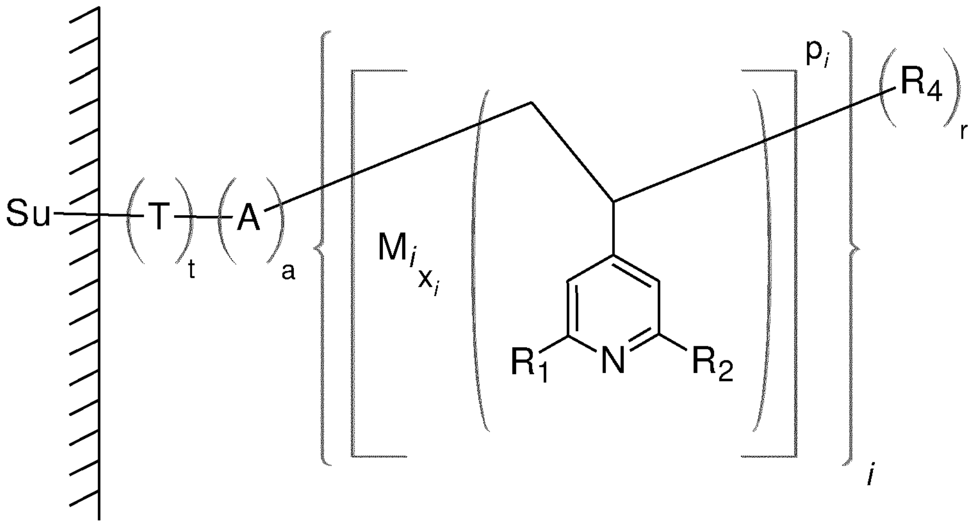

*Formule IV*

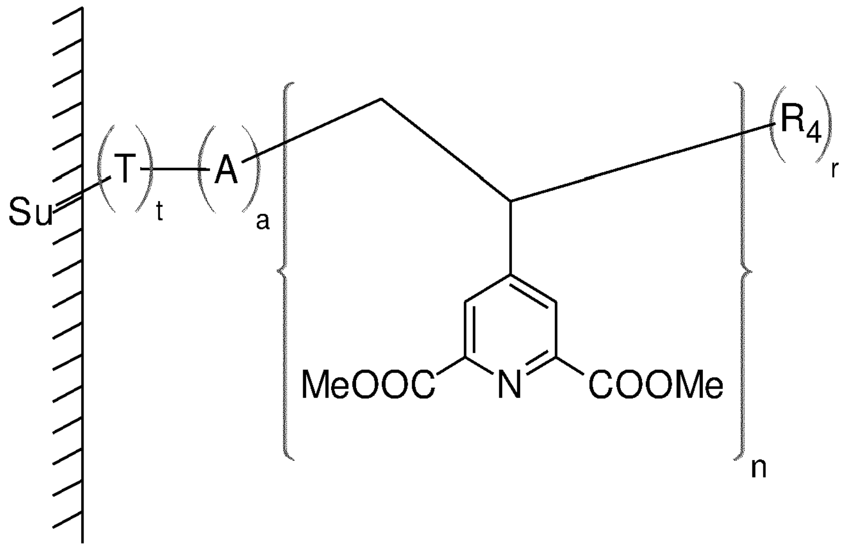

*Formule XII*

dans laquelle :

- les définitions de Su, T, A, $R_4$, $M_i$, t, a, r, $x_i$, $p_i$, n et *i* sont telles que décrites dans la revendication 2,
- $R_1$ et $R_2$ sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore, sous réserve que lorsque $R_1$ représente l'hydrogène, alors $R_2$ est différent de l'hydrogène, et inversement,

- ou d'un monomère ou d'un homopolymère greffé sur un support, ledit monomère ou polymère greffé sur un support étant de Formule V ou de Formule VI,

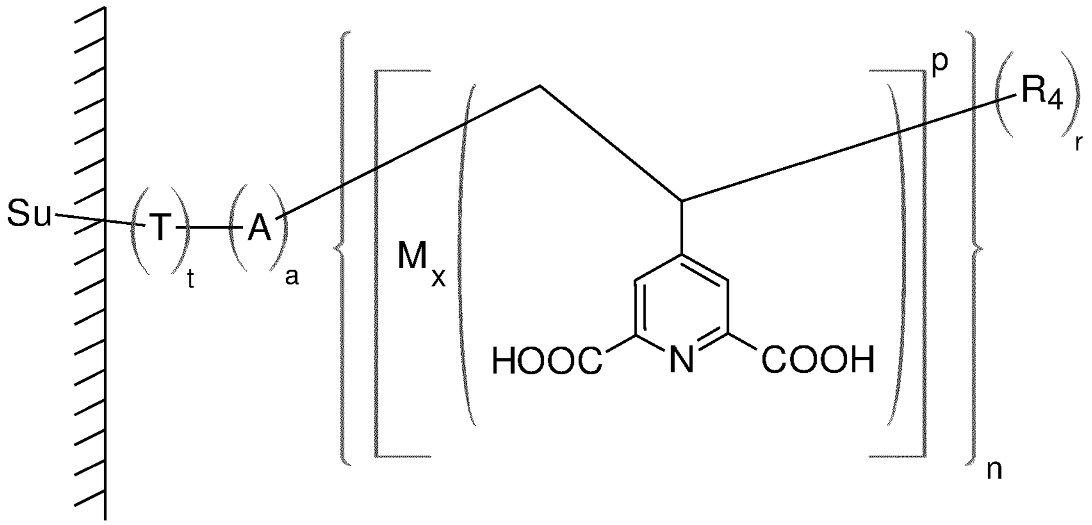

*Formule V*

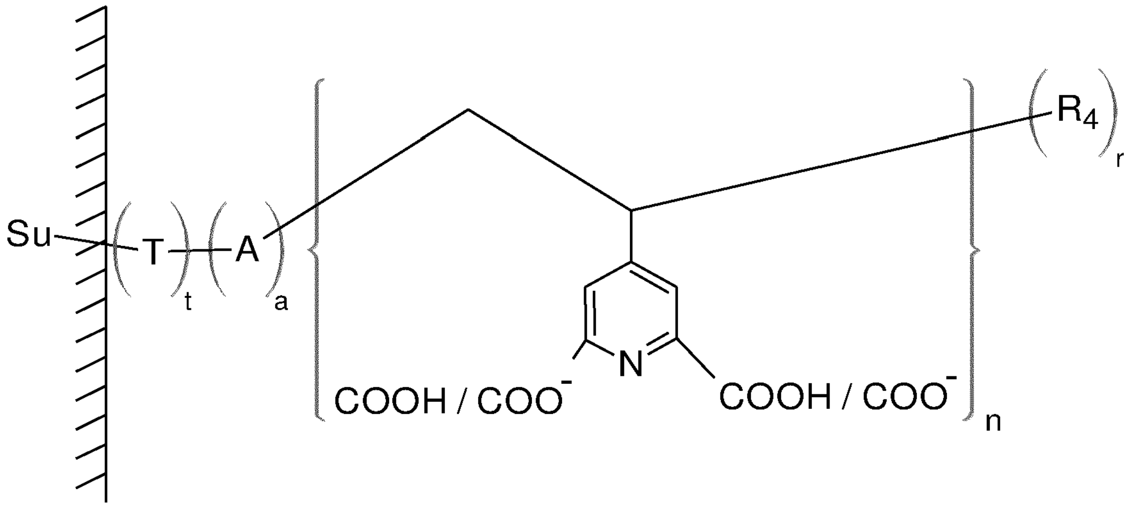

*Formule VI*

dans laquelle :

- les définitions de Su, T, A, $R_4$, t, a, n et r sont telles que décrites dans la revendication 2,
- M est un cation métallique,
- x est un nombre compris de 0 à 6,
- p est la charge électrique du complexe métallique comprise de - 6 à + 6.

- ou d'un monomère ou d'un homopolymère complexé avec de l'uranium greffé sur un support, ledit monomère ou polymère greffé sur un support étant de Formule XIII,

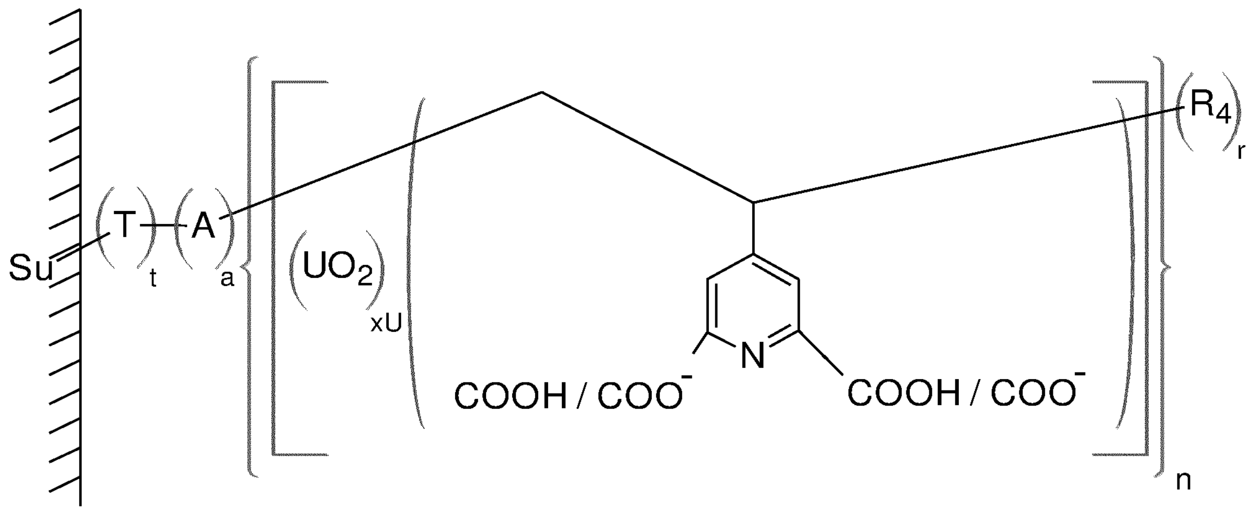

*Formule XIII*

dans laquelle :

- les définitions de Su, T, A, $R_4$, t, a, n et r sont telles que décrites dans la revendication 2,
- xU est un nombre compris de 0 à 6.

**4.** Composition selon les revendications 1 à 2, comprenant ou constituée

- d'un polymère greffé sur un support, ledit polymère ayant au moins une unité monomère dérivée d'un co-monomère, en particulier des unités monomères issues du styrène ou de l'acide acrylique ;
- ou d'un copolymère greffé sur un support, dans laquelle le taux d'unité monomère dérivée d'un co-monomère vari d'une valeur supérieure stricte à 0% à une valeur inférieure à 80%.

**5.** Composition selon la revendication 4, comprenant ou constituée d'un copolymère à deux blocs, greffé sur un support, ledit polymère greffé sur un support étant de Formule XVIII ou de Formule XIX,

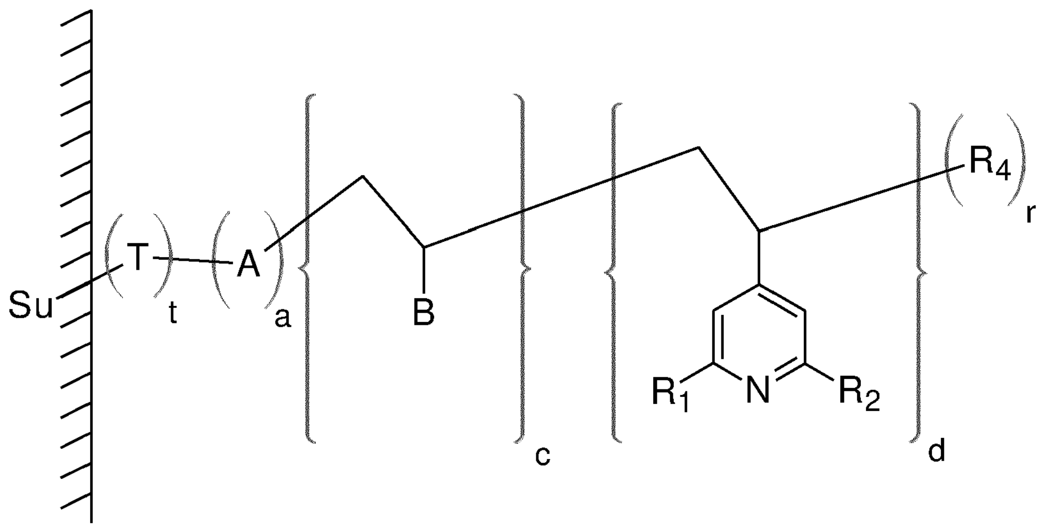

*Formule XVIII*

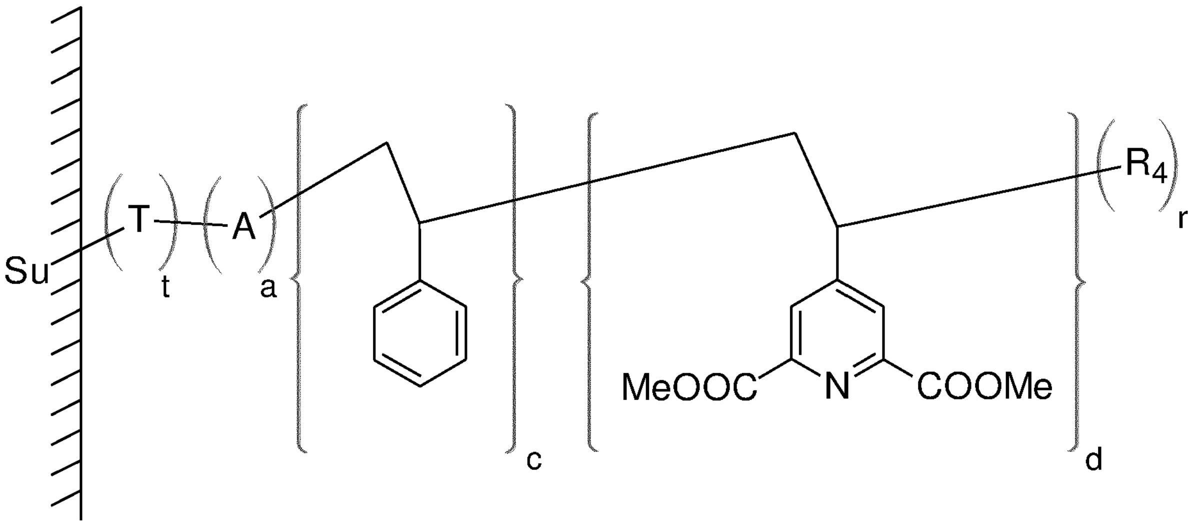

*Formule XIX*

dans laquelle :

- les définitions de Su, T, A, $R_4$, t, a, et r sont telles que décrites dans la revendication 2,
- $R_1$ et $R_2$ sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore, sous réserve que lorsque $R_1$ représente l'hydrogène, alors $R_2$ est différent de l'hydrogène, et inversement,
- B est une unité monomère dérivée d'un co-monomère,
- d est le degré de polymérisation du bloc constitué des unités monomères dérivées de la 4-vinylpyridine et d est un nombre entier,
- c est le degré de polymérisation du bloc constitué des unités monomères dérivées du co-monomère et c est un nombre entier,
- $$d + c = n.$$

**6.** Composition selon les revendications 1 à 2, comprenant ou constituée d'un copolymère réticulé, greffé sur un support, ledit polymère greffé sur un support étant de Formule XX ou de Formule Formule XXI,

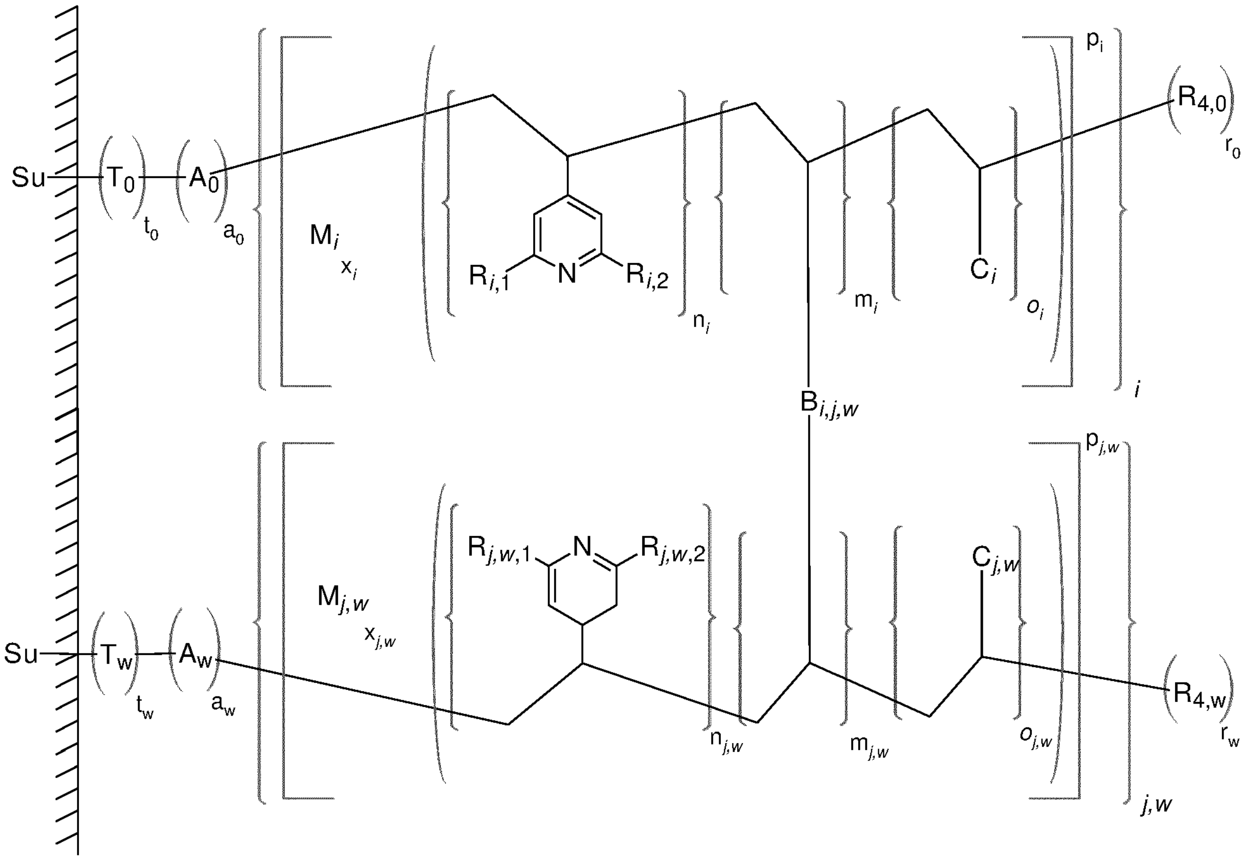

*Formule XX*

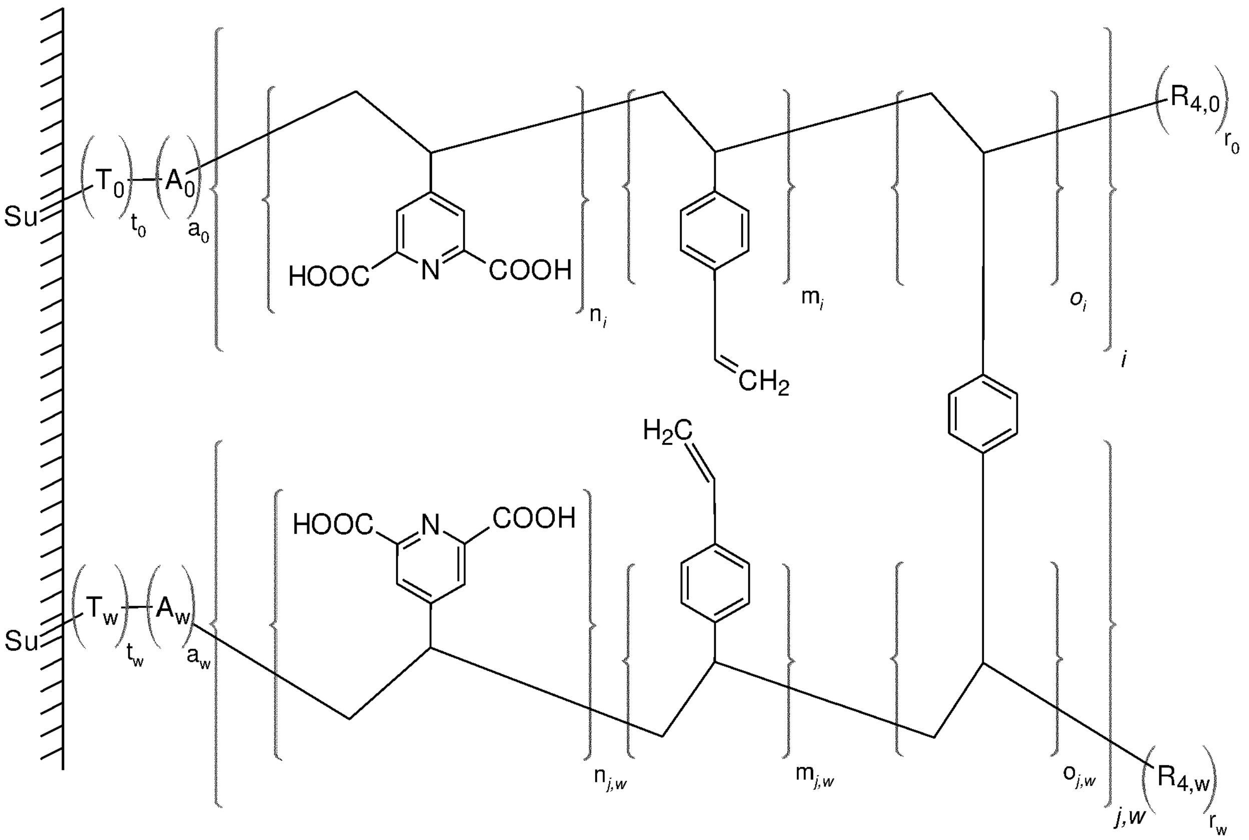

*Formule XXI*

dans laquelle :

- Su est le support sur lequel sont fixés les polymères,
- w est un nombre entier strictement positif, indiciel, variant de 1 au nombre de polymère réticulé avec le polymère d'indice 0, lui-même compris de 1 à 1000,
- $A_0$ et les $A_w$ sont des composés issus d'amorceurs de polymérisation,
- $T_0$ et les $T_w$ sont des composés faisant le lien entre le support et les éventuels composés issus d'amorceurs de polymérisation ou entre le support et la première unité monomère respective,
- $R_{4,0}$ et les $R_{4,w}$ sont des composés permettant la propagation de la polymérisation, issus ou non dudit amorceur de polymérisation, ou permettant la terminaison de la polymérisation, ou un agent de transfert,
- $t_0$, $a_0$, $r_0$ , les $t_w$, les $a_w$ et les $r_w$ sont identiques ou différents et valent 0 ou 1,
- *i et j,w* sont des nombres entiers strictement positif, indiciel, variant respectivement de 1 à $n_i$, et de 1 à $n_{j,w}$, $n_i$ et $n_{j,w}$ étant compris de 1 à 9999,
- $n_i+n_{j,w}= n$ , *n* étant compris de 3 à 10000,

et pour chaque *i* et chaque *j,w* :

◦ $R_{i,1}$, $R_{i,2}$, $R_{j,w,1}$ et $R_{j,w,2}$ sont des substituants choisis parmi le groupe suivant : hydrogène, radical alkyl de 1 à 20 carbones, radical alcène de 1 à 20 carbones, radical aryle de 1 à 20 carbones, acide carboxylique de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,

sous réserve que lorsque $R_{i,1}$ représente l'hydrogène, alors $R_{i,2}$ est différent de l'hydrogène, et inversement, sous réserve que lorsque $R_{j,w,1}$ représente l'hydrogène, alors $R_{j,w,2}$ est différent de l'hydrogène, et inversement,

◦ $B_{i,j,w}$ est une unité monomère dérivée d'un co-monomère, formant un pont de réticulation entre le polymère 0 en position *i* et le polymère d'indice w en position j,
◦ $C_i$ et les $C_{j,w}$ sont des unités monomères dérivées d'un co-monomère ne formant pas un pont de réticulation,
◦ $n_i$, $m_i$, $o_i$, les $n_{j,w}$, les $m_{j,w}$, et les $o_{j,w}$ sont des nombres entiers égaux à 0 ou 1,
◦

$$n_i + m_i + o_i = 1,$$

◦

$$n_{j,w} + m_{j,w} + o_{j,w} = 1,$$

◦ la somme des $o_{j,w}$ est non nulles, et la somme des o, est non nulles.

**7.** Composition selon les revendications 1 à 6, comprenant ou constituée d'un monomère ou d'un polymère greffé sur un support dans lequel ledit monomère ou polymère est complexé à un métal, de préférence choisi parmi les actinides, les lanthanides ou les métaux de transition, en particulier l'uranium.

**8.** Composition selon les revendications 1 à 7, comprenant ou constituée d'un monomère ou d'un polymère greffé sur un support,

- ledit monomère ou polymère étant solvaté en solution aqueuse et en particulier dans l'eau de mer ;
- ou ledit monomère ou polymère étant complexé avec un métal, et étant solvaté ou non en solution aqueuse ;
- ou ledit monomère ou polymère étant solvaté en solution aqueuse non complexé par un métal et non solvaté en solution complexé avec un métal, en particulier avec l'uranium ;
- ou ledit monomère ou polymère étant solvaté dans des solvants organiques, en particulier l'acétonitrile, et le diméthylsulfoxyde (DMSO).

**9.** Composition selon les revendications 1 à 8 comprenant ou constituée d'un monomère ou d'un polymère greffé sur un support,

- ledit support Su étant choisi parmi le copolymère de polychlorure de vinyle-co-chlorure de polyvinylidène (PVC-co-PVDC), le polychlorure de vinyle (PVC), le PET ou le SiOz ;
- et/ou ledit composé T étant choisi parmi l'hydroxy ou le composé de Formule XXII

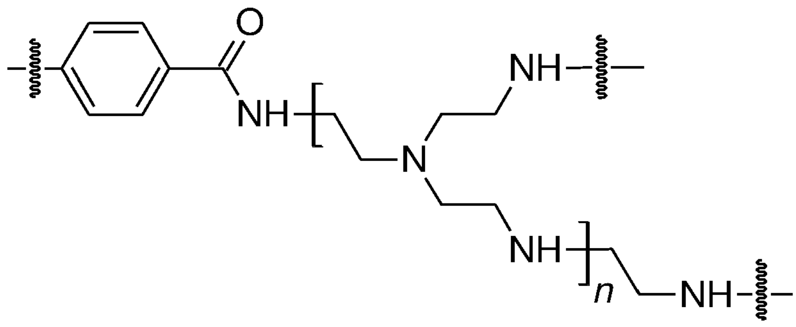

*Formule XXII*

- et/ou A est issu d'un amorceur de polymérisation choisi parmi le chlorure de 4-(chlorométhyl)benzoyle, le chlorure de benzyle, l'AIBN, le 2-bromo-2-méthylpropanoate de méthyle ou le composé de Formule XXIII.

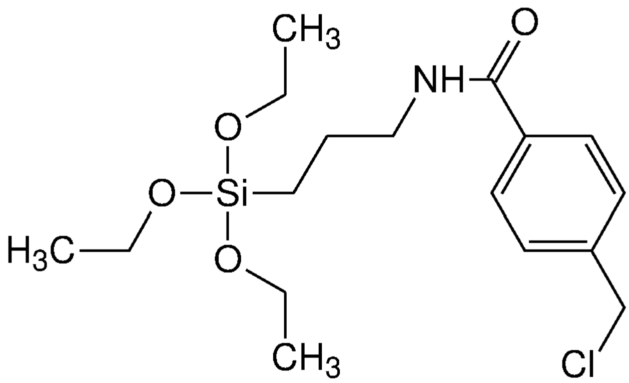

*Formule XXIII*

- et/ou ledit composé $R_4$ étant choisi parmi un atome de chlore, ou les composés de Formule XXIV.

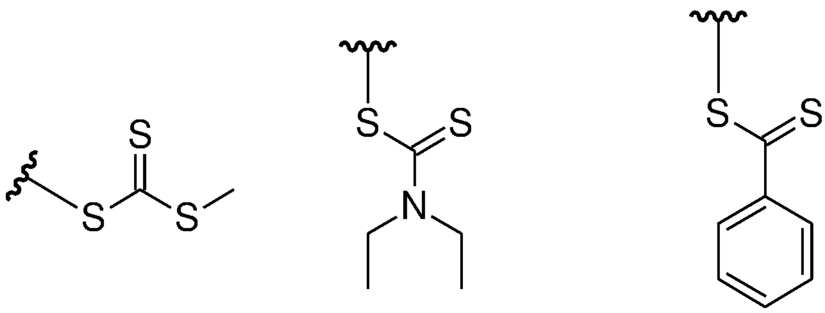

*Formule XXIV*

**10.** Composition selon les revendications 1 à 9, comprenant ou constituée monomère ou d'un polymère greffé sur un support de Formule XXV, Formule XXVI, Formule XXVII, Formule XXVIII, Formule XXIX, ou Formule XXX.

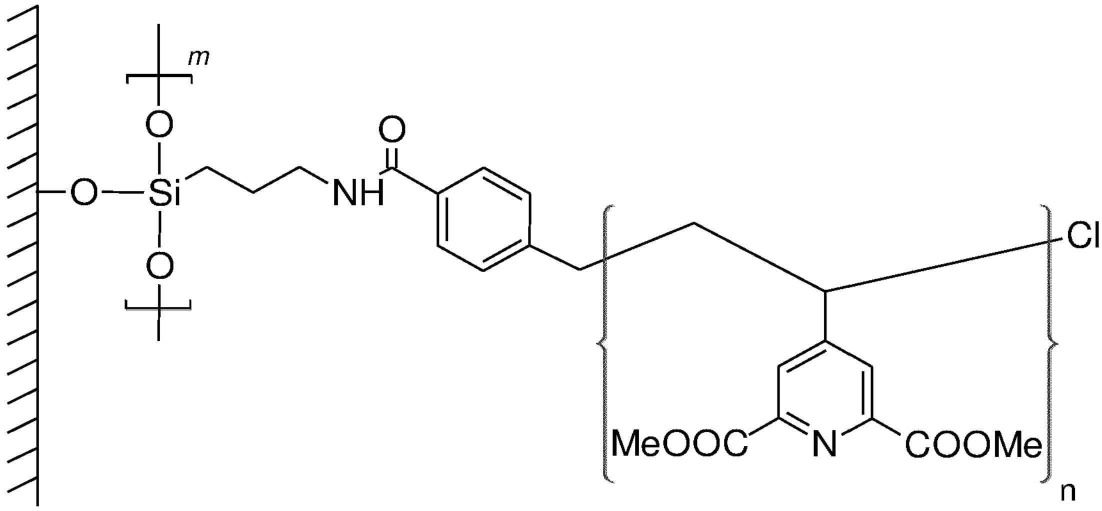

*Formule XXV*

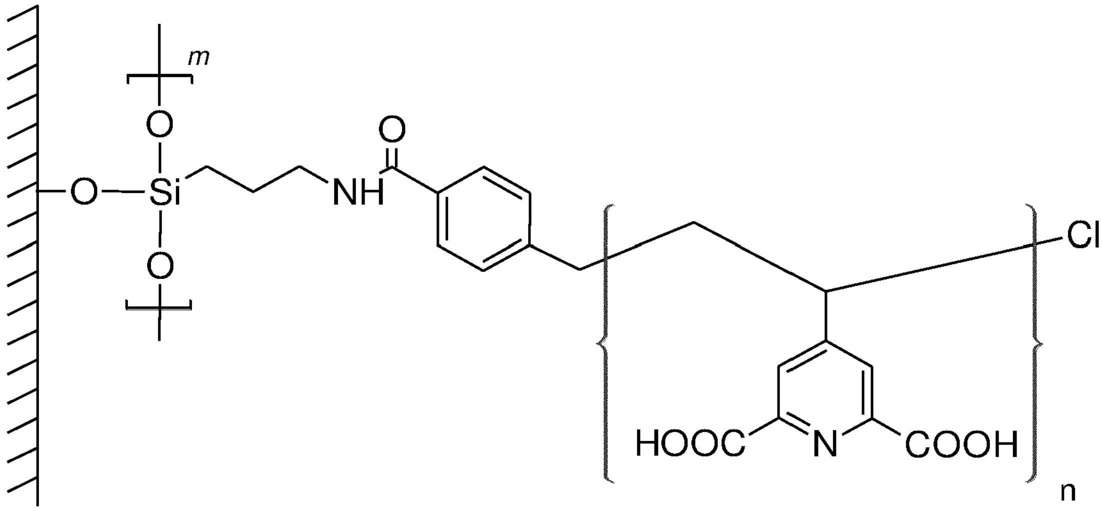

*Formule XXVI*

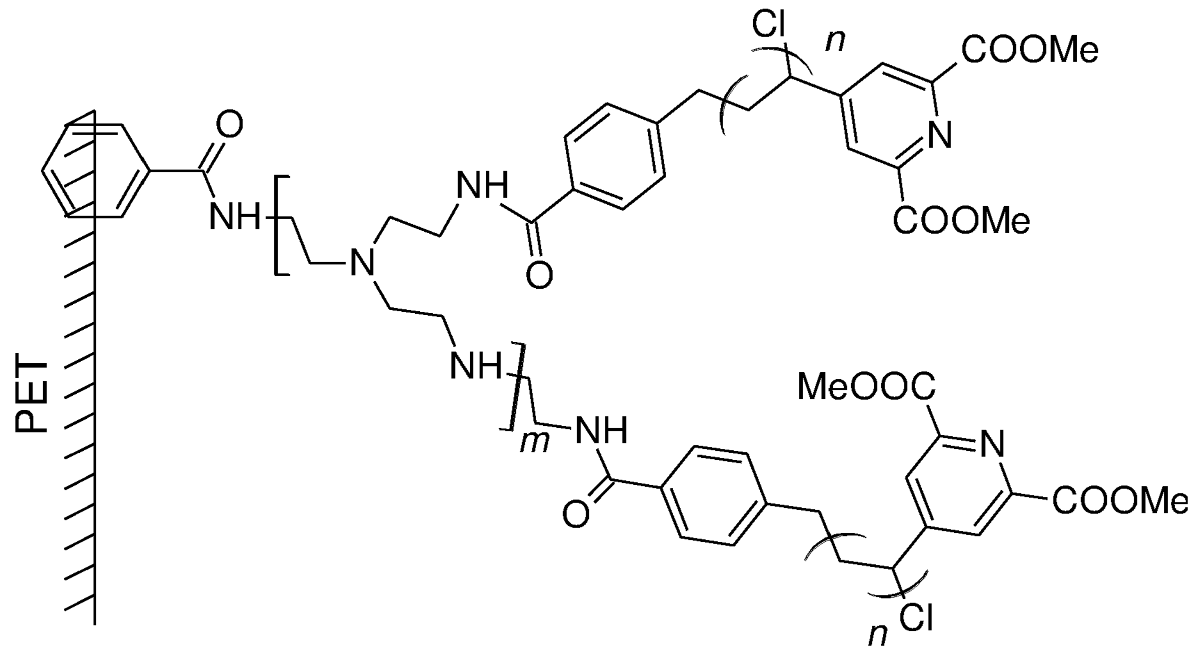

*Formule XXVII*

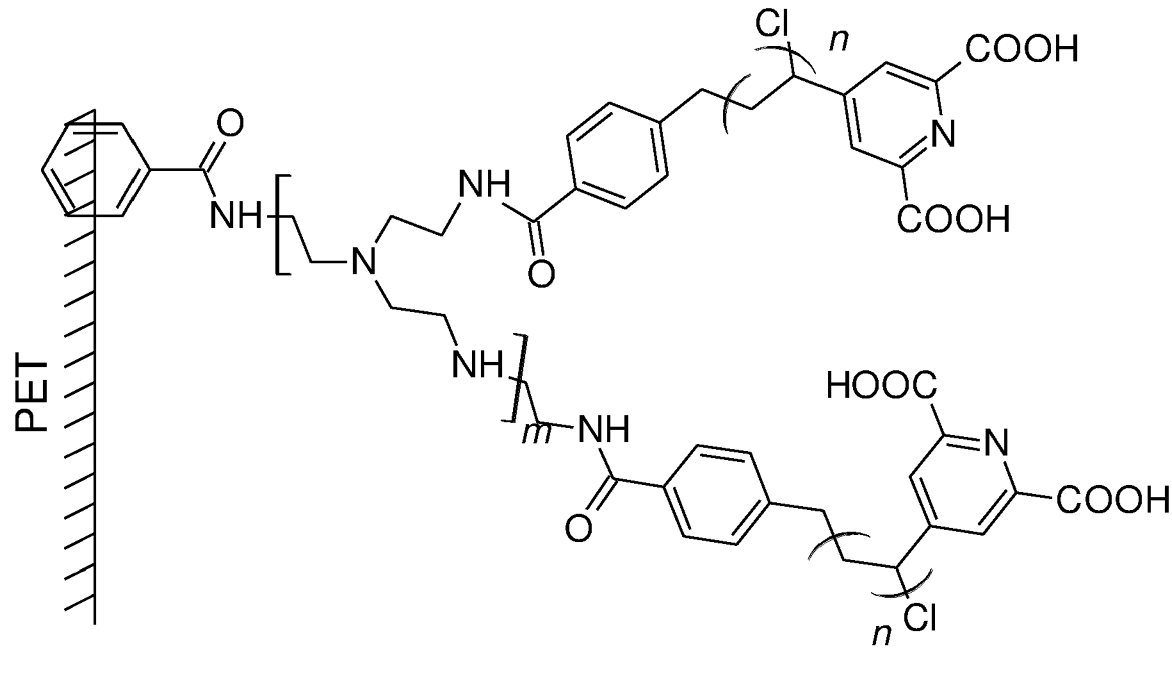

*Formule XXVIII*

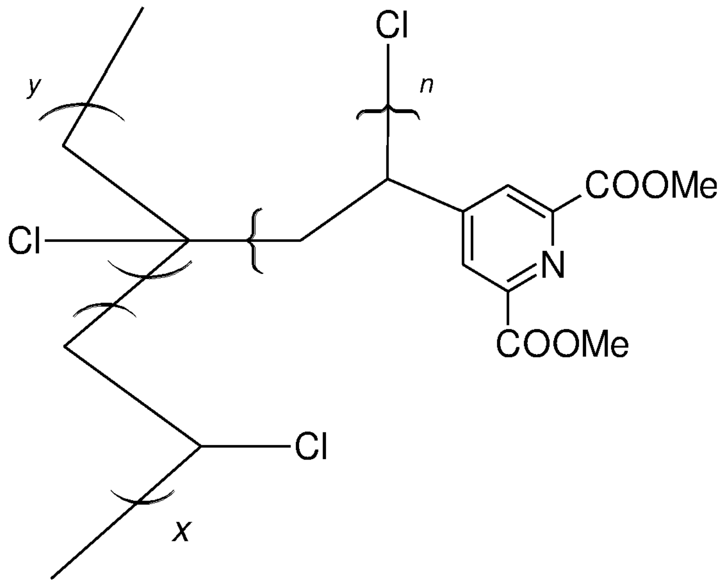

*Formule XXIX*

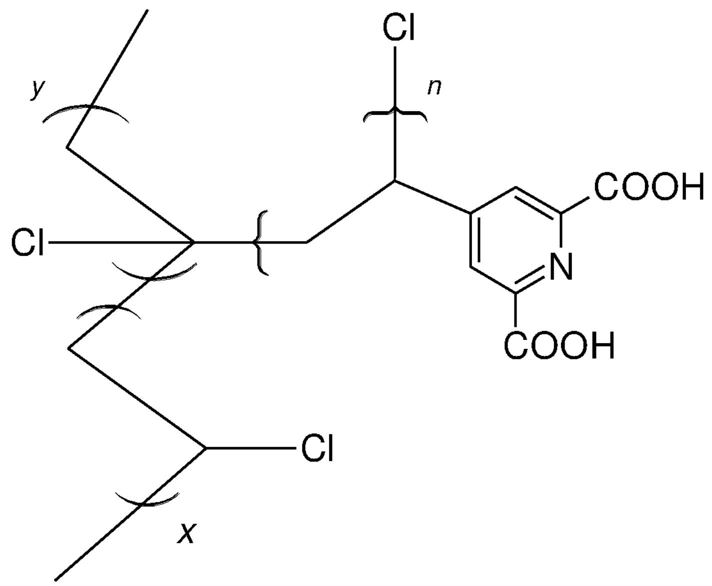

Formule XXX

**11.** Procédé de préparation d'un monomère ou d'un polymère greffé notamment de façon covalente sur un support selon les revendications 1 à 10, comprenant les étapes de préparation suivantes :

a. une éventuelle étape de prétraitement du support par la mise en contact dudit support avec un réactif de prétraitement et/ou un prétraitement physique, pour obtenir un support éventuellement prétraité,
b. une éventuelle étape de pré-greffage sur le support éventuellement prétraité par la mise en contact dudit support éventuellement prétraité avec un amorceur de polymérisation, pour obtenir un support éventuellement prétraité et éventuellement pré-greffé,
c. une étape de polymérisation radicalaire commençant par l'amorçage du support éventuellement prétraité et éventuellement pré-greffé puis continuant par la mise en contact du support éventuellement prétraité et éventuellement pré-greffé avec

◦ d'au moins un monomère dérivé de la 4-vinylpyridine dans lequel les carbones en positions 2 et 6 peuvent être substitués par l'un des substituants du groupe suivant : hydrogène, radical alkyl de 1 à 20 carbones,

radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,

◦ et éventuellement d'au moins un co-monomère,

avec ou sans réticulation
pour obtenir un monomère ou un polymère greffé sur le support,
de préférence une polymérisation de type NMP, RAFT, ATRP ou une polymérisation radicalaire classique.

d. une éventuelle étape de modification par la mise en contact du monomère ou du polymère greffé sur le support avec un réactif pour modifier l'un au moins des susdits substituants, pour obtenir un monomère ou un polymère greffé sur le support et éventuellement modifié,
e. une éventuelle étape de complexation par la mise en contact du monomère ou du polymère greffé sur le support et éventuellement modifié avec un cation métallique pour obtenir un monomère ou un polymère greffé sur le support, éventuellement modifié et éventuellement complexé.

**12.** Procédé de préparation d'un monomère ou d'un polymère greffé sur un support selon la revendication 11,

- ledit monomère ou polymère greffé sur un support étant de Formule I, ledit procédé comportant :

a. une éventuelle étape de prétraitement du support par la mise en contact dudit support et d'un réactif de prétraitement et/ou par l'action d'un prétraitement physique sur ledit support, pour obtenir un support éventuellement prétraité de Formule XXXI,

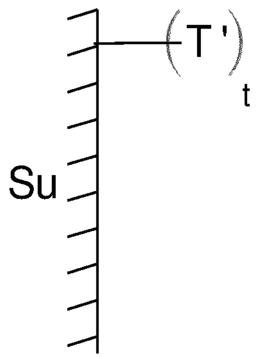

*Formule XXXI*

dans laquelle

• T' est un composé issu du prétraitement du support Su, contenant des fragments soit du support, soit du réactif de prétraitement, soit des deux.
• t est un nombre entier valant 0 ou 1,

b. une éventuelle étape de pré-greffage sur le support éventuellement prétraité de Formule XXXI par la mise en contact du support avec un amorceur de polymérisation, pour obtenir un support éventuellement prétraité et éventuellement pré-greffé de Formule XXXII

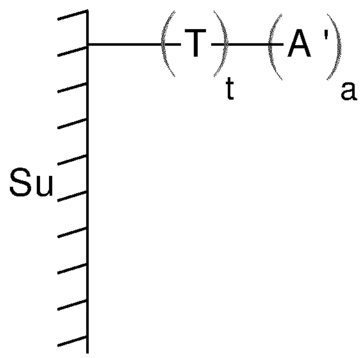

*Formule XXXII*

dans laquelle

- A’ est un composé issu de l’étape de pré-greffage sur le support, contenant des fragments de l’amorceur de polymérisation
- a est un nombre entier valant 0 ou 1,

c. une étape de polymérisation radicalaire commençant par l’amorçage du support éventuellement prétraité et éventuellement pré-greffé de Formule XXXII suivi de la mise en contact du support éventuellement prétraité et éventuellement pré-greffé avec le dérivé de la 4-vinylpyridine de Formule XXXIII

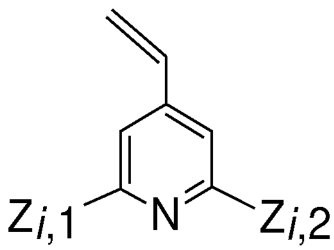

*Formule XXXIII*

dans laquelle :

- $Z_{i,1}$ et $Z_{i,2}$ sont des substituants choisis parmi le groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l’hétéroatome est soit de l’azote, soit de l’oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
ladite étape de polymérisation étant effectué :

  - avec éventuellement au moins un co-monomère,
  - avec ou sans réticulation,

  pour obtenir un monomère ou un polymère greffé sur un support de Formule XXXIV

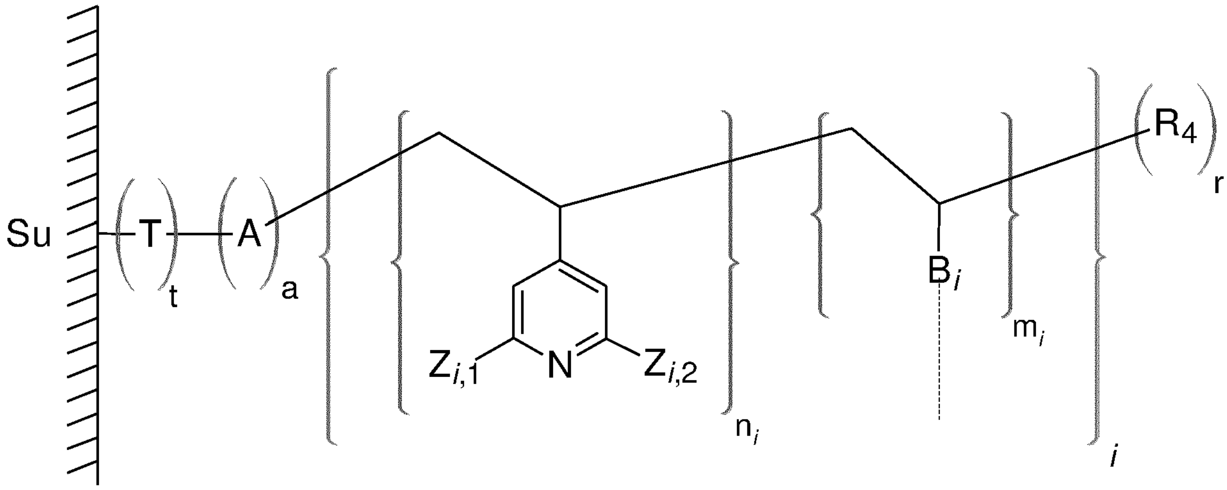

*Formule XXXIV*

d. une étape de modification, lorsque l'un au moins des $Z_{i,1}$ est différent de $R_{i,1}$ ou lorsque l'un au moins des $Z_{i,2}$ est différent de $R_{i,2}$, dudit monomère ou dudit polymère de Formule XXXIV avec un réactif pour modifier l'un au moins des susdits substituants $Z_{i,1}$ et $Z_{i,2}$, ledit réactif contenant un anion hydroxyde, carbonate ou phosphate, pour obtenir le monomère ou le polymère greffé sur un support de Formule XXXV

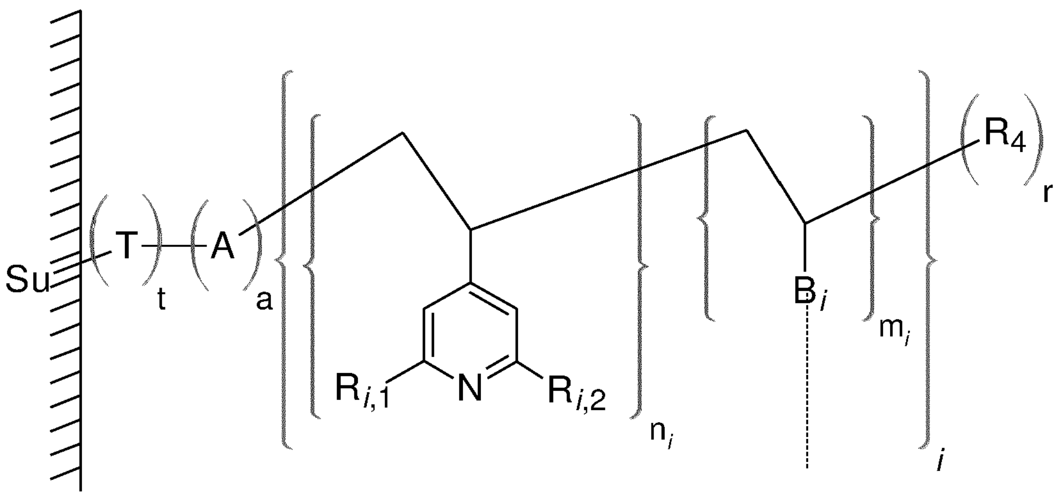

*Formule XXXV*

e. une éventuelle étape de complexation dudit monomère ou dudit polymère greffé sur un support de Formule XXXV avec au moins un cation métallique pour obtenir le monomère ou le polymère greffé sur un support de Formule I ;

- ou ledit monomère ou polymère étant de Formule II avec t=1 et a=1, dans laquelle les définitions de $R_{i,1}$ et $R_{i,2}$ sont telles que décrite dans la revendication 2, ledit procédé comprenant :

a. une étape de prétraitement du support par la mise en contact du support et d'un réactif de prétraitement et/ou par l'action d'un prétraitement physique sur ledit support, pour obtenir un support prétraité de Formule XXXVIII,

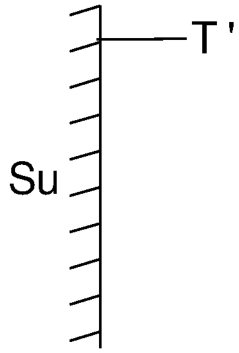

*Formule XXXVIII*

dans laquelle,

- les définitions de Su et T' sont telles que décrite ci-dessus,

b. une étape de pré-greffage dudit support prétraité de Formule XXXVIII par la mise en contact avec un amorceur de polymérisation, pour obtenir un support prétraité et pré-greffé de Formule XLII

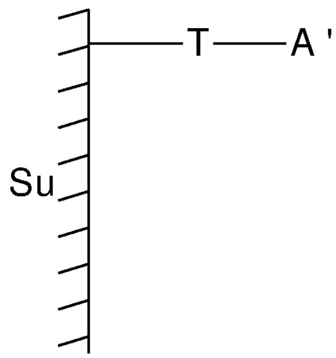

*Formule XLII*

dans laquelle

- les définitions de T et A' sont telles que décrites ci-dessus,

c. une étape de polymérisation radicalaire commençant par l'amorçage du support prétraité et pré-greffé de Formule XLII suivi de la mise en contact du support prétraité et pré-greffé avec le dérivé de la 4-vinylpyridine de Formule XXXIII et avec éventuellement au moins un co-monomère pour obtenir un monomère ou un polymère greffé sur un support de Formule XLIII

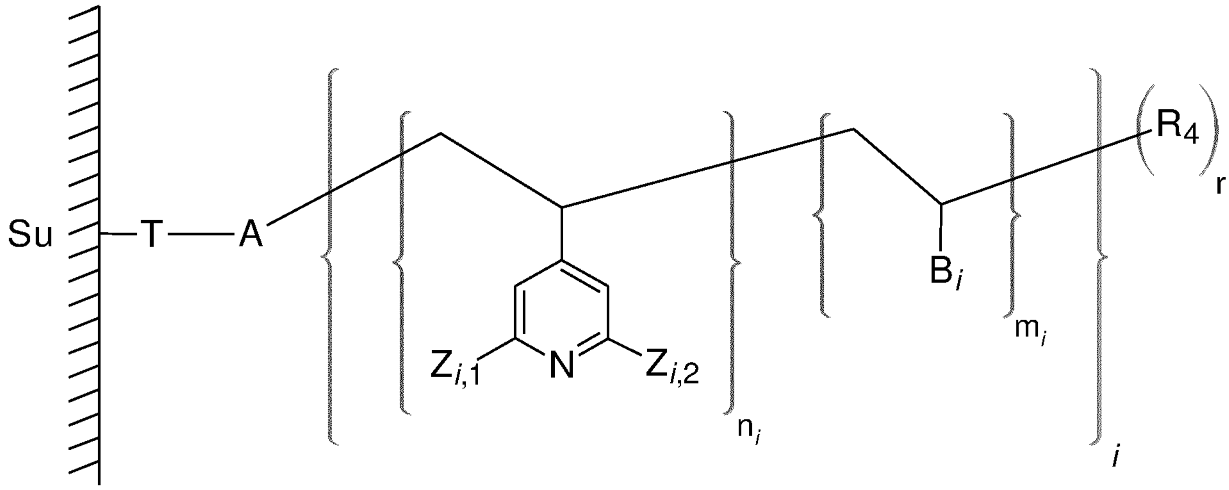

*Formule XLIII*

dans laquelle :

- les définitions de A, $R_4$, $B_i$, $n_i$, $m_i$, r et *i* sont telles que décrites dans la Formule II,
- les définitions de $Z_{i,1}$ et $Z_{i,2}$ sont telles que décrites ci-dessus,

d. une étape de modification, lorsque l'un au moins des $Z_{i,1}$ est différent de $R_{i,1}$ ou lorsque l'un au moins des $Z_{i,2}$ est différent de $R_{i,2}$, dudit monomère ou dudit polymère greffé sur un support de Formule XLIII avec un réactif pour modifier l'un au moins des $Z_{i,1}$ ou des $Z_{i,2}$, ledit réactif contenant un anion hydroxyde, carbonate ou phosphate, pour obtenir le monomère ou le polymère greffé sur un support de Formule XLIV

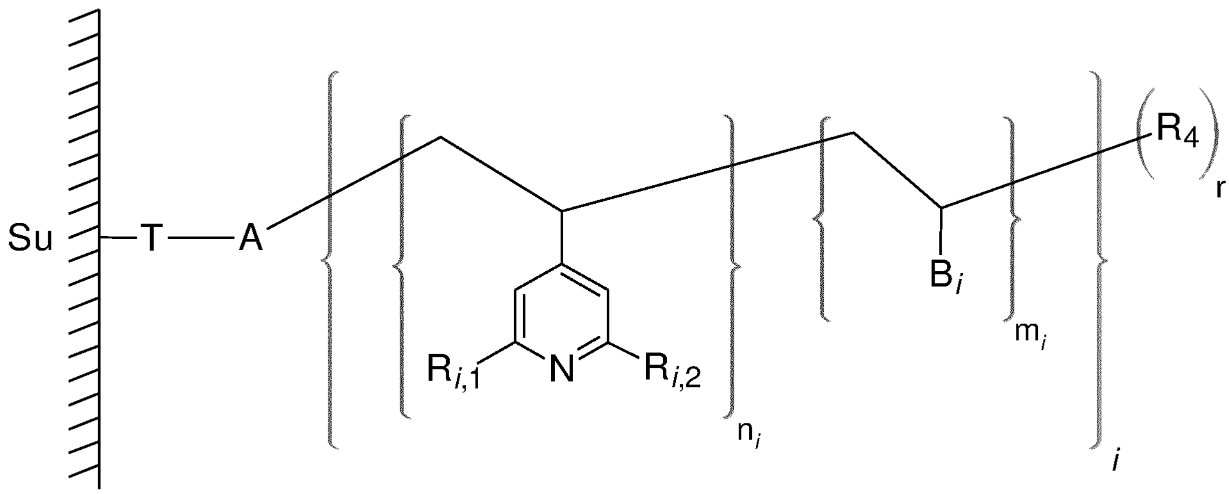

*Formule XLIV*

e. une éventuelle étape de complexation dudit monomère ou dudit polymère greffé sur un support de Formule XLIV avec au moins un cation métallique pour obtenir le monomère ou le polymère greffé sur un support de Formule II, dans laquelle t=1 et a=1 ;

- ou ledit monomère ou ledit polymère greffé sur un support étant de Formule II avec t=0 et a=0, dans laquelle les définitions de $R_{i,1}$ et $R_{i,2}$ sont telles que décrites dans la revendication 2, ledit procédé ne comprenant pas d'étape de prétraitement ni étape d'amorçage et comprenant

a. une étape de polymérisation radicalaire commençant par l'amorçage du support et suivi par la mise en contact du support, avec le dérivé de la 4-vinylpyridine de Formule XXXIII, et avec éventuellement au moins un co-monomère, avec ou sans réticulation, pour obtenir un monomère ou un polymère greffé sur un support de Formule XLV

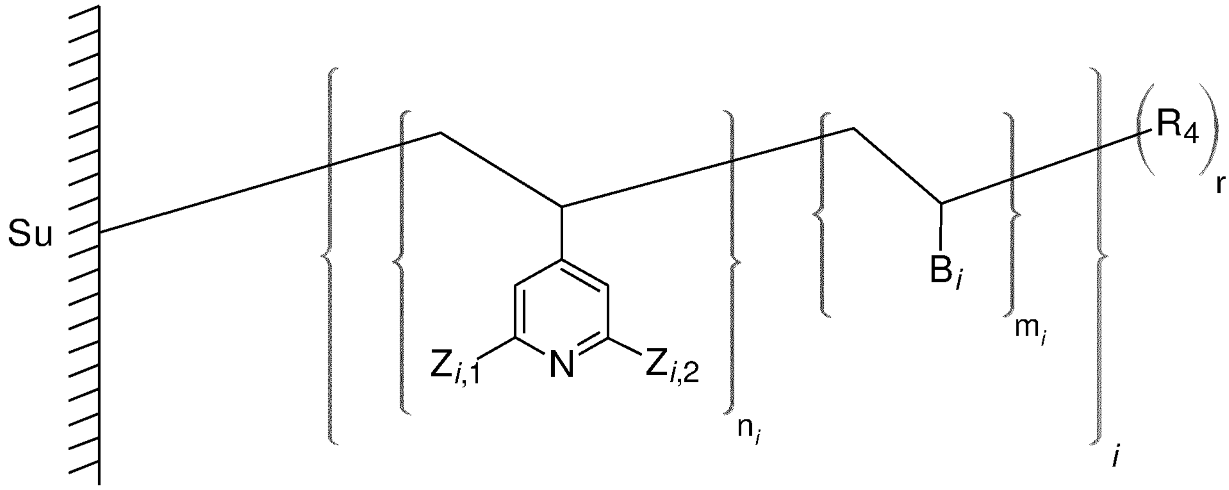

*Formule XLV*

dans laquelle :

- les définitions de Su, $R_4$, $B_i$, $n_i$, $m_i$, r et *i* sont telles que dans la Formule II,
- les définitions de $Z_{i,1}$ et $Z_{i,2}$ sont telles que dans la Formule XXXIII

b. une étape de modification, lorsque l'un au moins des $Z_{i,1}$ est différent de $R_{i,1}$ ou lorsque l'un au moins des $Z_{i,2}$ est différent de $R_{i,2}$, dudit monomère ou dudit polymère greffé sur un support de Formule XLV avec un réactif pour modifier l'un au moins des $Z_{i,1}$ ou des $Z_{i,2}$, ledit réactif contenant un anion hydroxyde, carbonate ou phosphate, pour obtenir le monomère ou le polymère greffé sur un support de Formule XLVI,

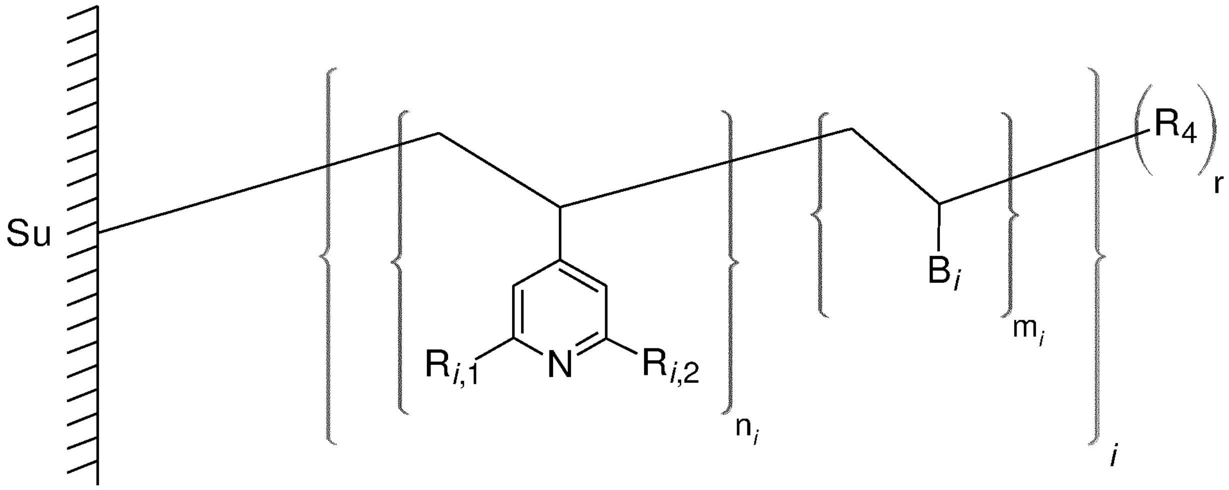

*Formule XLVI*

c. une éventuelle étape de complexation dudit monomère ou dudit polymère greffé sur un support de Formule XLVI avec au moins un cation métallique pour obtenir le monomère ou le polymère greffé sur un support de Formule II avec t=0 et a=0 ;

- ou ledit monomère ou ledit polymère étant de Formule IV avec t=1 et a=1, dans laquelle les définitions de $R_1$ et $R_2$ sont telles que décrites dans la revendication 3,
ledit procédé comprenant :

a. une étape de prétraitement du support par la mise en contact du support et d'un réactif de prétraitement et/ou par l'action d'un prétraitement physique sur ledit support, pour obtenir un support prétraité de Formule XXXVIII,
b. une étape de pré-greffage du support prétraité de Formule XXXVIII par la mise en contact avec un

amorceur de polymérisation, pour obtenir un support prétraité et pré-greffé de Formule XLII
c. une étape de polymérisation radicalaire, commençant par l'amorçage du support prétraité et pré-greffé de Formule XLII, suivi par la mise en contact du support prétraité et pré-greffé avec le dérivé de la 4-vinylpyridine de Formule XLIX,

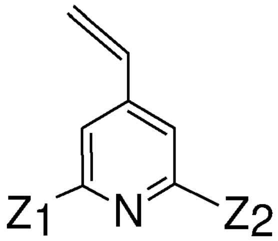

*Formule XLIX*

dans laquelle :

- $Z_1$ et $Z_2$ sont des substituants choisis parmi le groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
pour obtenir un monomère ou un polymère greffé sur un support de Formule L

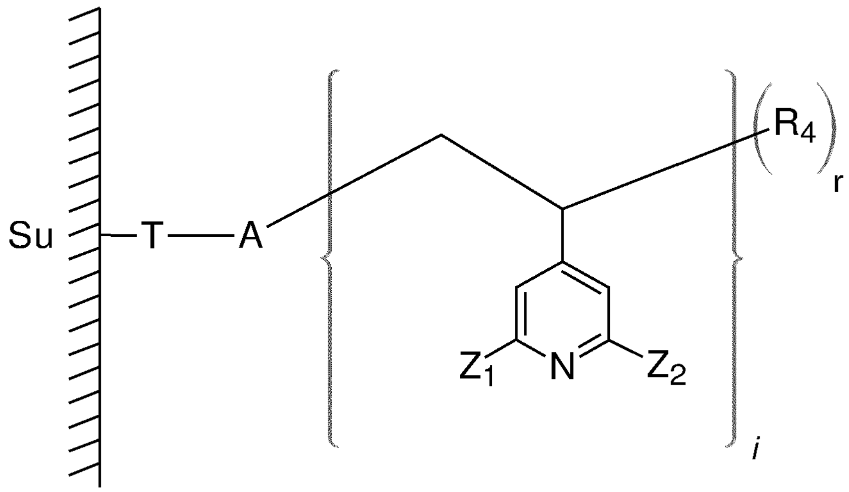

*Formule L*

dans laquelle :

- les définitions de T, A, $R_4$, r et *i* sont telles que décrites dans la revendication 2,

d. une étape de modification, lorsque $Z_1$ est différent de $R_1$ ou lorsque $Z_2$ est différent de $R_2$, dudit monomère ou dudit polymère greffé sur un support de Formule L avec un réactif pour modifier l'un au moins des susdits substituants $Z_1$ et $Z_2$, et contenant un anion hydroxyde, carbonate ou phosphate, pour obtenir le monomère ou le polymère greffé sur un support de Formule LI

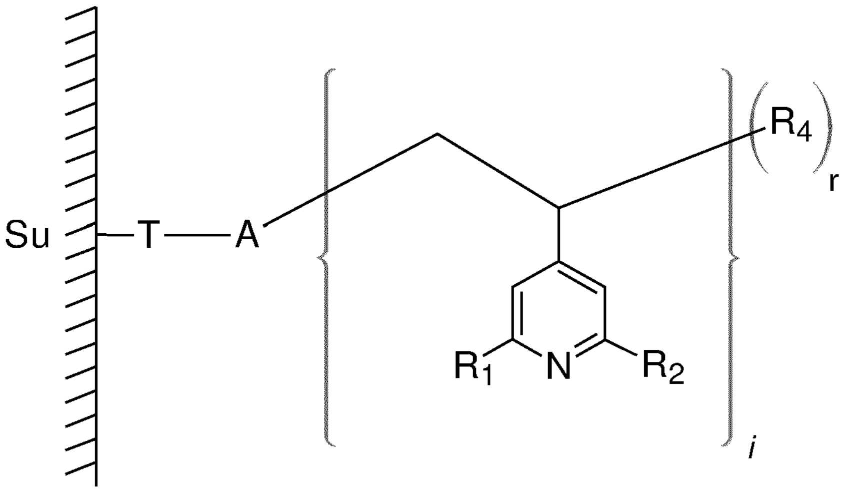

*Formule LI*

e. une éventuelle étape de complexation dudit monomère ou dudit polymère greffé sur un support de Formule LI avec au moins un cation métallique pour obtenir le monomère ou le polymère greffé sur un support de Formule IV dans lequel t=1 et a=1 ;

- ou ledit monomère ou ledit polymère greffé sur un support étant de Formule XXIX et ledit support étant du PET dans lequel ledit procédé comprenant :

a. une étape de prétraitement d'un support en PET par mise en contact dudit support avec de la polyéthylèneimine pour obtenir un support prétraité de Formule LXV

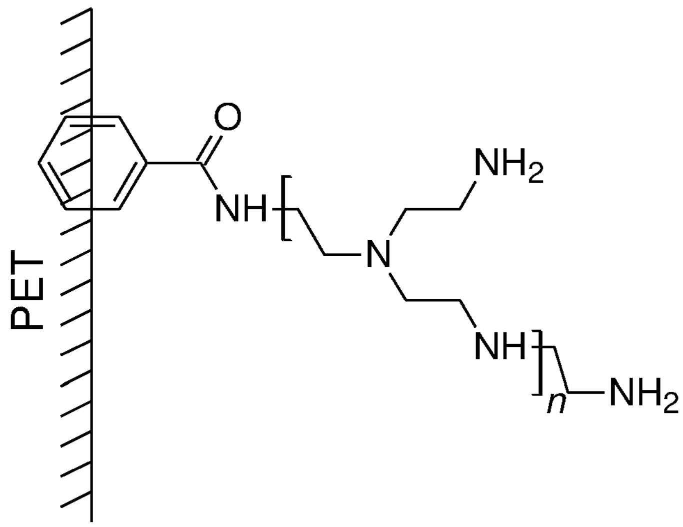

*Formule LXV*

dans laquelle T' représente un composé de Formule LXVI
T' :

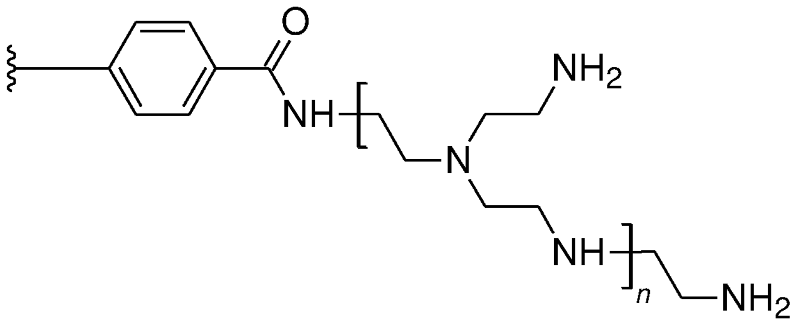

*Formule LXVI*

b. une étape de pré-greffage du support prétraité de Formule LXV par mise en contact dudit support avec du chlorure de 4-(chlorométhyl)benzoyle, pour obtenir un support prétraité et pré-greffé de Formule LXVII

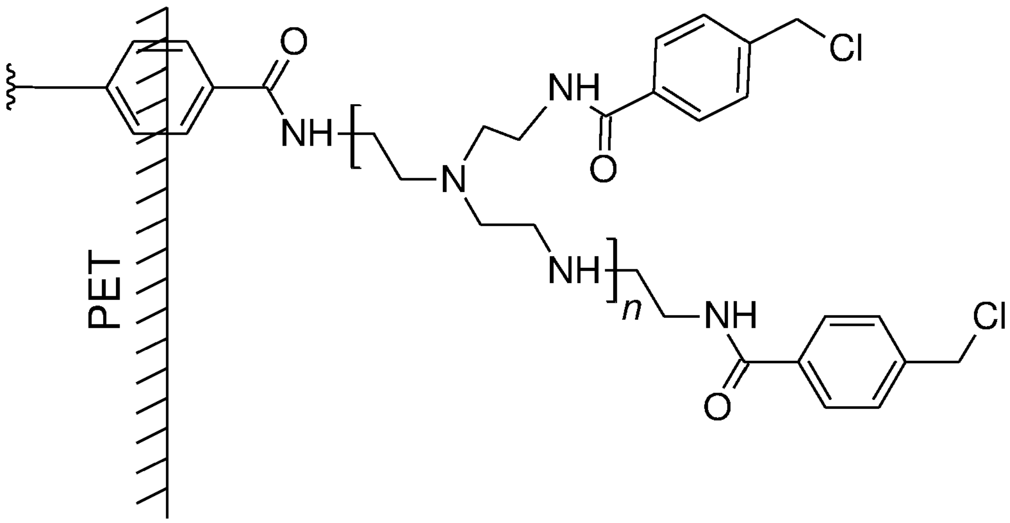

*Formule LXVII*

dans laquelle T représente un composé de Formule XXII et X' un composé de Formule LXVIII
X ' :

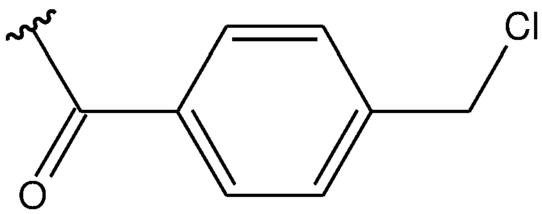

*Formule LXVIII*

c. une étape de polymérisation radicalaire sur le support prétraité et pré-greffé de Formule LXVII du dérivé de la 4-vinylpyridine de Formule LXIX,

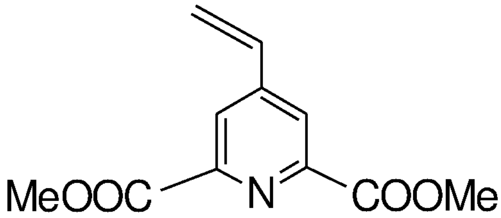

*Formule LXIX*

par mise en réaction dudit support avec ledit dérivé et avec du $CuCl_2$, du TPMA et du cuivre métallique, pour obtenir un monomère ou un polymère greffé sur un support de Formule XXV dans laquelle X représente un composé de Formule LXX et $R_4$ par un atome de chlore,

X :

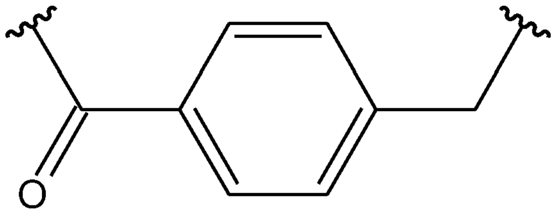

*Formule LXX*

d. une étape de modification du monomère ou du polymère greffé sur un support de Formule XXV avec une base pour obtenir un monomère ou un polymère greffé sur un support de Formule XXVI ;

- ou ledit monomère ou ledit polymère greffé sur un support étant de Formule XXVIII, dans lequel :

a. une étape de prétraitement d'un support en silice par mise en contact du support avec un acide pour obtenir un support prétraité de Formule LXXI,

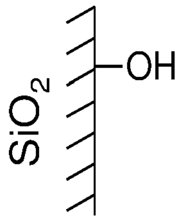

*Formule LXXI*

dans laquelle T' représente -OH

b. une étape de pré-greffage du support prétraité de Formule LXXI par mise en contact dudit support avec du APTES-CMB de Formule XXIII

pour obtenir un support prétraité et pré-greffé de Formule LXXII

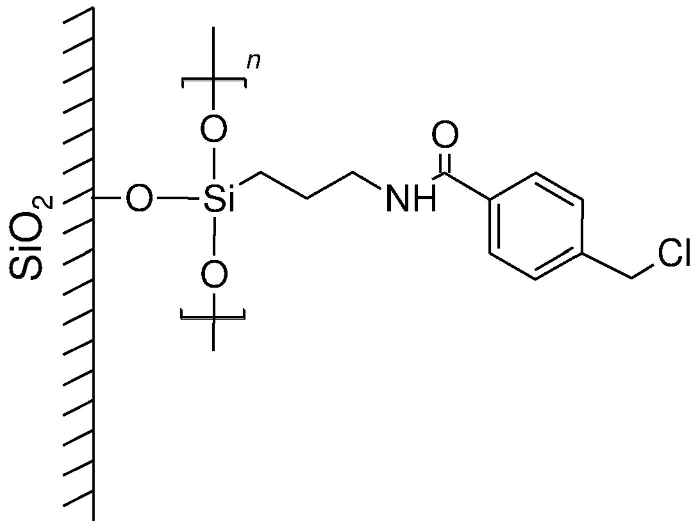

*Formule LXXII*

dans laquelle T représente -O- et X’ représente le composé de Formule LXXIII X’ :

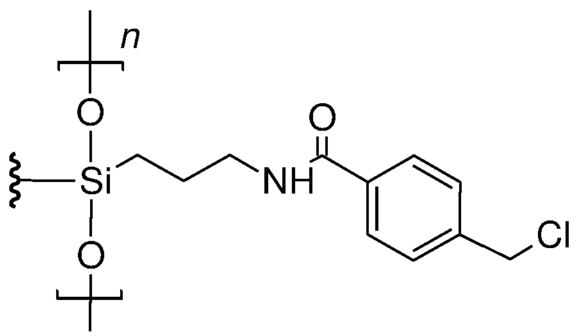

*Formule LXXIII*

c. une étape de polymérisation radicalaire du dérivé de la 4-vinylpyridine de Formule LXIX, sur le support prétraité et pré-greffé de Formule LXXII par mise en réaction dudit support avec ledit dérivé et avec du CuCl2, du TPMA et du cuivre métallique, pour obtenir un monomère ou un polymère greffé sur un support de Formule XXVII dans laquelle X représente le composé de Formule LXXIV et $R_4$ un atome de chlore X :

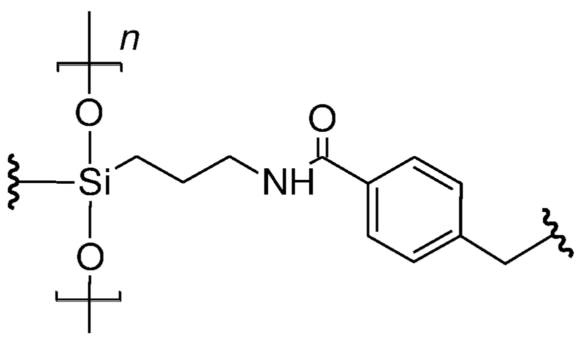

*Formule LXXIV*

d. une étape de modification du monomère ou du polymère greffé sur un support de Formule XXVII avec

une base pour obtenir un monomère ou un polymère greffé sur un support de Formule XXVIII ;

- ou ledit monomère ou polymère greffé est de Formule XXX, dans lequel ledit procédé comportant :

a. une étape de polymérisation du dérivé de la 4-vinylpyridine de Formule LXIX, sur un support comprenant du PVC notamment avec un copolymère, en particulier du PVDC, par mise en réaction dudit support avec ledit dérivé et avec du $CuCl_2$, du TPMA et du cuivre métallique, pour obtenir un monomère ou un polymère greffé sur un support de Formule XXIX, dans laquelle $R_4$ représente un atome de chlore,
b. une étape de modification du monomère ou du polymère greffé sur un support de Formule XXIX avec une base pour obtenir un monomère ou un polymère greffé sur un support de Formule XXX.

**13.** Procédé de préparation d'un polymère greffé sur un support selon les revendications 11 à 12, dans lequel, ladite étape de polymérisation mettant en contact un dérivé de la 4-vinylpyridine de Formule XLIX

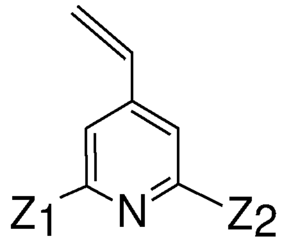

*Formule XLIX*

dans laquelle :

• $Z_1$ et $Z_2$ sont des substituants choisis parmi le groupe suivant : hydrogène, radical alkyl de 1 à 20 carbones, radical alcène de 1 à 20 carbones, radical aryle de 1 à 20 carbones, alcool de 1 à 20 carbones, éther de 1 à 20 carbones, ester de 1 à 20 carbones, amine de 1 à 20 carbones, hétérocycle de 1 à 5 cycles dont l'hétéroatome est soit de l'azote, soit de l'oxygène, soit du soufre, soit du phosphore, amide de 1 à 20 carbones, thiols de 1 à 20 carbones, phosphine de 1 à 20 carbones, lesdits substituants pouvant être cyclisés entre eux et pouvant contenir des atomes de soufre ou de phosphore,
avec un monomère ou un polymère greffé sur un support de Formule LX,

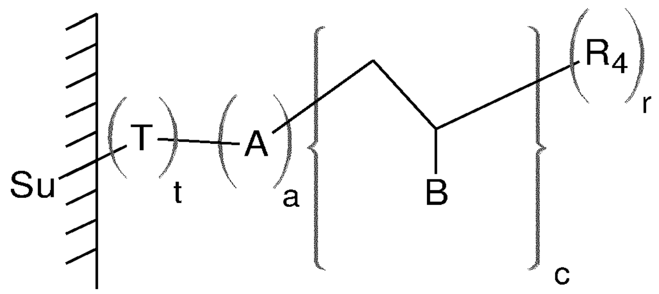

*Formule LX*

dans laquelle

• les définitions de Su, A, T, B, $R_4$, r, a, t et c sont telles que décrites dans les revendications 2 et 5,

pour obtenir un polymère greffé sur un support de Formule LXI

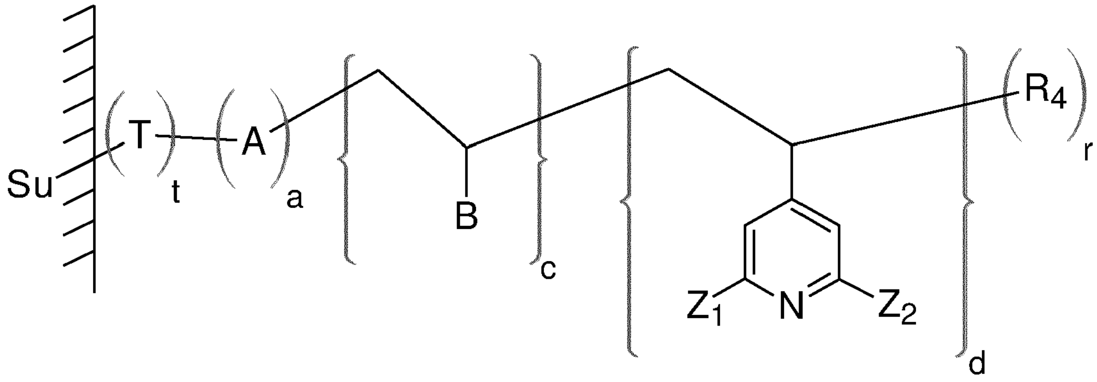

*Formule LXI*

dans laquelle

- la définition de d est telle que décrite dans la revendication 5 ;

en particulier ledit procédé de préparation d'un polymère greffé comportant :

a. une étape de prétraitement du support par la mise en contact dudit support et d'un réactif de prétraitement et/ou par l'action d'un prétraitement physique sur ledit support, pour obtenir un support prétraité de Formule XXXI,
b. une étape de pré-greffage dudit support prétraité de Formule XXXI par la mise en contact avec un amorceur de polymérisation, pour obtenir un support prétraité et pré-greffé de Formule XXXII
c. une étape de polymérisation radicalaire par mise en contact support prétraité et pré-greffé de Formule XXXII avec un co-monomère de Formule LXII pour obtenir ledit monomère ou polymère libre de Formule LX

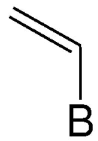

*Formule LXII*

dans laquelle la définition de B est telle que décrite dans la Formule XVIII,

avant l'étape de polymérisation radicalaire par mise en contact d'un monomère dérivé de la 4-vinylpyridine de Formule XXXIII, avec un monomère ou un polymère de Formule LX.

**14.** Utilisation de la composition telle que décrite dans les revendications 1 à 10, choisie dans le groupe comprenant le captage de métaux et leur restitution, le service comme catalyseur homogène ou hétérogène, le marquage de surfaces organiques et/ou inorganiques et le marquage par fluorescence des biomolécules

**15.** Utilisation selon la revendication 14 de ladite composition

comme adsorbant de métaux dans l'eau de mer, en particulier l'adsorption des actinides et des lanthanides, plus particulièrement l'adsorption de l'uranium et encore plus particulièrement l'adsorption sélective de l'uranium par rapport au vanadium ;
ou comme traitement des effluents contaminés par des métaux, en particulier les effluents radioactifs et en particulier les déchets nucléaires issus des centrales nucléaires.

**Patentansprüche**

1. Zusammensetzung, umfassend oder bestehend aus einem insbesondere kovalent auf einen Träger aufgepfropften Monomer oder Polymer, wobei das Monomer oder Polymer einen Polymerisationsgrad n im Bereich von von 1 bis 10.000 aufweist und n Monomereinheiten enthält, wobei die Monomereinheiten:

    • von 4-Vinylpyridin abgeleitete Monomereinheiten sind, wobei die Kohlenstoffe an den Positionen 2 und 6 durch einen der Substituenten aus der folgenden Gruppe substituiert sein können: Wasserstoff, Alkylrest mit 1 bis 20 Kohlenstoffen, Alkenrest mit 1 bis 20 Kohlenstoffen, Arylrest mit 1 bis 20 Kohlenstoffen, Carbonsäure mit 1 bis 20 Kohlenstoffen, Alkohol mit 1 bis 20 Kohlenstoffen, Ether mit 1 bis 20 Kohlenstoffen, Ester mit 1 bis 20 Kohlenstoffen, Amin mit 1 bis 20 Kohlenstoffen, Heterocyclus mit 1 bis 5 Ringen, dessen Heteroatom entweder Stickstoff, Sauerstoff, Schwefel oder Phosphor ist, Amid mit 1 bis 20 Kohlenstoffen, Thiole mit 1 bis 20 Kohlenstoffen, Phosphin mit 1 bis 20 Kohlenstoffen, wobei die Substituenten untereinander cyclisiert sein können und Schwefel- oder Phosphoratome enthalten können,
    • und optional von einem Co-Monomer abgeleitete Monomereinheiten sind,

    mit der Maßgabe, dass die beiden Substituenten nicht beide Wasserstoff sein können,
    und mit der Maßgabe, dass die von 4-Vinylpyridin abgeleiteten Monomereinheiten mindestens 20 % des Polymerisationsgrades n ausmachen,
    wobei das Monomer oder Polymer gegebenenfalls mit einem Metall komplexiert ist,
    wobei das Monomer oder Polymer linear oder vernetzt ist,
    wobei das Monomer oder Polymer irreversibel an einen Träger gebunden ist.

2. Zusammensetzung nach Anspruch 1, umfassend oder bestehend aus einem auf einen Träger aufgepfropften Monomer oder Polymer,

    - wobei das auf einen Träger aufgepfropfte Monomer oder Polymer die Formel I aufweist,

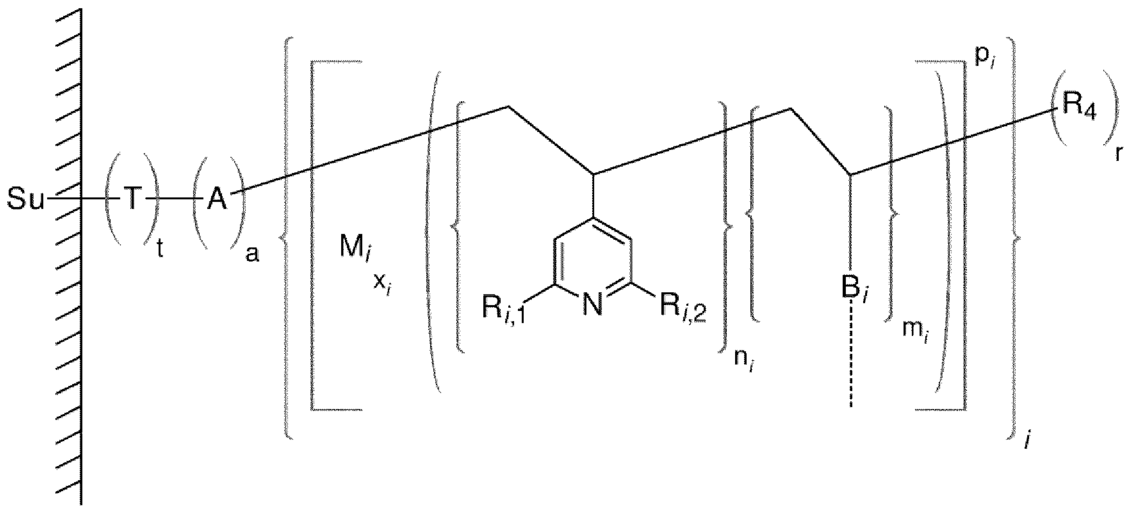

*Formel I*

    wobei:

    • Su der Träger ist, auf den das Monomer oder das Polymer aufgepfropft ist,
    • A eine Verbindung ist, die aus einem Polymerisationsinitiator stammt,
    • T eine Verbindung ist, die die Verbindung zwischen dem Träger und einer etwaigen aus einem Polymerisationsinitiator stammenden Verbindung oder zwischen dem Träger und der ersten Monomereinheit herstellt,
    • $R_4$ eine Verbindung ist, die die Ausbreitung der Polymerisation ermöglicht, unabhängig davon, ob sie aus dem Polymerisationsinitiator stammt oder nicht, oder die den Abbruch der Polymerisation ermöglicht, oder ein Transfermittel,
    • t, a und r gleich oder verschieden sind und den Wert 0 oder 1 aufweisen,

• *i* eine streng positive, ganze Indexzahl von 1 bis n ist, die ihrerseits im Bereich von 1 bis 10.000 liegt,

und wobei für jedes *i*:

◦ $R_{i,1}$ und $R_{i,2}$ Substituenten sind, die aus der folgenden Gruppe ausgewählt sind: Wasserstoff, Alkylrest mit 1 bis 20 Kohlenstoffen, Alkenrest mit 1 bis 20 Kohlenstoffen, Arylrest mit 1 bis 20 Kohlenstoffen, Carbonsäure mit 1 bis 20 Kohlenstoffen, Alkohol mit 1 bis 20 Kohlenstoffen, Ether mit 1 bis 20 Kohlenstoffen, Ester mit 1 bis 20 Kohlenstoffen, Amin mit 1 bis 20 Kohlenstoffen, Heterocyclus mit 1 bis 5 Ringen, dessen Heteroatom entweder Stickstoff, Sauerstoff, Schwefel oder Phosphor ist, Amid mit 1 bis 20 Kohlenstoffen, Thiole mit 1 bis 20 Kohlenstoffen, Phosphin mit 1 bis 20 Kohlenstoffen, wobei die Substituenten untereinander cyclisiert sein können und Schwefel- oder Phosphoratome enthalten können, mit der Maßgabe, dass, wenn $R_{i,1}$ Wasserstoff ist, dann $R_{i,2}$ von Wasserstoff verschieden ist, und umgekehrt,
◦ $B_i$ eine von einem Co-Monomer abgeleitete Monomereinheit ist, die eine Vernetzungsbrücke bildet oder nicht,
◦ $M_i$ ein Metallkation ist,
◦ $n_i$ et $m_i$ ganze Zahlen sind, die gleich 0 oder 1 sind,
◦

$$n_i + m_i = 1,$$

◦ $x_i$ eine Zahl im Bereich von 0 bis 6 ist,
◦ $p_i$ die elektrische Ladung des Metallkomplexes im Bereich von -6 bis +6 ist;
wobei das Polymer linear ist, wenn es keine $B_i$ gibt, die die Vernetzungsbrücke bildet,
wobei das Polymer vernetzt ist, wenn mindestens eine $B_i$ vorhanden ist, die eine Vernetzungsbrücke zwischen zwei linearen Polymeren bildet,

- oder wobei das auf einen Träger aufgepfropfte Monomer oder Polymer die Formel II aufweist,

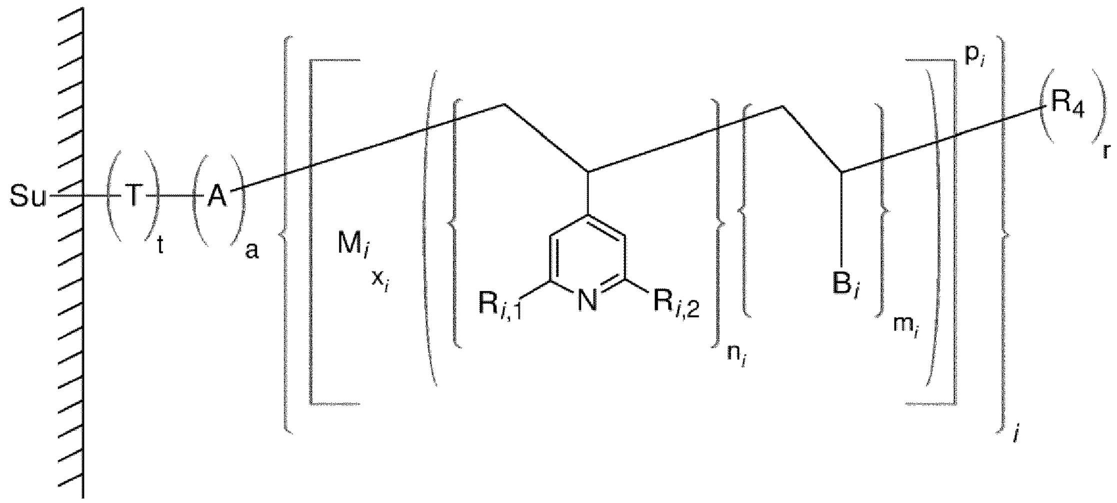

*Formel II*

wobei:

• die Definitionen von Su, $R_{i,1}$, $R_{i,2}$, T, A, $n_i$, $m_i$, $R_4$, $M_i$, t, a, r, $x_i$, $p_i$ und *i* wie oben beschrieben sind,
• $B_i$ eine von einem Co-Monomer abgeleitete Monomereinheit ist, die keine Vernetzungsbrücke bildet,

- oder wobei das auf einen Träger aufgepfropfte Monomer oder Polymer die Formel III aufweist,

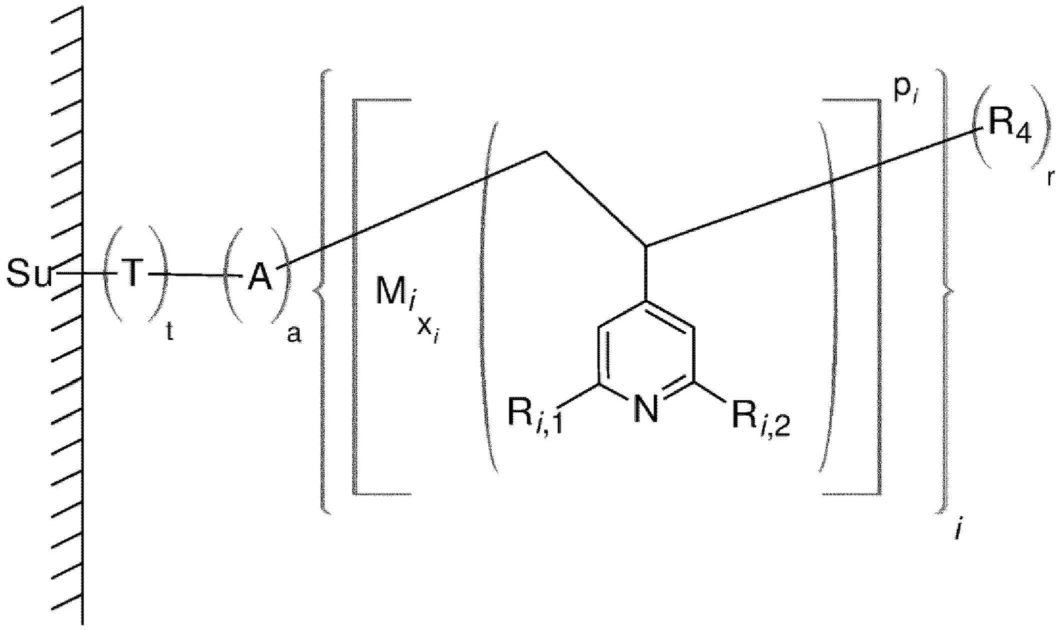

Formel III

wobei:

- die Definitionen von Su, $R_{i,1}$, $R_{i,2}$, T, A, $R_4$, $M_i$, t, a, r, $x_i$, $p_i$ und *i* wie oben beschrieben sind.

**3.** Zusammensetzung nach den Ansprüchen 1 bis 2, umfassend oder bestehend aus

- einem auf einen Träger aufgepfropften Monomer oder Homopolymer, wobei das auf einen Träger aufgepfropfte Monomer oder Polymer die Formel IV oder die Formel XII aufweist,

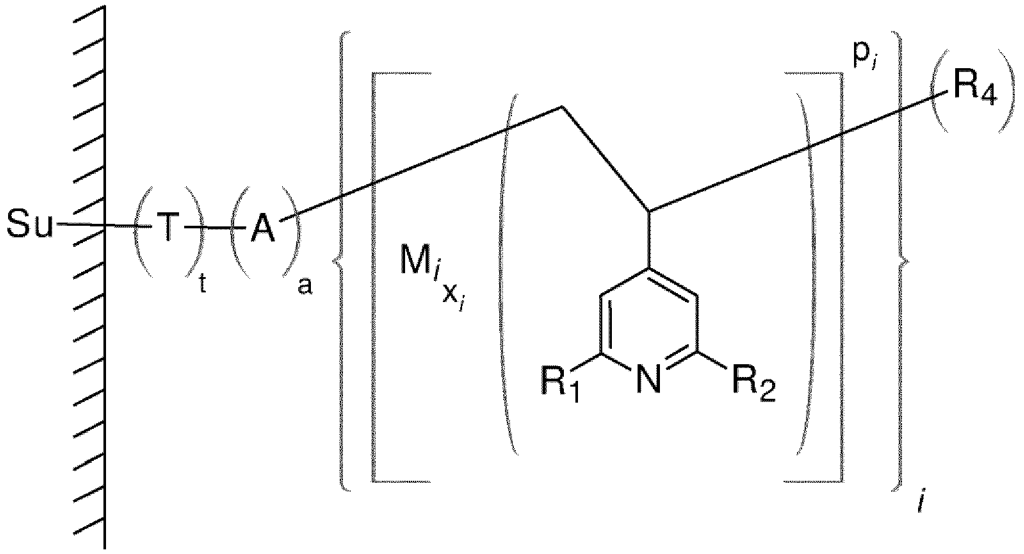

Formel IV

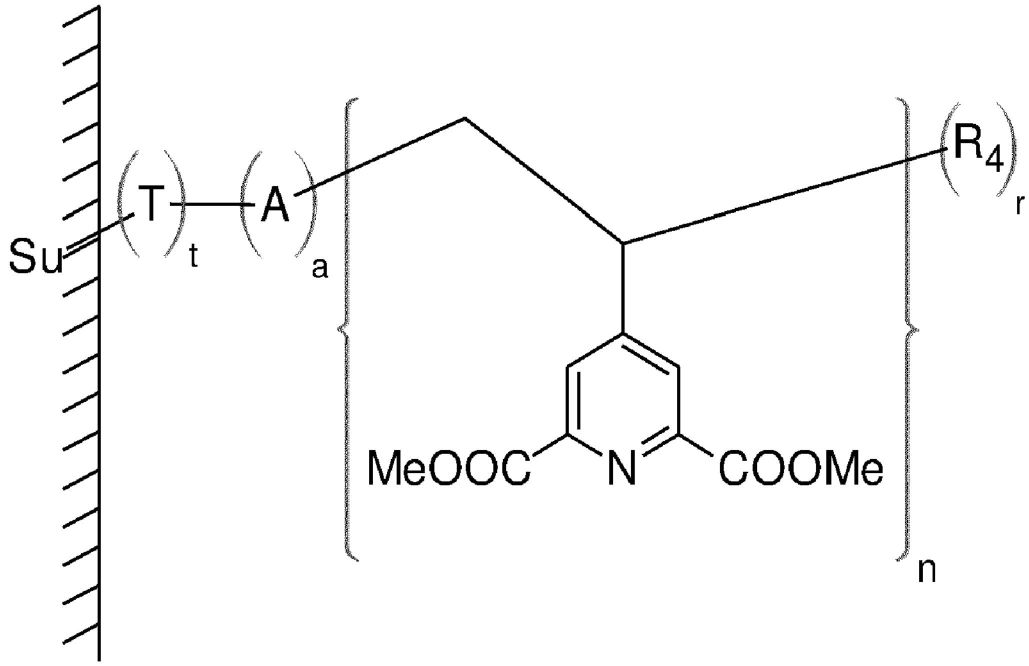

*Formel XII*

wobei:

- die Definitionen von Su, T, A, $R_4$, $M_i$, t, a, r, $x_i$, $p_i$, n und *i* wie in Anspruch 2 beschrieben sind,
- $R_1$ und $R_2$ Substituenten sind, die aus der folgenden Gruppe ausgewählt sind: Wasserstoff, Alkylrest mit 1 bis 20 Kohlenstoffen, Alkenrest mit 1 bis 20 Kohlenstoffen, Arylrest mit 1 bis 20 Kohlenstoffen, Carbonsäure mit 1 bis 20 Kohlenstoffen, Alkohol mit 1 bis 20 Kohlenstoffen, Ether mit 1 bis 20 Kohlenstoffen, Ester mit 1 bis 20 Kohlenstoffen, Amin mit 1 bis 20 Kohlenstoffen, Heterocyclus mit 1 bis 5 Ringen, dessen Heteroatom entweder Stickstoff, Sauerstoff, Schwefel oder Phosphor ist, Amid mit 1 bis 20 Kohlenstoffen, Thiole mit 1 bis 20 Kohlenstoffen, Phosphin mit 1 bis 20 Kohlenstoffen, wobei die Substituenten untereinander cyclisiert sein können und Schwefel- oder Phosphoratome enthalten können,

  mit der Maßgabe, dass, wenn $R_1$ Wasserstoff ist, dann $R_2$ von Wasserstoff verschieden ist, und umgekehrt,

- oder einem auf einen Träger aufgepfropften Monomer oder Homopolymer, wobei das auf einen Träger aufgepfropfte Monomer oder Polymer die Formel V oder die Formel VI aufweist,

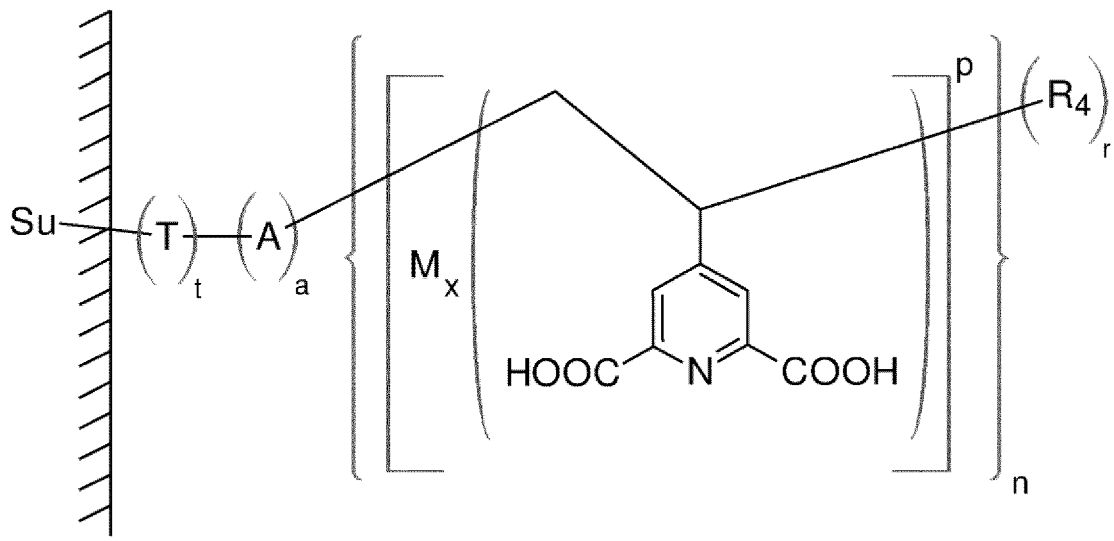

Formel V

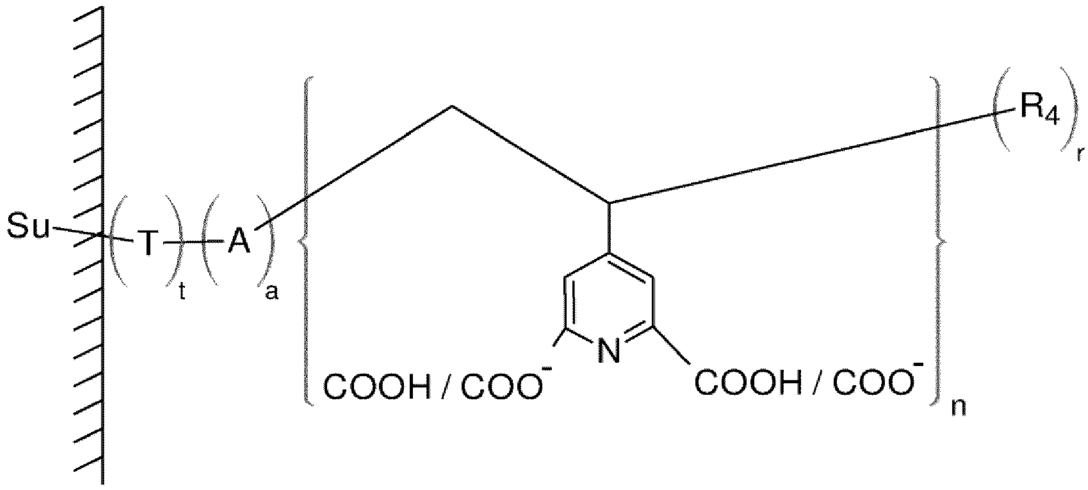

Formel VI

wobei:

- die Definitionen von Su, T, A, $R_4$, t, a, n und r wie in Anspruch 2 beschrieben sind,
- M ein Metallkation ist,
- x eine Zahl im Bereich von 0 bis 6 ist,
- p die elektrische Ladung des Metallkomplexes im Bereich von -6 bis +6 ist,

- oder einem auf einen Träger aufgepfropften, mit Uran komplexiertem Monomer oder Homopolymer, wobei das auf einen Träger aufgepfropfte Monomer oder Polymer die Formel XIII aufweist,

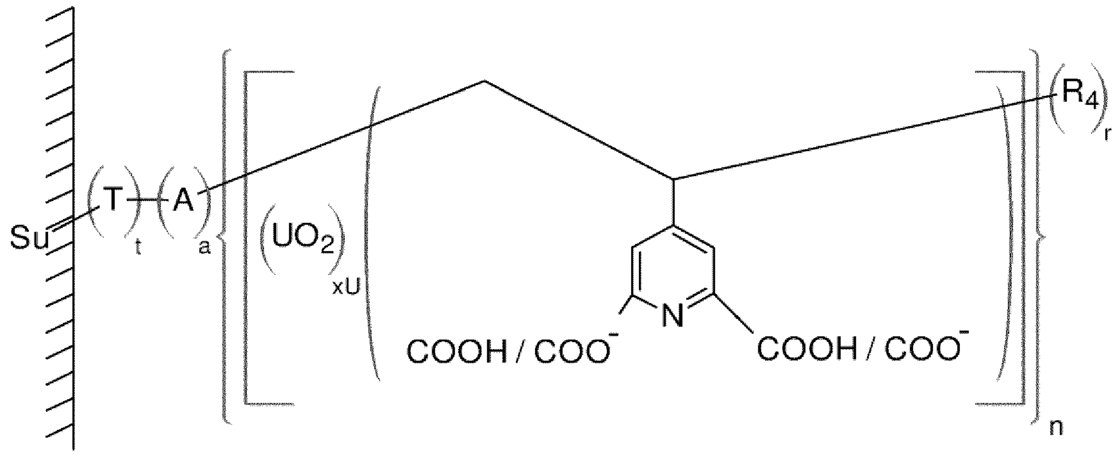

Formel XIII

wobei:

- die Definitionen von Su, T, A, $R_4$, t, a, n und r wie in Anspruch 2 beschrieben sind,
- xU eine Zahl im Bereich von 0 bis 6 ist.

**4.** Zusammensetzung nach Anspruch 1 bis 2, umfassend oder bestehend aus

- einem auf einen Träger aufgepfropften Polymer, wobei das Polymer mindestens eine von einem Co-Monomer abgeleitete Monomereinheit aufweist, insbesondere Monomereinheiten, die aus Styrol oder Acrylsäure stammen;
- oder einem auf einem Träger aufgepfropften Copolymer, wobei der Anteil der von einem Co-Monomer abgeleiteten Monomereinheit von einem Wert streng über 0 % bis zu einem Wert unter 80 % variiert.

**5.** Zusammensetzung nach Anspruch 4, umfassend oder bestehend aus einem auf einen Träger aufgepfropften Zweiblock-Copolymer, wobei das auf einen Träger aufgepfropfte Polymer die Formel XVIII oder die Formel XIX aufweist,

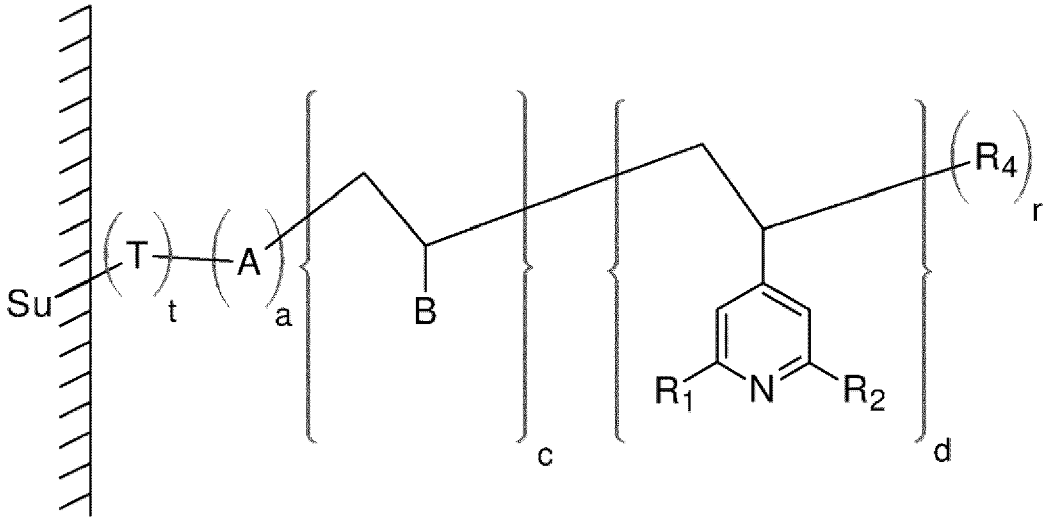

*Formel XVIII*

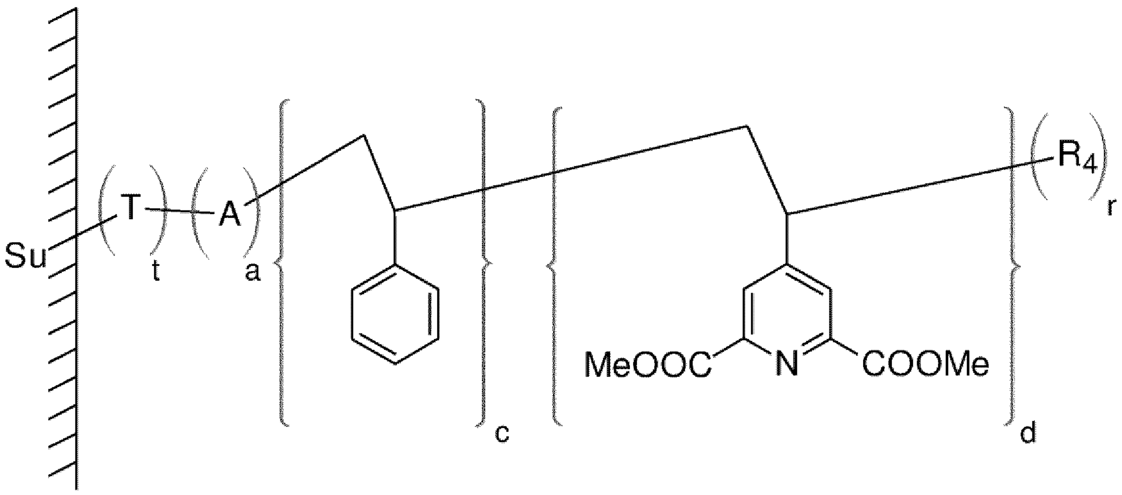

*Formel XIX*

wobei:

- die Definitionen von Su, T, A, $R_4$, t, a und r wie in Anspruch 2 beschrieben sind,
- $R_1$ und $R_2$ Substituenten sind, die aus der folgenden Gruppe ausgewählt sind: Wasserstoff, Alkylrest mit 1 bis 20 Kohlenstoffen, Alkenrest mit 1 bis 20 Kohlenstoffen, Arylrest mit 1 bis 20 Kohlenstoffen, Carbonsäure mit 1 bis 20 Kohlenstoffen, Alkohol mit 1 bis 20 Kohlenstoffen, Ether mit 1 bis 20 Kohlenstoffen, Ester mit 1 bis 20 Kohlenstoffen, Amin mit 1 bis 20 Kohlenstoffen, Heterocyclus mit 1 bis 5 Ringen, dessen Heteroatom entweder Stickstoff, Sauerstoff, Schwefel oder Phosphor ist, Amid mit 1 bis 20 Kohlenstoffen, Thiole mit 1 bis 20 Kohlenstoffen, Phosphin mit 1 bis 20 Kohlenstoffen, wobei die Substituenten untereinander cyclisiert sein können und Schwefel- oder Phosphoratome enthalten können,

mit der Maßgabe, dass, wenn $R_1$ Wasserstoff ist, dann $R_2$ von Wasserstoff verschieden ist, und umgekehrt,

- B eine von einem Co-Monomer abgeleitete Monomereinheit ist,
- d der Polymerisationsgrad des Blocks ist, der aus den von 4-Vinylpyridin abgeleiteten Monomereinheiten besteht, und d eine ganze Zahl ist,
- c der Polymerisationsgrad des Blocks ist, der aus den vom Co-Monomer abgeleiteten Monomereinheiten besteht, und c eine ganze Zahl ist,
-

$$d + c = n.$$

**6.** Zusammensetzung nach den Ansprüchen 1 bis 2, umfassend oder bestehend aus einem vernetzten, auf einen Träger aufgepfropften Copolymer, wobei das auf einen Träger aufgepfropfte Polymer die Formel XX oder die Formel XXI aufweist,

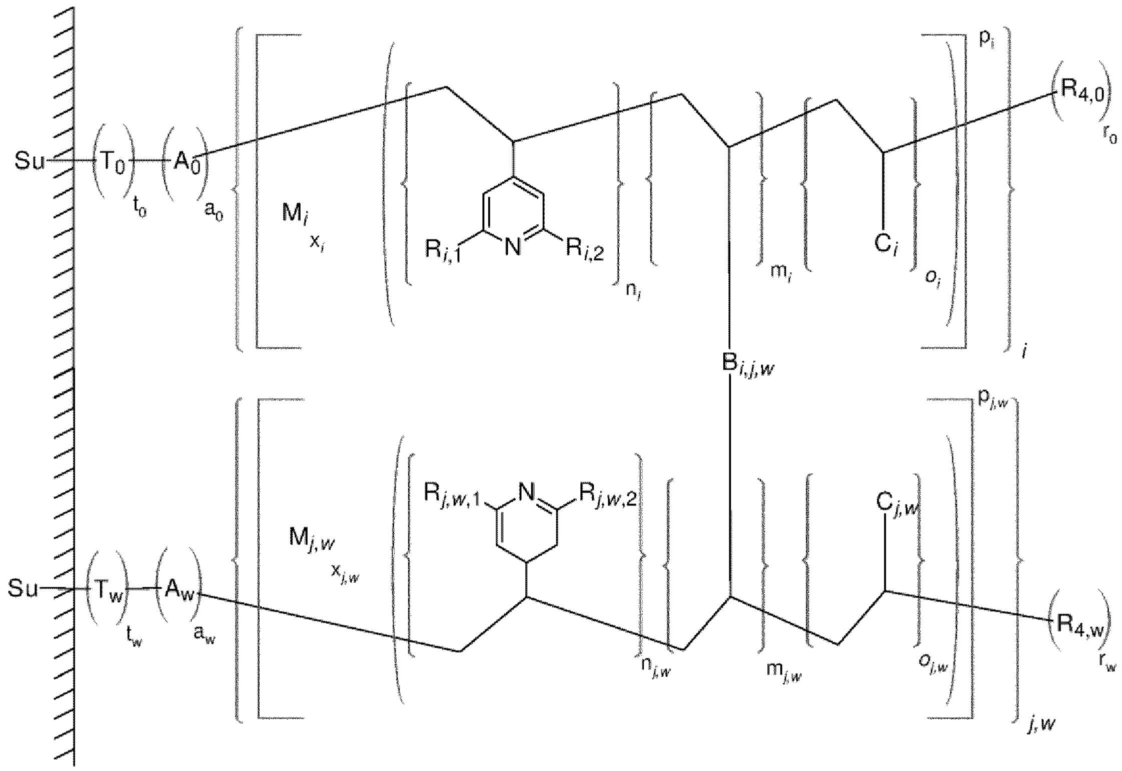

*Formel XX*

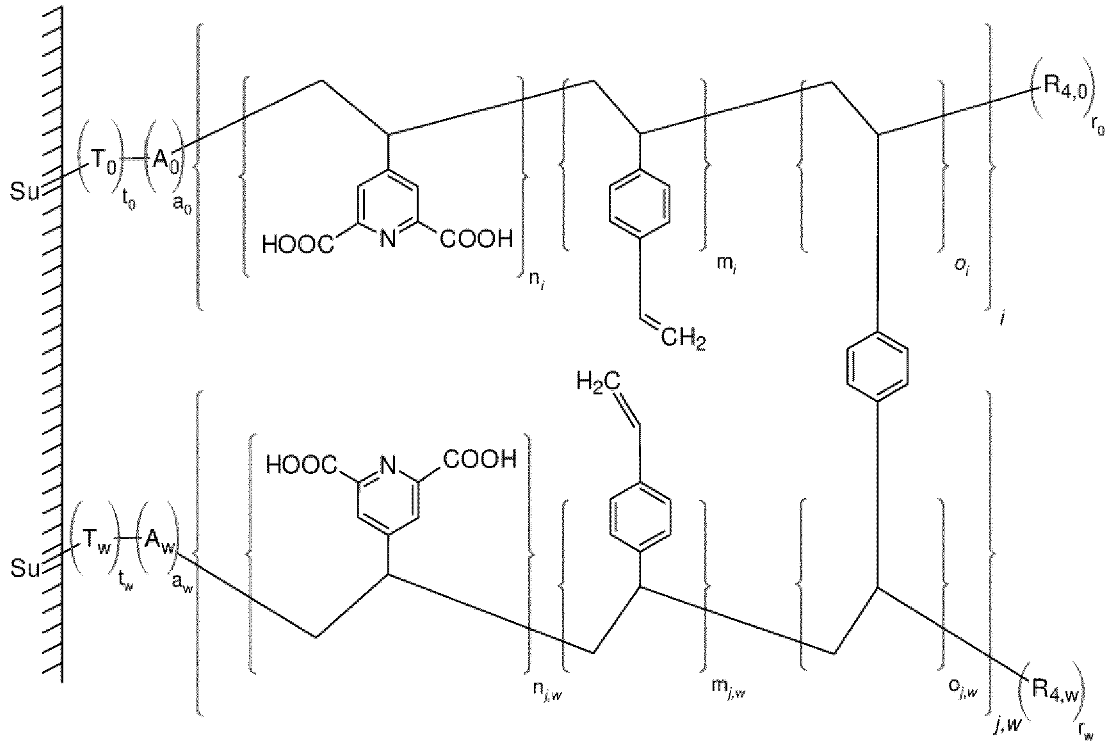

Formel XXI

wobei:

- Su der Träger ist, auf dem die Polymere fixiert sind,
- w eine streng positive ganze Indexzahl ist, die von 1 bis zur Anzahl der Polymere variiert, die mit dem Polymer mit dem Index 0 vernetzt sind, die wiederum im Bereich von 1 bis 1.000 liegt,
- $A_0$ und die $A_w$ Verbindungen sind, die aus Polymerisationsinitiatoren stammen,
- $T_0$ und die $T_w$ Verbindungen sind, die die Verbindung zwischen dem Träger und etwaigen aus Polymerisationsinitiatoren stammenden Verbindungen oder zwischen dem Träger und der jeweiligen ersten Monomereinheit herstellen,
- $R_{4,0}$ und die $R_{4,w}$ Verbindungen sind, die die Ausbreitung der Polymerisation ermöglichen, unabhängig davon, ob sie aus dem Polymerisationsinitiator stammen oder nicht, oder die den Abbruch der Polymerisation ermöglicht, oder ein Transfermittel,
- $t_0$, $a_0$, $r_0$, die $t_w$, die $a_w$ und die $r_w$ gleich oder verschieden sind und den Wert 0 oder 1 aufweisen,
- *i* und *j,w* streng positive, ganze Indexzahlen sind, die von 1 bis $n_i$ bzw. von 1 bis $n_{j,w}$ variieren, wobei $n_i$ und $n_{j,w}$ im Bereich von 1 bis 9.999 liegen,
- $n_i+n_{j,w}=n$, wobei *n* im Bereich von 3 bis 10.000 liegt, und wobei für jedes *i* und jedes *j,w*:

  - $R_{i,1}$, $R_{i,2}$, $R_{j,w,1}$ und $R_{j,w,2}$ Substituenten sind, die aus der folgenden Gruppe ausgewählt sind: Wasserstoff, Alkylrest mit 1 bis 20 Kohlenstoffen, Alkenrest mit 1 bis 20 Kohlenstoffen, Arylrest mit 1 bis 20 Kohlenstoffen, Carbonsäure mit 1 bis 20 Kohlenstoffen, Alkohol mit 1 bis 20 Kohlenstoffen, Ether mit 1 bis 20 Kohlenstoffen, Ester mit 1 bis 20 Kohlenstoffen, Amin mit 1 bis 20 Kohlenstoffen, Heterocyclus mit 1 bis 5 Ringen, dessen Heteroatom entweder Stickstoff, Sauerstoff, Schwefel oder Phosphor ist, Amid mit 1 bis 20 Kohlenstoffen, Thiole mit 1 bis 20 Kohlenstoffen, Phosphin mit 1 bis 20 Kohlenstoffen, wobei die Substituenten untereinander cyclisiert sein können und Schwefel- oder Phosphoratome enthalten können,

    mit der Maßgabe, dass, wenn $R_{i,1}$ Wasserstoff ist, dann $R_{i,2}$ von Wasserstoff verschieden ist, und umgekehrt,
    mit der Maßgabe, dass, wenn $R_{j,w,1}$ Wasserstoff ist, dann $R_{j,w,2}$ von Wasserstoff verschieden ist, und umgekehrt,

◦ $B_{ij,w}$ eine von einem Co-Monomer abgeleitete Monomereinheit ist, die eine Vernetzungsbrücke zwischen dem Polymer 0 an Position *i* und dem Polymer mit dem Index w an Position j bildet,
◦ $C_i$ und die $C_{j,w}$, von einem Co-Monomer abgeleitete Monomereinheiten sind, die keine Vernetzungsbrücke bilden,
◦ $n_i$, $m_i$, $o_i$, les $n_{j,w}$, les $m_{j,w}$, et les $o_{j,w}$ sont des nombres entiers égaux à 0 ou 1, o $n_i + m_i + o_i = 1$,$n_i$, $m_i$, $o_i$, die $n_{j,w}$, die $m_{j,w}$, und die $o_{j,w}$ ganze Zahlen gleich 0 oder 1 sind,
◦

$$n_i + m_i + o_i = 1,$$

◦

$$n_{j,w} + m_{j,w} + o_{j,w} = 1,$$

o wobei die Summe der $o_{j,w}$ ungleich null ist, und die Summe der $o_i$ ungleich null ist.

**7.** Zusammensetzung nach Anspruch 1 bis 6, umfassend oder bestehend aus einem auf einem Träger aufgepfropften Monomer oder Polymer, wobei das Monomer oder Polymer mit einem Metall komplexiert ist, das vorzugsweise aus Actiniden, Lanthaniden oder Übergangsmetallen, insbesondere Uran, ausgewählt ist.

**8.** Zusammensetzung nach den Ansprüchen 1 bis 7, umfassend oder bestehend aus einem auf einen Träger aufgepfropften Monomer oder Polymer,

- wobei das Monomer oder Polymer in wässriger Lösung und insbesondere in Meerwasser solvatisiert ist;
- oder wobei das Monomer oder Polymer mit einem Metall komplexiert ist und in wässriger Lösung solvatisiert oder nicht solvatisiert ist;
- oder wobei das Monomer oder Polymer in wässriger Lösung solvatisiert ist, nicht mit einem Metall komplexiert ist und in Lösung nicht solvatisiert ist, mit einem Metall, insbesondere mit Uran, komplexiert ist;
- oder wobei das Monomer oder Polymer in organischen Lösungsmitteln, insbesondere Acetonitril, und Dimethylsulfoxid (DMSO) solvatisiert ist.

**9.** Zusammensetzung nach den Ansprüchen 1 bis 8, umfassend oder bestehend aus einem auf einen Träger aufgepfropften Monomer oder Polymer,

- wobei der Träger Su aus Polyvinychlorid-co-Polyvinylidenchlorid-Copolymer (PVC-co-PVDC), Polyvinylchlorid (PVC), PET oder $SiO_2$ ausgewählt ist;
- und/oder wobei die Verbindung T aus Hydroxy oder der Verbindung der Formel XXII ausgewählt ist

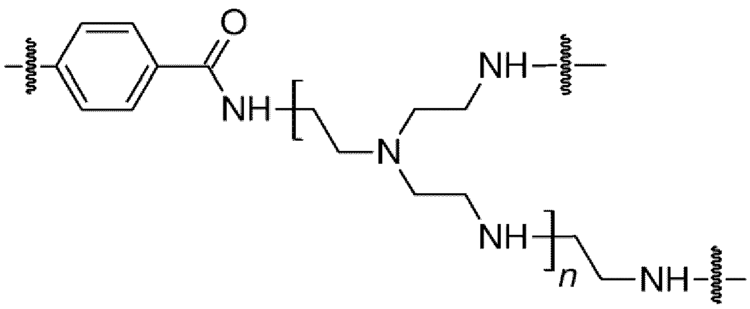

Formel XXII

- und/oder A von einem Polymerisationsinitiator stammt, der aus 4-(Chlormethyl)benzoylchlorid, Benzylchlorid, AIBN, Methyl-2-brom-2-methylpropanoat oder der Verbindung der Formel XXIII ausgewählt ist.

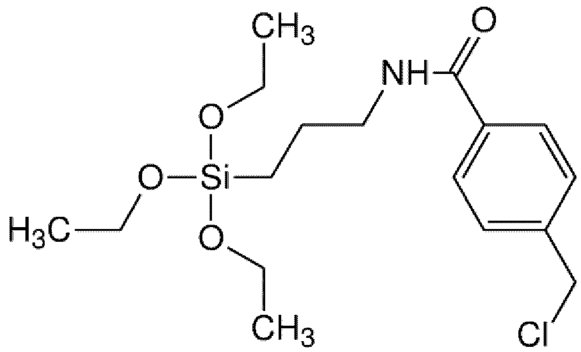

*Formel XXIII*

- und/oder wobei die Verbindung $R_4$ aus einem Chloratom oder den Verbindungen der Formel XXIV ausgewählt ist.

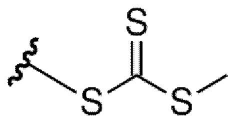

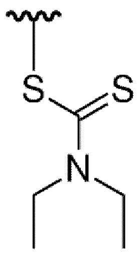

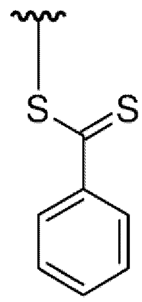

*Formel XXIV*

**10.** Zusammensetzung nach den Ansprüchen 1 bis 9, umfassend oder bestehend aus einem Monomer oder einem Polymer, das auf einen Träger der Formel XXV, Formel XXVI, Formel XXVII, Formel XXVIII, Formel XXIX oder Formel XXX aufgepfropft ist,

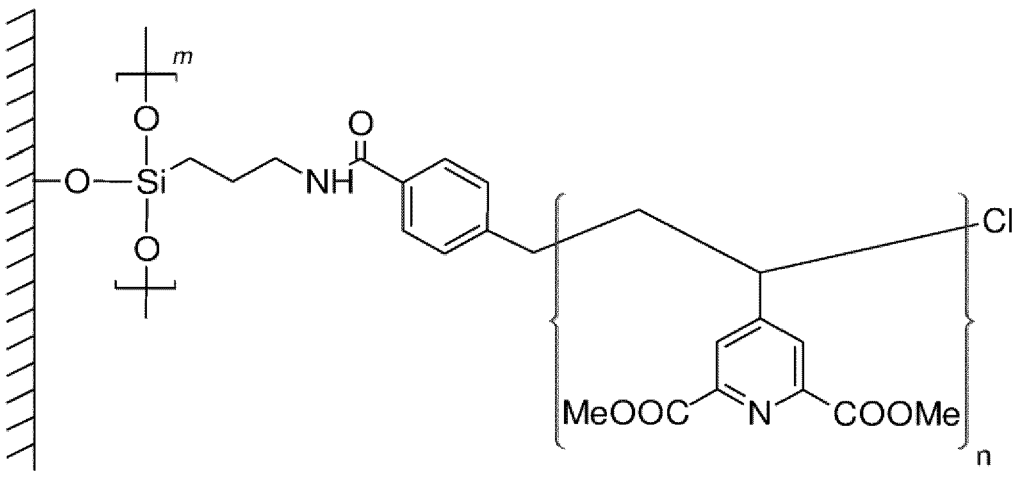

*Formel XXV*

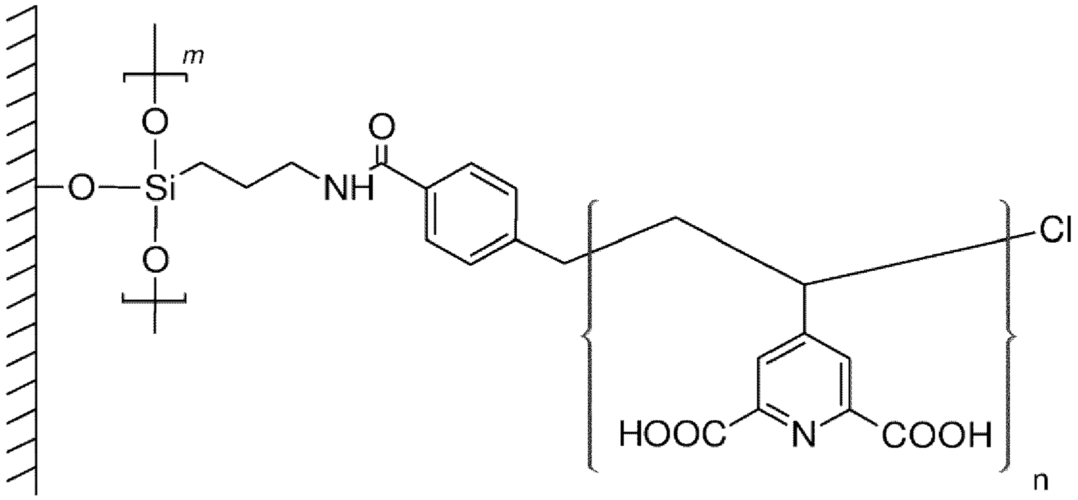

*Formel XXVI*

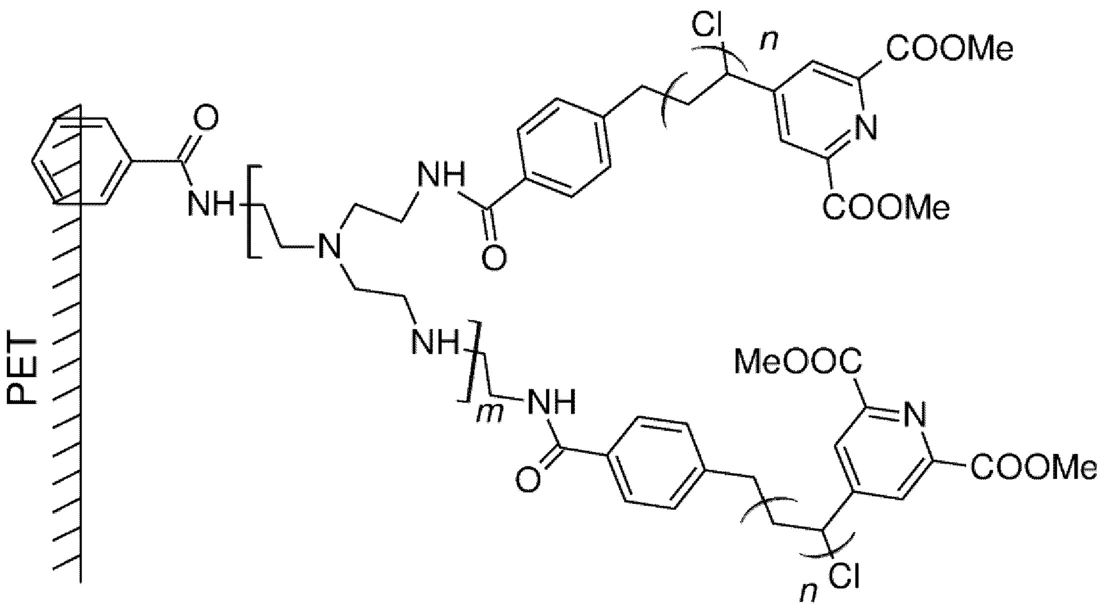

*Formel XXVII*

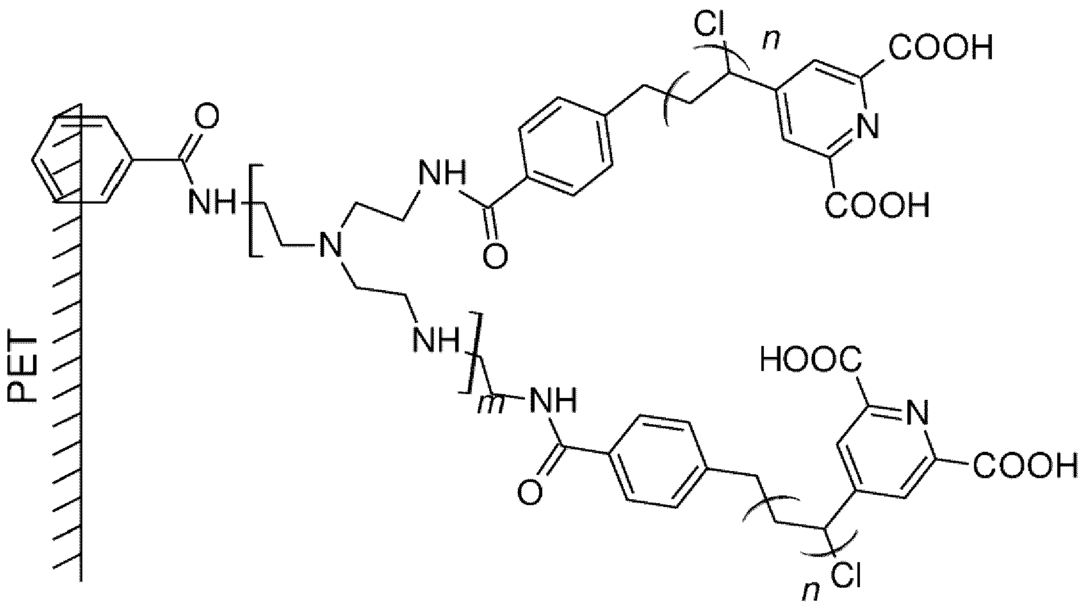

Formel XXVIII

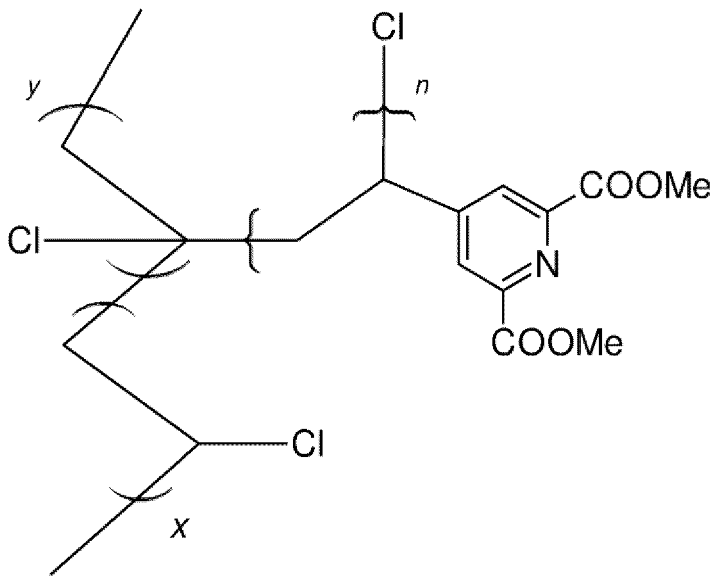

Formel XXIX

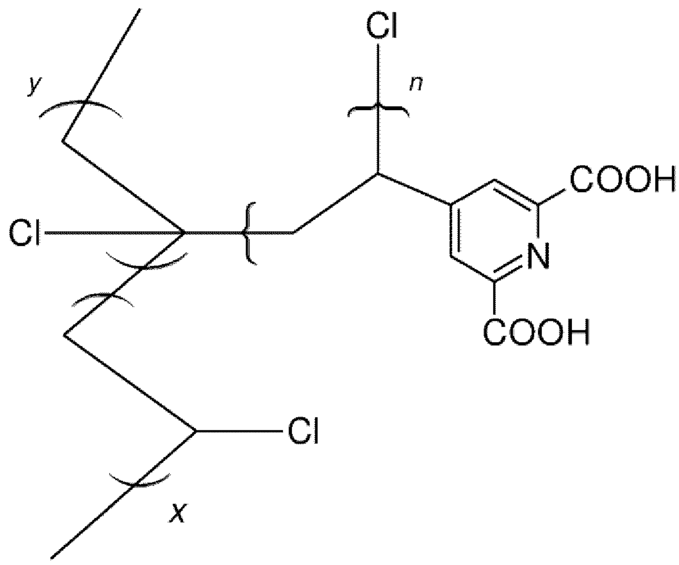

Formel XXX

**11.** Verfahren zur Herstellung eines Monomers oder eines Polymers, das insbesondere kovalent auf einen Träger nach den Ansprüchen 1 bis 10 aufgepfropft ist, umfassend die folgenden Herstellungsschritte:

a. gegebenenfalls einen Schritt zum Vorbehandeln des Trägers durch Inkontaktbringen des Trägers mit einem Vorbehandlungsreagenz und/oder einer physikalischen Vorbehandlung, um einen gegebenenfalls vorbehandelten Träger zu erhalten,
b. gegebenenfalls einen Schritt zum Vorpfropfen auf dem gegebenenfalls vorbehandelten Träger durch Inkontaktbringen des gegebenenfalls vorbehandelten Trägers mit einem Polymerisationsinitiator, um einen gegebenenfalls vorbehandelten und gegebenenfalls vorgepfropften Träger zu erhalten,
c. einen Schritt zum radikalischen Polymerisieren, der mit der Initiierung des gegebenenfalls vorbehandelten und gegebenenfalls vorgepfropften Trägers beginnt und dann mit dem Inkontaktbringen des gegebenenfalls vorbehandelten und gegebenenfalls vorgepfropften Trägers fortgesetzt wird, mit

o mindestens einem von 4-Vinylpyridin abgeleiteten Monomer, wobei die Kohlenstoffe an den Positionen 2 und 6 durch einen der Substituenten aus der folgenden Gruppe substituiert sein können: Wasserstoff, Alkylrest mit 1 bis 20 Kohlenstoffen, Alkenrest mit 1 bis 20 Kohlenstoffen, Arylrest mit 1 bis 20 Kohlenstoffen, Alkohol mit 1 bis 20 Kohlenstoffen, Ether mit 1 bis 20 Kohlenstoffen, Ester mit 1 bis 20 Kohlenstoffen, Amin mit 1 bis 20 Kohlenstoffen, Heterocyclus mit 1 bis 5 Ringen, dessen Heteroatom entweder Stickstoff, Sauerstoff, Schwefel oder Phosphor ist, Amid mit 1 bis 20 Kohlenstoffen, Thiole mit 1 bis 20 Kohlenstoffen, Phosphin mit 1 bis 20 Kohlenstoffen, wobei die Substituenten untereinander cyclisiert sein können und Schwefel- oder Phosphoratome enthalten können,
o und gegebenenfalls mindestens einem Co-Monomer,
mit oder ohne Vernetzung
um ein auf dem Träger aufgepfropftes Monomer oder ein Polymer zu erhalten,
vorzugsweise eine Polymerisation vom Typ NMP, RAFT, ATRP oder eine klassische radikalische Polymerisation;

d. gegebenenfalls einen Schritt zum Modifizieren durch das Inkontaktbringen des auf den Träger aufgepfropften Monomers oder Polymers mit einem Reagenz zum Modifizieren mindestens eines der oben genannten Substituenten, um ein auf den Träger aufgepfropftes und gegebenenfalls modifiziertes Monomer oder Polymer zu erhalten,
e. gegebenenfalls einen Schritt zum Komplexieren durch Inkontaktbringen des auf dem Träger aufgepfropften und gegebenenfalls mit einem Metallkation modifizierten Monomers oder Polymers, um ein auf den Träger aufgepfropftes, gegebenenfalls modifiziertes und gegebenenfalls komplexiertes Monomer oder Polymer zu erhalten.

**12.** Verfahren zur Herstellung eines auf einen Träger aufgepfropften Monomers oder Polymer nach Anspruch 11,

- wobei das auf einen Träger aufgepfropfte Monomer oder Polymer die Formel I aufweist, wobei das Verfahren Folgendes umfasst:

a. gegebenenfalls einen Schritt zum Vorbehandeln des Trägers durch Inkontaktbringen des Trägers mit einem Vorbehandlungsreagenz und/oder durch die Einwirkung einer physikalischen Vorbehandlung auf dem Träger, um einen gegebenenfalls vorbehandelten Träger der Formel XXXI zu erhalten,

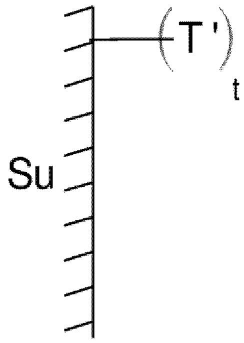

*Formel XXXI*

wobei

- T' eine Verbindung ist, die aus der Vorbehandlung des Trägers Su stammt, die Fragmente entweder des Trägers oder des Vorbehandlungsreagenzes oder von beiden enthält,
- t eine ganze Zahl ist, die den Wert 0 oder 1 aufweist,

b. gegebenenfalls einen Schritt zum Vorpfropfen auf dem gegebenenfalls vorbehandelten Träger der Formel XXXI durch Inkontaktbringen des Trägers mit einem Polymerisationsinitiator, um einen gegebenenfalls vorbehandelten und gegebenenfalls vorgepfropften Träger der Formel XXXII zu erhalten,

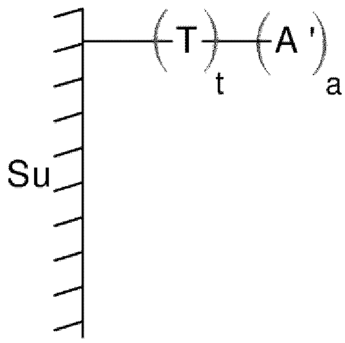

*Formel XXXII*

Wobei

- A' eine Verbindung ist, die aus dem Schritt zum Vorpfropfen auf den Träger stammt, die Fragmente Polymerisationsinitiators enthält,
- a eine ganze Zahl ist, die den Wert 0 oder 1 aufweist,

c. einen Schritt zum radikalischen Polymerisieren, der mit der Initiierung des gegebenenfalls vorbehandelten und gegebenenfalls vorgepfropften Trägers der Formel XXXII beginnt und dann mit dem Inkontaktbringen des gegebenenfalls vorbehandelten und gegebenenfalls vorgepfropften Trägers mit dem 4-Vinylpyridinderivat der Formel XXXIII fortgesetzt wird,

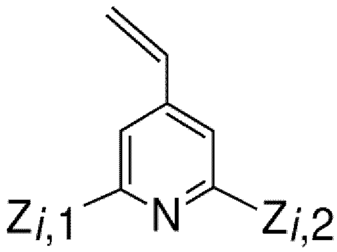

Formel XXXIII

wobei:

- $Z_{i,1}$ und $Z_{i,2}$ Substituenten sind, die aus der folgenden Gruppe ausgewählt sind: Wasserstoff, Alkylrest mit 1 bis 20 Kohlenstoffen, Alkenrest mit 1 bis 20 Kohlenstoffen, Arylrest mit 1 bis 20 Kohlenstoffen, Alkohol mit 1 bis 20 Kohlenstoffen, Ether mit 1 bis 20 Kohlenstoffen, Ester mit 1 bis 20 Kohlenstoffen, Amin mit 1 bis 20 Kohlenstoffen, Heterocyclus mit 1 bis 5 Ringen, dessen Heteroatom entweder Stickstoff, Sauerstoff, Schwefel oder Phosphor ist, Amid mit 1 bis 20 Kohlenstoffen, Thiole mit 1 bis 20 Kohlenstoffen, Phosphin mit 1 bis 20 Kohlenstoffen, wobei die Substituenten untereinander cyclisiert sein können und Schwefel- oder Phosphoratome enthalten können,

wobei der Polymerisationsschritt durchgeführt wird:

- mit gegebenenfalls mindestens einem Co-Monomer,
- mit oder ohne Vernetzung,

um ein auf einen Träger der Formel XXXIV aufgepfropftes Monomer oder Polymer zu erhalten

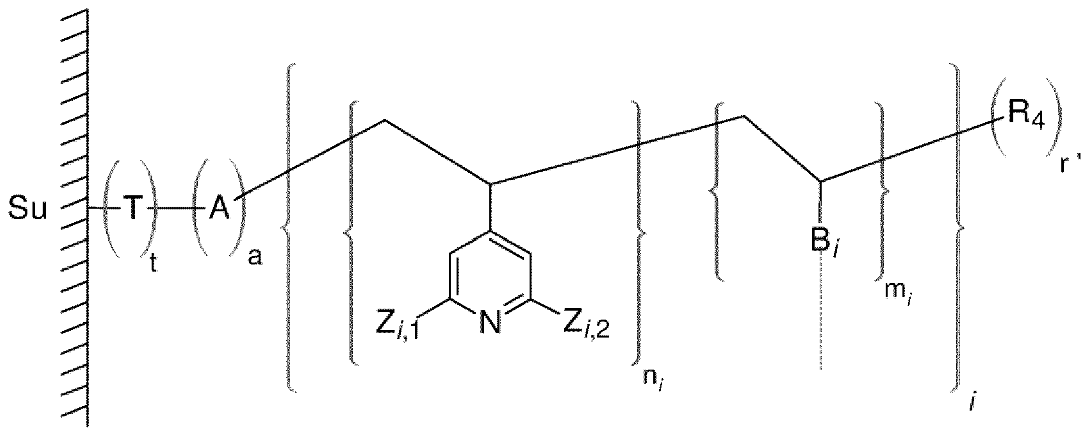

Formel XXXIV

d. einen Schritt zum Modifizieren, wenn mindestens eines von $Z_{i,1}$ von $R_{i,1}$ verschieden ist oder wenn mindestens eines von $Z_{i,2}$ von $R_{i,2}$ verschieden ist, des Monomers oder Polymers der Formel XXXIV mit einem Reagenz zum Modifizieren mindestens eines der oben genannten Substituenten $Z_{i,1}$ und $Z_{i,2}$, wobei das Reagenz ein Hydroxid-, Carbonat- oder Phosphatanion enthält, um das auf einen Träger der Formel XXXV aufgepfropfte Monomer oder Polymer zu erhalten

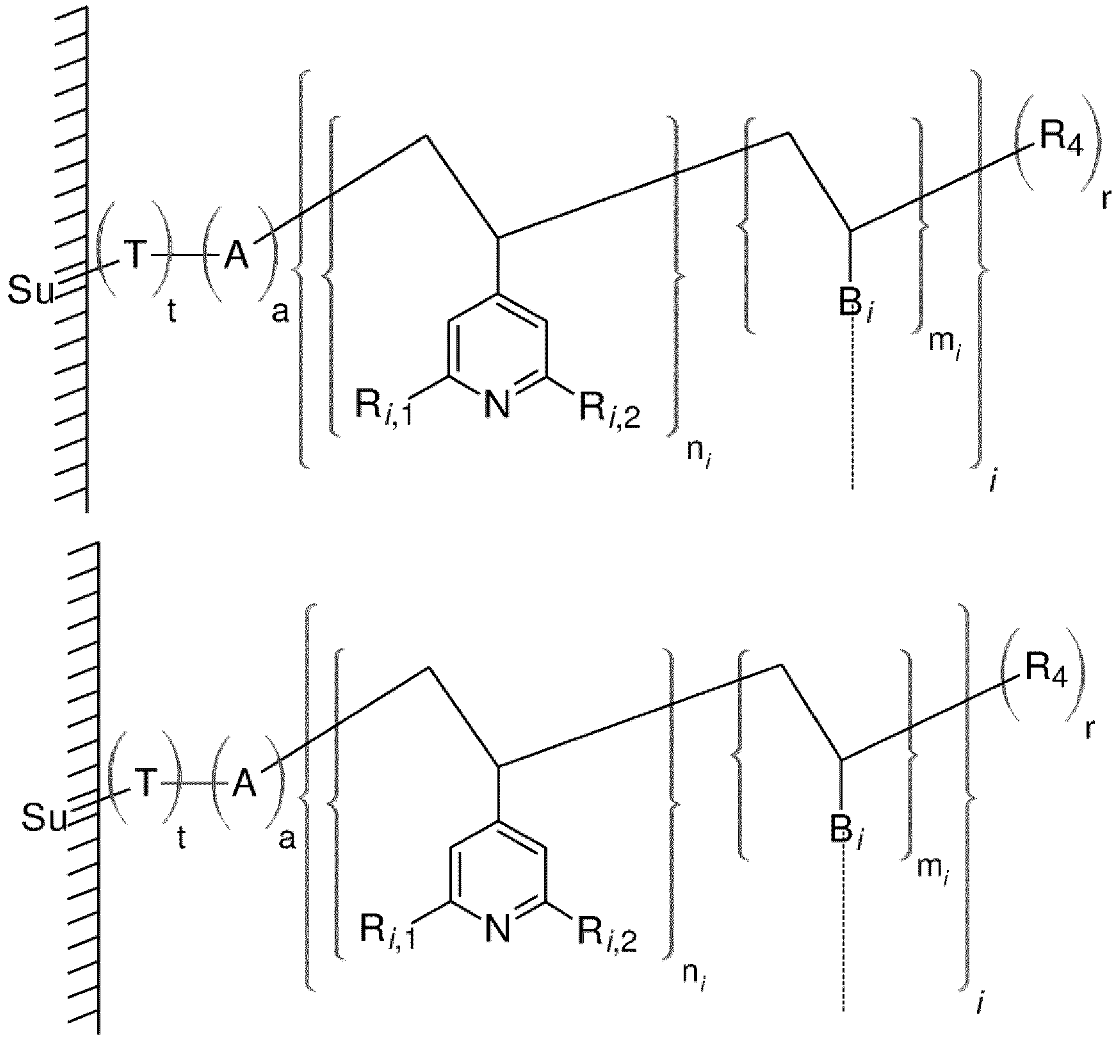

*Formel XXXV*

e. gegebenenfalls einen Schritt zum Komplexieren des auf einen Träger der Formel XXXV aufgepfropften Monomers oder Polymers mit mindestens einem Metallkation, um das auf einen Träger der Formel I aufgepfropfte Monomer oder Polymer zu erhalten;

- oder wobei das Monomer oder Polymer die Formel II mit t=1 und a=1 aufweist, wobei die Definitionen von $R_{i,1}$ und $R_{i,2}$ wie in Anspruch 2 beschrieben sind, wobei das Verfahren Folgendes umfasst:

a. einen Schritt zum Vorbehandeln des Trägers durch Inkontaktbringen des Trägers mit einem Vorbehandlungsreagenz und/oder durch die Einwirkung einer physikalischen Vorbehandlung auf den Träger, um einen vorbehandelten Träger der Formel XXXVIII zu erhalten,

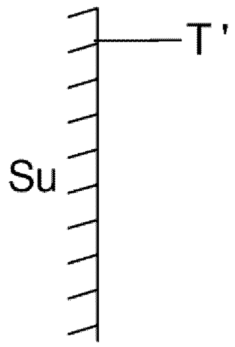

*Formel XXXVIII*

wobei

- die Definitionen von Su und T' wie oben beschrieben sind,

b. einen Schritt zum Vorpfropfen des vorbehandelten Trägers der Formel XXXVIII durch Inkontaktbringen mit einem Polymerisationsinitiator, um einen vorbehandelten und vorgepfropften Träger der Formel XLII zu erhalten

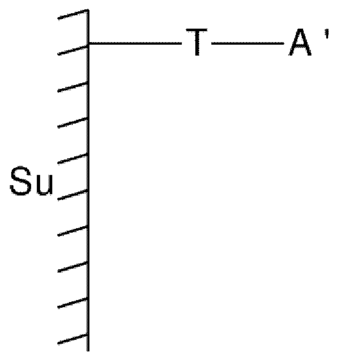

*Formel XLII*

wobei

- die Definitionen von T und A' wie oben beschrieben sind,

c. einen Schritt zum radikalischen Polymerisieren, der mit der Initiierung des vorbehandelten und vorgepfropften Trägers der Formel XLII beginnt, und dann mit dem Inkontaktbringen des vorbehandelten und vorgepfropften Trägers mit dem 4-Vinylpyridinderivat der Formel XXXIII und gegebenenfalls mit mindestens einem Co-Monomer fortgesetzt wird, um ein auf einen Träger der Formel XLIII aufgepfropftes Monomer oder Polymer zu erhalten

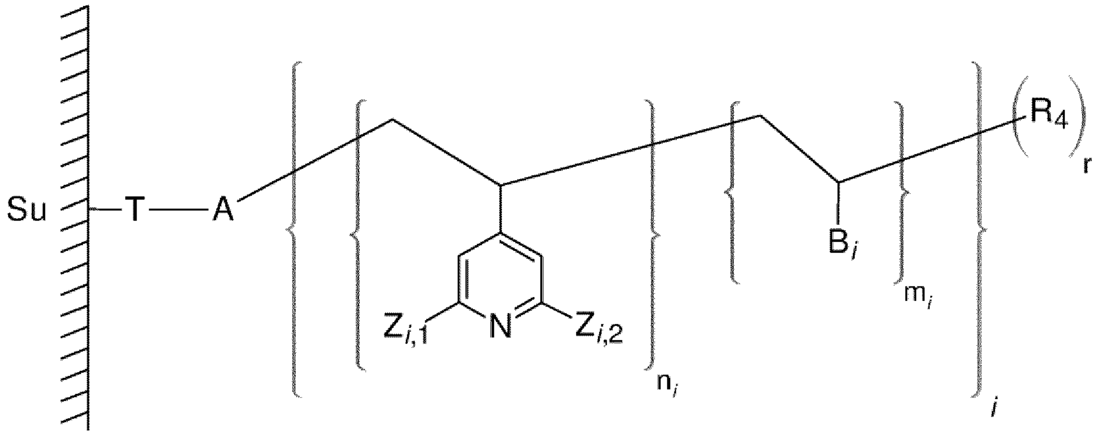

Formel XLIII

wobei:

- die Definitionen von A, $R_4$, $B_i$, $n_i$, $m_i$, r und *i* wie in Formel II beschrieben sind,
- die Definitionen von $Z_{i,1}$ und $Z_{i,2}$ wie oben beschrieben sind,

d. einen Schritt zum Modifizieren, wenn mindestens eines von $Z_{i,1}$ von $R_{i,1}$ verschieden ist oder wenn mindestens eines von $Z_{i,2}$ von $R_{i,2}$ verschieden ist, des auf einen Träger der Formel XLIII aufgepfropften Monomers oder Polymers mit einem Reagenz zum Modifizieren mindestens eines von $Z_{i,1}$ oder $Z_{i,2}$, wobei das Reagenz ein Hydroxid-, Carbonat- oder Phosphatanion enthält, um das auf einen Träger der Formel XLIV aufgepfropfte Monomer oder Polymer zu erhalten

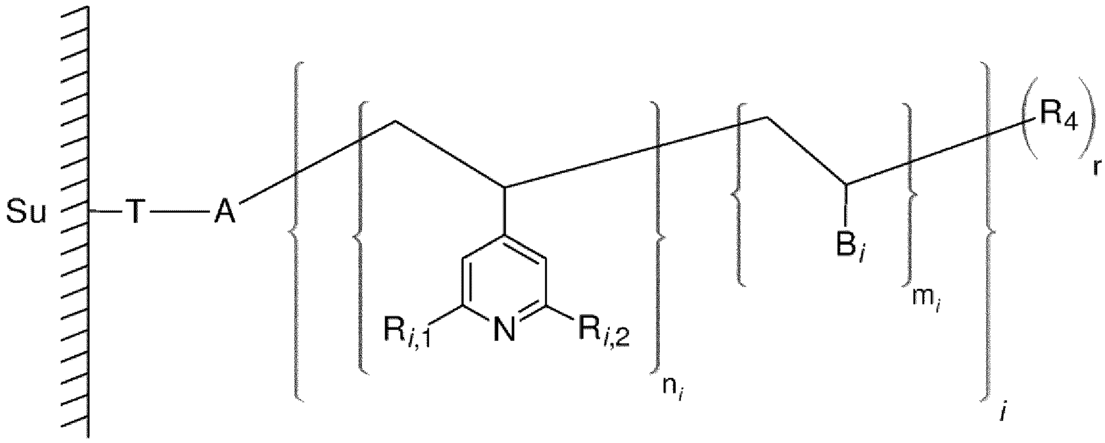

Formel XLIV

e. gegebenenfalls einen Schritt zum Komplexieren des auf einen Träger der Formel XLIV aufgepfropften Monomers oder Polymers mit mindestens einem Metallkation, um das auf einen Träger der Formel II aufgepfropfte Monomer oder Polymer zu erhalten, wobei t=1 und a=1;

- oder wobei das auf einen Träger aufgepfropfte Monomer oder Polymer die Formel II aufweist, mit t=0 und a=0, wobei die Definitionen von $R_{i,1}$ und $R_{i,2}$ wie in Anspruch 2 beschrieben sind, wobei das Verfahren keinen Vorbehandlungsschritt oder Initiierungsschritt umfasst, und Folgendes umfasst:

a. einen Schritt zum radikalischen Polymerisieren, der mit der Initiierung des Trägers beginnt, und dann mit dem Inkontaktbringen des Trägers mit dem 4-Vinylpyridinderivat der Formel XXXIII und gegebenenfalls mit mindestens einem Co-Monomer mit oder ohne Vernetzung fortgesetzt wird, um ein auf einen Träger der Formel XLV aufgepfropftes Monomer oder Polymer zu erhalten

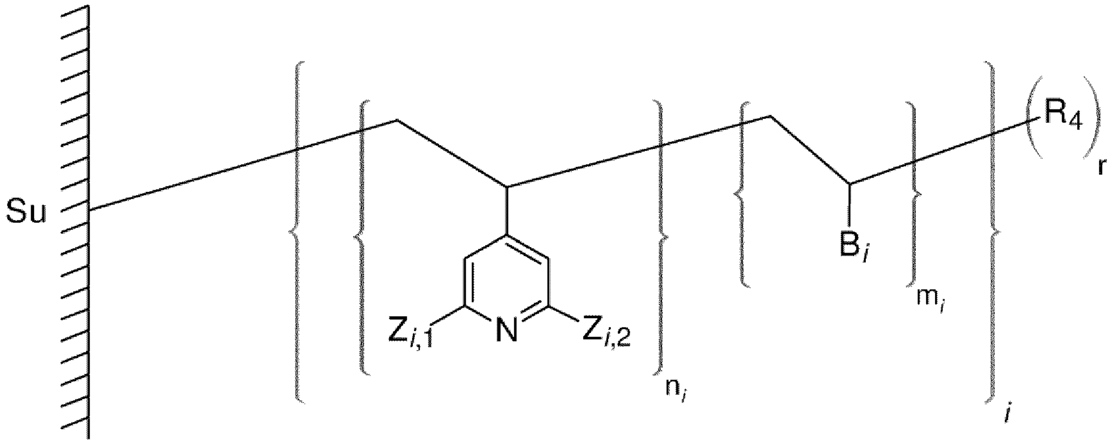

Formel XLV

wobei:

- die Definitionen von Su, $R_4$, $B_i$, $n_i$, $m_i$, r und *i* sind wie in Formel II beschrieben sind,
- die Definitionen von $Z_{i,1}$ und $Z_{i,2}$ sind wie in Formel XXXIII,

b. einen Schritt zum Modifizieren, wenn mindestens eines von $Z_{i,1}$ von $R_{i,1}$ verschieden ist, oder wenn mindestens eines von $Z_{i,2}$ von $R_{i,2}$ verschieden ist, des auf einen Träger der Formel XLV aufgepfropften Monomers oder Polymers mit einem Reagenz zum Modifizieren mindestens eines von $Z_{i,1}$ oder $Z_{i,2}$, wobei das Reagenz ein Hydroxid-, Carbonat- oder Phosphatanion enthält, um das auf einen Träger der Formel XLVI aufgepfropfte Monomer oder Polymer zu erhalten,

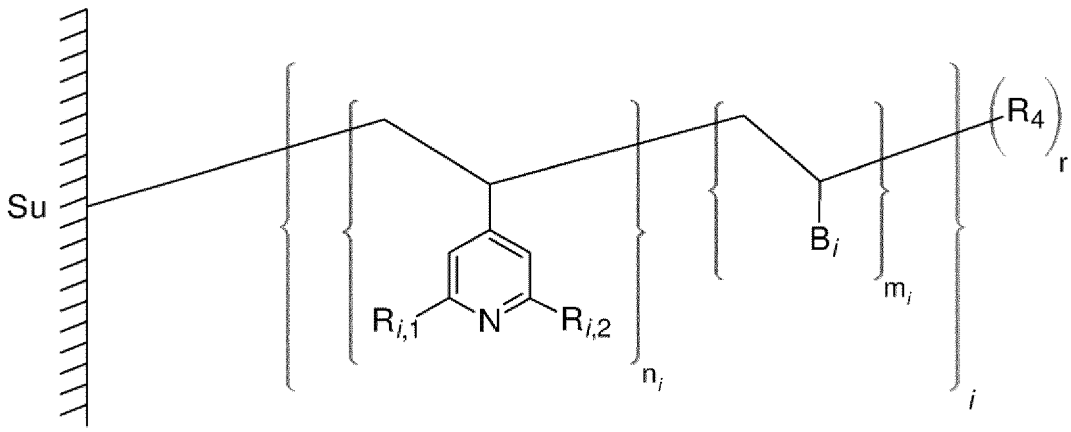

Formel XLVI

c. gegebenenfalls einen Schritt zum Komplexieren des auf einen Träger der Formel XLVI aufgepfropften Monomers oder Polymers mit mindestens einem Metallkation, um das auf einen Träger der Formel II mit t=0 und a=0 aufgepfropfte Monomer oder Polymer zu erhalten;

- oder wobei das Monomer oder Polymer die Formel IV mit t=1 und a=1 aufweist, wobei die Definitionen von $R_1$ und $R_2$ wie in Anspruch 3 beschrieben sind,
wobei das Verfahren Folgendes umfasst:

a. einen Schritt zum Vorbehandeln des Trägers durch Inkontaktbringen des Trägers mit einem Vorbehandlungsreagenz und/oder durch die Einwirkung einer physikalischen Vorbehandlung auf den Träger, um einen vorbehandelten Träger der Formel XXXVIII zu erhalten,
b. einen Schritt zum Vorpfropfen des vorbehandelten Trägers der Formel XXXVIII durch Inkontaktbringen mit einem Polymerisationsinitiator, um einen vorbehandelten und vorgepfropften Träger der Formel XLII zu erhalten

c. einen Schritt zum radikalischen Polymerisieren, der mit der Initiierung des vorbehandelten und vorgepfropften Trägers der Formel XLII beginnt und dann mit dem Inkontaktbringen des vorbehandelten und vorgepfropften Trägers mit dem 4-Vinylpyridinderivat der Formel XLIX fortgesetzt wird,

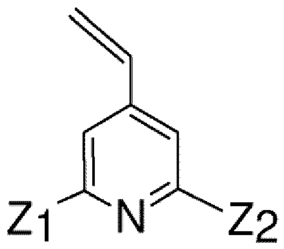

Formel XLIX

wobei:

- $Z_1$ und $Z_2$ Substituenten sind, die aus der folgenden Gruppe ausgewählt sind: Wasserstoff, Alkylrest mit 1 bis 20 Kohlenstoffen, Alkenrest mit 1 bis 20 Kohlenstoffen, Arylrest mit 1 bis 20 Kohlenstoffen, Alkohol mit 1 bis 20 Kohlenstoffen, Ether mit 1 bis 20 Kohlenstoffen, Ester mit 1 bis 20 Kohlenstoffen, Amin mit 1 bis 20 Kohlenstoffen, Heterocyclus mit 1 bis 5 Ringen, dessen Heteroatom entweder Stickstoff, Sauerstoff, Schwefel oder Phosphor ist, Amid mit 1 bis 20 Kohlenstoffen, Thiole mit 1 bis 20 Kohlenstoffen, Phosphin mit 1 bis 20 Kohlenstoffen, wobei die Substituenten untereinander cyclisiert sein können und Schwefel- oder Phosphoratome enthalten können,

um ein auf einen Träger der Formel L aufgepfropftes Monomer oder Polymer zu erhalten,

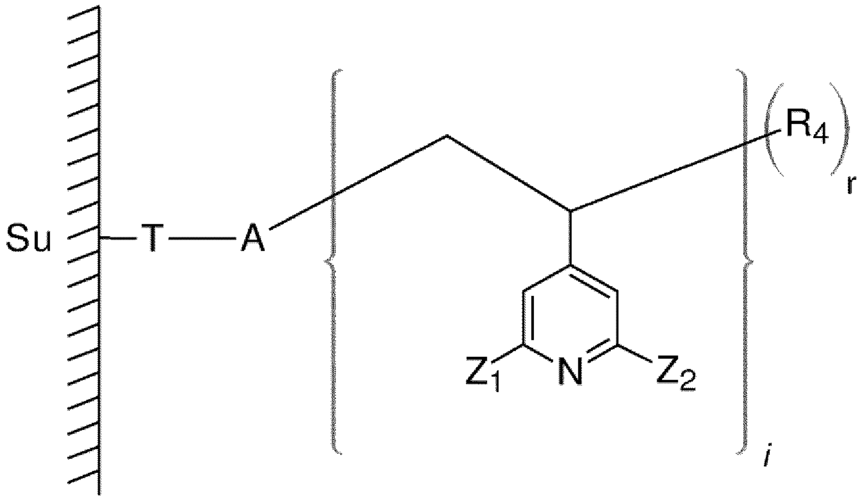

Formel L

wobei:

- die Definitionen von T, A, $R_4$, r und *i* wie in Anspruch 2 beschrieben sind,

d. einen Schritt zum Modifizieren, wenn $Z_1$ von $R_1$ verschieden ist oder wenn $Z_2$ von $R_2$ verschieden ist, des auf einen Träger der Formel L aufgepfropften Monomers oder Polymers mit einem Reagenz zum Modifizieren mindestens eines der oben genannten Substituenten $Z_1$ und $Z_2$, und das ein Hydroxid-, Carbonat- oder Phosphatanion enthält, um das auf einen Träger der Formel LI aufgepfropfte Monomer oder Polymer zu erhalten,

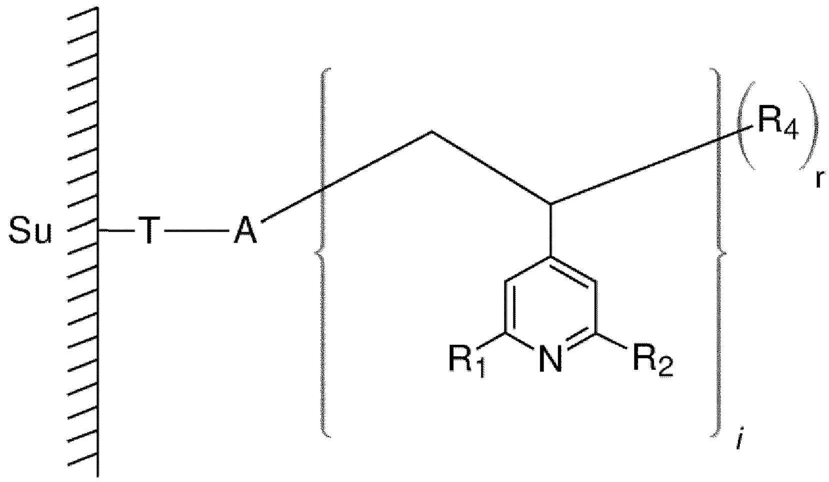

Formel LI

e. gegebenenfalls einen Schritt zum Komplexieren des auf einen Träger der Formel LI aufgepfropften Monomers oder Polymers mit mindestens einem Metallkation, um das auf einen Träger der Formel IV aufgepfropfte Monomer oder Polymer zu erhalten, wobei t=1 und a=1;

- oder wobei das auf einen Träger aufgepfropfte Monomer oder Polymer die Formel XXIX aufweist und der Träger aus PET ist, wobei das Verfahren Folgendes umfasst:

a. einen Schritt zum Vorbehandeln eines Trägers aus PET durch Inkontaktbringen des Trägers mit Polyethylenimin, um einen vorbehandelten Träger der Formel LXV zu erhalten

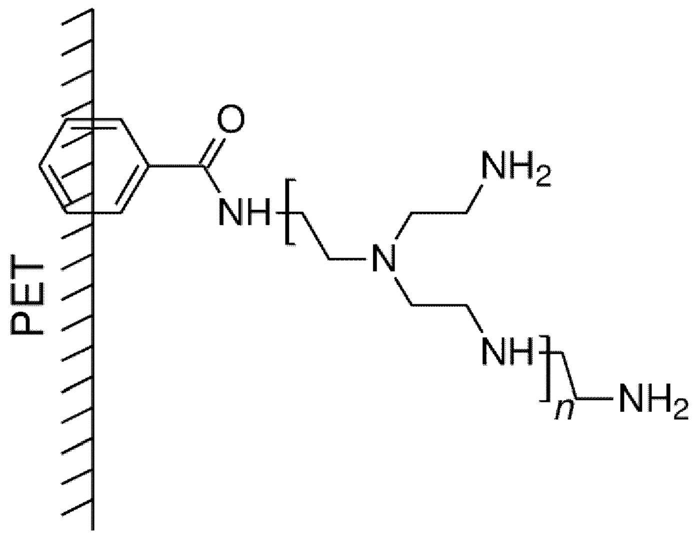

Formel LXV

wobei T' für eine Verbindung der Formel LXVI steht
T' :

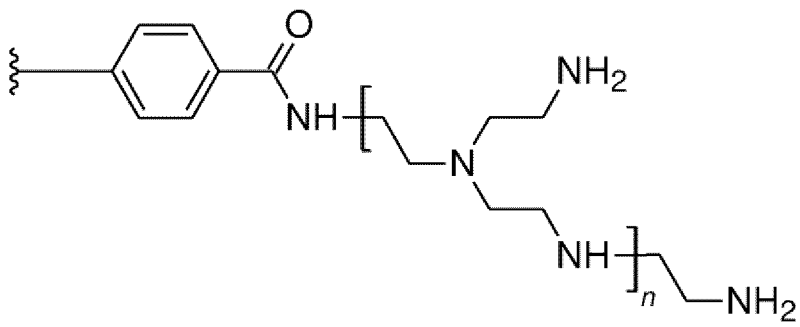

*Formel LXVI*

b. einen Schritt zum Vorpfropfen des vorbehandelten Trägers der Formel LXV durch Inkontaktbringen des Trägers mit 4-(Chlormethyl)benzoylchlorid, um einen vorbehandelten und vorgepfropften Träger der Formel LXVII zu erhalten

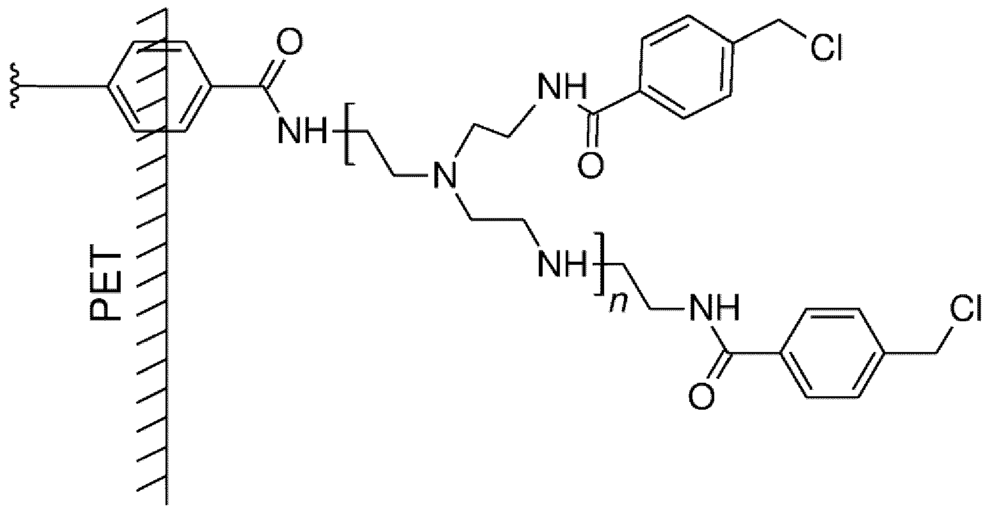

*Formel LXVII*

wobei T für eine Verbindung der Formel XXII steht und X' für eine Verbindung der Formel LXVIII steht X' :

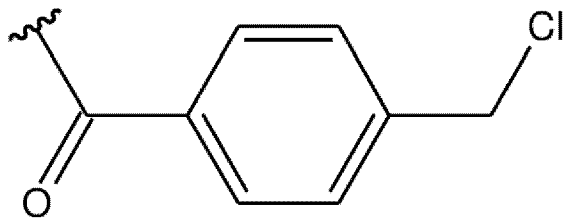

*Formel LXVIII*

c. einen Schritt zum radikalischen Polymerisieren auf einem vorbehandelten und vorgepfropften Träger der Formel LXVII des 4-Vinylpyridinderivats der Formel LXIX,

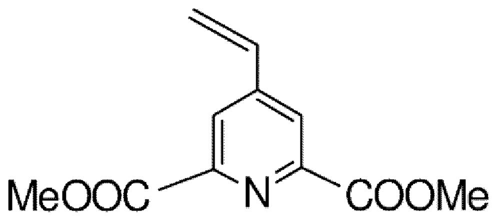

*Formel LXIX*

durch Umsetzen des Trägers mit dem Derivat und mit $CuCl_2$, TPMA und metallischem Kupfer, um ein auf einen Träger der Formel XXV aufgepfropftes Monomer oder Polymer zu erhalten, wobei X für eine Verbindung der Formel LXX steht und $R_4$ für ein Chloratom steht,
X:

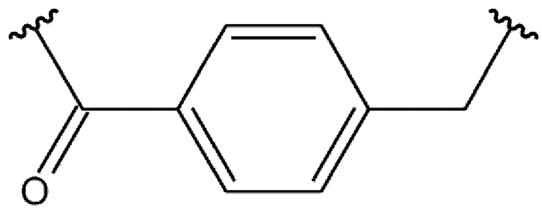

*Formel LXX*

d. einen Schritt zum Modifizieren des auf einen Träger der Formel XXV aufgepfropften Monomers oder Polymers mit einer Base, um ein auf einen Träger der Formel XXVI aufgepfropftes Monomer oder Polymer zu erhalten;

- oder wobei das auf einen Träger aufgepfropfte Monomer oder Polymer die Formel XXVIII aufweist, wobei:

a. einen Schritt zum Vorbehandeln eines Trägers aus Siliciumdioxid durch Inkontaktbringen des Trägers mit einer Säure, um einen vorbehandelten Träger der Formel LXXI zu erhalten

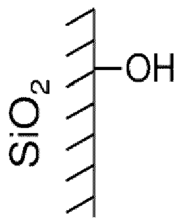

*Formel LXXI*

wobei T' für -OH steht,
b. einen Schritt zum Vorpfropfen des vorbehandelten Trägers der Formel LXXI durch Inkontaktbringen des Trägers mit APTES-CMB der Formel XXIII,

um einen vorbehandelten und vorgepfropften Träger der Formel LXXII zu erhalten

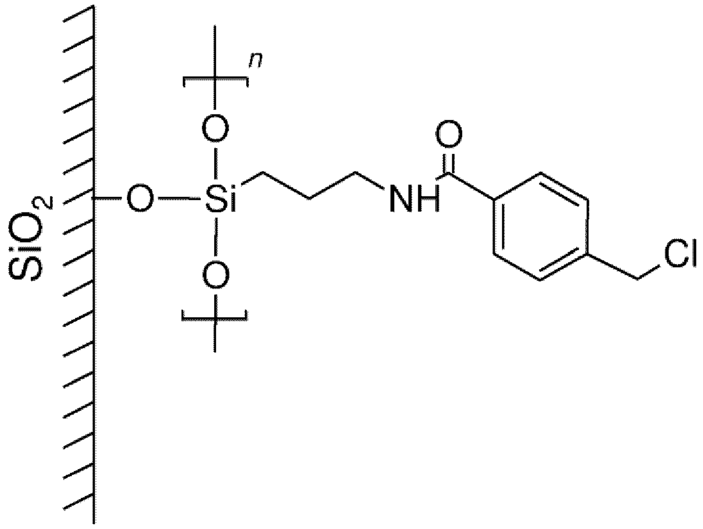

Formel LXXII

wobei T für -O- steht und X' für die Verbindung der Formel LXXIII steht,

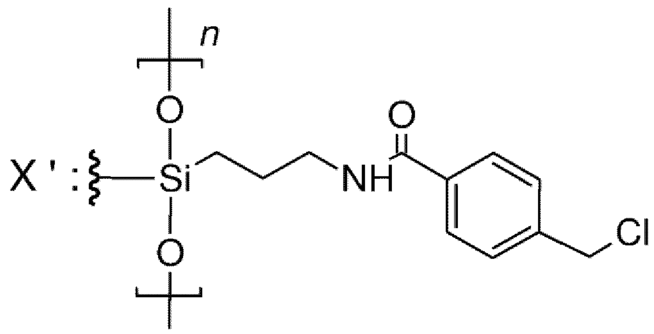

Formel LXXIII

c. einen Schritt zur radikalischen Polymerisation des 4-Vinylpyridinderivats der Formel LXIX auf dem vorbehandelten und vorgepfropften Träger der Formel LXXII durch Umsetzen des Trägers mit dem Derivat und mit $CuCl_2$, TPMA und metallischem Kupfer, um ein auf einen Träger der Formel XXVII aufgepfropftes Monomer oder Polymer zu erhalten, wobei X für die Verbindung der Formel LXXIV steht und $R_4$ für ein Chloratomsteht,
X:

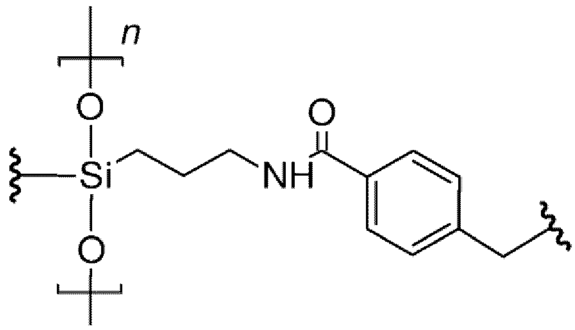

Formel LXXIV

d. einen Schritt zum Modifizieren des auf einen Träger der Formel XXVII aufgepfropften Monomers oder Polymers mit einer Base, um ein auf einen Träger der Formel XXVIII aufgepfropftes Monomer oder Polymer zu erhalten;

- oder das aufgepfropfte Monomer oder Polymer weist die Formel XXX auf, wobei das Verfahren Folgendes umfasst:

a. einen Schritt zum Polymerisieren des 4-Vinylpyridinderivats der Formel LXIX auf einem PVC umfassenden Träger insbesondere mit einem Copolymer, insbesondere PVDC, durch Umsetzen des Trägers mit dem Derivat und mit $CuCl_2$, TPMA und metallischem Kupfer, um auf einen Träger der Formel XXIX aufgepfropftes ein Monomer oder Polymer zu erhalten, wobei $R_4$ für ein Chloratom steht,
b. einen Schritt zum Modifizieren des auf einen Träger der Formel XXIX aufgepfropften Monomers oder Polymers mit einer Base, um ein auf einen Träger der Formel XXX aufgepfropftes Monomer oder Polymer zu erhalten.

**13.** Verfahren zum Herstellen eines auf einen Träger aufgepfropften Polymers nach einem der Ansprüche 11 bis 12, wobei der Polymerisierungsschritt ein 4-Vinylpyridinderifat der Formel XLIX in Kontakt bringt

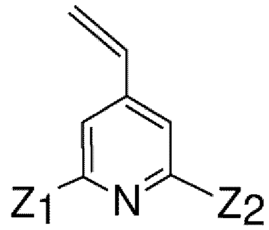

Formel XLIX

wobei:

• $Z_1$ und $Z_2$ Substituenten sind, die aus der folgenden Gruppe ausgewählt sind: Wasserstoff, Alkylrest mit 1 bis 20 Kohlenstoffen, Alkenrest mit 1 bis 20 Kohlenstoffen, Arylrest mit 1 bis 20 Kohlenstoffen, Alkohol mit 1 bis 20 Kohlenstoffen, Ether mit 1 bis 20 Kohlenstoffen, Ester mit 1 bis 20 Kohlenstoffen, Amin mit 1 bis 20 Kohlenstoffen, Heterocyclus mit 1 bis 5 Ringen, dessen Heteroatom entweder Stickstoff, Sauerstoff, Schwefel oder Phosphor ist, Amid mit 1 bis 20 Kohlenstoffen, Thiole mit 1 bis 20 Kohlenstoffen, Phosphin mit 1 bis 20 Kohlenstoffen, wobei die Substituenten untereinander cyclisiert sein können und Schwefel- oder Phosphoratome enthalten können,

mit einem auf einen Träger der Formel LX aufgepfropften Monomer oder Polymer,

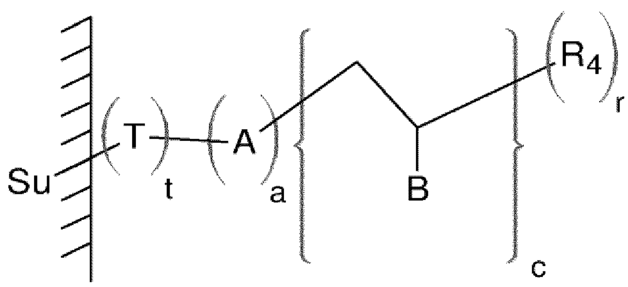

Formel LX

wobei

• die Definitionen von Su, A, T, B, $R_4$, r, a, t und c wie in den Ansprüchen 2 und 5 beschrieben sind,

um ein auf einen Träger der Formel LXI aufgepfropftes Polymer zu erhalten

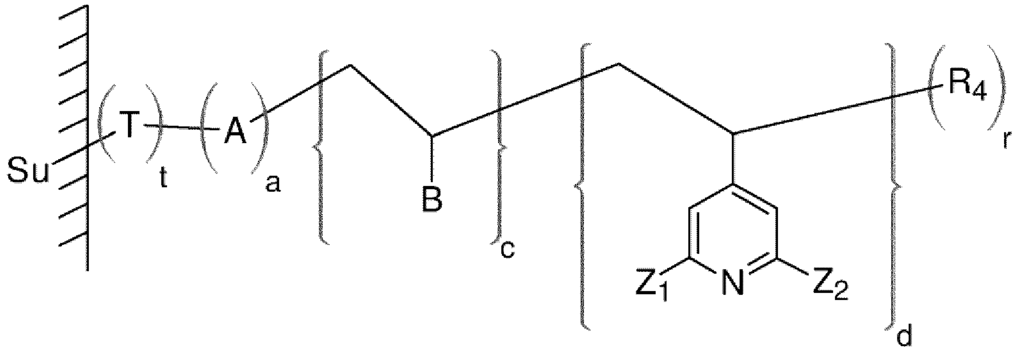

Formel LXI

wobei

• die Definition von d wie in Anspruch 5 beschrieben ist;

wobei das Verfahren zur Herstellung eines aufgepfropften Polymers insbesondere Folgendes umfasst:

a. einen Schritt zum Vorbehandeln des Trägers durch Inkontaktbringen des Trägers mit einem Vorbehandlungsreagenz und/oder durch die Einwirkung einer physikalischen Vorbehandlung auf den Träger, um einen vorbehandelten Träger der Formel XXXI zu erhalten,
b. einen Schritt zum Vorpfropfen des vorbehandelten Trägers der Formel XXXI durch Inkontaktbringen mit einem Polymerisationsinitiator, um einen vorbehandelten und vorgepfropften Träger der Formel XXXII zu erhalten
c. einen Schritt zum radikalischen Polymerisieren durch Inkontaktbringen des vorbehandelten und vorgepfropften Trägers der Formel XXXII mit einem Co-Monomer der Formel LXII, um das freie Monomer oder Polymer der Formel LX zu erhalten,

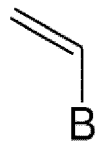

Formel LXII

wobei die Definition von B wie in Formel XVIII beschrieben ist,
vor dem Schritt zum radikalischen Polymerisieren durch Inkontaktbringen eines Monomers, das von 4-Vinylpyridin der Formel XXXIII abgeleitet ist, mit einem Monomer oder Polymer der Formel LX.

**14.** Verwendung der Zusammensetzung, wie in den Ansprüchen 1 bis 10 beschrieben, ausgewählt aus der Gruppe, umfassend das Abscheiden von Metallen und deren Rückführung, die Nutzung als homogener oder heterogener Katalysator, die Markierung von organischen und/oder anorganischen Oberflächen und die Fluoreszenzmarkierung von Biomolekülen .

**15.** Verwendung der Zusammensetzung als Adsorptionsmittel für Metalle in Meerwasser nach Anspruch 14, insbesondere Adsorption von Actiniden und Lanthaniden, insbesondere Adsorption von Uran und noch stärker selektive Adsorption von Uran gegenüber Vanadium;
oder als Behandlung von mit Metallen kontaminierten Abwässern, insbesondere radioaktiven Abwässern und vor allem Atommüll aus Kernkraftwerken.

## Claims

1. Composition comprising or consisting of a monomer or of a polymer grafted onto a support, in particular covalently, said monomer or polymer having a degree of polymerization n, ranging from 1 to 10,000 and containing n monomer units, said monomer units being:

    - monomer units derived from 4-vinylpyridine, in which the carbon atoms in positions 2 and 6 can be substituted by one of the substituents from the following group: hydrogen, alkyl radical of 1 to 20 carbon atoms, alkene radical of 1 to 20 carbon atoms, aryl radical of 1 to 20 carbon atoms, carboxylic acid of 1 to 20 carbon atoms, alcohol of 1 to 20 carbon atoms, ether of 1 to 20 carbon atoms, ester of 1 to 20 carbon atoms, amine of 1 to 20 carbon atoms, heterocycle of 1 to 5 rings in which the heteroatom is either nitrogen, oxygen, sulphur or phosphorus, amide of 1 to 20 carbon atoms, thiols of 1 to 20 carbon atoms, phosphine of 1 to 20 carbon atoms, the said substituents being able to be cyclized with one another and optionally containing sulfur or phosphorus atoms,
    - and optionally monomer units derived from a co-monomer,

    provided that that the two substituents cannot both be hydrogen,
    and provided that the said monomer units derived from 4-vinylpyridine represent at least 20% of the degree of polymerization n,
    said monomer or polymer being optionally complexed with a metal,
    said monomer or polymer being linear or crosslinked,
    said monomer or polymer being irreversibly linked to a support.

2. Composition according to claim 1, comprising or consisting of a monomer or polymer grafted onto a support,

    - said monomer or polymer grafted onto a support being of Formula I,

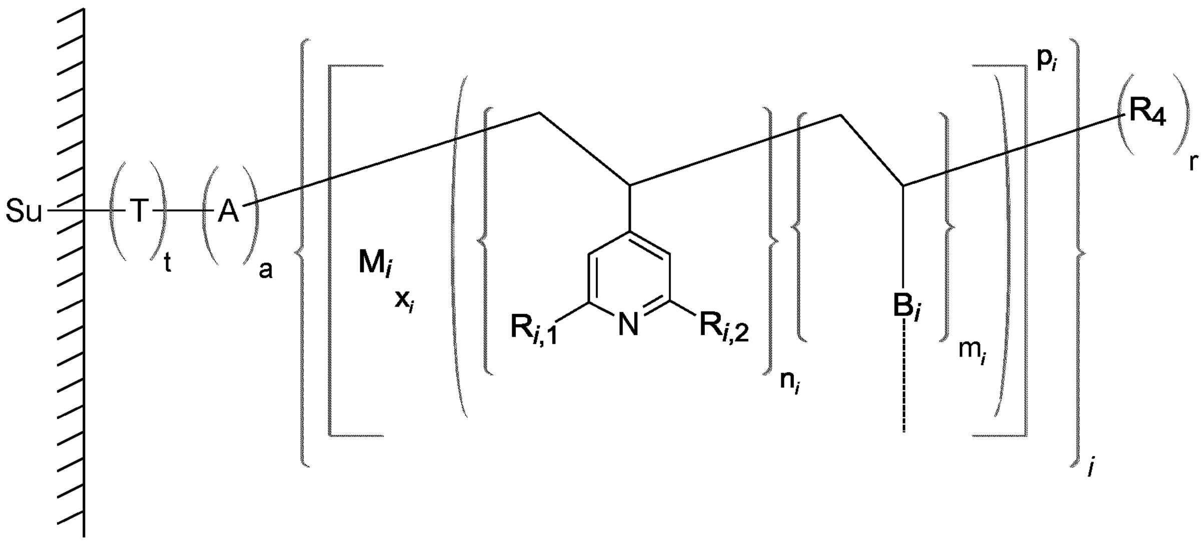

*Formula I*

in which :

- Su is the support on which the monomer or polymer is grafted,
- A is a compound derived from a polymerization initiator,
- T is a compound making the link between the support and any compound derived from a polymerization initiator or between the support and the first monomer unit,
- $R_4$ is a compound allowing the propagation of the polymerization, whether or not derived from said polymerization initiator, or allowing the termination of the polymerization, or a transfer agent,
- t, a and r are identical or different and equal to 0 or 1,
- *i* is a strictly positive indexed integer, varying from 1 to n, itself included from 1 to 10000, and for each *i* :

    ◦ $R_{i,1}$ and $R_{i,2}$ are substituents chosen from the following group: hydrogen, alkyl radical of 1 to 20 carbon atoms, alkene radical of 1 to 20 carbon atoms, aryl radical of 1 to 20 carbon atoms, carboxylic acid of

1 to 20 carbon atoms, alcohol of 1 to 20 carbon atoms, ether of 1 to 20 carbon atoms, ester of 1 to 20 carbon atoms, amine of 1 to 20 carbon atoms, heterocycle of 1 to 5 rings in which the heteroatom is either nitrogen, oxygen, sulphur or phosphorus, amide of 1 to 20 carbon atoms, thiols of 1 to 20 carbon atoms, phosphine of 1 to 20 carbon atoms, the said substituents being able to be cyclized with one another and optionally containing sulfur or phosphorus atoms,
provided that when $R_{i,1}$ represents hydrogen, then $R_{i,2}$ is different from hydrogen, and vice versa,

- $B_i$ is a monomer unit derived from a co-monomer, whether or not forming a crosslinking bridge,
- $M_i$ is a metal cation,
- $n_i$ and $m_i$ are integers equal to 0 or 1,
- $$n_i + m_i = 1,$$
- $x_i$ is a number from 0 and 6,
- $p_i$ is the electrical charge of the metal complex ranging from - 6 and + 6.

said polymer being linear when there is no $B_i$ forming a crosslinking bridge,
said polymer being crosslinked when there is at least one $B_i$ forming a crosslinking bridge between two linear polymers.

- or said monomer or polymer grafted onto a support being of Formula II,

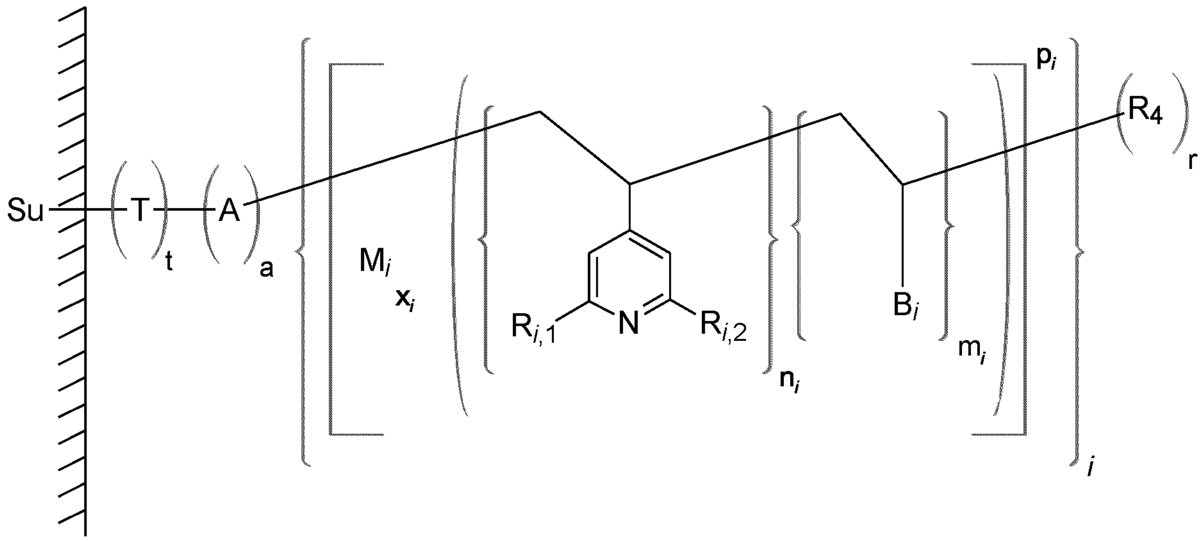

*Formula II*

in which :

- the definitions of Su, $R_{i,1}$, $R_{i,2}$, T, A, $n_i$, $m_i$, $R_4$, $M_i$, t, a, r, $x_i$, $p_i$ and $i$ are as described above,
- $B_i$ is a monomer unit derived from a co-monomer, not forming a crosslinking bridge.

or said monomer or polymer grafted onto a support being of Formula III,

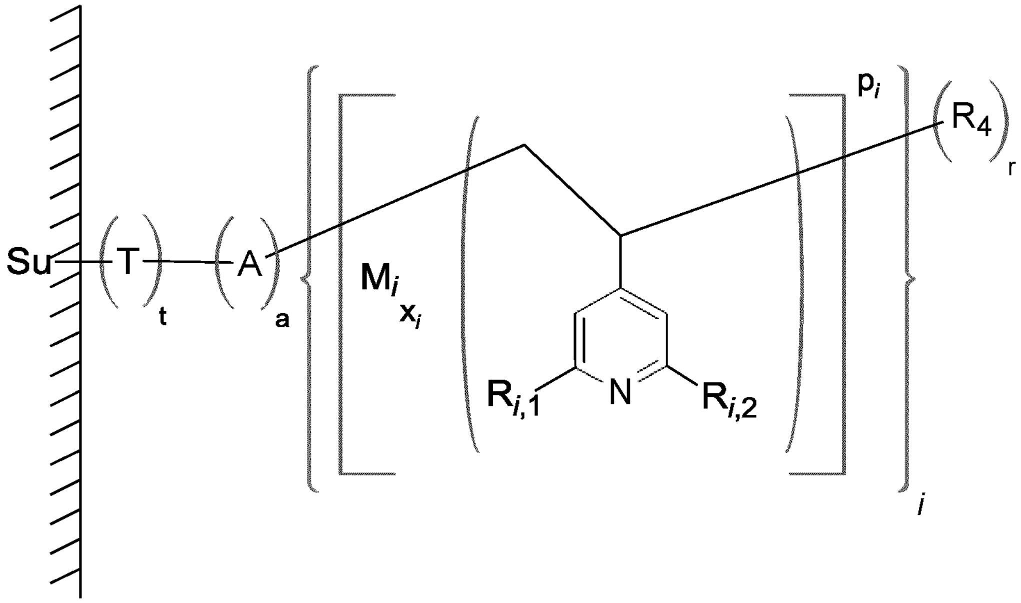

*Formula III*

in which :

- the definitions of Su, $R_{i,1}$, $R_{i,2}$, T, A, $R_4$ , $M_i$, t, a, r, $x_i$, $p_i$ and *i* are as described above.

**3.** Composition according to claims 1 to 2, comprising or consisting of

- a monomer or homopolymer grafted onto a support, said monomer or polymer grafted onto a support being of Formula IV or Formula XII,

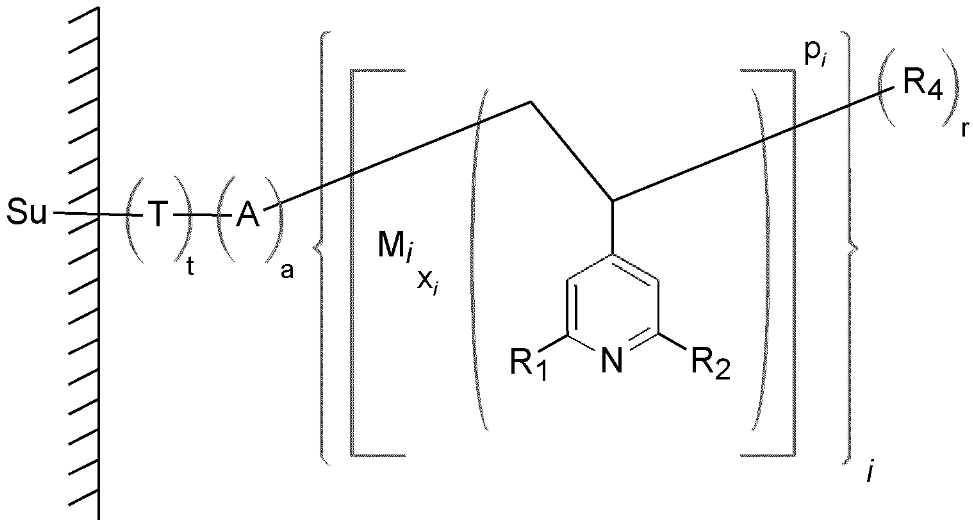

*Formula IV*

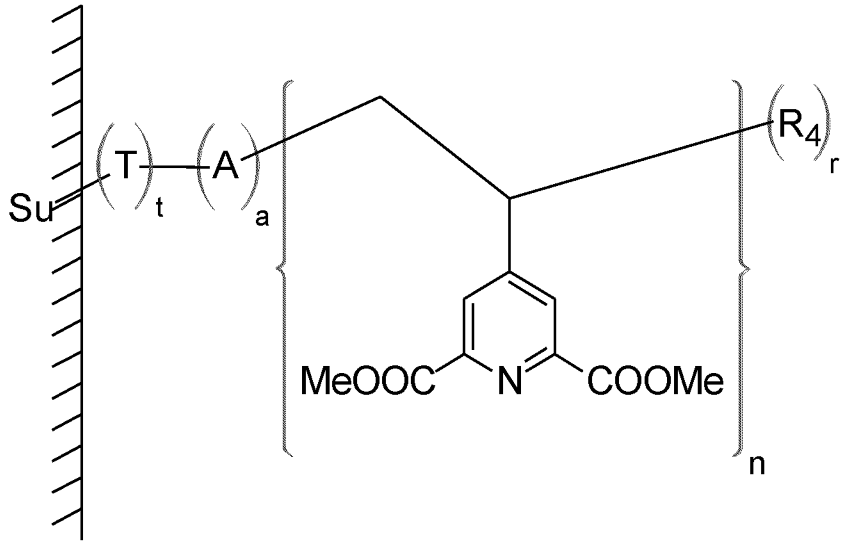

*Formula XII*

in which :

- the definitions of Su, T, A, $R_4$, $M_i$, t, a, r, $x_i$, $p_i$, n and *i* are as described in claim 2,
- $R_1$ and $R_2$ are substituents chosen from the following group: hydrogen, alkyl radical of 1 to 20 carbon atoms, alkene radical of 1 to 20 carbon atoms, aryl radical of 1 to 20 carbon atoms, carboxylic acid of 1 to 20 carbon atoms, alcohol of 1 to 20 carbon atoms, ether of 1 to 20 carbon atoms, ester of 1 to 20 carbon atoms, amine of 1 to 20 carbon atoms, heterocycle of 1 to 5 rings in which the heteroatom is either nitrogen, oxygen, sulphur or phosphorus, amide of 1 to 20 carbon atoms, thiols of 1 to 20 carbon atoms, phosphine of 1 to 20 carbon atoms, the said substituents being able to be cyclized with one another and optionally containing sulfur or phosphorus atoms,
  provided that when $R_1$ represents hydrogen, then $R_2$ is different from hydrogen, and vice versa,

- or a monomer or of a homopolymer grafted onto a support, said monomer or polymer grafted onto a support being of Formula V or Formula VI,

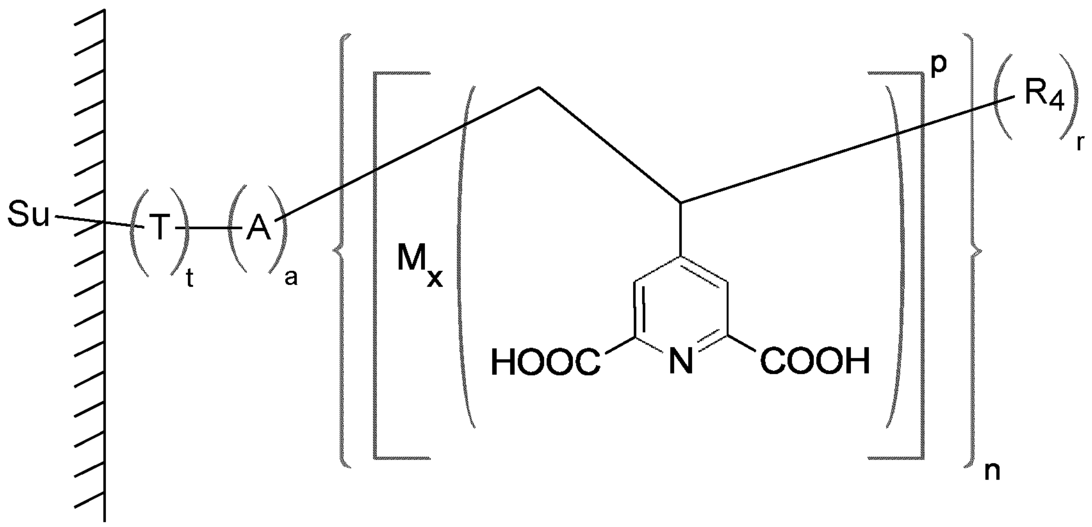

*Formula V*

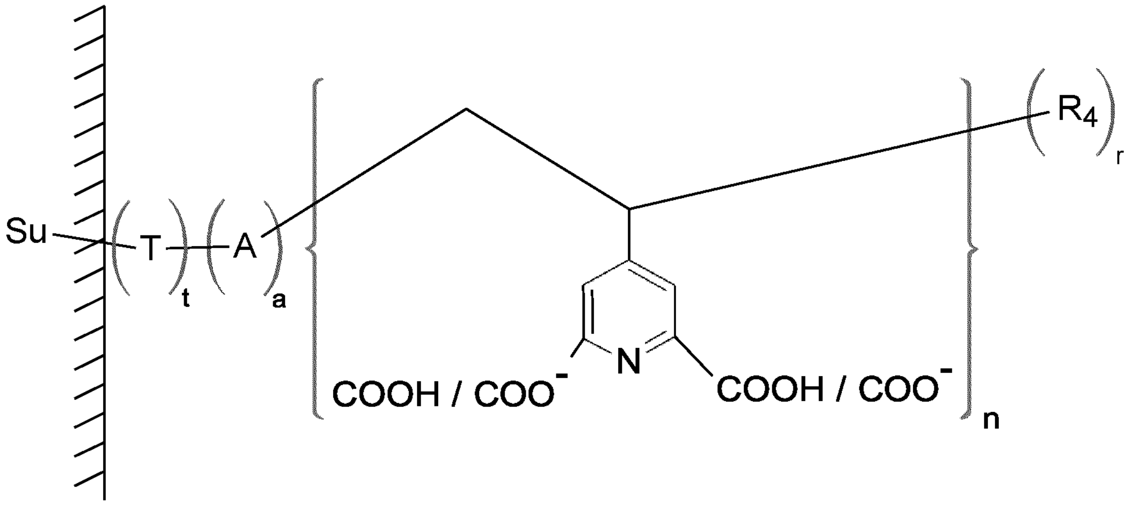

*Formula VI*

in which :

- the definitions of Su, T, A, $R_4$, t, a, n and r are as described in claim 2,
- M is a metallic cation,
- x is a number from 0 and 6,
- p is the electrical charge of the metal complex ranging from - 6 and + 6

- or of a monomer or homopolymer complexed with uranium grafted onto a support, said monomer or polymer grafted onto a support being of Formula XIII,

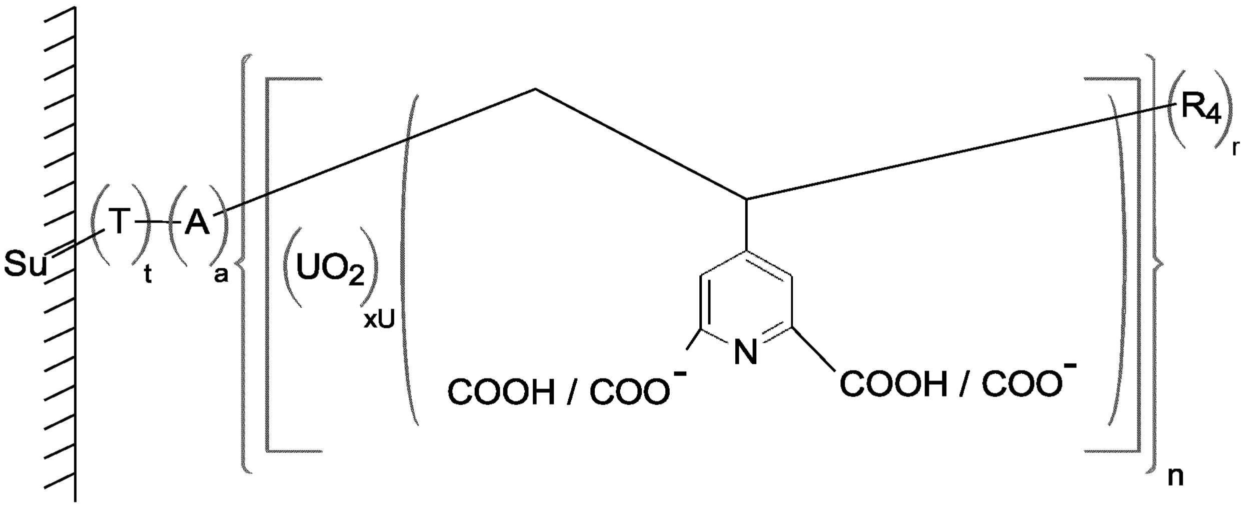

*Formula XIII*

in which :

- the definitions of Su, T, A, $R_4$ , t, a, n and r are as described in claim 2,
- xU is a number comprised from 0 to 6.

**4.** Composition according to claims 1 to 2, comprising or consisting

- of a polymer grafted onto a support, the said polymer having at least one monomer unit derived from a comonomer, in particular monomer units derived from styrene or acrylic acid;
- or of a copolymer grafted onto a support, in which the level of monomer unit derived from a comonomer varies

from a value strictly greater than 0% to a value less than 80%.

**5.** Composition according to claim 4, comprising or consisting of a two-block copolymer, grafted onto a support, the said polymer grafted onto a support being of Formula XVIII or Formula XIX,

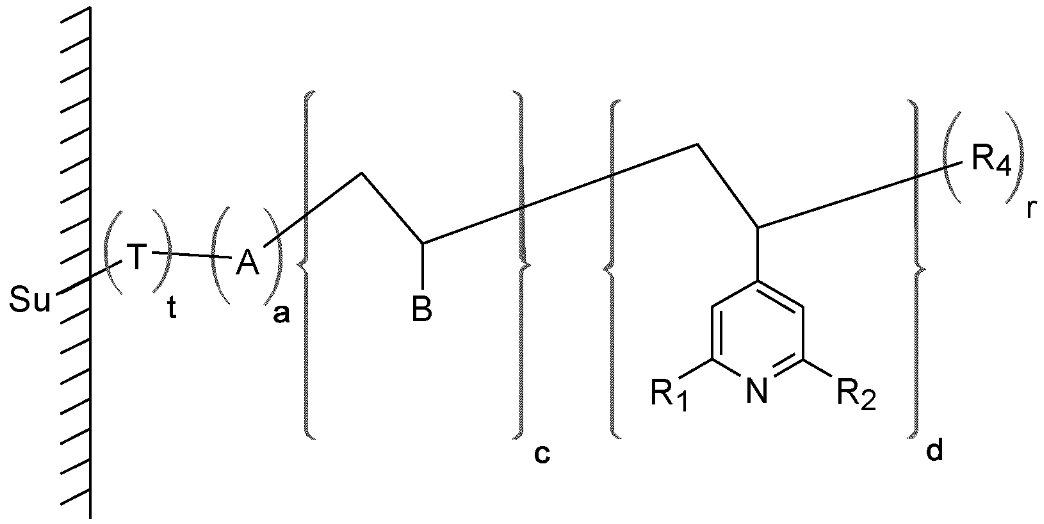

*Formula XVIII*

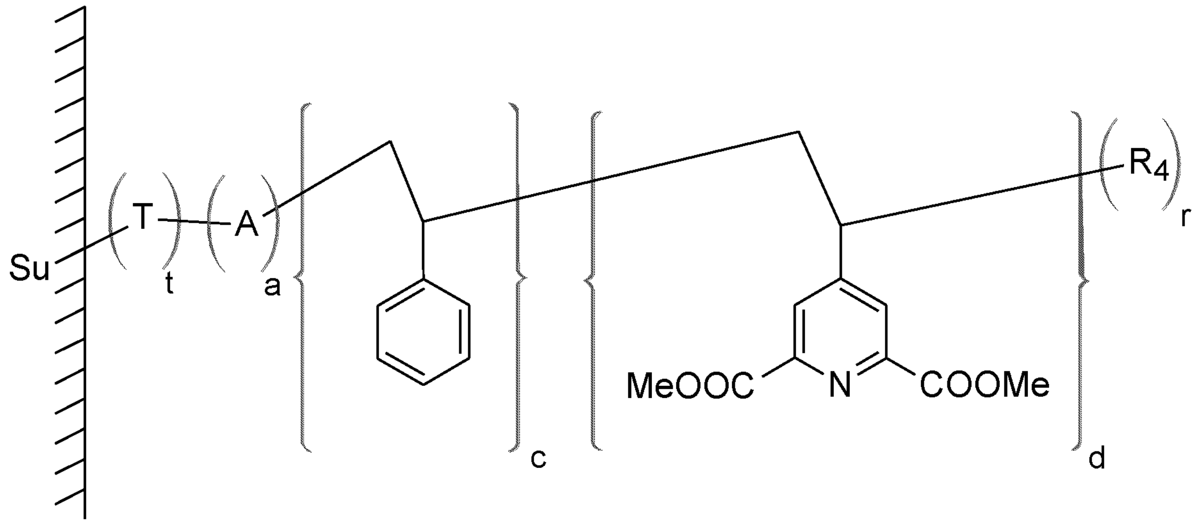

*Formula XIX*

in which :

- the definitions of Su, T, A, $R_4$, t, a, and r are as described in claim 2,
- $R_1$ and $R_2$ are substituents chosen from the following group: hydrogen, alkyl radical of 1 to 20 carbon atoms, alkene radical of 1 to 20 carbon atoms, aryl radical of 1 to 20 carbon atoms, carboxylic acid of 1 to 20 carbon atoms, alcohol of 1 to 20 carbon atoms, ether of 1 to 20 carbon atoms, ester of 1 to 20 carbon atoms, amine of 1 to 20 carbon atoms, heterocycle of 1 to 5 rings in which the heteroatom is either nitrogen, oxygen, sulphur or phosphorus, amide of 1 to 20 carbon atoms, thiols of 1 to 20 carbon atoms, phosphine of 1 to 20 carbon atoms, the said substituents being able to be cyclized with one another and optionally containing sulfur or phosphorus atoms,

provided that when $R_1$ represents hydrogen, then $R_2$ is different from hydrogen, and vice versa,
- B is a monomer unit derived from a co-monomer,
- d is the degree of polymerization of the block consisting of monomer units derived from 4- vinylpyridine and

d is an integer,

- c is the degree of polymerization of the block consisting of the monomer units derived from the co-monomer and c is an integer,
- 

$$d + c = n.$$

**6.** Composition according to claims 1 to 2, comprising or consisting of a crosslinked copolymer, grafted onto a support, the said polymer grafted onto a support being of Formula XX or of Formula XXI,

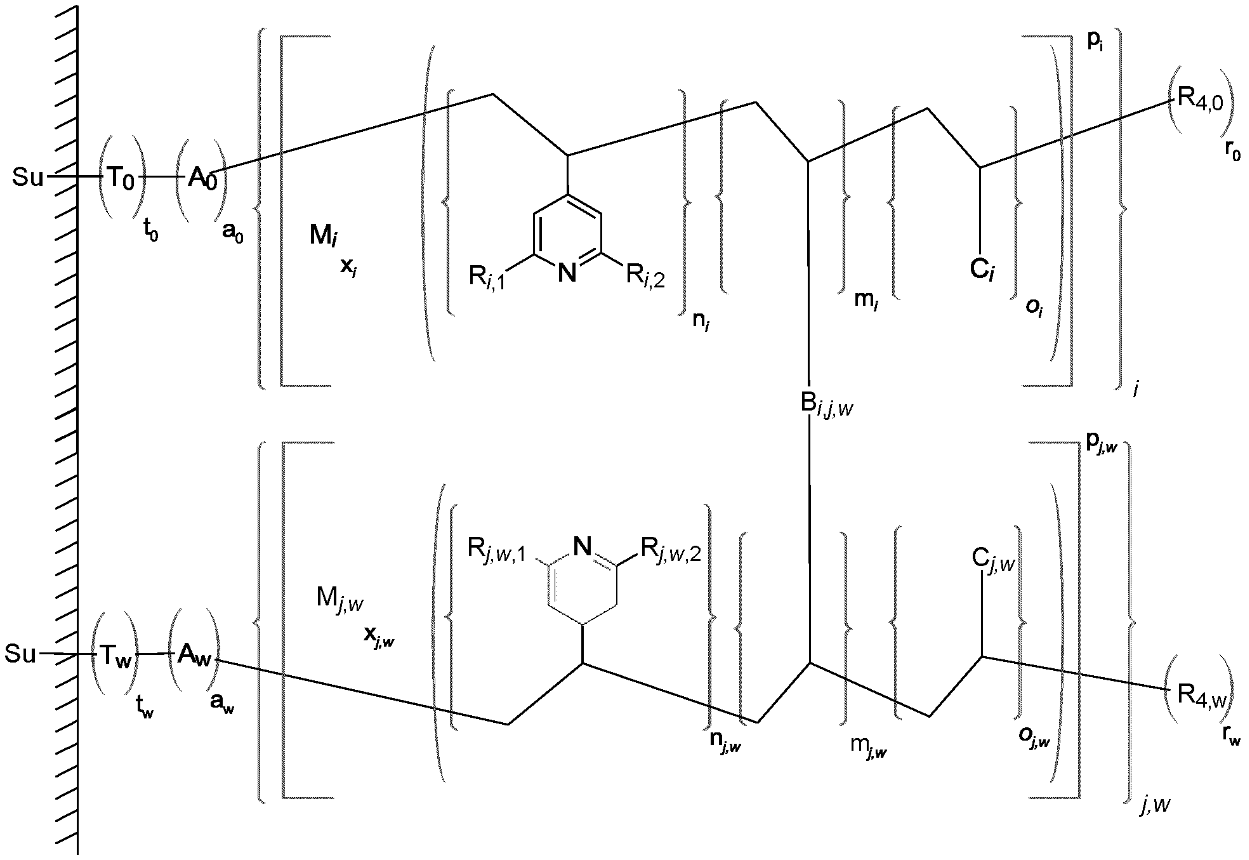

*Formula XX*

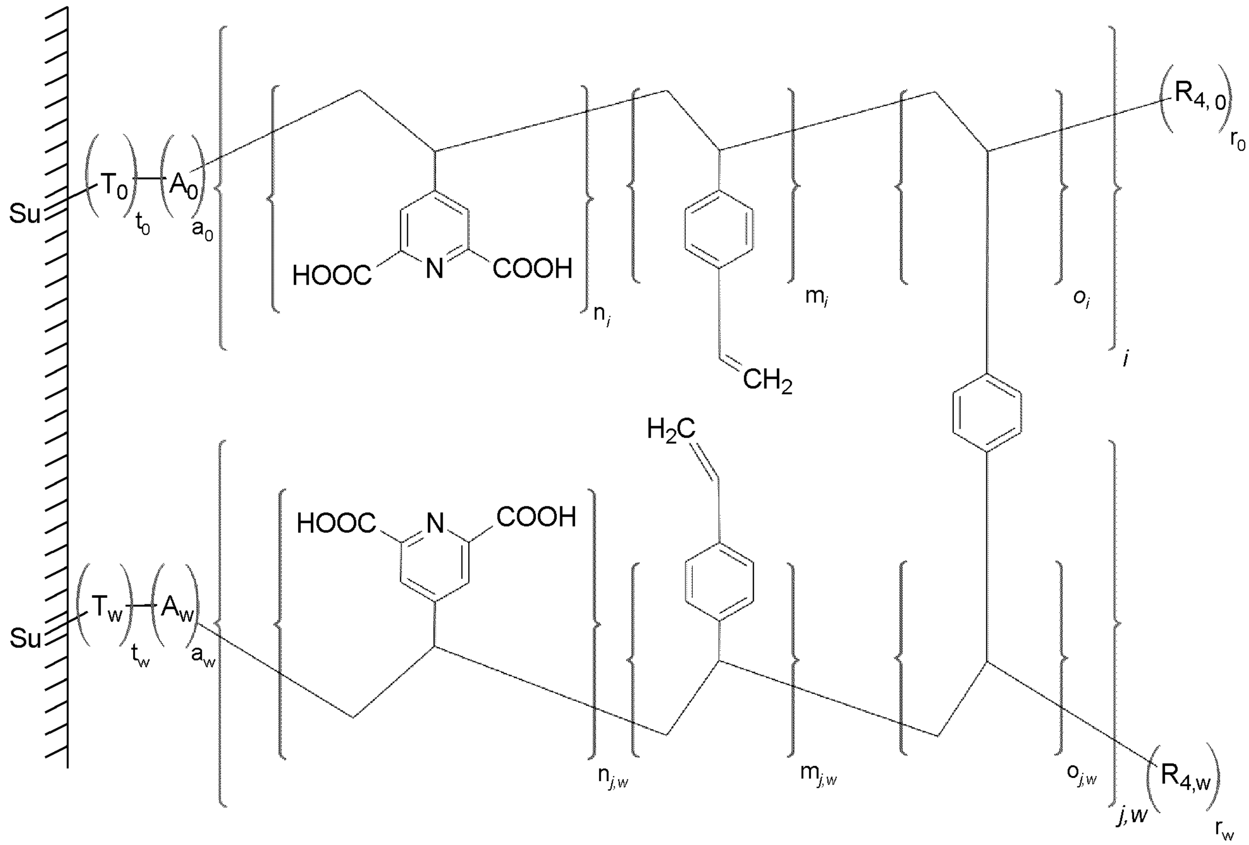

*Formula XXI*

in which :

- Su is the support on which the polymers are fixed,
- w is a strictly positive indexed integer, varying from 1 to the number of polymer crosslinked with the polymer of index 0, itself comprised from 1 to 1000,
- $A_0$ and $A_w$ are compounds originating from polymerization initiators,
- $T_0$ and the $T_w$ are are compounds making the link between the support and possible compounds originating from polymerization initiators or between the support and the respective first monomer unit,
- $R_{4,0}$ and $R_{4,w}$ are compounds permitting the propagation of the polymerization, whether or not derived from said polymerization initiator, or allowing the termination of the polymerization, or a transfer agent,
- $t_0$, $a_0$, $r_0$, $t_w$, $a_w$ and $r_w$ are the same or different and are worth 0 or 1,
- *i and j,w* are strictly positive integers, indexed, varying respectively from 1 to $n_i$ , and from 1 to $n_{j,w}$ , $n_i$ and $n_{j,w}$ being included from 1 to 9999,
- $n + n_{ij,w} = n$ , *n* being from 3 and 10,000,

and for each *i* and each *j,w* :

◦ $R_{i,1}$, $R_{i,2}$, $R_{j,w,1}$ and $R_{j,w,2}$ are substituents selected from the following group: hydrogen, alkyl radical of 1 to 20 carbon atoms, alkene radical of 1 to 20 carbon atoms, aryl radical of 1 to 20 carbon atoms, carboxylic acid of 1 to 20 carbon atoms, alcohol of 1 to 20 carbon atoms, ether of 1 to 20 carbon atoms, ester of 1 to 20 carbon atoms, amine of 1 to 20 carbon atoms, heterocycle of 1 to 5 rings in which the heteroatom is either nitrogen, oxygen, sulphur or phosphorus, amide of 1 to 20 carbon atoms, thiols of 1 to 20 carbon atoms, phosphine of 1 to 20 carbon atoms, the said substituents being able to be cyclized with one another and optionally containing sulfur or phosphorus atoms

provided that when $R_{i,1}$ represents hydrogen, then $R_{i,2}$ is different from hydrogen, and vice versa,
provided that when $R_{j,w,1}$ represents hydrogen, then $R_{j,w,2}$ is different from hydrogen, and vice versa,

◦ $B_{i,j,w}$ is a monomer unit derived from a co-monomer, forming a crosslinking bridge between the polymer 0 in position *i* and the polymer of index *w* in position *j*,

◦ the $C_i$ and the $C_{j,w}$ are monomer units derived from a co-monomer which does not form a crosslinking bridge,
◦ $n_i$ , $m_i$ , $o_i$ , $n_{j,w}$ , $m_{j,w}$ , and $o_{j,w}$ are integers equal to 0 or 1,
◦

$$n_i + m_i + o_i = 1,$$

◦

$$n_{j,w} + m_{j,w} + o_{j,w} = 1,$$

◦ the sum of $o_{j,w}$ is non-zero, and the sum of $o_i$ is non-zero.

**7.** Composition according to claims 1 to 6, comprising or consisting of a monomer or polymer grafted onto a support in which the said monomer or polymer is complexed with a metal, preferably chosen from actinides, lanthanides or transition metals, in particular uranium.

**8.** Composition according to claims 1 to 7, comprising or consisting of a monomer or polymer grafted onto a support,

- said monomer or polymer being solvated in aqueous solution and in particular in seawater;
- or said monomer or polymer being complexed with a metal, and being solvated or not in aqueous solution;
- or said monomer or polymer being solvated in aqueous solution, not complexed with a metal, and not solvated in solution complexed with a metal, in particular uranium;
- or said monomer or polymer being solvated in organic solvents, in particular acetonitrile and dimethyl sulphoxide (DMSO).

**9.** Composition according to claims 1 to 8 comprising or consisting of a monomer or polymer grafted onto a support, said support Su being selected from the polyvinyl chloride-polyvinylidene chloride (PVC-co-PVDC), polyvinyl chloride (PVC), PET or $SiO_2$ ;

- and/or the said compound T being chosen from hydroxy or the compound of Formula XXII

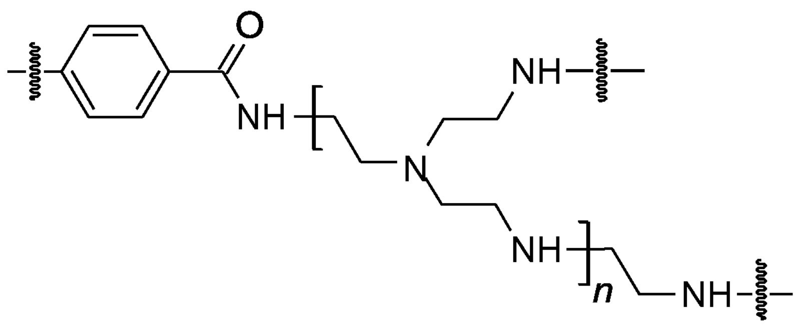

*Formula XXII*

- and/or A is derived from a polymerization initiator chosen from 4-(chloromethyl)benzoyl chloride, benzyl chloride, AIBN, methyl 2-bromo-2-methylpropanoate or the compound of Formula XXIII.

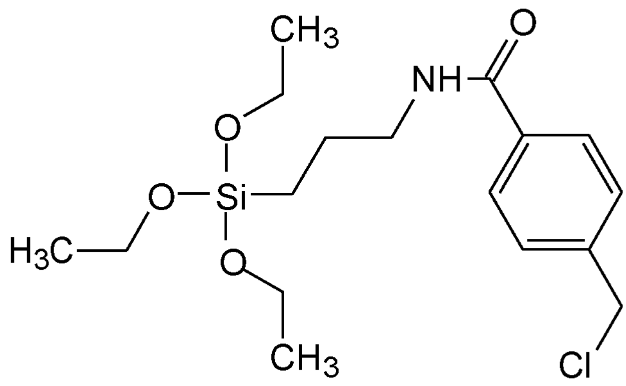

*Formula XXIII*

- and/or the said compound $R_4$ being chosen from a chlorine atom, or the compounds of Formula XXIV.

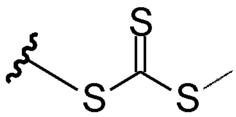

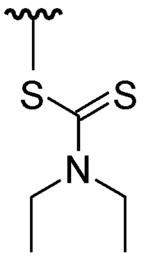

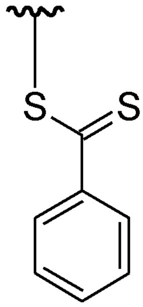

*Formula XXIV*

**10.** Composition according to claims 1 to 9, comprising or consisting of a monomer or of a polymer grafted onto a support of Formula XXV, Formula XXVI, Formula XXVII, Formula XXVIII, Formula XXIX, or Formula XXX.

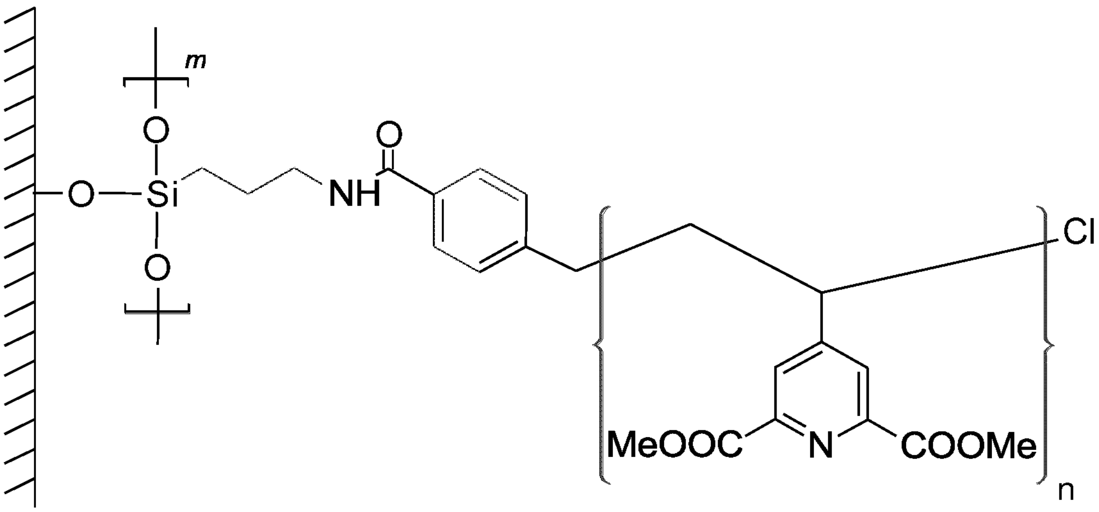

*Formula XXV*

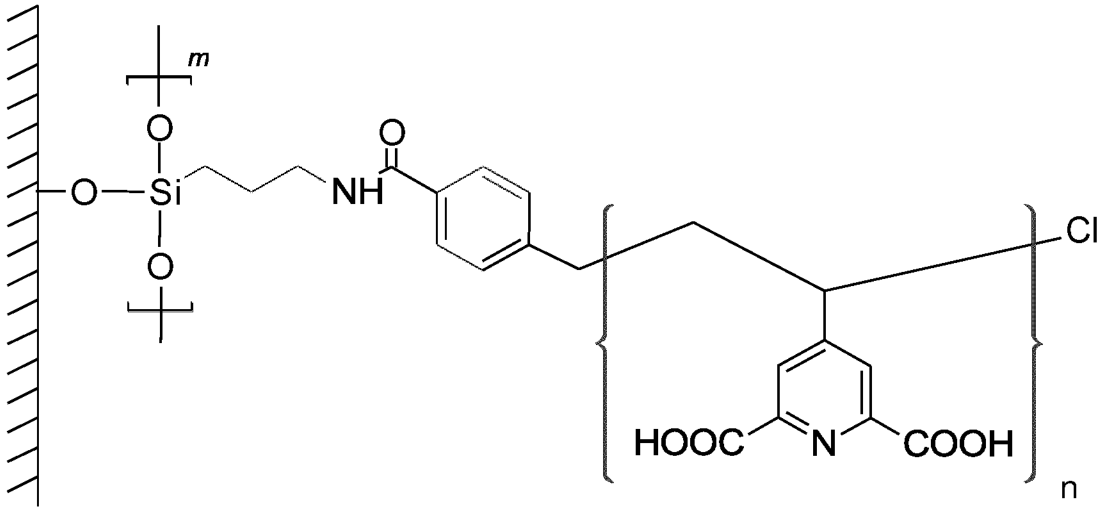

*Formula XXVI*

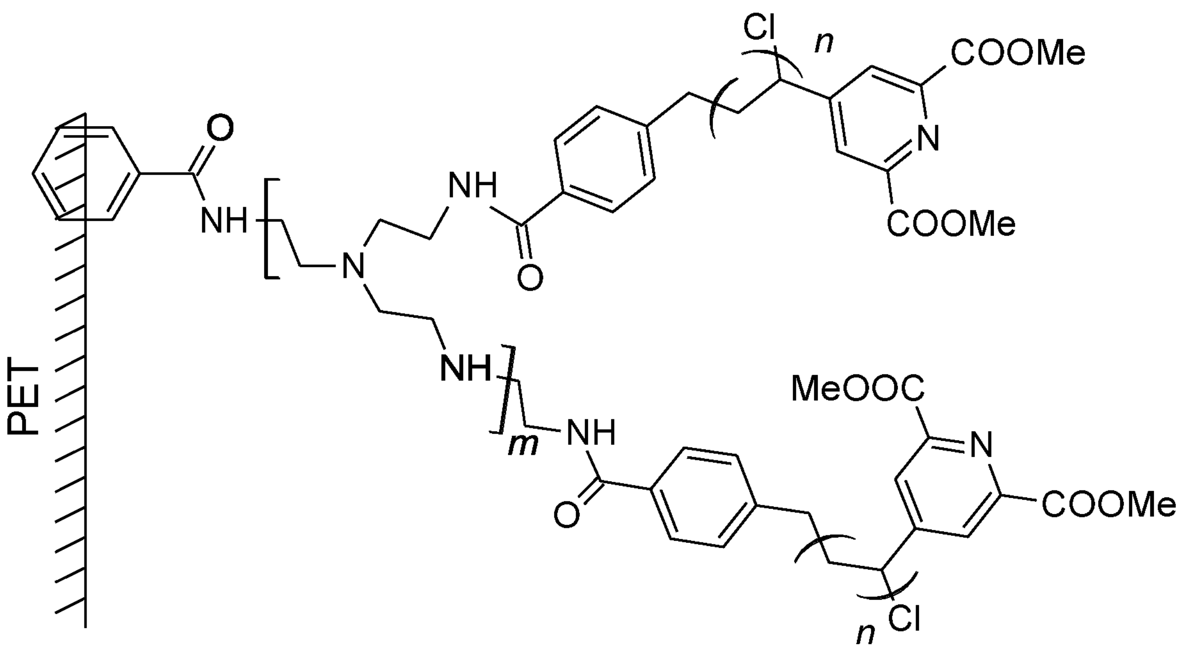

*Formula XXVII*

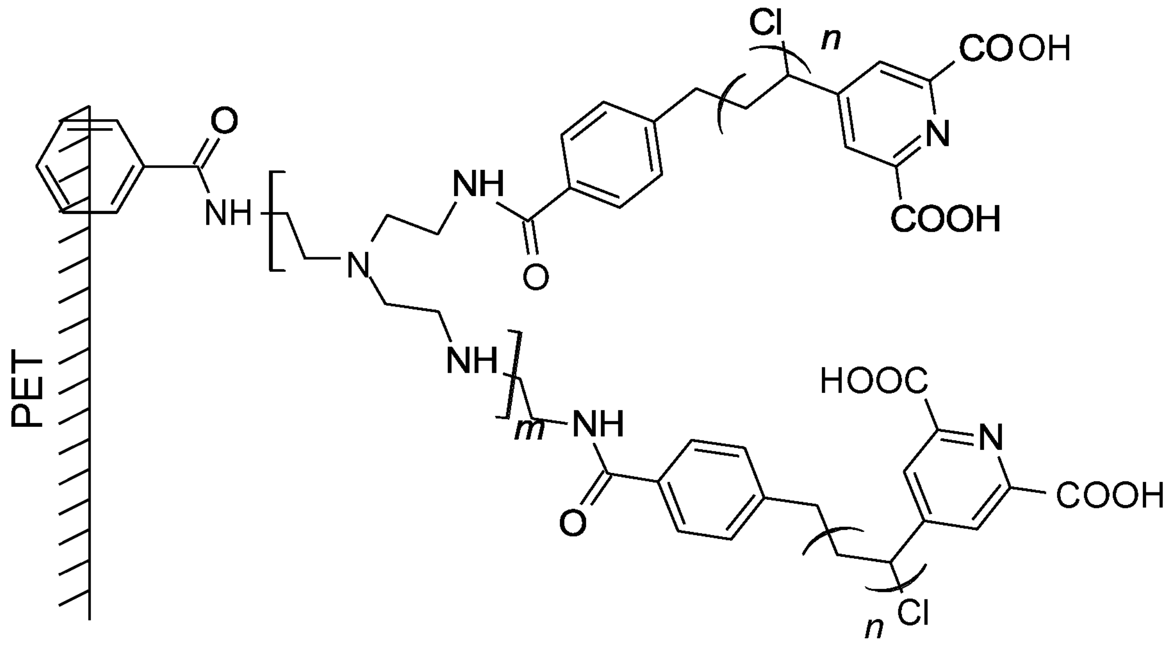

*Formula XXVIII*

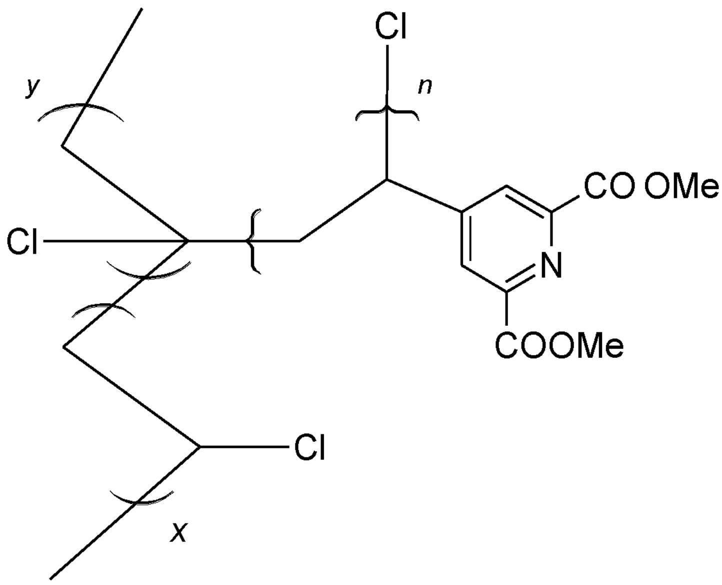

*Formula XXIX*

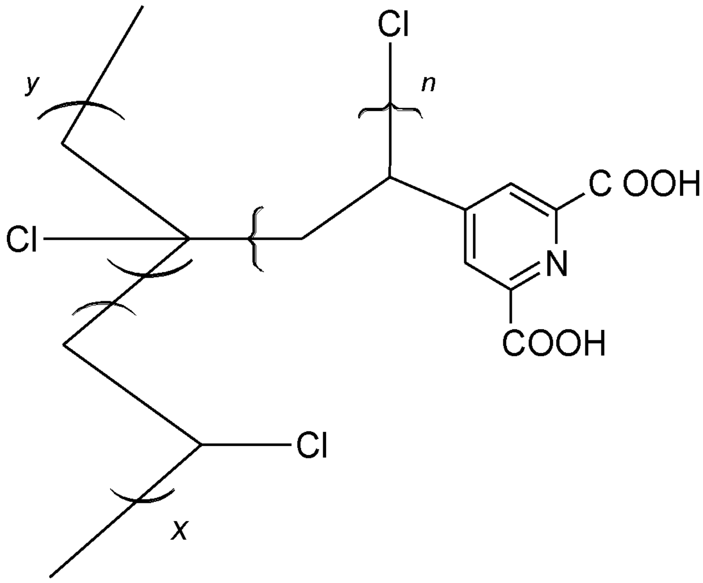

Formula XXX

**11.** Process for preparing a monomer or a polymer grafted in particular covalently to a support according to claims 1 to 10, comprising the following preparation steps:

a. an optional step of pre-treating the support by bringing said support into contact with a pre-treatment reagent and/or a physical pre-treatment, in order to obtain a support optionally pre-treated,
b. an optional step of pre-grafting on the support optionally pre-treated by bringing said optionally pre-treated support into contact with a polymerization initiator, to obtain a support optionally pre-treated and optionally pre-grafted,
c. a radical polymerization step starting with the priming of the optionally pre-treated and optionally pre-grafted support and then continuing by bringing the optionally pre-treated and optionally pre-grafted support into contact with

◦ at least one monomer derived from 4-vinylpyridine in which the carbon atoms in positions 2 and 6 may be substituted by one of the substituents from the following group : hydrogen, alkyl radical having from 1 to 20 carbon atoms, alkene radical having from 1 to 20 carbon atoms, aryl radical having from 1 to 20 carbon atoms, alcohol having from 1 to 20 carbon atoms, ether having from 1 to 20 carbon atoms, ester having from 1 to 20 carbon atoms, amine having from 1 to 20 carbon atoms, heterocycle having from 1 to 5 rings in which the heteroatom is either nitrogen oxygen, sulphur or phosphorus, amide of 1 to 20 carbon atoms, thiols of 1 to 20 carbon atoms, phosphine of 1 to 20 carbon atoms, the said substituents being able to be cyclized with one another and optionally containing sulfur or phosphorus atoms,
◦ and optionally at least one co-monomer,
with or without crosslinking
to obtain a monomer or polymer grafted onto the support,
preferably NMP, RAFT, ATRP or conventional radical polymerization.

d. an optional modification step by bringing the monomer or polymer grafted onto the support into contact with a reagent to modify at least one of the abovementioned substituents, to obtain a monomer or polymer grafted onto the support optionally modified,
e. an optional complexation step by bringing the monomer or polymer grafted onto the support and optionally modified into contact with a metal cation to obtain a monomer or polymer grafted onto the support, optionally modified and optionally complexed.

**12.** Process for preparing a monomer or a polymer grafted onto a support according to claim 11,

- said monomer or polymer grafted onto a support being of Formula I, said process comprising :

a. an optional step of pretreatment of the support by bringing the said support into contact with a pretreatment reagent and/or by the action of a physical pretreatment on the said support, in order to obtain a support optionally pre-treated with Formula XXXI,

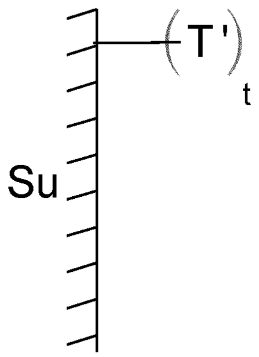

*Formula XXXI*

in which

- T' is a compound resulting from the pre-treatment of the support Su, containing fragments of either the support or the pre-treatment reagent, or both.
- t is an integer 0 or 1,

b. an optional pre-grafting step onto the optionally pre-treated support of Formula XXXI by bringing the support into contact with a polymerization initiator, in order to obtain a support that is optionally pre-treated and optionally pre-grafted of Formula XXXII,

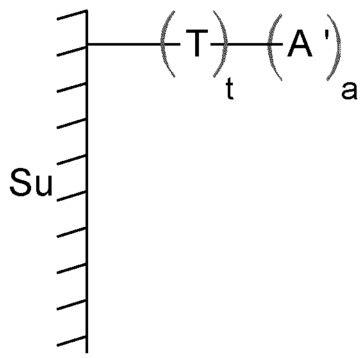

*Formula XXXII*

in which

- A' is a compound from the pre-grafting step on the support, containing fragments of the polymerization initiator
- a is an integer 0 or 1,

c. a radical polymerization step starting with the priming of the optionally pre-treated and optionally pre-grafted support of Formula XXXII followed by the contacting of the optionally pre-treated and optionally pre-grafted support into contact with the 4-vinylpyridine derivative of Formula XXXIII

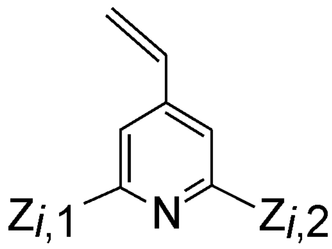

*Formula XXXIII*

in which :

- $Z_{i,1}$ and $Z_{i,2}$ are substituents selected from the following group: hydrogen, alkyl radical having from 1 to 20 carbon atoms, alkene radical having from 1 to 20 carbon atoms, aryl radical having from 1 to 20 carbon atoms, alcohol having from 1 to 20 carbon atoms, ether having from 1 to 20 carbon atoms, ester having from 1 to 20 carbon atoms, amine having from 1 to 20 carbon atoms, heterocycle having from 1 to 5 rings in which the heteroatom is either nitrogen oxygen, sulphur or phosphorus, amide of 1 to 20 carbon atoms, thiols of 1 to 20 carbon atoms, phosphine of 1 to 20 carbon atoms, the said substituents being able to be cyclized with one another and optionally containing sulfur or phosphorus atoms,

said polymerization step being carried out:

- optionally with at least one co-monomer,
- with or without crosslinking,

to obtain a monomer or a polymer grafted onto a support of Formula XXXIV

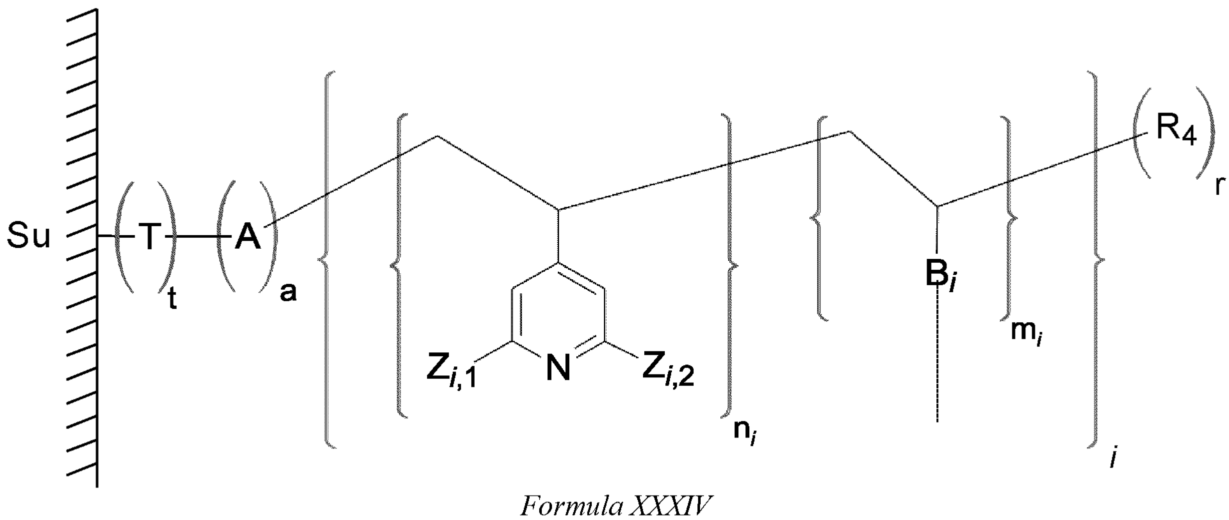

*Formula XXXIV*

d. a medication step, when at least one of the $Z_{i,1}$ is different from $R_{i,1}$ or when at least one of the $Z_{i,2}$ is different from $R_{i,2}$, of the said monomer or the said polymer of Formula XXXIV with a reagent for modifying at least one of the abovementioned substituents $Z_{i,1}$ and $Z_{i,2}$, the said reagent containing a hydroxide, carbonate or phosphate anion, in order to obtain the monomer or the polymer grafted onto a support of Formula XXXV

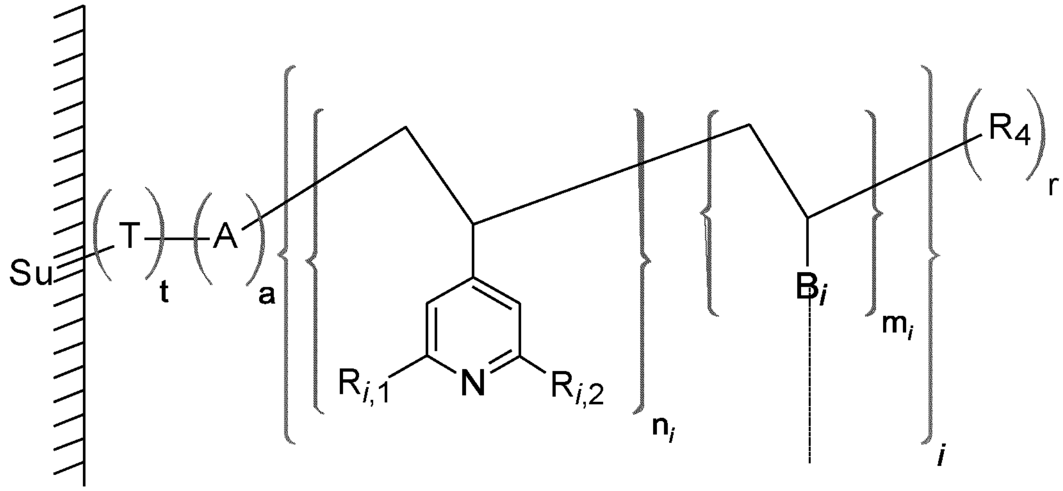

*Formula XXXV*

e. an optional complexing step of said monomer or said polymer grafted onto a support of Formula XXXV with at least one metal cation to obtain the monomer or the polymer grafted onto a support of Formula I ;

- or said monomer or polymer being of Formula II with t=1 and a=1, wherein the definitions of $R_{i,1}$ and $R_{i,2}$ are as described in claim 2, said process comprising :

a. a step of pretreatment of the support by bringing the support and a pretreatment reagent into contact and/or by the action of a physical pretreatment on said support, in order to obtain a pre-treated support of Formula XXXVIII, in which,

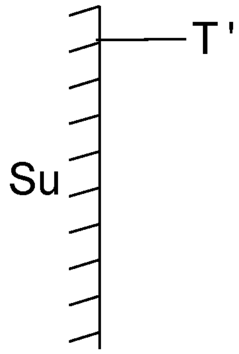

*Formula XXXVIII*

• the definitions of Su and T' are as described above,

b. a step of pre-grafting said pre-treated support of Formula XXXVIII by bringing it into contact with a polymerization initiator, to obtain a pre-treated and pre-grafted support of Formula XLII

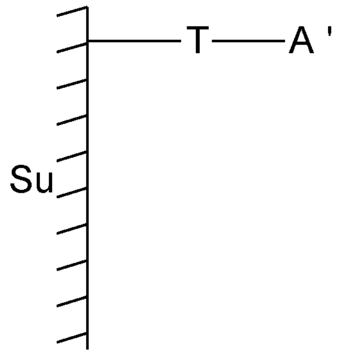

*Formula XLII*

in which

- the definitions of T and A' are as described above,

c. a radical polymerization step starting with the priming of the pre-treated and pre- grafted support of Formula XLII followed by bringing the pre-treated and pre-grafted support into contact with the 4-vinylpyridine derivative of Formula XXXIII and optionally with at least one co-monomer in order to obtain a monomer or a polymer grafted onto a support of Formula XLIII

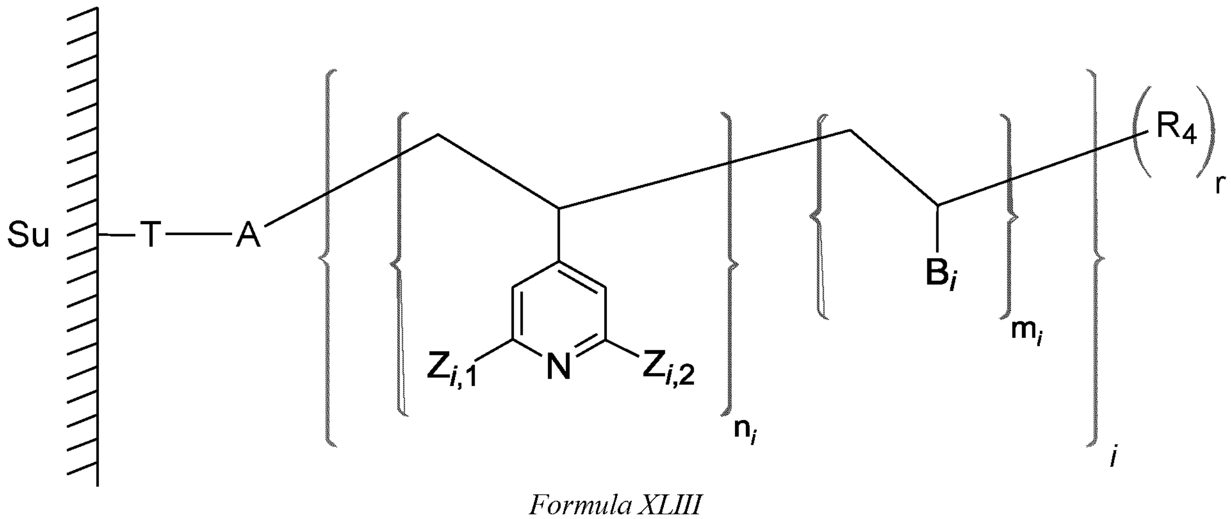

*Formula XLIII*

in which :

- the definitions of A, $R_4$ , $B_i$, n; , $m_i$ , r and *i* are as described in Formula II,
- the definitions of Z;,1 and $Z_{i,2}$ are as described above,

d. a modification step, when at least one of the $Z_{i,1}$ is different from $R_{i,1}$ or when at least one of the $Z_{i,2}$ is different from $R_{i,2}$, of said monomer or said polymer grafted onto a support of Formula XLIII with a reagent for modifying at least one of $Z_{i,1}$ or $Z_{i,2}$, said reagent containing a hydroxide, carbonate or phosphate anion, in order to obtain the monomer or the polymer grafted onto a support of Formula XLIV

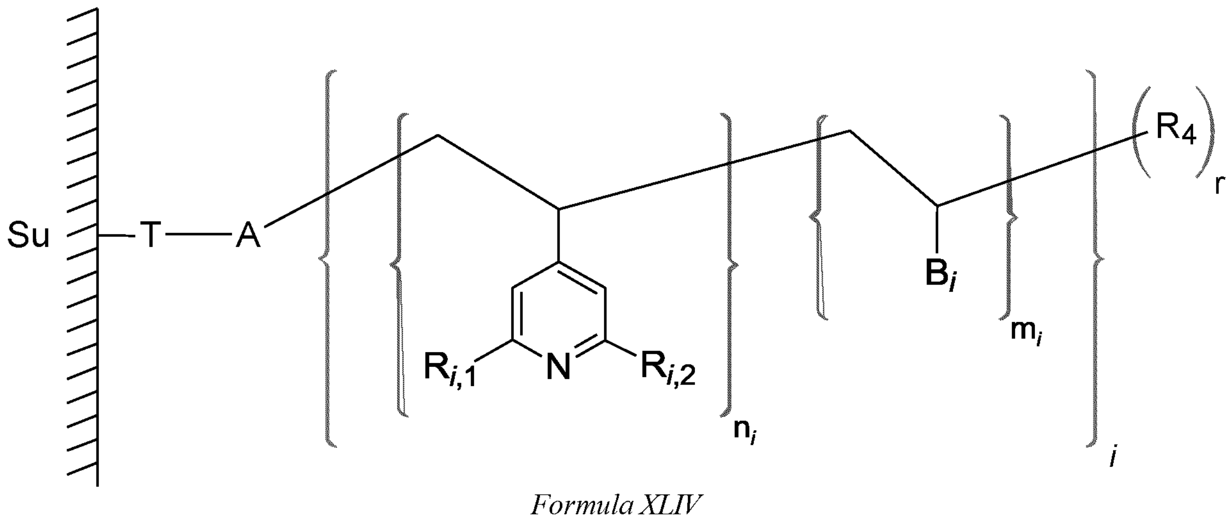

*Formula XLIV*

e. an optional complexing step of said monomer or polymer grafted onto a support of Formula XLIV with at least one metal cation to obtain the monomer or polymer grafted onto a support of Formula II, in which t=1 and a=1 ;

- or the said monomer or the said polymer grafted onto a support being of Formula II with t=0 and a=0, in which the definitions of $R_{i,1}$ and $R_{i,2}$ are as described in claim 2, the said process not comprising a pretreatment step or an initiation step and comprising

a. a radical polymerization step starting with the priming of the support and followed by bringing the support into contact with the 4-vinylpyridine derivative of Formula XXXIII, and optionally with at least one comonomer, with or without crosslinking, to obtain a monomer or a polymer grafted onto a support of Formula XLV

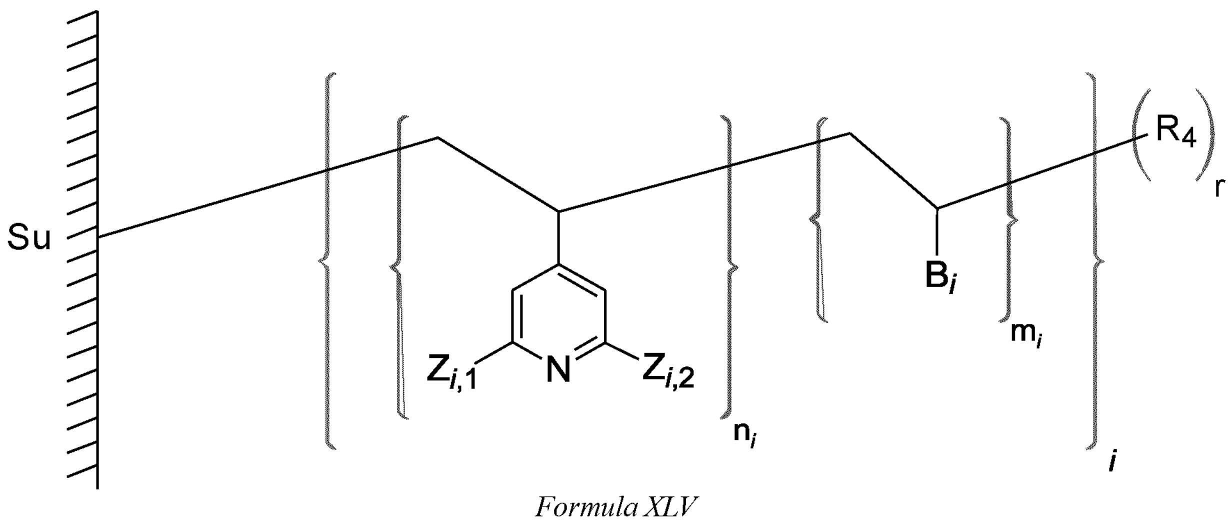

*Formula XLV*

in which :

- the definitions of Su, $R_4$, $B_i$, $n_i$ , $m_i$, r and *i* are as in Formula II,
- the definitions of $Z_{i,1}$ and $Z_{i,2}$ are such when in Formula XXXIII

b. a modification step, when at least one of the $Z_{i,1}$ is different from $R_{i,1}$ or when at least one of the $Z_{i,2}$ is different from $R_{i,2}$ of said monomer or said polymer grafted onto a support of Formula XLV with a reagent for modifying at least one of the $Z_{i,i}$ or the $Z_{i,2}$, said reagent containing a hydroxide, carbonate or phosphate anion, in order to obtain the monomer or the polymer grafted onto a support of Formula XLVI,

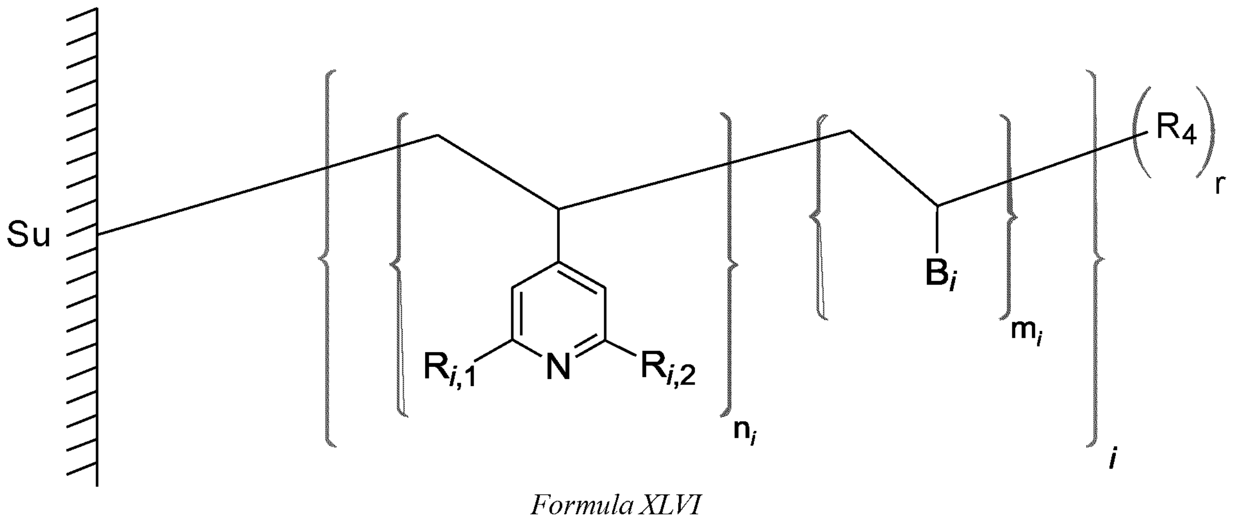

*Formula XLVI*

c. an optional complexing step of said monomer or said polymer grafted onto a support of Formula XLVI with at least one metal cation to obtain the monomer or the polymer grafted onto a support of Formula II with t=0 and a=0;

- or said monomer or polymer being of Formula IV with t=1 and a=1, wherein the definitions of $R_1$ and $R_2$ are as described in claim 3,
said process comprising:

a. a step of pretreating the support by bringing the support into contact with a pretreatment reagent and/or by the action of a physical pretreatment on said support, in order to obtain a pre-treated support of Formula XXXVIII,
b. a step of pre-grafting the pre-treated support of Formula XXXVIII by bringing it into contact with a polymerization initiator, to obtain a pre-treated and pre-grafted support of Formula XLII
c. a radical polymerization step, beginning with the priming of the pre-treated and pre-grafted support of Formula XLII, followed by bringing the pre-treated and pre-grafted support into contact with the 4-vinylpyridine derivative of Formula XLIX,

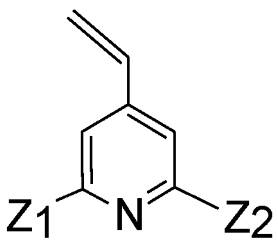

*Formula XLIX*

in which :

• $Z_1$ and $Z_2$ are substituents selected from the following group: hydrogen, alkyl radical having from 1 to 20 carbon atoms, alkene radical having from 1 to 20 carbon atoms, aryl radical having from 1 to 20 carbon atoms, alcohol having from 1 to 20 carbon atoms, ether having from 1 to 20 carbon atoms, ester having from 1 to 20 carbon atoms, amine having from 1 to 20 carbon atoms, heterocycle having from 1 to 5 rings in which the heteroatom is either nitrogen oxygen, sulphur or phosphorus, amide of 1 to 20 carbon atoms, thiols of 1 to 20 carbon atoms, phosphine of 1 to 20 carbon atoms, the said substituents being able to be cyclized with one another and optionally containing sulfur or phosphorus atoms,

to obtain a monomer or polymer grafted onto a support of Formula L

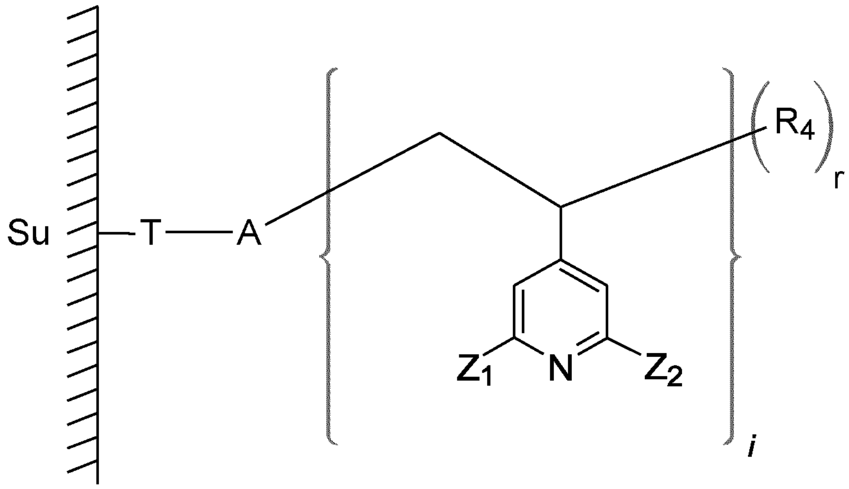

*Formula L*

in which :

- the definitions of T, A, $R_4$ , r and *i* are as described in claim 2,

d. a modification step, when $Z_1$ is different from $R_1$ or when $Z_2$ is different from Rz of said monomer or said polymer grafted onto a support of Formula L with a reagent to modify at least one of the abovementioned substituents $Z_1$ and $Z_2$, and containing a hydroxide, carbonate or phosphate anion, to obtain the monomer or the polymer grafted onto a support of Formula LI

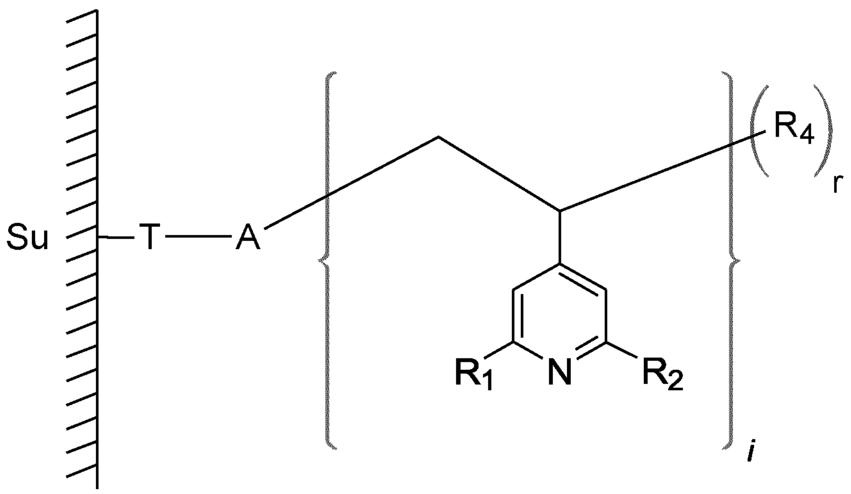

*LI formula*

e. an optional complexing step of said monomer or said polymer grafted onto a support of Formula LI with at least one metal cation to obtain the monomer or the polymer grafted onto a support of Formula IV in which t=1 and a=1 ;

- or said monomer or said polymer grafted onto a support being of Formula XXIX and said support being PET wherein
said process comprising:

a. a step of pretreatment of a PET support by bringing said support into contact with polyethyleneimine to obtain a pre-treated support of Formula LXV

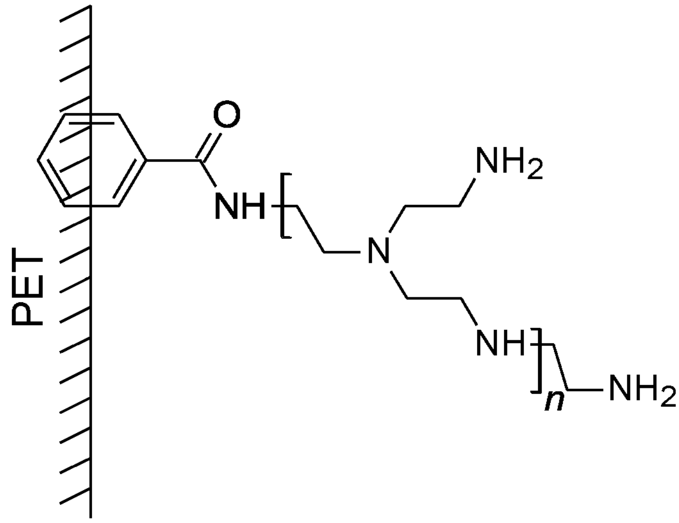

*Formula LXV*

wherein T' represents a compound of Formula LXVI

T' :

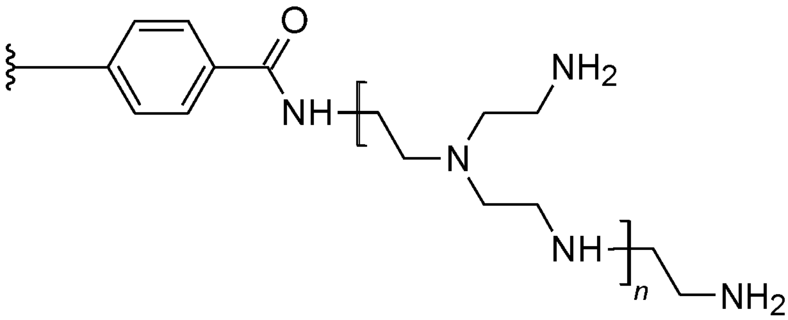

*Formula LXVI*

b. a step of pre-grafting the pre-treated support of Formula LXV by bringing into contact said support with 4-(chloromethyl)benzoyl chloride, to obtain a pre-treated and pre-grafted support of Formula LXVII

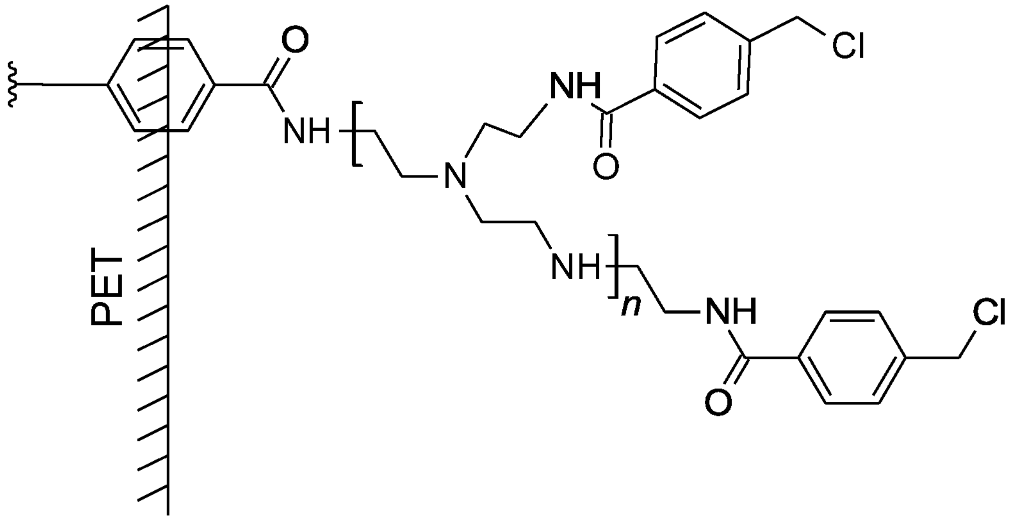

*Formula LXVII*

in which T represents a compound of Formula XXII and X' a compound of Formula LXVIII

X' :

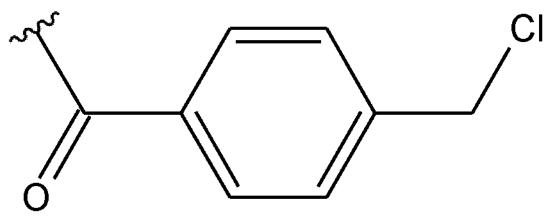

*Formula LXVIII*

c. a radical polymerization step on the pre-treated and pre-grafted support of Formula LXVII of the 4-vinylpyridine derivative of Formula LXIX,

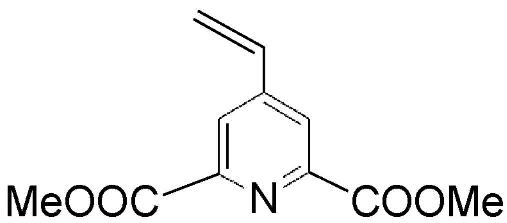

*Formula LXIX*

by reacting said support with said derivative and with $CuCl_2$, TPMA and metallic copper, to obtain a monomer or a polymer grafted onto a support of Formula XXV in which X represents a compound of Formula LXX and $R_4$ by a chlorine atom,

X :

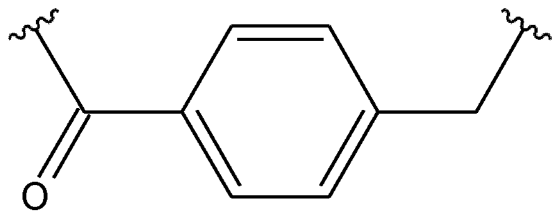

*Formula LXX*

d. a modification step of the monomer or polymer grafted onto a support of Formula XXV with a base to obtain a monomer or polymer grafted onto a support of Formula XXVI;

- or said monomer or said polymer grafted onto a support being of Formula XXVIII, wherein:

a. a step of pretreating a silica support by bringing into contact the support with an acid to obtain a pre-treated support of Formula LXXI,

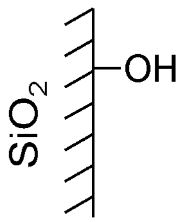

*Formula LXXI*

in which T' represents -OH
b. a step of pre-grafting the pre-treated support of Formula LXXI by bringing into contact said support with APTES-CMB of Formula XXIII

to obtain a pre-treated and pre-grafted support of Formula LXXII

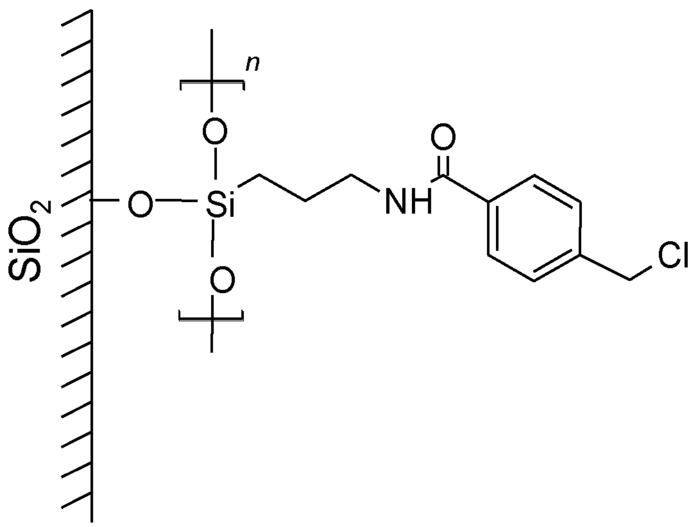

*Formula LXXII*

in which T represents -O- and X' represents the compound of Formula LXXIII
X' :

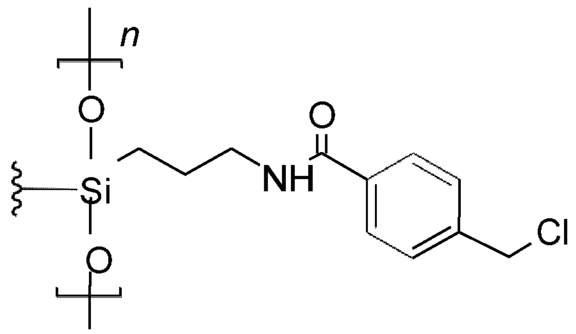

*Formula LXXIII*

c. a step of radical polymerization of the 4-vinylpyridine derivative of Formula LXIX, on the pre-treated and pre-grafted support of Formula LXXII by reacting said support with said derivative and with CuCl2, TPMA and metallic copper, to obtain a monomer or a polymer grafted onto a support of Formula XXVII in which X represents the compound of Formula LXXIV and $R_4$ a chlorine atom
X :

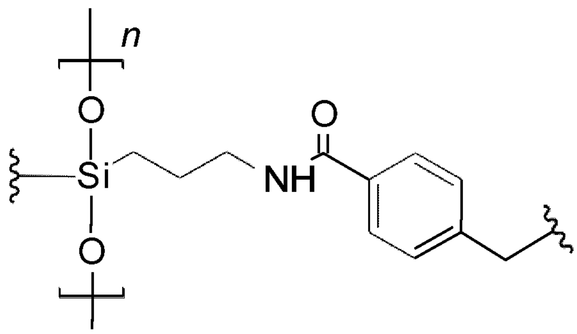

*Formula LXXIV*

d. a modification step of the monomer or polymer grafted onto a support of Formula XXVII with a base to obtain a monomer or polymer grafted onto a support of Formula XXVIII ;

- or said grafted monomer or polymer is of Formula XXX, wherein said process comprising:

a. a polymerization step of the 4-vinylpyridine derivative of Formula LXIX, onto a support comprising PVC, in particular with a copolymer, in particular PVDC, by reacting said support with said derivative and with $CuCl_2$, TPMA and metallic copper, to obtain a monomer or a polymer grafted onto a support of Formula XXIX, in which $R_4$ represents a chlorine atom,
b. a modification step of the monomer or polymer grafted onto a support of Formula XXIX with a base to obtain a monomer or polymer grafted onto a support of Formula XXX.

**13.** Process for preparing a polymer grafted onto a support according to claims 11 to 12, in which, the said polymerization step bringing into contact a 4-vinylpyridine derivative of Formula XLIX

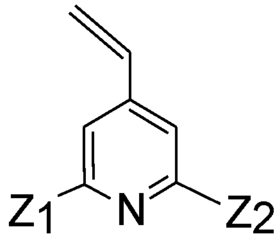

*Formula XLIX*

in which :

• $Z_1$ and $Z_2$ are substituents selected from the following group: hydrogen, alkyl radical having from 1 to 20 carbon atoms, alkene radical having from 1 to 20 carbon atoms, aryl radical having from 1 to 20 carbon atoms, alcohol having from 1 to 20 carbon atoms, ether having from 1 to 20 carbon atoms, ester having from 1 to 20 carbon atoms, amine having from 1 to 20 carbon atoms, heterocycle having from 1 to 5 rings in which the heteroatom is either nitrogen, oxygen, sulphur or phosphorus, amide of 1 to 20 carbon atoms, thiols of 1 to 20 carbon atoms, phosphine of 1 to 20 carbon atoms, the said substituents being able to be cyclized with one another and optionally containing sulfur or phosphorus atoms,
with a monomer or polymer grafted onto a support of Formula LX,

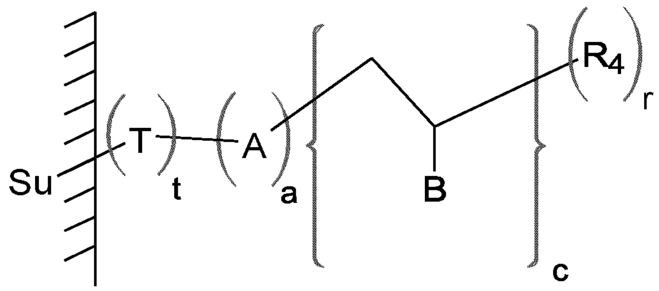

*Formula LX*

in which

• the definitions of Su, A, T, B, $R_4$, r, a, t and c are as described in claims 2 and 5, to obtain a polymer grafted onto a support of Formula LXI

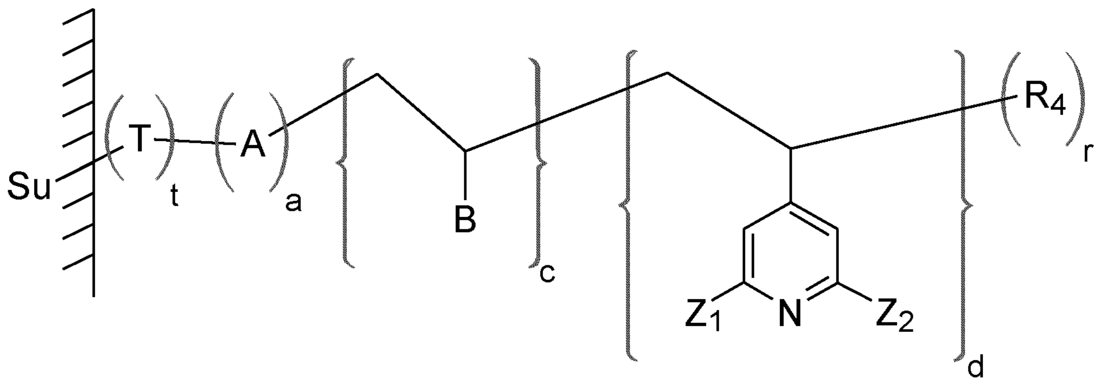

*Formula LXI*

in which

• the definition of d is as described in claim 5;

in particular said process for preparing a polymer grafted onto a support comprising :

a. a step of pretreatment of the support by bringing the said support into contact with a pretreatment reagent and/or by the action of a physical pretreatment on said support, in order to obtain a pre-treated support of Formula XXXI,
b. a step of pre-grafting said pre-treated support of Formula XXXI by bringing it into contact with a polymerization initiator, in order to obtain a pre-treated and pre-grafted support of Formula XXXII
c. a radical polymerization step by bringing the pre-treated and pre-grafted support of Formula XXXII into contact with a co-monomer of Formula LXII to obtain said free monomer or polymer of Formula LX

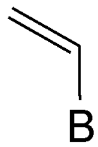

*Formula LXII*

in which the definition of B is as described in Formula XVIII,

before the radical polymerization step by bringing a monomer derived from 4-vinylpyridine of Formula XXXIII into contact with a monomer or polymer of Formula LX.

**14.** Use of the composition as described in claims 1 to 10, selected from the group comprising the capture of metals and their restitution, the service as a homogeneous or heterogeneous catalyst, the labeling of organic and/or inorganic surfaces and the labeling by fluorescence of biomolecules.

**15.** Use of said composition according to claim 14 as an adsorbent of metal in seawater, in particular the adsorption of actinides and lanthanides, more particularly the adsorption of uranium and even more particularly the selective adsorption of uranium with respect to vanadium;
or as a treatment for effluents contaminated with metal, in particular radioactive effluents and nuclear waste from nuclear power stations.

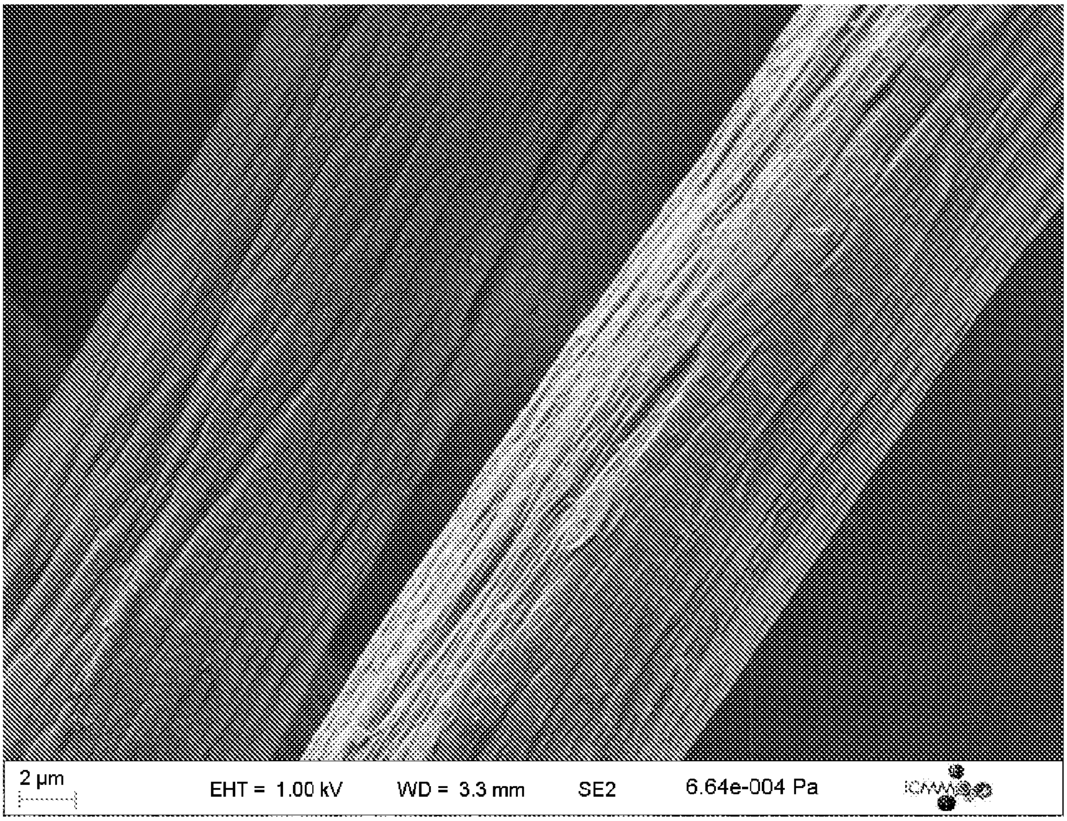


Figure 1

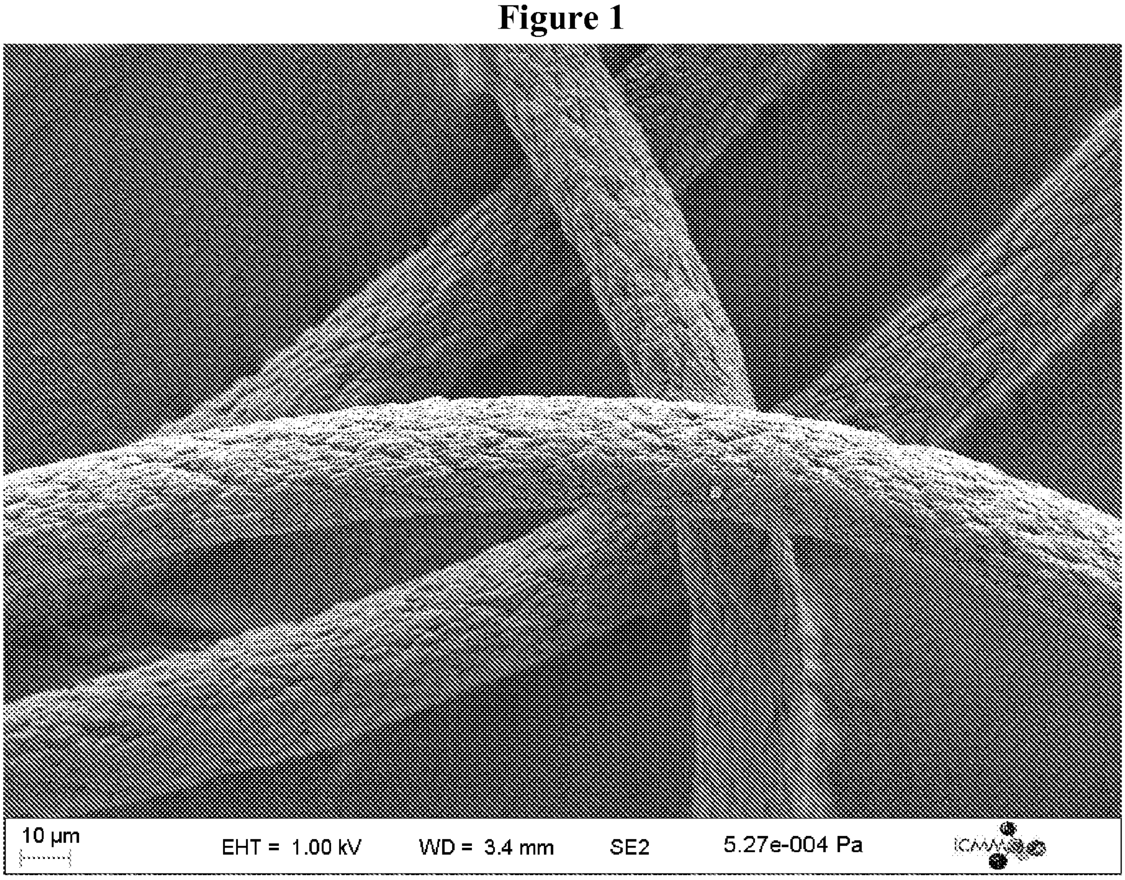


Figure 2

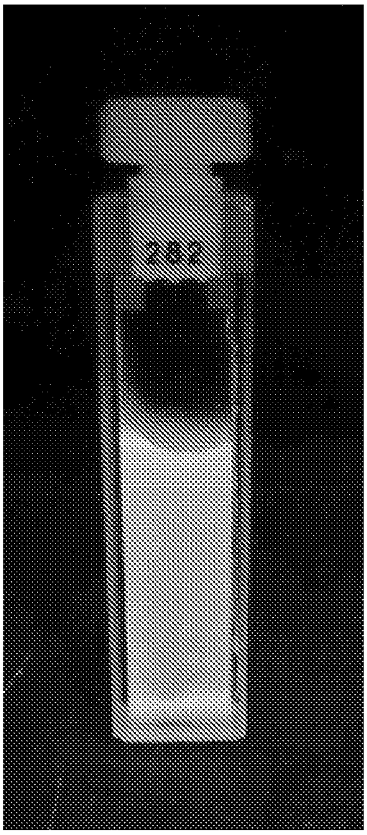


**Figure 3 A**

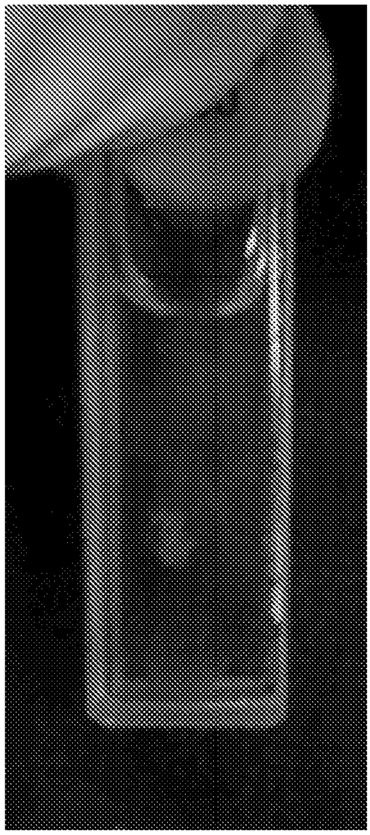

**Figure 3 B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4199470 A
- WO 2017085312 A1


### Littérature non-brevet citée dans la description


- *J. Mater. Chem. C,* 2016, vol. 4, 3195-3201
- *Tetrahedron,* 2008, vol. 64, 399-411